(19) Europäisches Patentamt
European Patent Office
Office européen des brevets

(11) **EP 4 645 736 A1**

(12) **EUROPEAN PATENT APPLICATION**
published in accordance with Art. 153(4) EPC

(43) Date of publication:
**05.11.2025 Bulletin 2025/45**

(21) Application number: **23915780.3**

(22) Date of filing: **18.12.2023**

(51) International Patent Classification (IPC):
**H04L 5/00** (2006.01)

(52) Cooperative Patent Classification (CPC):
**H04J 11/00; H04L 5/00**

(86) International application number:
**PCT/CN2023/139492**

(87) International publication number:
**WO 2024/149026 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.01.2023 CN 202310200944
31.03.2023 CN 202310365197**

(71) Applicant: **Huawei Technologies Co., Ltd.
Shenzhen, Guangdong 518129 (CN)**

(72) Inventors:
• **WANG, Bichai**
**Shenzhen, Guangdong 518129 (CN)**
• **WEI, Xiuhong**
**Shenzhen, Guangdong 518129 (CN)**
• **LI, Xueru**
**Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **COMMUNICATION METHOD AND COMMUNICATION APPARATUS**

(57) A communication method and a communication apparatus are provided. The communication method includes: A first device generates a first ultra-wideband UWB signal based on a first sequence in a first sequence set, where the first sequence set includes at least two 121-length sequences, at least two 133-length sequences, at least two 73-length sequences, or at least two 91-length sequences. The first device sends the first UWB signal to a second device, and correspondingly, the second device receives the first UWB signal. The second device processes the first UWB signal based on the first sequence. According to embodiments of this application, inter-user interference, and in particular, inter-user interference in a multi-user dense scenario, can be reduced.

FIG. 3

**Description**

This application claims priorities to Chinese Patent Application No. 202310200944.2, filed with the China National Intellectual Property Administration on January 13, 2023 and entitled "UWB RANGING METHOD AND APPARATUS", and to Chinese Patent Application No. 202310365197.8, filed with the China National Intellectual Property Administration on March 31, 2023 and entitled "COMMUNICATION METHOD AND COMMUNICATION APPARATUS", both of which are incorporated herein by reference in their entireties.

**TECHNICAL FIELD**

This application relates to the field of communication technologies, and in particular, to a communication method and a communication apparatus.

**BACKGROUND**

An ultra-wideband (ultra-wideband, UWB) technology may implement high-precision ranging, positioning, sensing, and the like through sending of a short pulse at a nanosecond level, and may be applied to a scenario that has a high requirement on ranging and positioning precision, for example, a digital vehicle key. A UWB physical layer frame structure may include one or more of the following: a synchronization header (synchronization header, SHR), a physical header (PHY header, PHR), physical layer data (PHY payload), a scrambled timestamp sequence (scrambled timestamp sequence, STS), and the like. A synchronization (synchronization, SYNC) field of the SHR includes one or more preamble symbols, and is mainly used for synchronization, channel estimation, ranging, and the like. A preamble symbol of the SYNC field is generated based on a ternary sequence (or referred to as a preamble code) having a perfect periodic autocorrelation property.

In a process in which a sending device communicates with a receiving device, the sending device may generate a UWB signal based on a sending sequence, and the receiving device may process the received UWB signal based on a local reference sequence. There is a perfect periodic correlation characteristic between the sending sequence used by the sending device and the local reference sequence used by the receiving device, so that when the receiving device processes the received UWB signal based on the local reference sequence, accurate synchronization, ranging, and the like can be implemented. If an interference signal of another device (or referred to as a non-target sending device) exists in a signal received by the receiving device, when there is a low cross-correlation between a sending sequence used by the non-target sending device and the local reference sequence of the receiving device, after the receiving device processes the received signals based on the local reference sequence, the interference signal corresponding to the non-target sending device may be suppressed.

However, in the communication process, each channel can support a small quantity of sequences. For example, each channel supports a maximum of two 31-length sequences and four 127-length sequences. In a multi-user dense scenario like a garage, there is a high probability that different users use a same sending sequence. Consequently, a cross-correlation between the local reference sequence of the receiving device and the sending sequence used by the non-target sending device is high, and inter-user interference is large.

**SUMMARY**

Embodiments of this application provide a communication method and a communication apparatus, to reduce inter-user interference, and in particular, inter-user interference in a multi-user dense scenario.

According to a first aspect, an embodiment of this application provides a communication method. The method may be performed by a first device, or may be performed by a component (for example, a chip or a circuit) of the first device. This is not limited herein. The method includes:

The first device generates a first ultra-wideband UWB signal based on a first sequence in a first sequence set. The first sequence set includes at least two 121-length sequences, at least two 133-length sequences, at least two 73-length sequences, or at least two 91-length sequences. The first sequence set meets: An element in any sequence in the first sequence set belongs to {0, 1, -1}, a second sequence and a third sequence are any two different sequences in the first sequence set, and a cross-correlation between a first binary sequence corresponding to the second sequence and a second binary sequence corresponding to the third sequence is less than a first threshold. The first binary sequence corresponding to the second sequence is determined based on the second sequence, and an element in the first binary sequence corresponding to the second sequence belongs to {0, 1}. The second binary sequence corresponding to the third sequence is determined based on the third sequence, and an element in the second binary sequence corresponding to the third sequence belongs to {1, b}, where b is an integer not equal to -1. Alternatively, the first sequence set meets: An element in any sequence in the first sequence set belongs to {0, 1}, a second sequence and a third sequence are any two different sequences in the first sequence set, and a cross-correlation between the second sequence and a second binary sequence corresponding to the third sequence is less than a second threshold. The second binary sequence corresponding to the third sequence is determined based on the third sequence, and an element in the second binary sequence corresponding to the third sequence belongs to {1, b}, where b is an integer not equal to -1. The first device sends the first UWB signal to a second device.

In this embodiment of this application, the first sequence set corresponds to a channel for transmission of the first UWB signal, the channel may support the sequence in the first sequence set, and the first sequence set includes the at least two 121-length sequences, the at least two 133-length sequences, the at least two 73-length sequences, or the at least two 91-length sequences. In this way, the sequence supported by the channel is expanded, and each channel can support a larger quantity of sequences, to reduce inter-user interference, and in particular, inter-user interference in a multi-user dense scenario.

With reference to the first aspect, in a possible implementation, the second device is a non-coherent receiving device. That the first device generates a first ultra-wideband UWB signal based on a first sequence in a first sequence set includes:

The first device generates the first UWB signal based on a first binary sequence corresponding to the first sequence. The first binary sequence corresponding to the first sequence is determined based on the first sequence, and an element in the first binary sequence corresponding to the first sequence belongs to {0, 1}.

In this embodiment of this application, when the second device is the non-coherent receiving device, the second device performs energy detection or envelope detection on a received signal, for example, performs square processing on the received signal, in other words, the second device does not obtain phase information. Therefore, in addition to sending a UWB signal generated based on a ternary sequence whose elements belong to {0, 1, -1}, the first device may directly send a UWB signal generated based on a binary sequence whose elements belong to {0, 1}.

With reference to the first aspect, in a possible implementation, the method further includes:

The first device receives first indication information from the second device. The first indication information indicates whether the second device is a coherent receiving device or a non-coherent receiving device.

In this embodiment of this application, the second device may indicate a receiver type of the second device by using the first indication information, so that the first device can determine, based on the first indication information, a parameter of a SYNC field or a preamble symbol in the first UWB signal, for example, a length of the first sequence, information about a time interval between two adjacent elements in the first sequence, or a quantity of repetitions of the preamble symbol, and the second device can better suppress interference and improve performance when receiving the first UWB signal.

With reference to the first aspect, in a possible implementation, the method further includes:

The first device receives second indication information from the second device. The second indication information indicates channel information or multipath delay spread information between the first device and the second device. That the first device generates a first ultra-wideband UWB signal based on a first sequence in a first sequence set includes: The first device generates the first UWB signal based on the second indication information and the first sequence in the first sequence set.

In this embodiment of this application, the second device may indicate the channel information or the multipath delay spread information between the first device and the second device by using the second indication information, so that the first device can determine, based on the channel information or the multipath delay spread information, a parameter of a SYNC field or a preamble symbol in the first UWB signal, for example, a length of the first sequence, information about a time interval between two adjacent elements in the first sequence, or a quantity of repetitions of the preamble symbol, and the second device can better suppress interference and improve performance when receiving the first UWB signal.

With reference to the first aspect, in a possible implementation, the first device sends third indication information to the second device. The third indication information indicates a parameter corresponding to a preamble symbol in the first UWB signal, the preamble symbol is a preamble symbol generated based on the first sequence, and the parameter corresponding to the preamble symbol includes at least one of the following: a length of the first sequence, information about a time interval between two adjacent elements in the first sequence, or a quantity of repetitions of the preamble symbol.

In this embodiment of this application, the first device may indicate the parameter corresponding to the preamble symbol in the first UWB signal to the second device by using the third indication information, so that the second device can process the received first UWB signal based on the parameter corresponding to the preamble symbol, to implement synchronization, ranging, and the like.

According to a second aspect, an embodiment of this application provides a communication method. The method may be performed by a second device, or may be performed by a component (for example, a chip or a circuit) of the second device. This is not limited herein. The method includes:

The second device receives a first ultra-wideband UWB signal from a first device. The first UWB signal is generated based on a first sequence. The first sequence is included in a first sequence set. The first sequence set includes at least two 121-length sequences, at least two 133-length sequences, at least two 73-length sequences, or at least two 91-length sequences.

The first sequence set meets: An element in any sequence in the first sequence set belongs to {0, 1, -1}, a second sequence and a third sequence are any two different sequences in the first sequence set, and a cross-correlation between a first binary sequence corresponding to the second sequence and a second binary sequence corresponding to the third sequence is less than a first threshold. The first binary sequence corresponding to the second sequence is determined based on the second sequence, and an element in the first binary sequence corresponding to the second sequence belongs to {0, 1}. The second binary sequence corresponding to the third sequence is determined based on the third sequence, and an element in the second binary sequence corresponding to the third sequence belongs to {1, b}, where b is an integer not equal to -1. Alternatively, the first sequence set meets: An element in any sequence in the first sequence set belongs to {0, 1}, a second sequence and a third sequence are any two different sequences in the first sequence set, and a cross-correlation between the second sequence and a second binary sequence corresponding to the third sequence is less than a second threshold. The second binary sequence corresponding to the third sequence is determined based on the third sequence, and an element in the second binary sequence corresponding to the third sequence belongs to {1, b}, where b is an integer not equal to -1. The second device processes the first UWB signal based on the first sequence.

In this embodiment of this application, the first sequence set corresponds to a channel for transmission of the first UWB signal, the channel may support the sequence in the first sequence set, and the first sequence set includes the at least two 121-length sequences, the at least two 133-length sequences, the at least two 73-length sequences, or the at least two 91-length sequences. In this way, the sequence supported by the channel is expanded, and each channel can support a larger quantity of sequences, to reduce inter-user interference, and in particular, inter-user interference in a multi-user dense scenario.

With reference to the second aspect, in a possible implementation, the second device is a non-coherent receiving device. That the first UWB signal is generated based on the first sequence includes:

The first UWB signal is generated based on a first binary sequence corresponding to the first sequence, the first binary sequence corresponding to the first sequence is determined based on the first sequence, and an element in the first binary sequence corresponding to the first sequence belongs to {0, 1}.

In this embodiment of this application, when the second device is the non-coherent receiving device, the second device performs energy detection or envelope detection on a received signal, for example, performs square processing on the received signal, in other words, the second device does not obtain phase information. Therefore, in addition to sending a UWB signal generated based on a ternary sequence whose elements belong to {0, 1, -1}, the first device may directly send a UWB signal generated based on a binary sequence whose elements belong to {0, 1}.

With reference to the second aspect, in a possible implementation, the second device is the non-coherent receiving device. That the second device processes the first UWB signal based on the first sequence includes:

The second device processes the first UWB signal based on a second binary sequence corresponding to the first sequence. The second binary sequence corresponding to the first sequence is determined based on the first sequence, and an element in the second binary sequence corresponding to the first sequence belongs to {1, b}.

In this embodiment of this application, when the second device is the non-coherent receiving device, the second device may generate a local preamble symbol based on the second binary sequence corresponding to the first sequence, and perform sliding correlation on the local preamble symbol and the received first UWB signal, to implement synchronization and ranging.

With reference to the second aspect, in a possible implementation, the method further includes:

The second device sends first indication information to the first device. The first indication information indicates whether the second device is a coherent receiving device or a non-coherent receiving device.

In this embodiment of this application, the second device may indicate a receiver type of the second device by using the first indication information, so that the first device can determine, based on the first indication information, a parameter of a SYNC field or a preamble symbol in the first UWB signal, for example, a length of the first sequence, information about a time interval between two adjacent elements in the first sequence, or a quantity of repetitions of the preamble symbol, and the second device can better suppress interference and improve performance when receiving the first UWB signal.

With reference to the second aspect, in a possible implementation, the method further includes:

The second device sends second indication information to the first device. The second indication information indicates channel information or multipath delay spread information between the first device and the second device.

In this embodiment of this application, the second device may indicate the channel information or the multipath delay spread information between the first device and the second device by using the second indication information, so that the first device can determine, based on the channel information or the multipath delay spread information, a parameter of a SYNC field or a preamble symbol in the first UWB signal, for example, a length of the first sequence, information about a time interval between two adjacent elements in the first sequence, or a quantity of repetitions of the preamble symbol, and the second device can better suppress interference and improve performance when receiving the first UWB signal.

With reference to the second aspect, in a possible implementation, the method further includes:

The second device receives third indication information from the first device. The third indication information indicates a parameter corresponding to a preamble symbol in the first UWB signal, the preamble symbol is a preamble symbol generated based on the first sequence, and the parameter corresponding to the preamble symbol includes at least one of the following: a length of the first sequence, information about a time interval between two adjacent elements in the first sequence, or a quantity of repetitions of the preamble symbol.

In this embodiment of this application, the first device may indicate the parameter corresponding to the preamble symbol in the first UWB signal to the second device by using the third indication information, so that the second device can generate a local preamble symbol based on the first sequence and the parameter corresponding to the preamble symbol, and process the received first UWB signal based on the local preamble symbol, to implement synchronization, ranging, and the like.

With reference to the first aspect or the second aspect, in a possible implementation, a length of the first binary sequence corresponding to the second sequence is equal to a length of the second sequence, locations of elements 1 in the first binary sequence corresponding to the second sequence are the same as locations of an element -1 and an element 1 in the second sequence, and a location of an element 0 in the first binary sequence corresponding to the second sequence is the same as a location of an element 0 in the second sequence; a length of the second binary sequence corresponding to the third sequence is equal to a length of the third sequence, a location of an element b in the second binary sequence corresponding to the third sequence is the same as a location of an element 0 in the third sequence, and locations of elements 1 in the second binary sequence corresponding to the third sequence are the same as locations of an element 1 and an element -1 in the third sequence; and/or a length of the second binary sequence corresponding to the third sequence is equal to a length of the third sequence, a location of an element b in the second binary sequence corresponding to the third sequence is the same as a location of an element 0 in the third sequence, and a location of an element 1 in the second binary sequence corresponding to the third sequence is the same as a location of an element 1 in the third sequence.

In this embodiment of this application, when the element in any sequence in the first sequence set belongs to {0, 1, -1}, the second sequence and the third sequence each have a perfect periodic autocorrelation characteristic. The first binary sequence corresponding to the second sequence is generated by replacing the element -1 in the second sequence with an element 1, a second binary sequence corresponding to the second sequence is generated by replacing the element -1 in the second sequence with an element 1 and replacing the element 0 in the second sequence with an element b, and there is a perfect periodic cross-correlation characteristic between the first binary sequence corresponding to the second sequence and the second binary sequence corresponding to the second sequence. A first binary sequence corresponding to the third sequence is generated by replacing the element -1 in the third sequence with an element 1, the second binary sequence corresponding to the third sequence is generated by replacing the element -1 in the third sequence with an element 1 and replacing the element 0 in the third sequence with an element b, and there is a perfect periodic cross-correlation characteristic between the first binary sequence corresponding to the third sequence and the second binary sequence corresponding to the third sequence. The second sequence and the third sequence are any two different sequences in the first sequence set. This means that any sequence in the first sequence set has a property of the second sequence or the third sequence. In other words, the first sequence has the perfect periodic autocorrelation characteristic, and there is a perfect periodic cross-correlation characteristic between the first binary sequence corresponding to the first sequence and the second binary sequence corresponding to the first sequence. Therefore, when the second device is the coherent receiving device, the first device may generate the first UWB signal based on the first sequence, where an element in the first sequence belongs to {0, 1, -1}. The second device may process the received first UWB signal based on the first sequence, to implement functions such as accurate synchronization and ranging by using the perfect periodic autocorrelation characteristic of the first sequence. When the second device is the non-coherent receiving device, the first device may generate the first UWB signal based on the first sequence, where an element in the first sequence belongs to {0, 1, -1}; or the first device may generate the first UWB signal based on the first binary sequence corresponding to the first sequence, where an element in the first binary sequence corresponding to the first sequence belongs to {0, 1}. The second device may process the received first UWB signal based on the second binary sequence corresponding to the first sequence, to implement functions such as accurate synchronization and ranging by using the perfect periodic cross-correlation characteristic between the first binary sequence corresponding to the first sequence and the second binary sequence corresponding to the first sequence.

In this embodiment of this application, when the element in any sequence in the first sequence set belongs to {0, 1}, a second binary sequence corresponding to the second sequence is generated by replacing the element 0 in the second sequence with an element b, and there is a perfect periodic cross-correlation characteristic between the second sequence and the second binary sequence corresponding to the second sequence. The second binary sequence corresponding to the third sequence is generated by replacing the element 0 in the third sequence with an element b, and there is a perfect periodic cross-correlation characteristic between the third sequence and the second binary sequence corresponding to the third sequence. The second sequence and the third sequence are any two different sequences in the first sequence set. This means that any sequence in the first sequence set has a property of the second sequence or the third sequence. In other words, there is a perfect periodic cross-correlation characteristic between the first sequence and the second binary sequence corresponding to the first sequence. Therefore, when the second device is the non-coherent receiving device, the first device may generate the first UWB signal based on the first sequence, where an element in the first sequence belongs to {0, 1}. The second device may process the received first UWB signal based on the second binary sequence corresponding to the first sequence, to implement functions such as accurate synchronization and ranging by using the perfect periodic cross-correlation characteristic between the first sequence and the second binary sequence corresponding to the first sequence.

With reference to the first aspect or the second aspect, in a possible implementation, b is determined based on N and M, N is a length of the third sequence, and M is a quantity of elements 0 in the third sequence.

In this embodiment of this application, a value of b may be determined based on the length of the third sequence and the quantity of elements 0 in the third sequence, so that third sequences of different lengths each have a perfect periodic autocorrelation characteristic, and there is a perfect periodic cross-correlation characteristic between the first binary sequence corresponding to the third sequence and the second binary sequence corresponding to the third sequence, or there is a perfect periodic cross-correlation characteristic between the third sequence and the second binary sequence corresponding to the third sequence.

With reference to the first aspect or the second aspect, in a possible implementation, b, N, and M satisfy the following formula: $b = -\left\lfloor \dfrac{N-1-M}{M} \right\rfloor$.

In this embodiment of this application, a value of b may be determined based on the length of the third sequence and the quantity of elements 0 in the third sequence, so that third sequences of different lengths each have a perfect periodic autocorrelation characteristic, and there is a perfect periodic cross-correlation characteristic between the first binary sequence corresponding to the third sequence and the second binary sequence corresponding to the third sequence, or there is a perfect periodic cross-correlation characteristic between the third sequence and the second binary sequence corresponding to the third sequence.

With reference to the first aspect or the second aspect, in a possible implementation, a cross-correlation between the second sequence and the third sequence is less than a third threshold, and the first sequence set includes at least two 121-length sequences or at least two 133-length sequences.

In this embodiment of this application, the cross-correlation between the second sequence and the third sequence in the first sequence set is less than the third threshold, and the cross-correlation between the first binary sequence corresponding to the second sequence and the second binary sequence corresponding to the third sequence is less than the first threshold, so that the sequence in the first sequence set is applicable to a coherent receiver architecture and a non-coherent receiver architecture. In this way, in a scenario in which the non-coherent receiver and the coherent receiver coexist, a sequence that can be used for coherent reception or non-coherent reception on each channel is expanded, so that each channel can support a larger quantity of sequences, to reduce inter-user interference, and in particular, inter-user interference in a multi-user dense scenario.

With reference to the first aspect or the second aspect, in a possible implementation, the first sequence set includes the at least two 121-length sequences, and an element in any sequence in the first sequence set belongs to {0, 1, -1}.

A sequence in the first sequence set is obtained by performing any cyclic shift on at least two sequences in a sequence group 1 in Table 11, a sequence in the first sequence set is obtained by performing any cyclic shift on at least two sequences in a sequence group 2 in Table 11, or a sequence in the first sequence set is obtained by performing any cyclic shift on at least two sequences in a sequence group 3 in Table 11.

For Table 11, refer to descriptions in a specific embodiment.

With reference to the first aspect or the second aspect, in a possible implementation, the first sequence set includes at least two 133-length sequences, and an element in any sequence in the first sequence set belongs to {0, 1, -1}.

A sequence in the first sequence set is obtained by performing any cyclic shift on at least two sequences in a sequence group 1 in Table 12, or a sequence in the first sequence set is obtained by performing any cyclic shift on at least two sequences in a sequence group 2 in Table 12.

For Table 12, refer to descriptions in a specific embodiment.

With reference to the first aspect or the second aspect, in a possible implementation, the first sequence set includes at least two 73-length sequences.

A sequence in the first sequence set is obtained by performing any cyclic shift on at least two sequences in Table 2, or a sequence in the first sequence set is obtained by performing any cyclic shift on at least two sequences in Table 6.

For Table 2 and Table 6, refer to descriptions in a specific embodiment.

With reference to the first aspect or the second aspect, in a possible implementation, the first sequence set includes at least two 91-length sequences.

A sequence in the first sequence set is obtained by performing any cyclic shift on at least two sequences in Table 3, or a sequence in the first sequence set is obtained by performing any cyclic shift on at least two sequences in Table 7.

For Table 3 and Table 7, refer to descriptions in a specific embodiment.

With reference to the first aspect or the second aspect, in a possible implementation, the first sequence set includes at least two 121-length sequences.

A sequence in the first sequence set is obtained by performing any cyclic shift on at least two sequences in a sequence group 1 in Table 4, a sequence in the first sequence set is obtained by performing any cyclic shift on at least two sequences in a sequence group 2 in Table 4, a sequence in the first sequence set is obtained by performing any cyclic shift on at least two sequences in a sequence group 3 in Table 4, a sequence in the first sequence set is obtained by performing any cyclic shift on at least two sequences in a sequence group 1 in Table 8, a sequence in the first sequence set is obtained by performing any cyclic shift on at least two sequences in a sequence group 2 in Table 8, or a sequence in the first sequence set is obtained by performing any cyclic shift on at least two sequences in a sequence group 3 in Table 8.

For Table 4 and Table 8, refer to descriptions in a specific embodiment.

With reference to the first aspect or the second aspect, in a possible implementation, the first sequence set includes at least two 133-length sequences. A sequence in the first sequence set is obtained by performing any cyclic shift on at least two sequences in a sequence group 1 in Table 5, a sequence in the first sequence set is obtained by performing any cyclic shift on at least two sequences in a sequence group 2 in Table 5, a sequence in the first sequence set is obtained by performing any cyclic shift on at least two sequences in a sequence group 3 in Table 5, a sequence in the first sequence set is obtained by performing any cyclic shift on at least two sequences in a sequence group 1 in Table 9, a sequence in the first sequence set is obtained by performing any cyclic shift on at least two sequences in a sequence group 2 in Table 9, or a sequence in the first sequence set is obtained by performing any cyclic shift on at least two sequences in a sequence group 3 in Table 9.

For Table 5 and Table 9, refer to descriptions in a specific embodiment.

With reference to the first aspect or the second aspect, in a possible implementation, the first sequence set corresponds to at least one channel, and transmission of the first UWB signal is performed on the at least one channel.

In this embodiment of this application, the first sequence set corresponds to the at least one channel, and a UWB signal whose transmission is performed on the at least one channel is generated based on the sequence in the first sequence set. In a multi-user scenario, different users generate corresponding UWB signals based on different sequences in the first sequence set, so that mutual interference between signals whose transmission is performed by different devices on the at least one channel can be reduced.

With reference to the first aspect or the second aspect, in a possible implementation, both a length of a sequence x and a length of a sequence y are N, and a cross-correlation $\varphi_{xy}$ between the sequence x and the sequence y satisfies the following formula:

$$\varphi_{xy} = 20\log_{10}\left(\frac{\max_{\tau=0,1,2,\dots,N-1}|\phi_{xy}(\tau)|}{|\phi_{xx}(0)|}\right),$$

where

$$\phi_{xy}(\tau) = \sum_{n=1}^{N} x_n y_{n+\tau}, \qquad \tau = 0,1,2,\dots,N-1$$

$$\phi_{xx}(0) = \sum_{n=1}^{N} x_n x_n$$

$x_n$ is an $n^{th}$ element in the sequence x, $y_n$ is an $n^{th}$ element in the sequence y, the sequence x is the second sequence, and the sequence y is the third sequence; the sequence x is the first binary sequence corresponding to the second sequence, and the sequence y is the second binary sequence corresponding to the third sequence; or the sequence x is the second sequence, and the sequence y is the second binary sequence corresponding to the third sequence.

With reference to the first aspect or the second aspect, in a possible implementation, the first threshold is less than or equal to -10 dB, the second threshold is less than or equal to -10 dB, and/or the third threshold is less than or equal to -10 dB.

According to a third aspect, an embodiment of this application provides a communication apparatus, configured to perform the method in any one of the first aspect or the possible implementations. The communication apparatus includes a unit configured to perform the method in any one of the first aspect or the possible implementations. For example, the communication apparatus may be a first device configured to perform the method in any one of the first aspect or the possible implementations, or a component (for example, a chip or a circuit) of the first device.

According to a fourth aspect, an embodiment of this application provides a communication apparatus, configured to perform the method in any one of the second aspect or the possible implementations. The communication apparatus includes a unit configured to perform the method in any one of the second aspect or the possible implementations. For example, the communication apparatus may be a second device configured to perform the method in any one of the second aspect or the possible implementations, or a component (for example, a chip or a circuit) of the second device.

According to a fifth aspect, an embodiment of this application provides a communication apparatus. The communication apparatus includes a processor configured to perform the method in any one of the first aspect or the possible implementations. Alternatively, the processor is configured to execute a program stored in a memory. When the program is executed, the method in any one of the first aspect or the possible implementations is performed. For example, the communication apparatus may be a first device configured to perform the method in any one of the first aspect or the possible implementations, or a component (for example, a chip or a circuit) of the first device.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive or send a signal.

According to a sixth aspect, an embodiment of this application provides a communication apparatus. The communication apparatus includes a processor configured to perform the method in any one of the second aspect or the possible implementations. Alternatively, the processor is configured to execute a program stored in a memory. When the program is executed, the method in any one of the second aspect or the possible implementations is performed. For example, the communication apparatus may be a second device configured to perform the method in any one of the second aspect or the possible implementations, or a component (for example, a chip or a circuit) of the second device.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive or send a signal.

According to a seventh aspect, an embodiment of this application provides a communication apparatus. The communication apparatus includes a logic circuit and an interface, and the logic circuit is coupled to the interface. The logic circuit is configured to generate a first UWB signal based on a first sequence in a first sequence set. The interface is configured to output the first UWB signal.

It may be understood that, for descriptions of the first sequence set, the first sequence, the first UWB signal, and the like, refer to the method in any one of the first aspect or the possible implementations. Details are not described one by one herein again.

According to an eighth aspect, an embodiment of this application provides a communication apparatus. The communication apparatus includes a logic circuit and an interface, and the logic circuit is coupled to the interface. The interface is configured to input a first UWB signal. The logic circuit is configured to process the first UWB signal based on a first sequence.

It may be understood that, for descriptions of the first UWB signal and the first sequence, refer to the method in any one of the second aspect or the possible implementations. Details are not described one by one herein again.

According to a ninth aspect, an embodiment of this application provides a computer-readable storage medium. The computer-readable storage medium is configured to store a computer program, and when the computer program is run on a computer, the method in any one of the first aspect or the possible implementations of the first aspect is performed, or the method in any one of the second aspect or the possible implementations of the second aspect is performed.

According to a tenth aspect, an embodiment of this application provides a computer program product. The computer program product includes a computer program or computer code, and when the computer program product or the computer code is run on a computer, the method in any one of the first aspect or the possible implementations of the first aspect is performed, or the method in any one of the second aspect or the possible implementations of the second aspect is performed.

According to an eleventh aspect, an embodiment of this application provides a communication system. The communication system includes a first device and a second device. The first device is configured to perform the method in any one of the first aspect or the possible implementations of the first aspect. The second device is configured to perform the method in any one of the second aspect or the possible implementations of the second aspect.

**BRIEF DESCRIPTION OF DRAWINGS**

The following describes the accompanying drawings in embodiments of this application.

FIG. 1a is a diagram of an architecture of a communication system according to an embodiment of this application;
FIG. 1b is a diagram of an architecture of a communication system according to an embodiment of this application;
FIG. 2a is a diagram of a structure of a UWB physical frame according to an embodiment of this application;
FIG. 2b is a diagram of a preamble symbol according to an embodiment of this application;
FIG. 3 is a diagram of interaction of a communication method according to an embodiment of this application;
FIG. 4 is a diagram of interaction of another communication method according to an embodiment of this application;
FIG. 5 is a diagram of a structure of a communication apparatus according to an embodiment of this application;
FIG. 6 is a diagram of a structure of a communication apparatus according to an embodiment of this application; and
FIG. 7 is a diagram of a structure of a communication apparatus according to an embodiment of this application.

**DESCRIPTION OF EMBODIMENTS**

In the specification, claims, and accompanying drawings of this application, the terms "first", "second", and the like are merely intended to distinguish between different objects, but are not intended to limit a sequence, a time sequence, priorities, or importance degrees of a plurality of objects. In embodiments of this application, "a plurality of" means two or more. In addition, terms such as "include" and "have" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device. In addition, the character "/" generally indicates an "or" relationship between associated objects.

An "embodiment" mentioned in this specification means that a particular feature, structure, or characteristic described with reference to the embodiment may be included in at least one embodiment of this application. The phrase shown in various locations in the specification does not necessarily mean a same embodiment, and is not an independent or optional embodiment exclusive from another embodiment. It may be understood explicitly and implicitly by a person skilled in the art that embodiments described in this specification may be combined with another embodiment.

In this application, "at least one (item)" means one or more, "a plurality of" means two or more, and "at least two (items)" means two or three or more. "And/or" is used to describe an association relationship between associated objects, and indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between associated objects. "At least one of the following" or a similar expression thereof means any combination of these items. For example, at least one of a, b, or c may indicate: a, b, c, "a and b", "a and c", "b and c", or "a and b and c".

The technical solutions provided in embodiments of this application are applicable to a wireless personal area network (wireless personal area network, WPAN) based on an ultra-wideband (ultra-wideband, UWB) technology. For example, the method provided in embodiments of this application is applicable to IEEE 802.15 series protocols such as an 802.15.4a protocol, an 802.15.4z protocol, an 802.15.4ab protocol, or a future-generation UWB WPAN standard. Examples are not listed one by one herein again. Alternatively, the technical solutions provided in embodiments of this application may be further applied to a WLAN, for example, IEEE802.11 series protocols in Wi-Fi, for example, an 802.11a/b/g protocol, an 802.11n protocol, an 802.11ac protocol, an 802.11ax protocol, an 802.11be protocol, or a next-generation protocol. Examples are not listed one by one herein again. For example, the technical solutions provided in embodiments of this application may support Wi-Fi 7, which may also be referred to as extremely high throughput (extremely high throughput, EHT), and may support, for example, Wi-Fi 8, which may also be referred to as ultra high reliability (ultra high reliability, UHR), ultra high reliability and throughput (ultra high reliability and throughput, UHRT), or the like. Alternatively, the method provided in embodiments of this application may be applied to various communication systems, for example, an internet of things (internet of things, IoT) system, vehicle-to-everything (Vehicle to X, V2X), a narrowband internet of things (narrowband internet of things, NB-IoT) system, a device used in vehicle-to-everything, an internet of things node, a sensor, or the like in internet of things (IoT, internet of things), a smart camera, a smart remote control, and a smart water or electricity meter in a smart home, a sensor in a smart city, and the like; and may also be applied to an LTE frequency division duplex (frequency division duplex, FDD) system, an LTE time division duplex (time division duplex, TDD) system, a long term evolution (long term evolution, LTE) system, a 5th generation (5th generation, 5G) communication system, a 6th generation (6th generation, 6G) communication system, or the like.

In the UWB technology, a nanosecond-level narrow pulse may be used for information transmission. A bandwidth used in the UWB is usually 500 MHz or higher than 1 GHz. A UWB system has a very wide spectrum and a very low average power. The UWB wireless communication system has advantages such as a strong multipath resolution capability, low power consumption, and high confidentiality. This facilitates coexistence with another system, and improves spectrum utilization and a system capacity. In addition, in a short-range communication application, a transmit power of a UWB transmitter may be usually lower than 1 milliwatt (mW). Theoretically, interference generated from a UWB signal may be equivalent to white noise. This facilitates good coexistence between the ultra-wideband and existing narrowband communication. Therefore, both the UWB system and a narrowband (narrowband, NB) communication system can operate without interfering with each other.

The method provided in embodiments of this application may be implemented by a communication apparatus in a wireless communication system. In a communication apparatus, a module that implements a UWB system function may be referred to as a UWB module (for example, may be configured to send a UWB pulse), and a module that implements a narrowband communication system function may be referred to as a narrowband communication module. The UWB module and the narrowband communication module may be different apparatuses, chips, or the like. This is not limited in embodiments of this application. Certainly, the UWB module and the narrowband communication module may alternatively be integrated into one apparatus or chip. Implementations of the UWB module and the narrowband communication module in the communication apparatus are not limited in embodiments of this application. For example, the communication apparatus may use a coherent receiver architecture, or may use a non-coherent receiver architecture. A communication apparatus based on the coherent receiver architecture needs a high-frequency phase-locked loop (phase-locked loop, PLL) to ensure phase synchronization. A communication apparatus based on the non-coherent receiver architecture does not need a high-frequency PLL, and has low power consumption. This is applicable to a communication apparatus powered by a battery or sensitive to power consumption.

Embodiments of this application are mainly described by using a WPAN as an example, and in particular, by using a network using IEEE 802.15 series standards as an example. However, a person skilled in the art easily understands that various aspects in embodiments of this application may be extended to other networks using various standards or protocols, for example, a wireless local area network (wireless local area network, WLAN), Bluetooth (BLUETOOTH), a high performance radio LAN (high performance radio LAN, HIPERLAN) (a wireless standard similar to the IEEE 802.11 standard, mainly used in Europe), a wide area network (WAN), or another network that is currently known or developed in the future. Therefore, regardless of a used coverage area and a used wireless access protocol, the various aspects provided in embodiments of this application are applicable to any suitable wireless network.

The method provided in embodiments of this application may be implemented by the communication apparatus in the wireless communication system. The communication apparatus may be an apparatus in the UWB system. For example, the communication apparatus may include but is not limited to a communication server, a router, a switch, a bridge, a computer, a mobile phone, and the like. For another example, the communication apparatus may include a central control point, for example, a personal area network (personal area network, PAN) or a PAN coordinator. For another example, the communication apparatus may include user equipment (user equipment, UE). The user equipment may include various handheld devices, vehicle-mounted devices, wearable devices, internet of things (internet of things, IoT) devices, computing devices, other processing devices connected to a wireless modem, or the like that have a wireless communication function. Examples are not listed one by one herein again. For another example, the communication apparatus may include a chip, and the chip may be disposed in a communication server, a router, a switch, a user terminal, or the like. Examples are not listed one by one herein again.

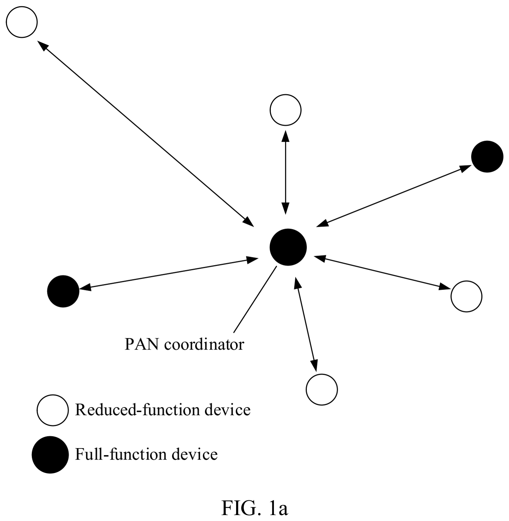

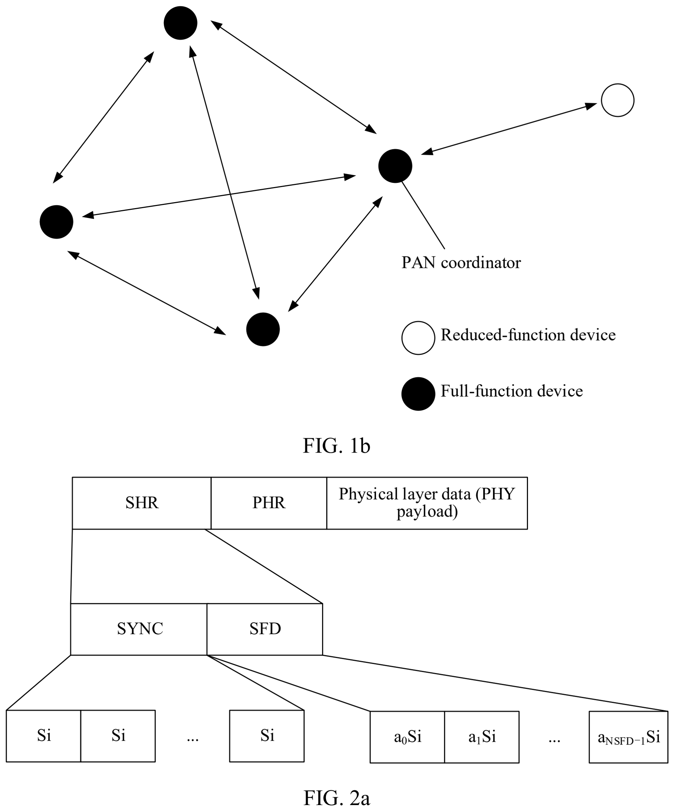

In an example, FIG. 1a and FIG. 1b are diagrams of architectures of a communication system according to embodiments of this application. FIG. 1a shows a star topology structure according to an embodiment of this application, and FIG. 1b shows a point-to-point topology structure according to an embodiment of this application. As shown in FIG. 1a, in the star topology, one central control node may perform data communication with one or more other devices. As shown in FIG. 1b, in the point-to-point topology structure, data communication may be performed between different devices. In FIG. 1a and FIG. 1b, both a full-function device (full-function device) and a reduced-function device (reduced-function device) may be understood as communication apparatuses shown in this application. The full-function device and the reduced-function device are relative to each other. For example, the reduced-function device cannot be a PAN coordinator (coordinator). For another example, compared with the full-function device, the reduced-function device may have no coordination capability or have a lower communication rate than the full-function device. It may be understood that the PAN coordinator shown in FIG. 1b is merely an example, and the other three full-function devices shown in FIG. 1b may also be used as PAN coordinators, which are not shown one by one herein again.

It may be understood that the full-function device and the reduced-function device shown in embodiments of this application are merely examples of the communication apparatus. Any communication apparatus that can implement the method provided in embodiments of this application falls within the protection scope of embodiments of this application.

For ease of understanding the technical solutions of this application, the following describes related technical terms used in this application.

1. Autocorrelation and cross-correlation

For example, a periodic autocorrelation of a sequence a = [$a_1$, $a_2$, ..., $a_N$] is defined as:

$$\phi_{aa}(\tau) = \sum_{n=1}^{N} a_n a_{n+\tau}, \quad \tau = 0,1,2,\dots,N-1 \quad (1)$$

$a_n$ is an $n^{th}$ element in the sequence a, and $a_{n+\tau}$ is an $(n+\tau)^{th}$ element in the sequence a. When that if $\tau = 0$, $\phi_{aa}(\tau) \neq 0$, and if $\tau = 1,2, ..., N-1$, $\phi_{aa}(\tau) = 0$ is satisfied, the sequence a is a perfect periodic autocorrelation sequence, the sequence a and the sequence a have a perfect periodic correlation characteristic, or the sequence a has a perfect periodic autocorrelation characteristic.

For example, a result of a cross-correlation operation between two sequences reflects measurement of similarity between the two sequences. For the sequence a = [$a_1$, $a_2$, ... , $a_N$] and a sequence b = [$b_1$, $b_2$, ... , $b_N$], a cross-correlation between the sequence a and the sequence b may be calculated according to the following formula:

$$\phi_{ab}(\tau) = \sum_{n=1}^{N} a_n b_{n+\tau}, \quad \tau = 0,1,2,\dots,N-1 \quad (2)$$

$a_n$ is the $n^{th}$ element in the sequence a, and $b_{n+\tau}$ is an $(n+\tau)^{th}$ element in the sequence b. When that if $\tau = 0$, $\phi_{ab}(\tau) \neq 0$, and if $\tau = 1,2, ..., N-1$, $\phi_{ab}(\tau) = 0$ is satisfied, the sequence a and the sequence b have the perfect periodic correlation characteristic, or there is a perfect periodic cross-correlation characteristic between the sequence a and the sequence b.

For example, a normalized periodic cross-correlation between the sequence a and the sequence b is:

$$\varphi_{ab} = 20\log_{10}\left(\frac{\max\limits_{\tau=0,1,2,\dots,N-1}|\phi_{ab}(\tau)|}{|\phi_{aa}(0)|}\right) \quad (3),$$

where $\phi_{aa}(0)$ satisfies the following formula:

$$\phi_{aa}(0) = \sum_{n=1}^{N} a_n a_n \quad (4)$$

For example, for a sequence set including a plurality of sequences, a maximum value in a normalized periodic cross-correlation between two sequences in the sequence set may be referred to as a maximum cross-correlation corresponding to the sequence set, or referred to as a maximum cross-correlation for short, where the normalized periodic cross-correlation may also be referred to as a side lobe suppression ratio of one sequence relative to the other sequence.

2. UWB signal

For example, the UWB signal may also be referred to as a UWB frame, a UWB physical frame, a UWB packet, UWB data, or the like. FIG. 2a is a diagram of a structure of a UWB physical frame according to an embodiment of this application. As shown in FIG. 2a, the UWB physical layer frame structure may include one or more of the following: a synchronization header (synchronization header, SHR), a physical header (PHY header, PHR), physical layer data (PHY payload), a scrambled timestamp sequence (scrambled timestamp sequence, STS), and the like. In FIG. 2a, an example in which the frame structure includes the SHR, the PHR, and the physical layer data is used. It may be understood that the structure of the UWB physical frame alternatively includes the STS. In this case, the STS may be located between the SFD and the PHR; the STS may be located after the PHY payload; or the STS may be located after the SFD, and the frame structure does not include the PHR and the physical layer data.

For example, the SHR includes a synchronization (synchronization, SYNC) field and a start of frame delimiter (start of frame delimiter, SFD) field. The SYNC field includes one or more preamble symbols, and is mainly used for synchronization, channel estimation, ranging, and the like. The SFD field may be used to separate the SYNC field and a subsequent part. For example, the SFD field may be used to separate the SYNC field and a PHR field. For another example, the SFD field may be used to separate the SYNC field and an STS field. Examples are not listed one by one again. The PHR mainly carries information used to decode data. For example, the PHR field may indicate some parameters needed for demodulating a physical layer data field, such as length information, a data transmission rate, and a coding type that are of the physical layer data field, to assist a receive end in correctly demodulating the data. The physical layer data field is used to carry the data. The STS is mainly used to ensure ranging security or integrity protection.

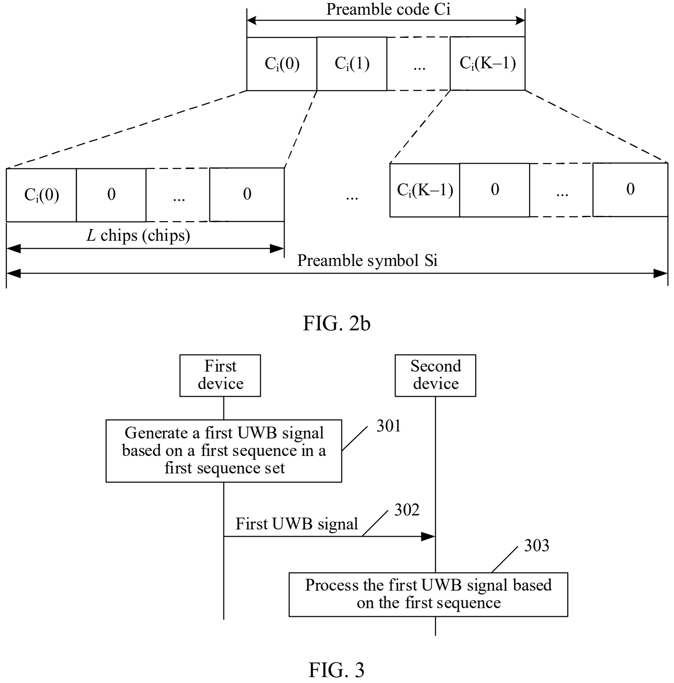

For example, the SYNC field includes $N_{psym}$ repeated preamble symbols (preamble symbol). As shown in FIG. 2b, one preamble symbol $S_i$ may be generated by using a preamble code (preamble code) $C_i$, and a preamble code may also be referred to as a sequence (or referred to as a preamble sequence). A length of the preamble code $C_i$ is K, in other words, the preamble code $C_i$ includes K elements, which are respectively $C_i(0)$, $C_i(1)$, ..., and $C_i(K-1)$, where K is an integer greater than 1. For example, K=31, or K=127. Examples are not listed one by one again.

The preamble symbol $S_i$ is generated by inserting L-1 zeros between two adjacent elements in the preamble code $C_i$, in other words, one element in the preamble code $C_i$ is extended to L elements, so that a length of the generated preamble symbol $S_i$ is L*K chips (chips). For example, $C_i(0)$ in the preamble code $C_i$ may be extended to $C_i(0)$, 0, ..., and *L*-2 zeros are omitted by using the ellipsis. A length of each chip is $T_c$, and each chip is used to send a short pulse. For example, when a channel bandwidth is 500 megahertz (megahertz, MHz), $T_c$ = 2 nanoseconds (nanosecond, ns).

The SFD field may be generated by spreading the preamble symbol $S_i$ by using a spreading code a = [$a_0$, $a_1$, $\cdots$ , $a_{N_{SFD}-1}$] whose length is $N_{SFD}$. A receiving device may perform detection on a SYNC of a sending device, to implement synchronization, channel estimation, ranging, and the like. For example, the receiving device may perform correlation (for example, perform sliding correlation) on a local preamble symbol $S_j$ and a received signal, and ensure detection reliability by using a correlation characteristic of a sequence. The receiving device may perform detection on an SFD of the sending device, to determine a start location of a PHR, a PHY payload, or an STS. To be specific, if the receiving device correctly detects the SFD, it may be considered that the PHR, the PHY payload, or the STS follows the SFD, and the receiving device starts to decode the PHR/data or starts to perform detection on the STS. A length of the SHR and a length of the frame vary with different parameter configurations.

For example, a sequence (namely, the preamble code $C_i$) that can be used to generate the SHR has a perfect periodic autocorrelation characteristic, and an element included in the sequence belongs to {0, 1, -1}. In other words, the sequence is a ternary perfect periodic autocorrelation sequence. For example, the sequence that can be used for the SHR may include eight ternary perfect autocorrelation 31-length sequences and 16 ternary perfect autocorrelation 127-length sequences. Each channel (Channel) may support two 31-length sequences or four 127-length sequences. The 31-length sequence and the 127-length sequence may be used for a UWB device that is based on a coherent receiver architecture, or may be used for a UWB device that is based on a non-coherent receiver architecture. For example, a maximum cross-correlation of the two 31-length sequences supported by each channel in the coherent receiver architecture is -12 dB, and a maximum cross-correlation in the non-coherent receiver architecture is also -12 dB. A maximum cross-correlation of the four 127-length sequences supported by each channel in the coherent receiver architecture is -18.1 dB, and a maximum cross-correlation in the non-coherent receiver architecture is -10.1 dB.

For example, a sequence $C_0$ is any one of the eight ternary perfect autocorrelation 31-length sequences or the 16 ternary perfect autocorrelation 127-length sequences, that is, an element in the sequence $C_0$ belongs to {0, 1, -1}. A sequence $C_1$ is obtained by replacing an element -1 in the sequence $C_0$ with 1, and the sequence $C_1$ is a binary sequence whose elements belong to {0, 1}. A sequence $C_2$ is obtained by replacing an element 0 in the sequence $C_1$ with an element -1, and the sequence $C_2$ is a binary sequence whose elements belong to {1, -1}. The sequence $C_0$ and the sequence $C_0$ have a perfect periodic correlation characteristic, and the sequence $C_1$ and the sequence $C_2$ have the perfect periodic correlation characteristic.

For example, the sequence $C_0$ is [-1 0 0 0 0 1 0 -1 0 1 1 1 0 1 -1 0 0 0 1 -1 1 1 1 0 0 -1 1 0 -1 0 0], the sequence $C_1$ is [1 0 0 0 0 1 0 1 0 1 1 1 0 1 1 0 0 0 1 1 1 1 1 0 0 1 1 0 1 0 0], and the sequence $C_2$ is [1 -1 -1 -1 -1 1 -1 1 -1 1 1 1 -1 1 1 -1 -1 -1 1 1 1 1 1 -1 -1 1 1 -1 1 -1 -1]. Cyclic shift correlation is performed on the sequence $C_0$ and the sequence $C_0$. When cyclic shift is 0, a correlation value is not 0; and when cyclic shift is not 0, the correlation value is 0. In this case, the sequence $C_0$ has the perfect periodic autocorrelation characteristic. To be specific, a result obtained by performing correlation on $C_0$ and $C_0$ (to be specific, multiplying each corresponding element in the sequence $C_0$ by the element and then performing summation) is 16. A sequence obtained by performing cyclic shift on the sequence $C_0$ once is [0 -1 0 0 0 0 1 0 -1 0 1 1 1 0 1 -1 0 0 0 1 -1 1 1 1 0 0 -1 1 0 -1 0], and then a result obtained by performing correlation on the sequence and the sequence $C_0$ is 0. All results obtained by performing correlation on the sequence $C_0$ and a sequence obtained by performing cyclic shift on the sequence $C_0$ for m times (m is not equal to 0) are 0. Therefore, the sequence $C_0$ and the sequence $C_0$ have the perfect periodic correlation characteristic. Similarly, cyclic shift correlation is performed on the sequence $C_1$ and the sequence $C_2$. When cyclic shift is 0, a correlation value is not 0; and when cyclic shift is not 0, the correlation value is 0. Therefore, it may be considered that the sequence $C_1$ and the sequence $C_2$ have the perfect periodic correlation characteristic.

For example, for the coherent receiver architecture, the sending device may select a sequence from the eight ternary perfect autocorrelation 31-length sequences or the 16 ternary perfect autocorrelation 127-length sequences as a sending sequence (for example, the sequence $C_0$), generate a preamble symbol Si based on the sending sequence, and send a UWB signal including the preamble symbol Si. A coherent receiving device may use the sending sequence as a local reference sequence to generate a local preamble symbol $S_j$, perform sliding correlation on the local preamble symbol $S_j$ and the received UWB signal, and process a result obtained through correlation, to implement functions such as synchronization and ranging.

For example, for the non-coherent receiver architecture, the sending device may generate a preamble symbol Si based on a sending sequence or a binary sequence (for example, the sequence $C_1$) whose elements belong to {0, 1} and that corresponds to the sending sequence, and send a UWB signal including the preamble symbol Si. A non-coherent receiving device may use a binary sequence (for example, the sequence $C_2$) whose elements belong to {1, -1} and that corresponds to the sending sequence as a local reference sequence to generate a local preamble symbol $S_j$, perform sliding correlation on the local preamble symbol $S_j$ and the received UWB signal, and process a result obtained through correlation, to implement functions such as synchronization and ranging. The non-coherent receiving device squares the received signal. Therefore, the sending device may send the UWB signal based on the sending sequence (a ternary sequence whose elements belong to {0, 1, -1}) or the binary sequence whose elements belong to {0, 1} and that corresponds to the sending sequence.

In a process in which the sending device communicates with the receiving device, there is a perfect periodic correlation characteristic between the sending sequence used by the sending device and the local reference sequence used by the receiving device, so that when the receiving device processes the received UWB signal based on the local reference sequence, accurate synchronization, ranging, and the like can be implemented. If an interference signal of another device (or referred to as a non-target sending device) exists in a signal received by the receiving device, when there is a low cross-correlation between a sending sequence used by the non-target sending device and the local reference sequence of the receiving device, after the receiving device processes the received signal based on the local reference sequence, the interference signal corresponding to the non-target sending device may be suppressed, and interference between a plurality of users is reduced.

However, in a multi-user dense scenario like a garage, a quantity of sequences that can be used for coherent reception and non-coherent reception on each channel is limited. For example, each channel supports a maximum of two 31-length sequences and four 127-length sequences, and there is a high probability that different users use a same sending sequence. Consequently, a correlation between the local reference sequence of the receiving device and the sending sequence used by the non-target sending device is high, and inter-user interference is large.

In view of this, embodiments of this application provide a communication method, a communication apparatus, and a communication system, to reduce inter-user interference.

The method provided in embodiments of this application may be applied to a sending device and a receiving device. The transmit end and the receive end may be understood as relative communication apparatuses. For example, the sending device may be understood as a transmit end of a UWB signal, and the receiving device may be understood as a receive end of the UWB signal. Alternatively, the method provided in embodiments of this application may be applied to a first device and a second device. For example, the first device may include a full-function device, and the second device may include a reduced-function device. For another example, the first device may include a reduced-function device, and the second device includes a reduced-function device. For another example, the first device includes a reduced-function device, and the second device includes a full-function device. For another example, both the first device and the second device are full-function devices. It may be understood that the full-function device and the reduced-function device in FIG. 1a and FIG. 1b are merely examples. Any apparatus that can implement the method provided in embodiments of this application falls within the protection scope of embodiments of this application. Therefore, the first device and the second device listed above should not be construed as a limitation on embodiments of this application. It may be understood that, in embodiments of this application, the method provided in embodiments of this application is described by using two sides: the first device and the second device. However, in a process of information transmission between the first device and the second device, there may be another apparatus. For example, information between the first device and the second device is forwarded via a forwarding apparatus. Therefore, in embodiments of this application, mutual information transfer may be implemented by using a technical means that can be completed by a person skilled in the art. An apparatus other than the first device and the second device is not limited in embodiments of this application.

FIG. 3 is a diagram of interaction of a communication method according to an embodiment of this application. As shown in FIG. 3, the method includes but is not limited to the following steps.

301: A first device generates a first UWB signal based on a first sequence in a first sequence set. The first sequence set includes at least two 121-length sequences, at least two 133-length sequences, at least two 73-length sequences, or at least two 91-length sequences.

The first sequence set meets: An element in any sequence in the first sequence set belongs to {0, 1, -1}, a second sequence and a third sequence are any two different sequences in the first sequence set, and a cross-correlation between a first binary sequence corresponding to the second sequence and a second binary sequence corresponding to the third sequence is less than a first threshold. The first binary sequence corresponding to the second sequence is determined based on the second sequence, and an element in the first binary sequence corresponding to the second sequence belongs to {0, 1}. The second binary sequence corresponding to the third sequence is determined based on the third sequence, and an element in the second binary sequence corresponding to the third sequence belongs to {1, b}, where b is an integer not equal to -1. Alternatively, the first sequence set meets: An element in any sequence in the first sequence set belongs to {0, 1}, a second sequence and a third sequence are any two different sequences in the first sequence set, and a cross-correlation between the second sequence and a second binary sequence corresponding to the third sequence is less than a second threshold. The second binary sequence corresponding to the third sequence is determined based on the third sequence, and an element in the second binary sequence corresponding to the third sequence belongs to {1, b}, where b is an integer not equal to -1.

For example, when the element in any sequence in the first sequence set belongs to {0, 1, -1}, both an element in the second sequence and an element in the third sequence belong to {0, 1, -1}, and the second sequence and the third sequence each have a perfect periodic autocorrelation characteristic. The first binary sequence corresponding to the second sequence may be obtained by replacing an element -1 in the second sequence with an element 1. To be specific, a length of the first binary sequence corresponding to the second sequence is the same as a length of the second sequence, locations of elements 1 in the first binary sequence corresponding to the second sequence are the same as locations of the element -1 and an element 1 in the second sequence, and a location of an element 0 in the first binary sequence corresponding to the second sequence is the same as a location of an element 0 in the second sequence. For example, if the second sequence is [1 0 1 -1 0 0 0 -1 0 1 1 1 0 0 1 1 -1 -1 1 1 -1 1 -1 1 -1 -1 1 1 0 -1 -1 -1 1 1 0 1 -1 0 1 1 -1 0 -1 0 1 -1 -1 -1 1 -1 0 0 0 0 -1 1 0 -1 1 1 -1 -1 -1 1 1 1 0 1 -1 0 0 0 -1 1 0 0 -1 0 -1 0 1 0 1 1 1 0 0 -1 1 1 0 1 1 -1 0 1 0 1 1 1 -1 0 -1 0 0 -1 0 -1 1 0 1 1 -1 1 -1 1 0 0 0 1 1 0 1], the first binary sequence corresponding to the second sequence is [1 0 1 1 0 0 0 1 0 1 1 1 0 0 1 1 1 1 1 1 1 1 1 1 1 1 1 1 0 1 1 1 1 1 1 0 1 1 0 1 1 1 0 1 0 1 1 1 1 1 1 0 0 0 0 1 1 0 1 1 1 1 1 1 1 1 1 0 1 1 0 0 0 1 1 0 0 1 0 1 0 1 0 1 1 1 0 0 1 1 1 0 1 1 1 0 1 1 1 0 1 0 1 1 1 1 0 1 0 0 1 0 1 1 0 1 1 1 0 0 0 1 1 0 1].

It may be understood that, in this embodiment of this application, a first binary sequence corresponding to a sequence is obtained by replacing an element -1 in the sequence with an element 1. For example, a first binary sequence corresponding to the first sequence is obtained by replacing an element -1 in the first sequence with an element 1. A first binary sequence corresponding to any sequence in the first sequence set is obtained by replacing an element -1 in the sequence with an element 1. Examples are not listed one by one herein again.

For example, the second binary sequence corresponding to the third sequence may be obtained by replacing an element -1 in the third sequence with an element 1 and replacing an element 0 in the third sequence with an element b. To be specific, a length of the second binary sequence corresponding to the third sequence is equal to a length of the third sequence, a location of an element b in the second binary sequence corresponding to the third sequence is the same as a location of the element 0 in the third sequence, and locations of elements 1 in the second binary sequence corresponding to the third sequence are the same as locations of an element 1 and the element -1 in the third sequence.

For example, a value of b is determined based on the length of the third sequence and a quantity of elements 0 in the third sequence. For example, b satisfies the following formula:

$$ b = -\left\lfloor \frac{N-1-M}{M} \right\rfloor \quad (5) $$

N is the length of the third sequence, M is the quantity of elements 0 in the third sequence, and ⌊ ⌋ means rounding down. For example, when the length of the third sequence is 121 (N=121), and the quantity of elements 0 in the third sequence is 40 (M=40), b=-2. In other words, the element in the second binary sequence corresponding to the third sequence belongs to {1, -2}. For another example, when the length of the third sequence is 133 (N=133), and the quantity of elements 0 in the third sequence is 12 (M=12), b=-10. In other words, the element in the second binary sequence corresponding to the third sequence belongs to {1, -10}.

For example, when N=121, (M=40), and b=-2, and the element in the second binary sequence corresponding to the third sequence belongs to {1, -2}. If the third sequence is [0 1 -1 1 -1 1 0 -1 0 1 -1 0 -1 0 1 0 1 -1 1 0 1 0 0 -1 1 0 -1 1 0 0 1 0 1 -1 0 1 0 1 1 1 -1 0 1 1 1 1 -1 -1 1 1 1 -1 -1 0 0 -1 -1 1 1 1 0 1 1 1 1 -1 -1 0 -1 0 0 0 -1 1 0 0 1 -1 1 -1 -1 0 1 1 1 0 1 -1 -1 0 -1 1 0 0 1 1 -1 1 1 0 -1 1 0 -1 -1 -1 -1 -1 1 1 -1 0 0 1 -1 -1 -1 0 1 0 1 0 0 0 0 0], the second binary sequence corresponding to the third sequence is [-2 1 1 1 1 1 -2 1 -2 1 1 -2 1 -2 1 -2 1 1 1 -2 1 -2 -2 1 1 -2 1 1 -2 -2 1 -2 1 1 -2 1 -2 1 1 1 1 -2 1 1 1 1 1 1 1 1 1 -2 -2 1 1 1 1 -2 1 1 1 1 1 1 1 -2 -2 1 1 1 1 -2 1 1 1 1 1 1 -2 1 -2 -2 -2 1 1 -2 -2 1 1 1 1 1 -2 1 1 1 1 -2 1 1 1 -2 1 1 1 -2 1 1 1 -2 -2 1 1 1 1 -2 1 1 1 -2 1 1 1 1 1 1 1 1 -2 -2 1 1 1 1 1 -2 1 1 -2 -2 -2 -2 -2 -2].

It may be understood that, in this embodiment of this application, a second binary sequence corresponding to a sequence is obtained by replacing an element -1 in the sequence with an element 1 and replacing an element 0 in the sequence with an element b, where b is determined based on a length of the sequence and a quantity of elements 0 in the sequence (that is, b may be determined according to the formula (5)). For example, a second binary sequence corresponding to the first sequence is obtained by replacing an element -1 in the first sequence with an element 1 and replacing an element 0 in the first sequence with an element b, where b is determined based on a length of the first sequence and a quantity of elements 0 in the first sequence. A second binary sequence corresponding to any sequence in the first sequence set is obtained by replacing an element -1 in the sequence with an element 1 and replacing an element 0 in the sequence with an element b. Examples are not listed one by one herein again.

In this embodiment of this application, the second binary sequence corresponding to the third sequence may be determined based on the length of the third sequence and the quantity of elements 0 in the third sequence, so that there is a perfect periodic cross-correlation characteristic between first binary sequences corresponding to third sequences of different lengths and second binary sequences corresponding to the third sequences, or there is a perfect periodic cross-correlation characteristic between the third sequences and the second binary sequences corresponding to the third sequences.

It may be understood that the second sequence and the third sequence are any two different sequences in the first sequence set. This means that any sequence in the first sequence set has a property of the second sequence or the third sequence. In other words, the first sequence has the perfect periodic autocorrelation characteristic, and there is a perfect periodic cross-correlation characteristic between the first binary sequence corresponding to the first sequence and the second binary sequence corresponding to the first sequence. Therefore, when a receiving device (namely, the second device) of the first UWB signal is a coherent receiving device, the first device may generate the first UWB signal based on the first sequence, where an element in the first sequence belongs to {0, 1, -1}. The second device may process the received first UWB signal based on the first sequence, to implement functions such as accurate synchronization and ranging by using the perfect periodic autocorrelation characteristic of the first sequence. When the second device is a non-coherent receiving device, the first device may generate the first UWB signal based on the first sequence, where an element in the first sequence belongs to {0, 1, -1}; or the first device may generate the first UWB signal based on the first binary sequence corresponding to the first sequence, where an element in the first binary sequence corresponding to the first sequence belongs to {0, 1}. The second device may process the received first UWB signal based on the second binary sequence corresponding to the first sequence, to implement functions such as accurate synchronization and ranging by using the perfect periodic cross-correlation characteristic between the first binary sequence corresponding to the first sequence and the second binary sequence corresponding to the first sequence.

For example, when the element in any sequence in the first sequence set belongs to {0, 1}, both an element in the second sequence and an element in the third sequence belong to {0, 1}. The second binary sequence corresponding to the third sequence is generated by replacing an element 0 in the third sequence with an element b, and there is a perfect periodic cross-correlation characteristic between the third sequence and the second binary sequence corresponding to the third sequence. To be specific, a length of the second binary sequence corresponding to the third sequence is equal to a length of the third sequence, a location of an element b in the second binary sequence corresponding to the third sequence is the same as a location of the element 0 in the third sequence, and a location of an element 1 in the second binary sequence corresponding to the third sequence is the same as a location of an element 1 in the third sequence. A second binary sequence corresponding to the second sequence is generated by replacing an element 0 in the second sequence with an element b, and there is a perfect periodic cross-correlation characteristic between the second sequence and the second binary sequence corresponding to the second sequence.

It may be understood that the second sequence and the third sequence are any two different sequences in the first sequence set. This means that any sequence in the first sequence set has a property of the second sequence or the third sequence. In other words, there is a perfect periodic cross-correlation characteristic between the first sequence and the second binary sequence corresponding to the first sequence. Therefore, when the second device is a non-coherent receiving device, the first device may generate the first UWB signal based on the first sequence, where an element in the first sequence belongs to {0, 1}. The second device may process the received first UWB signal based on the second binary sequence corresponding to the first sequence, to implement functions such as accurate synchronization and ranging by using the perfect periodic cross-correlation characteristic between the first sequence and the second binary sequence corresponding to the first sequence.

In this embodiment of this application, a cross-correlation between sequences may also be referred to as a side lobe suppression ratio between sequences, or referred to as a normalized periodic cross-correlation between sequences. For a sequence x and a sequence y, both a length of the sequence x and a length of the sequence y are N, and a cross-correlation $\varphi_{xy}$ between the sequence x and the sequence y satisfies the following formula:

$$\varphi_{xy} = 20 log_{10} \left( \frac{\max\limits_{\tau=0,1,2,...,N-1} |\phi_{xy}(\tau)|}{|\phi_{xx}(0)|} \right) \ (6)$$

where

$$\phi_{xy}(\tau) = \sum_{n=1}^{N} x_n y_{n+\tau}, \ \tau = 0,1,2,...,N-1 \ (7)$$

$$\phi_{xx}(0) = \sum_{n=1}^{N} x_n x_n \ (8)$$

$x_n$ is an nth element in the sequence x, and $y_n$ is an nth element in the sequence y. For example, the sequence x is the second sequence, and the sequence y is the third sequence; the sequence x is the first binary sequence corresponding to the second sequence, and the sequence y is the second binary sequence corresponding to the third sequence; or the sequence x is the second sequence, and the sequence y is the second binary sequence corresponding to the third sequence.

It may be understood that a cross-correlation between any two sequences in this embodiment of this application may be calculated according to the formula (6). For example, a cross-correlation between any two sequences in the first sequence set may be calculated according to the formula (6). Examples are not listed one by one herein again.

For example, the first threshold may be less than or equal to -10 dB, and the second threshold is less than or equal to -10 dB.

For example, the first UWB signal may include one or more of the following: an SHR, a PHR, physical layer data, an STS, and the like. The SHR includes a SYNC field and an SFD field, and the SYNC field includes one or more preamble symbols. The first device may generate the preamble symbol based on the first sequence. For example, the first device may insert L-1 zeros between two adjacent elements in the first sequence to generate one preamble symbol, and the SYNC field may include a plurality of repeated preamble symbols. The first device may further spread the preamble symbol by using a spreading code $a = [a_0, a_1, \cdots, a_{N_{SFD}-1}]$ whose length is $N_{SFD}$, to obtain the SFD field. It may be understood that for specific descriptions of the SHR, the PHR, the physical layer data, the STS, and the like, refer to the foregoing related descriptions. Details are not described one by one herein again.

For example, when the receiving device (for example, the second device in this embodiment of this application) of the first UWB signal is the non-coherent receiving device, and the first sequence is a ternary sequence whose elements belong to {0, 1, -1}, the first device may also generate the first UWB signal based on the first binary sequence corresponding to the first sequence. The first binary sequence corresponding to the first sequence is determined based on the first sequence, and the element in the first binary sequence corresponding to the first sequence belongs to {0, 1}. For example, the first binary sequence corresponding to the first sequence is obtained by replacing the element -1 in the first sequence with an element 1.

302: The first device sends the first UWB signal, and correspondingly, the second device receives the first UWB signal.

303: The second device processes the first UWB signal based on the first sequence.

For example, the second device may generate a local preamble symbol based on the first sequence, and perform sliding correlation on the local preamble symbol and the received first UWB signal, to implement synchronization, ranging, and the like.

For example, the second device may prestore a second sequence set, where the second sequence set is the same as the first sequence set, or sequences in the second sequence set are in one-to-one correspondence with sequences in the first sequence set. For example, a sequence in the second sequence set is a first binary sequence corresponding to a sequence in the first sequence set or a second binary sequence corresponding to the sequence in the first sequence set. After receiving the first UWB signal, the second device may obtain, from the second sequence set, the first sequence, the first binary sequence corresponding to the first sequence, or the second binary sequence corresponding to the first sequence, to process the first UWB signal.

For example, when the second device is the non-coherent receiving device, the second device may process the first UWB signal based on the second binary sequence corresponding to the first sequence. The second binary sequence corresponding to the first sequence is determined based on the first sequence, and an element in the second binary sequence corresponding to the first sequence belongs to {1, b}. In other words, the second device may determine, based on the first sequence, the second binary sequence corresponding to the first sequence, and generate the local preamble symbol based on the second binary sequence corresponding to the first sequence.

In this embodiment of this application, the first sequence set corresponds to a channel for transmission of the first UWB signal, the channel may support the sequence in the first sequence set, and the first sequence set includes the at least two 121-length sequences, the at least two 133-length sequences, the at least two 73-length sequences, or the at least two 91-length sequences. In this way, the sequence supported by the channel is expanded, and each channel can support a larger quantity of sequences, to reduce inter-user interference, and in particular, inter-user interference in a multi-user dense scenario.

In a possible implementation, the first sequence set corresponds to at least one channel, and transmission of the first UWB signal is performed on the at least one channel. That the first sequence set corresponds to the at least one channel may be understood as that a UWB signal whose transmission is performed on the at least one channel is generated based on the sequence in the first sequence set. The at least one channel may include at least two adjacent channels or non-adjacent channels. The adjacent channels are two different channels whose center frequencies are close. For example, a spacing between the center frequencies of the two adjacent channels is less than or equal to 500 MHz. For example, there are a total of three UWB channels: a channel 1, a channel 2, and a channel 3, and center frequencies of the channel 1, the channel 2, and the channel 3 are respectively 7.5 GHz, 8 GHz, and 8.5 GHz. In this case, the channel 1 and the channel 2 may be referred to as adjacent channels, and the channel 1 and the channel 3 may be referred to as non-adjacent channels. The first sequence set may correspond to only one channel, for example, correspond to the channel 2. Alternatively, the first sequence set may correspond to a plurality of channels, for example, correspond to the channel 1 and the channel 3. When the first sequence set corresponds to non-adjacent channels, or when adjacent channels correspond to different sequence sets, inter-user interference of adjacent channels can be reduced, and performance can be improved.

For example, in a multi-user scenario (for example, a garage), a plurality of users perform transmission of UWB signals on the at least one channel based on sequences in the first sequence set, and different users generate corresponding UWB signals based on different sequences in the first sequence set. For example, before generating the first UWB signal, the first device may further monitor whether the sequence in the first sequence set is used by another user, select, from the first sequence set, a first sequence that is not used by the another user, and then generate the first UWB signal based on the first sequence.

For example, the first device may further store a plurality of sequence sets, and any different sequence sets in the plurality of sequence sets correspond to different channels. For example, the first device stores the first sequence set and a third sequence set, the first sequence set corresponds to a first channel, and the third sequence set corresponds to a second channel. When the first device needs to transmit a UWB signal through the first channel, the first device may select a sequence from the first sequence set corresponding to the first channel to generate the UWB signal. When the first device needs to transmit a UWB signal through the second channel, the first device may select a sequence from the third sequence set to generate the UWB signal.

In this embodiment of this application, the first sequence set corresponds to the at least one channel, and the UWB signal whose transmission is performed on the at least one channel is generated based on the sequence in the first sequence set, so that mutual interference between signals whose transmission is performed by different devices on the at least one channel can be reduced.

For example, to describe the first sequence set in more detail, this embodiment of this application further provides the following several examples.

Example 1: The element in any sequence in the first sequence set belongs to {0, 1, -1}, the second sequence and the third sequence are any two different sequences in the first sequence set, and the cross-correlation between the first binary sequence corresponding to the second sequence and the second binary sequence corresponding to the third sequence is less than the first threshold. The first binary sequence corresponding to the second sequence is determined based on the second sequence, and the element in the first binary sequence corresponding to the second sequence belongs to {0, 1}. The second binary sequence corresponding to the third sequence is determined based on the third sequence, and the element in the second binary sequence corresponding to the third sequence belongs to {1, b}, where b is the integer not equal to -1.

In this example, the first sequence set includes at least two ternary 121-length sequences, at least two ternary 133-length sequences, at least two ternary 73-length sequences, or at least two ternary 91-length sequences.

It may be understood that, for specific descriptions of the first binary sequence corresponding to the second sequence, the second binary sequence corresponding to the third sequence, and b, refer to the foregoing related descriptions. Details are not described one by one herein again.

In this embodiment of this application, in a non-coherent receiving scenario, a plurality of sequences may be generated in a differential set mapping manner, where the plurality of sequences have the perfect periodic autocorrelation characteristic; and the plurality of sequences are filtered and grouped, to obtain a plurality of sequence groups, where the plurality of sequence groups all meet: A cross-correlation between a first binary sequence corresponding to any sequence in a sequence group and a second binary sequence corresponding to another sequence in the sequence group is less than the first threshold. The first sequence set may be any one of the plurality of sequence groups or a subset of any one of the plurality of sequence groups (in other words, the first sequence set may be included in any one of the plurality of sequence groups).

For example, eight ternary 73-length sequences, 24 ternary 91-length sequences, 66 ternary 121-length sequences, and 72 ternary 133-length sequences may be generated in the differential set mapping manner. The eight ternary 73-length sequences, the 24 ternary 91-length sequences, the 66 ternary 121-length sequences, and the 72 ternary 133-length sequences are filtered and grouped, and an obtained grouping result may be shown in Table 1. As shown in Table 1, eight sequence groups may be obtained by filtering and grouping the eight ternary 73-length sequences, the 24 ternary 91-length sequences, the 66 ternary 121-length sequences, and the 72 ternary 133-length sequences, and include one group of ternary 73-length sequences, one group of ternary 91-length sequences, three groups of ternary 121-length sequences, and three groups of ternary 133-length sequences. The eight sequence groups all meet: A cross-correlation between a first binary sequence corresponding to any sequence in a sequence group and a second binary sequence corresponding to another sequence in the sequence group is less than or equal to the first threshold.

Table 1

| Sequence length N | 73 | 91 | 121 | 133 |
|---|---|---|---|---|
| Quantity M of elements 0 in a sequence | 9 | 10 | 40 | 12 |

(continued)

| Value of b | -7 | -8 | -2 | -10 |
|---|---|---|---|---|
| Quantity of sequences | 8 | 12 | Group 1: 24<br>Group 2: 23<br>Group 3: 16 | Group 1: 12<br>Group 2: 12<br>Group 3: 12 |
| Maximum intra-group cross-correlation in a non-coherent receiver architecture | -12 dB | -9.5 dB | -10.6 dB | -11.3 dB |

For example, the first sequence set may be any one of the eight sequence groups, or the first sequence set may be included in any one of the eight sequence groups.

In a possible implementation, the first sequence set includes the at least two ternary 73-length sequences. The first sequence set may include at least two of eight ternary sequences shown in Table 2. In other words, the first sequence set may be a sequence group shown in Table 2, or the first sequence set may be included in the sequence group shown in Table 2. Table 2 lists eight ternary 73-length sequences. The first device and/or the second device may obtain a corresponding first binary sequence and a corresponding second binary sequence based on any ternary sequence in Table 2. Sequences of a sequence group index and a sequence index are not limited in this embodiment of this application.

For example, for a sequence whose sequence group index is 1 and sequence index is 1 shown in Table 2: [1 0 1 1 1 0 1 0 0 -1 1 1 -1 1 1 -1 1 1 0 1 -1 -1 -1 1 -1 1 1 0 -1 1 -1 -1 -1 -1 1 -1 1 1 1 -1 -1 -1 1 1 1 1 0 1 -1 1 1 0 -1 -1 -1 1 -1 -1 -1 1 1 -1 -1 1 1 1 1 0 -1 1 -1 1 -1 1], cyclic shift of 1 bit may be performed on the sequence to obtain a sequence: [0 1 1 1 0 1 0 0 -1 1 1 -1 1 1 -1 1 1 0 1 -1 -1 -1 1 -1 1 1 0 -1 1 -1 -1 -1 -1 1 -1 1 1 1 -1 -1 -1 1 1 1 1 0 1 -1 1 1 0 -1 -1 -1 1 -1 -1 -1 1 1 -1 -1 1 1 1 1 0 -1 1 -1 1 -1 1 1], or cyclic shift of 2 bits may be performed on the sequence to obtain a sequence: [1 1 1 0 1 0 0 -1 1 1 -1 1 1 -1 1 1 0 1 -1 -1 -1 1 -1 1 1 0 -1 1 -1 -1 -1 -1 1 -1 1 1 1 -1 -1 -1 1 1 1 1 0 1 -1 1 1 0 -1 -1 -1 1 -1 -1 -1 1 1 -1 -1 1 1 1 1 0 -1 1 -1 1 -1 1 1 0]. Cyclic shift of another quantity of bits may alternatively be performed on the sequence. Examples are not listed one by one herein again.

It may be understood that a sequence obtained by performing any cyclic shift on any sequence in Table 2 and the sequence have a same correlation property, and therefore may be understood as a same sequence. In other words, the sequence obtained by performing any cyclic shift on any sequence in Table 2 may be used as the sequence in this embodiment. In other words, the sequence in the first sequence set may be a sequence obtained by performing any cyclic shift on at least two sequences in any sequence group shown in Table 2. For example, the sequence in the first sequence set may be a sequence obtained by performing cyclic shift of n bits on the at least two sequences in any sequence group shown in Table 2, where n is any integer from 0 to 72.

Optionally, the eight sequences shown in Table 2 may alternatively be divided into a plurality of sequence groups, for example, two sequence groups. Each sequence group includes four sequences, and sequences included in the two sequence groups are all different.

Table 2

| Sequence group index | Sequence index | Sequence |
|---|---|---|
| 1 | 1 | [1 0 1 1 1 0 1 0 0 -1 1 1 -1 1 1 -1 1 1 0 1 -1 -1 -1 1 -1 1 1 0 -1 1 - 1 -1 -1 -1 1 1 -1 1 1 -1 -1 -1 1 1 1 1 0 1 -1 1 1 0 -1 -1 -1 1 -1 -1 - 1 1 1 -1 -1 1 1 1 1 0 -1 1 -1 1 -1 1 1] |
| | 2 | [1 1 1 -1 -1 -1 0 -1 -1 0 -1 -1 1 1 -1 1 0 1 -1 1 -1 -1 1 1 0 -1 1 1 0 0 1 1 1 -1 1 1 1 1 -1 -1 -1 1 1 1 -1 0 -1 -1 1 1 1 1 -1 0 1 0 1 1 1 1 -1 1 - 1 -1 1 1 -1 1 1 1 1 -1 -1 -1 1 1 -1 1] |
| | 3 | [1 1 -1 1 -1 1 1 1 0 -1 1 1 1 1 1 -1 1 1 1 -1 1 1 1 -1 1 1 1 -1 1 1 -1 -1 -1 1 1 1 -1 0 -1 1 -1 0 1 1 1 -1 -1 1 0 0 -1 -1 -1 1 -1 -1 1 1 0 1 1 1 1 -1 1 1 1 -1 -1 -1 1 1 0 1 0 1 -1 0 -1 -1 -1 1 1] |
| | 4 | [1 0 1 -1 -1 -1 1 1 1 -1 1 1 1 1 1 0 1 -1 -1 1 1 -1 -1 -1 -1 1 0 0 -1 -1 1 1 1 1 0 -1 1 -1 1 0 -1 1 1 -1 -1 -1 1 1 -1 1 1 1 -1 1 1 1 -1 1 1 1 -1 1 1 1 1 1 1 -1 0 1 1 1 -1 1 -1 1 1 1 1 -1 -1 -1 0 -1 1 0] |
| | 5 | [1 1 1 -1 -1 1 1 1 -1 -1 -1 1 1 -1 1 -1 -1 -1 1 0 1 1 -1 1 0 1 1 1 1 -1 -1 -1 1 1 1 -1 1 1 -1 -1 -1 -1 1 1 -1 1 0 1 1 -1 1 1 -1 -1 -1 1 1 0 1 1 -1 1 1 1 -1 1 1 1 -1 0 0 1 0 1 1 1 0 1 1 -1 1 1 -1 1 -1 0 1] |

(continued)

| Sequence group index | Sequence index | Sequence |
|---|---|---|
| | 6 | [1 -1 1 -1 -1 -1 -1 -1 1 -1 0 1 0 -1 -1 0 1 1 -1 0 1 -1 1 -1 1 0 1 1 1 1 -1 1 0 -1 1 -1 -1 1 1 1 -1 -1 1 0 0 -1 1 -1 1 1 1 1 1 1 -1 -1 1 1 -1 0 -1 -1 1 1 1 -1 1 -1 -1 1 1] |
| | 7 | [1 1 -1 1 1 -1 -1 1 -1 1 1 1 1 0 1 0 -1 1 1 1 1 -1 -1 1 0 -1 1 1 -1 -1 - 1 1 1 1 -1 1 1 1 0 0 1 1 -1 0 1 -1 -1 1 1 -1 1 0 1 -1 1 -1 -1 0 -1 -1 0 -1 -1 -1 1 1 1 1 -1 1 -1 1 1 -1 -1 1] |
| | 8 | [1 -1 -1 0 -1 1 1 -1 -1 1 1 1 1 1 1 -1 1 -1 0 0 1 -1 -1 1 1 1 1 -1 -1 1 1 -1 0 1 -1 1 1 1 1 1 0 1 -1 1 1 -1 1 0 -1 1 1 0 -1 -1 0 1 0 -1 0 -1 1 -1 -1 -1 -1 -1 -1 1 1 -1 1 1 1 1 -1 -1 1 1 -1 1 1] |

In another possible implementation, the first sequence set includes the at least two ternary 91-length sequences. The first sequence set may include at least two of 12 ternary sequences shown in Table 3. In other words, the first sequence set may be a sequence group shown in Table 3, or the first sequence set may be included in the sequence group shown in Table 3. Table 3 lists 12 ternary 91-length sequences. The first device and/or the second device may obtain a corresponding first binary sequence and a corresponding second binary sequence based on any ternary sequence in Table 3.

It may be understood that a sequence obtained by performing any cyclic shift on any sequence in Table 3 and the sequence have a same correlation property, and therefore may be understood as a same sequence. In other words, the sequence obtained by performing any cyclic shift on any sequence in Table 3 may be used as the sequence in this embodiment. In other words, the sequence in the first sequence set may be a sequence obtained by performing any cyclic shift on the sequence shown in Table 3. Sequences of a sequence group index and a sequence index are not limited in this embodiment of this application. In Table 3, first binary sequences (namely, binary sequences whose elements belong to {0, 1}) corresponding to two sequences in each row are obtained by performing different cyclic shift on a same binary sequence whose elements belong to {0, 1}. Therefore, the first device may select either of the two sequences in each row.

Optionally, the 12 sequences in Table 3 may alternatively be divided into a plurality of sequence groups, for example, two sequence groups. Each sequence group includes six sequences, and each sequence included in one of the sequence groups is different from that in the other.

Table 3

| Sequence group index | Sequence index | Sequence |
|---|---|---|
| | 1 | [0 1 -1 1 -1 0 -1 0 -1 1 1 -1 -1 -1 1 1 0 -1 -1 -1 1 1 0 -1 1 -1 1 -1 1 1 1 -1 1 -1 0 -1 -1 1 -1 1 1 1 -1 -1 0 1 1 0 0 1 1 -1 1 1 1 -1 -1 -1 -1 -1 1 1 1 1 1 1 1 -1 0 1 -1 -1 1 1 -1 1 1 1 -1 -1 1 1 -1 1 1 1 -1 1 -1 1 1 1 1 -1 1 1 1 1 1 1 1 -1 1 1 1 1]<br>or<br>[1 -1 -1 1 1 -1 0 1 1 0 0 -1 -1 1 1 -1 -1 1 1 1 1 -1 1 1 -1 -1 -1 -1 -1 - 1 0 1 1 1 -1 1 1 1 1 1 1 1 -1 -1 1 1 -1 1 1 1 -1 -1 -1 -1 1 1 -1 -1 -1 -1 1 1 -1 -1 1 1 -1 1 1 0 -1 1 -1 -1 0 1 0 1 -1 1 1 1 -1 1 1 1 0 1 -1 1 1 -1 -1 0 1 1 1 1 1 -1 1 1 -1 1 1 1 0 1 1] |
| | 2 | [0 1 -1 1 -1 1 -1 1 1 1 1 1 1 -1 1 1 1 1 -1 -1 -1 -1 0 1 -1 -1 1 1 -1 1 1 1 0 1 1 -1 1 1 1 1 1 -1 0 -1 1 1 1 1 1 -1 1 1 1 -1 -1 -1 1 1 -1 -1 1 1 -1 -1 1 1 1 1 -1 -1 -1 0 1 -1 1 1 1 1 -1 -1 -1 -1 0 -1 1 0 1 -1 -1 1 1 1 1 -1 1 1 1 -1 0 0 - 1 1 1 0 1]<br>or<br>[0 1 -1 1 -1 -1 -1 1 1 0 -1 1 1 -1 1 -1 -1 -1 1 1 1 -1 1 1 1 1 -1 -1 1 1 1 1 1 1 1 1 0 1 1 1 -1 -1 -1 1 1 -1 -1 1 0 1 -1 0 1 -1 1 1 1 -1 1 1 1 1 -1 1 1 0 0 1 1 -1 0 -1 0 1 1 1 1 -1 1 1 1 -1 1 1 -1 -1 1 1 -1 1 -1 1 1 1 0 1 -1 -1 -1 -1 -1 1 1] |

(continued)

| Sequence group index | Sequence index | Sequence |
|---|---|---|
| 1 | 3 | [0 1 1 -1 -1 -1 1 1 1 0 -1 1 1 -1 1 1 1 1 -1 1 1 1 1 -1 1 0 -1 -1 -1 -1 1 -1 1 1 -1 -1 1 1 -1 -1 -1 1 1 0 -1 -1 1 1 -1 1 1 0 1 -1 1 -1 -1 1 1 1 -1 1 1 - 1 -1 1 -1 -1 1 1 -1 1 1 1 1 1 1 1 1 1 0 0 1 -1 -1 0 -1 1 0 1 1 1 -1 -1 -1 1 1 1 -1 0 1]<br>or<br>[1 0 -1 1 -1 1 -1 -1 -1 -1 0 1 -1 1 1 1 -1 1 1 -1 -1 -1 -1 -1 -1 0 1 - 1 1 1 1 -1 1 1 1 -1 1 1 1 1 1 0 1 -1 1 -1 1 1 0 -1 1 -1 1 1 1 -1 -1 -1 1 1 1 1 1 -1 -1 1 1 -1 1 1 -1 1 1 1 -1 -1 0 0 -1 1 1 1 0 -1 -1 0 1 1 -1 -1 1 1 1 1 -1 1 1 0] |
| | 4 | [1 -1 0 1 0 0 -1 -1 -1 1 1 1 -1 1 1 -1 -1 1 -1 0 -1 1 1 1 0 1 1 1 -1 -1 1 1 1 1 -1 -1 -1 1 -1 1 1 -1 1 0 -1 1 1 -1 1 0 1 1 -1 1 1 -1 1 1 0 -1 1 1 1 1 1 1 1 1 1 1 -1 -1 1 1 -1 -1 1 1 1 -1 1 1 1 0 1 1 -1 1 1 -1 1 -1 -1 1 -1 -1 1 1 1 -1 -1 - 1 0-1 1 1]<br>or<br>[0 1 0 0 1 1 1 -1 -1 1 1 1 -1 1 1 0 -1 -1 -1 0 -1 -1 -1 1 1 -1 1 1 1 -1 1 1 -1 1 1 -1 1 1 1 1 0 1 -1 1 -1 -1 -1 0 -1 1 1 1 -1 1 -1 1 0 1 -1 1 -1 1 1 1 -1 1 1 1 -1 -1 -1 1 1 1 1 -1 -1 1 1 1 1 -1 1 0 -1 -1 -1 -1 1 1 1 1 -1 1 1 1 1 1 1 -1 1 1 -1 1 0 -1 1 1 1 1] |
| | 5 | [0 -1 1 -1 1 1 -1 0 -1 -1 -1 1 1 0 1 1 1 -1 1 1 -1 1 1 -1 1 1 1 -1 1 1 -1 -1 1 -1 1 0 -1 -1 -1 1 0 1 -1 1 1 1 -1 1 -1 -1 1 1 1 0 0 1 0 1 1 1 1 -1 0 1 -1 1 1 -1 1 1 1 1 1 -1 1 1 1 1 -1 -1 -1 -1 1 0 1 -1 1 1 1 1 -1 1 1 1 1 -1 -1 1 1 1 -1 1 1 -1 1 1 -1 -1 1 1]<br>or<br>[1 -1 -1 1 -1 -1 1 -1 1 1 -1 1 1 1 0 1 1 -1 1 1 1 -1 1 1 -1 -1 1 -1 -1 1 1 1 1 1 1 1 1 1 -1 0 1 -1 1 1 -1 1 1 1 0 -1 1 1 -1 0 -1 1 -1 1 1 -1 1 -1 -1 -1 1 1 1 1 -1 -1 1 1 1 1 0 1 1 -1 0 -1 -1 1 -1 1 1 1 -1 1 -1 -1 -1 1 0 0 1 0 -1 1 1 1 1 -1 0 -1 -1 -1 1 1 1] |
| | 6 | [ 1 1 1 1 -1 1 -1 1 1 1 -1 -1 1 1 -1 -1 1 -1 1 1 1 -1 -1 -1 1 1 -1 -1 0 1 1 1 0 -1 1 1 1 1 -1 1 1 0 1 0 -1 -1 0 1 -1 1 1 1 -1 1 1 1 1 1 1 1 -1 -1 1 1 -1 1 1 1 0 0 1 1 1 -1 -1 0 1 -1 1 -1 -1 -1 -1 -1 -1 1 1 -1 1 0 1 -1 1 1 -1 1 1 -1 -1 -1 1 1 1 0 1 -1 1 1 -1 -1 -1 1 1]<br>or<br>[0 -1 1 1 1 1 -1 1 -1 -1 -1 1 1 1 1 -1 -1 1 1 1 0 0 0 1 -1 1 -1 1 1 -1 0 -1 -1 -1 -1 -1 1 1 1 -1 0 -1 1 1 -1 1 1 1 1 1 -1 1 1 -1 0 1 1 -1 1 1 1 1 -1 1 1 1 1 -1 -1 1 1 1 1 -1 1 1 1 1 -1 1 1 1 1 1 0 -1 -1 -1 1 0 -1 -1 1 1 1 -1 1 1 1 0 -1 0 -1 1 1] |
| | 7 | [0 1 1 1 1 1 -1 -1 1 1 1 1 -1 1 -1 0 -1 1 0 1 -1 1 1 -1 -1 1 -1 1 0 -1 1 1 -1 1 1 -1 1 0 1 -1 1 -1 1 1 1 -1 1 1 1 1 1 0 -1 0 1 1 1 1 -1 1 -1 1 -1 -1 1 1 -1 1 1 1 1 1 1 -1 1 1 -1 1 -1 -1 -1 1 1 1 -1 1 1 1 1 1 1 1 1 -1 1 1 1 -1 1 1 0 0 1 -1 -1 1 1 0-1 -1 1]<br>or<br>[1 1 -1 1 -1 0 1 0 -1 1 1 -1 1 1 1 -1 1 1 1 -1 1 1 -1 -1 1 -1 1 1 1 1 1 1 1 1 1 1 1 1 -1 -1 -1 1 1 -1 1 1 1 -1 1 1 1 0 0 -1 1 -1 1 1 0 -1 1 -1 1 -1 0 -1 1 1 1 -1 1 - 1 1 1 1 -1 1 1 1 1 0 -1 -1 0 1 1 -1 1 1 -1 1 1 -1 0 -1 -1 -1 1 1 1 -1 0 -1 -1 -1 -1 1 1 1] |
| | 8 | [1 1 1 1 0 -1 -1 1 1 -1 1 1 0 1 1 -1 1 1 1 -1 1 1 0 1 0 -1 -1 1 1 -1 0 1 -1 1 1 -1 1 -1 -1 1 1 -1 1 1 -1 1 -1 -1 1 1 1 -1 1 -1 -1 1 -1 1 1 1 1 1 1 -1 1 1 1 1 0 -1 -1 -1 - 1 -1 -1 1 1 -1 1 1 1 1 -1 1 1 1 -1 1 -1 1 0 0 1 1 0 -1 1 1 1 -1 -1 1 1 1 1 0 1 1 -1 1 1 -1 1 1]<br>or<br>[0 0 1 1 0 -1 -1 1 1 1 -1 1 1 -1 -1 1 0 -1 1 -1 1 1 1 -1 1 1 -1 1 1 -1 1 1 -1 0 1 1 -1 - 1 -1 0 1 -1 1 -1 1 -1 1 1 1 -1 0 -1 0 -1 1 -1 1 1 0 1 1 1 -1 1 1 1 1 1 1 1 1 -1 1 1 1 1 -1 1 1 -1 1 -1 -1 1 1 1 -1 1 1 1 -1 1 1 0 -1 1 1 1 1 1 1 1 -1 -1 -1 -1 -1 -1 1 1 1 -1 1 1 1] |
| | 9 | [1 -1 1 1 1 1 -1 1 1 1 0 1 -1 0 -1 -1 -1 -1 1 1 1 1 -1 1 1 0 -1 -1 1 1 1 -1 1 -1 1 1 -1 1 -1 1 -1 -1 -1 1 1 1 -1 1 1 1 1 1 -1 0 -1 1 1 1 1 1 -1 1 1 1 0 1 1 -1 1 1 0 1 1 -1 1 1 -1 -1 1 -1 -1 0 -1 -1 -1 -1 1 1 1 1 -1 1 1 1 1 1 -1 1 -1 1 1 -1 1 0 1 0 1 1 - 1 0 0 -1 1]<br>or<br>[0 -1 1 0 -1 1 1 -1 -1 -1 1 1 1 1 0 1 1 1 1 1 1 -1 -1 1 1 1 1 -1 1 1 1 -1 - 1 -1 1 1 -1 1 1 -1 -1 1 0 1 1 -1 1 -1 -1 1 1 -1 1 1 0 1 -1 -1 -1 -1 -1 1 1 0 1 1 1 -1 1 -1 1 1 -1 1 -1 1 1 1 -1 1 1 -1 1 1 1 1 1 0 -1 0 -1 1 1 1 0 0 1 -1 1 1 1 1 - 1 1 1 1 -1 1 1] |

(continued)

| Sequence group index | Sequence index | Sequence |
|---|---|---|
| | 10 | [1 -1 -1 -1 -1 1 -1 1 -1 1 0 -1 1 -1 -1 -1 -1 -1 1 0 -1 -1 1 1 1 0 0 1 1 -1 1 -1 -1 1 1 1 1 1 1 -1 1 1 -1 1 0 -1 -1 0 1 0 1 -1 1 1 1 1 -1 0 1 1 1 0 -1 1 -1 -1 -1 1 1 1 -1 -1 1 1 -1 -1 1 1 -1 1 1 -1 1 1 1 1 1 -1 -1 -1 1 1 -1 1 0 1] <br><br> or <br><br> [0 -1 1 -1 1 1 1 1 -1 1 -1 1 0 -1 1 1 -1 -1 -1 -1 -1 0 -1 1 -1 -1 1 0 0 1 1 -1 -1 1 1 1 1 -1 -1 -1 1 -1 1 1 1 1 -1 0 1 -1 0 -1 0 1 1 -1 1 1 1 -1 -1 0 -1 -1 -1 0 1 1 1 1 -1 1 1 1 1 1 -1 1 1 -1 1 -1 -1 1 1 1 1 -1 1 1 -1 1 1 1 1 -1 1 1 1] |
| | 11 | [1 -1 -1 -1 0 -1 1 -1 1 -1 1 1 1 0 -1 -1 0 1 1 1 -1 1 1 1 1 -1 -1 1 1 1 -1 0 -1 1 -1 0 1 -1 1 1 -1 0 0 1 1 -1 -1 1 1 1 -1 1 -1 -1 -1 1 1 1 1 1 1 1 1 1 1 1 -1 -1 1 1 -1 1 -1 -1 1 1 1 -1 1 1 1 -1 1 1 -1 0 1 0 -1 1 1 -1 1 1 1 1 -1 -1 -1 -1 0 -1 1] <br><br> or <br><br> [0 -1 0 1 1 1 -1 1 -1 1 1 1 -1 -1 1 0 1 -1 1 1 -1 1 -1 0 -1 -1 -1 -1 1 1 -1 1 0 -1 -1 0 -1 -1 1 1 1 1 -1 -1 1 1 1 1 1 0 1 -1 -1 0 1 -1 -1 1 1 0 0 1 -1 1 1 1 -1 1 1 1 1 1 1 -1 -1 1 1 1 -1 -1 -1 -1 1 1 -1 1 1 1 1 -1 1 1 -1 -1 1 1 -1 1 -1 1 1 1 1] |
| | 12 | [0 1 -1 1 -1 1 0 1 1 -1 -1 -1 1 1 -1 1 -1 1 1 -1 1 -1 -1 -1 -1 0 1 -1 1 1 1 1 -1 1 1 1 1 -1 1 1 1 -1 0 1 1 1 -1 -1 -1 1 1 1 0 1 0 -1 1 1 1 -1 -1 -1 1 1 1 1 0 1 -1 0 -1 -1 1 0 0 1 1 1 1 1 1 1 -1 1 1 -1 -1 -1 1 1 -1 -1 -1 1 1 -1 1 1 1 1 -1 1 -1 1 1 -1 1 1] <br><br> or <br><br> [1 0 -1 -1 0 1 1 -1 0 0 -1 -1 1 1 1 -1 1 1 1 -1 1 1 -1 1 -1 -1 1 1 1 1 1 1 -1 1 -1 - 1 1 1 1 -1 1 1 -1 1 -1 0 1 -1 1 1 -1 1 1 0 1 1 1 1 1 -1 1 1 1 1 -1 1 1 1 1 -1 1 1 0 -1 -1 -1 -1 -1 -1 1 1 1 -1 1 1 1 -1 1 1 0 -1 -1 -1 -1 1 1 -1 1 1 -1 0 1 0 1 -1 1 1 1 1 -1 -1 1 1] |

In still another possible implementation, the first sequence set includes the at least two ternary 121-length sequences. The first sequence set may include at least two items in any sequence group in three groups of ternary 121-length sequences shown in Table 4. In other words, the first sequence set may be any sequence group shown in Table 4, or the first sequence set may be included in any sequence group shown in Table 4. Table 4 lists the three groups of ternary 121-length sequences. The first device and/or the second device may obtain a corresponding first binary sequence and a corresponding second binary sequence based on any ternary sequence in Table 4.

For example, the three groups of ternary 121-length sequences may be shown in Table 4. The first device and/or the second device may obtain the corresponding first binary sequence and the corresponding second binary sequence based on any ternary sequence in Table 4. It may be understood that a sequence obtained by performing any cyclic shift on any sequence in Table 4 and the sequence have a same correlation property, and therefore may be understood as a same sequence. In other words, the sequence obtained by performing any cyclic shift on any sequence in Table 4 may be used as the sequence in this embodiment. In other words, the sequence in the first sequence set may be a sequence obtained by performing any cyclic shift on the sequence shown in Table 4. Sequences of a sequence group index and a sequence index are not limited in this embodiment of this application.

Table 4

| Sequence group index | Sequence index | Sequence |
|---|---|---|
| | 1 | [0 -1 -1 0 -1 1 0 1 -1 1 0 -1 1 0 0 1 0 1 -1 -1 1 1 0 0 0 -1 0 0 -1 -1 1 0 -1 -1 1 1 0 0 0 1 -1 -1 0 -1 -1 1 -1 1 1 -1 1 1 1 1 0 0 -1 0 1 0 0 0 0 0 1 1 1 -1 0 -1 -1 0 1 0 -1 -1 -1 -1 -1 1 -1 1 0 0 1 -1 1 -1 1 1 0 1 0 -1 1 1 1 1 -1 -1 1 1 1 1 1 1 0 -1 1 -1 -1 0 1 1 0 0 1 -1 0 1 0 1 0 1 1 1 0 1 0 1 0] |
| | 2 | [-1 0 0 0 1 -1 -1 0 -1 -1 -1 -1 1 0 -1 1 0 1 0 -1 0 1 0 -1 0 1 0 1 0 0 0 -1 1 1 1 1 -1 0 -1 1 -1 1 1 1 0 1 1 1 -1 0 0 1 0 -1 0 0 -1 0 0 0 1 -1 1 1 1 0 0 0 0 -1 1 0 1 -1 -1 0 -1 1 1 0 1 1 -1 1 1 1 1 -1 1 1 1 0 -1 0 -1 -1 1 1 1 0 1 -1 0 -1 1 -1 1 1 1 -1 1 0 0 1 1 0 -1 1 0 1 1 1 1 -1 -1 -1 0 0 -1] |
| | 3 | [-1 1 0 -1 -1 0 1 -1 0 0 1 0 -1 1 0 0 1 1 -1 -1 1 1 1 1 1 1 -1 -1 1 1 0 -1 0 -1 1 0 1 0 1 1 -1 1 1 1 0 -1 1 -1 1 0 0 1 1 0 0 1 0 1 0 1 1 -1 0 -1 -1 1 0 -1 1 -1 -1 1 0 -1 1 1 1 1 0 0 0 -1 -1 -1 1 -1 1 1 0 -1 - 1 -1 -1 0 -1 0 0 0 -1 1 1 1 0 1 -1 0 0 0 0 0 0 -1 1 1 1 0 0 1 1 -1 0 1 1 1 -1 0 -1 0 1 0] |

(continued)

| Sequence group index | Sequence index | Sequence |
|---|---|---|
| 1 | 4 | [-1 -1 1 -1 1 -1 1 0 0 0 0 0 1 1 0 -1 1 0 1 0 -1 1 0 1 1 0 1 -1 -1 1 0 1 -1 1 1 1 -1 0 1 -1 -1 -1 -1 -1 0 -1 1 0 -1 -1 -1 0 1 -1 -1 -1 1 1 11001-100-101-10000-1111-111-100-1-1111 0 1 0 -1 1 1 0 1 0 -1 0 -1 -1 0 1 0 1 0 1 -1 1 0 0 1 1 0 0 0 -1 1 1 0] |
| | 5 | [1 0 -1 0 1 -1 1 0 -1 -1 -1 0 0 0 1 1 1 -1 1 -1 -1 -1 1 1 -1 -1 -1 -1 0 1 -1 1 -1 0 1 1 0 0 0 -1 0 0 1 0 1 0 -1 1 -1 0 0 1 0 -1 1 1 0 0 0 1 1 1 -1 0 0 1 0 -1 0 1 1 -1 -1 -1 -1 0 0 -1 1 0 -1 1 1 0 1 0 0 1 -1 0 1 1 1 1 1 1 -1 0 1 0 0 -1 1 0 1 0 1 -1 0 1 -1 -1 1 -1 1 -1 1 1 0 0 1] |
| | 6 | [0 1 -1 -1 0 0 -1 -1 -1 0 -1 -1 0 0 1 1 -1 1 1 0 1 -1 1 0 1 0 0 1 0 0 0 -1 0 1 1 1 -1 0 1 1 -1 1 0 0 0 -1 1 -1 1 0 0 -1 0 -1 -1 1 1 1 0 0 0 0 1 1 0 -1 1 -1 -1 1 0 1 1 1 1 -1 1 -1 1 1 1 1 -1 -1 0 1 0 -1 1 1 1 1 1 0 -1 -1 0 -1 0 1 0 0 -1 1 0 -1 0 -1 0 -1 1 0 1 -1 -1 1 1 -1 1 1 0 -1 1 0] |
| | 7 | [-1 1 1 0 1 1 -1 0 1 0 1 1 1 -1 0 -1 0 0 -1 0 -1 -1 0 1 1 -1 1 1 -1 0 0 0 1 1 0 1 1 0 1 -1 0 0 0 -1 0 1 1 1 0 0 1 1 -1 -1 1 1 1 -1 1 1 -1 1 1 -1 -1 1 1 0 -1 -1 -1 1 1 1 0 1 -1 0 1 1 -1 0 -1 0 1 -1 -1 -1 -1 1 1 -1 0 0 0 0 -1 1 0 -1 1 -1 -1 -1 1 1 1 0 1 -1 0 0 0 -1 1 0 0 -1 0 -1 0 1 0 1 1 1 1 0 0] |
| | 8 | [1 -1 1 1 1 0 0 0 1 -1 0 -1 0 0 1 1 -1 1 1 1 1 -1 0 0 1 1 1 -1 1 -1 -1 0 1 0 0 0 1 0 -1 0 1 1 0 1 1 0 0 -1 1 1 -1 -1 0 0 1 0 -1 0 0 0 1 0 -1 0 0 0 1 1 0 1 0 1 -1 -1 -1 -1 1 -1 0 -1 1 0 1 -1 1 0 1 -1 1 1 1 -1 1 -1 1 -1 -1 0 0 1 1 0 1 0 1 0 1 1 -1 1 -1 1 -1 -1 -1 -1 1 1 1 0 -1 -1 -1 0 -1 -1 -1 0 -1 1 1 1 0 0 0 -1 1 0] |
| | 9 | [0 1 -1 1 0 1 0 0 1 1 1 0 1 -1 -1 1 1 1 0 1 0 -1 1 1 1 1 -1 0 -1 0 -1 0 -1 - 1 1 -1 -1 1 0 0 1 0 1 0 1 0 1 1 1 1 1 -1 -1 -1 -1 0 1 1 1 -1 1 -1 1 -1 0 0 0 1 -1 0 0 1 0 -1 0 1 1 -1 -1 -1 1 -1 0 1 0 0 -1 1 1 1 0 -1 0 -1 1 -1 -1 -1 0 0 1 1 -1 0 1 -1 0 -1 1 0 -1 -1 0 1 0 1 -1 1 -1 1 1 0 0 0 0 1 0 0 0 1 1 0] |
| | 10 | [0 1 0 -1 0 1 0 1 -1 0 1 1 0 0 1 1 1 -1 -1 0 0 -1 0 0 0 1 -1 -1 0 -1 - 1 1 -1 1 1 -1 1 1 -1 1 1 0 1 1 -1 -1 -1 1 1 1 -1 1 -1 0 -1 1 0 -1 0 0 0 1 1 0 1 0 1 -1 1 1 1 -1 0 0 -1 -1 -1 1 0-1 1 1 -1 -1 0 0 1 1 0 -1 -1 -1 0 0 -1 -1 1 1 1 1 1 1 0 0 1 -1 0 1 0 1 1 0 1 0 0 1 0 1 -1 1 1 -1 -1 0 0 0 1] |
| | 11 | [0 0 1 0 -1 -1 1 0 -1 -1 0 1 -1 0 1 0 1 -1 -1 1 1 1 -1 1 -1 -1 -1 -1 -1 0 0 -1 1 -1 -1 1 0 0 1 0 0 1 1 -1 1 0 1 -1 1 1 -1 1 1 0 -1 1 1 1 0 1 0 -1 0 0 0 1 1 1 -1 0 -1 0 0 1 0 1 0 1 1 0 1 -1 0 0 1 1 0 0 0 0 1 -1 0 -1 -1 1 1 1 1 -1 -1 0 0 1 -1 -1 0 -1 -1 -1 0 1 1 1 1 1 -1 1 1 1 0 -1 0 1 -1 1 1 0] |
| | 12 | [0 0 1 0 -1 -1 -1 0 0 0 1 -1 0 0 1 1 0 -1 1 1 1 1 1 0 -1 -1 -1 -1 0 -1 0 - 1 -1 1 1 1 0 -1 0 0 -1 0 0 1 1 1 -1 0 -1 1 0 0 1 0 0 0 -1 1 1 1 1 1 0 1 0 -1 1 -1 1 1 1 1 0 0 1 0 1 1 -1 0 1 1 -1 0 -1 1 -1 1 -1 1 -1 -1 -1 -1 0 1 -1 -1 1 - 1 1 1 1 0 1 0 -1 1 0 0 -1 1 -1 1 1 0 -1 1 1 1 -1 1 1 1 -1 -1 0 0 0 -1 0 1] |
| | 13 | [-1 0 0 0 1 0 1 -1 1 0 1 1 0 1 -1 1 1 -1 -1 0 -1 0 1 0 0 1 0 1 0 1 1 0 0 -1 0 0 -1 1 -1 -1 -1 0 1 0 0 -1 0 -1 0 1 1 1 -1 1 1 -1 -1 0 -1 -1 1 0 0 0 1 1 -1 -1 0 0 1 0 0 1 -1 0 0 0 1 -1 -1 0 1 -1 1 1 0 -1 1 1 1 1 -1 1 0 1 1 1 0 -1 1 1 1 0 1 -1 1 1 1 -1 -1 0 0 1 -1 -1 -1 1 -1 -1 1 1 0 1 0] |
| | 14 | [0 -1 -1 1 1 -1 1 -1 1 0 -1 -1 0 0 1 1 -1 0 1 0 1 0 0 -1 -1 1 0 1 1 1 1 0 0 0 0 0 1 1 -1 1 1 1 -1 1 -1 0 1 1 -1 1 0 -1 0 1 -1 0 1 -1 -1 0 0 1 1 0 0 1 1 0 -1 0 0 -1 0 0 1 0 0 0 -1 1 1 1 1 0 1 -1 1 1 1 1 -1 1 1 1 0 0 -1 -1 1 1 -1 0 -1 0 -1 1 1 0 1 1 -1 1 1 -1 -1 -1 0 1 1 -1 -1 1 0 1 0 1 -1 0 -1 0 -1] |
| | 15 | [0 -1 -1 1 1 1 -1 0 -1 0 -1 0 1 1 -1 1 1 -1 1 1 1 0 1 -1 1 1 -1 0 -1 1 1 -1 1 1 1 -1 -1 0 1 -1 0 1 0 1 0 1 1 1 1 -1 1 1 0 0 0 0 1 -1 -1 0 0 0 1 1 0 1 0 1 0 0 1 0 -1 1 -1 0 1 -1 -1 -1 1 1 1 1 0 0 -1 0 0 0 -1 0 -1 1 0 0 -1 1 -1 -1 -1 -1 0 -1 -1 1 0 0 1 -1 0 -1 0 -1 0 1 1 1 -1 0 1 1 0 0 1 1 1 0 -1 0 1 0] |
| | 16 | [0 1 0 1 1 0 0 0 -1 -1 1 0 0 0 0 1 -1 1 1 1 1 1 1 0 1 0 -1 1 0 -1 0 -1 -1 1 1 -1 1 1 1 -1 1 0 -1 1 -1 1 1 0 1 1 -1 1 1 -1 1 1 1 0 -1 0 -1 0 -1 1 1 -1 1 -1 1 0 0 1 0 -1 0 1 1 1 0 0 1 1 0 -1 1 1 1 1 0 -1 0 -1 0 -1 1 0 0 1 -1 -1 0 -1 -1 - 1 1 -1 0 0 1 -1 0 -1 0 0 0 -1 0 0 1 1 1 1 -1 -1 -1 1 1 0 -1 1 -1 0 1 0] |
| | 17 | [0 -1 1 1 0 0 1 -1 1 1 -1 1 0 1 1 1 -1 -1 1 1 -1 -1 -1 -1 1 1 -1 0 0 0 1 0 1 0 1 1 -1 1 0 1 0 -1 0 -1 1 0 1 0 0 0 0 1 1 -1 1 -1 0 1 0 0 1 1 0 0 -1 0 0 1 1 1 1 1 -1 0 -1 1 1 -1 -1 -1 0 1 1 1 0 0 0 1 -1 0 1 -1 1 1 1 0 1 -1 1 1 0 -1 0 1 0 1 -1 -1 -1 -1 0 -1 -1 0 -1 0 -1 0 1 1 -1 1 -1 1 -1 1 1 0 0 1 0 -1 1 0] |
| | 18 | [1 -1 0 1 -1 0 0 -1 -1 -1 -1 1 1 0 -1 0 1 0 0 -1 1 1 1 1 0 0 0 1 1 -1 0 1 0 0 -1 1 1 -1 0 1 0 1 0 0 -1 1 1 -1 1 0 1 0 1 0 0 -1 0 0 0 1 1 0 -1 1 1 -1 1 0 -1 -1 -1 -1 1 1 1 - 1 -1 -1 -1 -1 1 1 1 1 1 0 0 0 -1 -1 -1 -1 0 1 -1 1 1 0 -1 0 1 1 0 0 1 -1 1 1 - 1 1 -1 -1 -1 0 -1 1 0 -1 1 0 1 0 1 -1 0 0 1 0 -1 1 1 1 1 1 1 1 0 -1 1 0 0 1 0 1] |
| | 19 | [-1 1 1 1 1 -1 -1 -1 0 0 1 1 1 1 1 1 0 -1 0 1 -1 1 1 0 0 -1 0 1 -1 0 1 1 -1 1 0 0 0 -1 0 -1 0 -1 0 -1 0 -1 0 -1 1 0 0 1 1 -1 1 0 0 0 0 1 -1 -1 1 -1 1 1 0 0 1 1 0 1 -1 1 1 -1 1 1 -1 1 1 -1 -1 1 -1 0 0 1 1 0 0 -1 0 0 1 0 1 0 1 1 0 1 -1 1 1 1 1 -1 1 1 1 -1 1 1 1 1 1 0 0 -1 -1 1 0 1 -1 -1 1 0 1 -1 0 1 0 1 0 1 1 0 -1 0 -1 -1 1 0 0] |

| Sequence group index | Sequence index | Sequence |
|---|---|---|
| | 20 | [-1 1 -1 -1 -1 -1 -1 0 1 -1 0 1 -1 1 1 0 0 1 1 1 0 -1 -1 1 0 1 1 1 0 -1 -1 1 -1 1 0 0 1 -1 0 0 0 -1 0 -1 -1 1 1 1 1 0 1 1 -1 -1 0 0 -1 -1 1 1 -1 -1 1 1 1 1 0 -1 1 1 1 0 1 0 -1 1 0 1 0 0 1 -1 0 1 -1 0 0 1 0 1 -1 1 0 1 0 -1 0 -1 1 0 -1 0 1 -1 1 -1 1 0 0 0 0 0 0 1 0 -1 -1 -1 1 0 0] |
| | 21 | [0 -1 1 -1 1 1 0 -1 -1 0 -1 0 0 -1 0 -1 1 1 1 0 1 0 -1 1 1 0 1 1 -1 0 0 1 1 1 1 0 1 0 -1 0 -1 0 0 1 -1 0 0 0 -1 1 0 1 1 1 -1 -1 -1 1 -1 0 1 -1 0 0 0 0 -1 1 -1 -1 -1 1 0 -1 0 -1 1 1 0 -1 1 0 1 1 -1 -1 -1 0 1 -1 -1 -1 1 -1 -1 1 1 -1 -1 1 0 0 1 1 1 0 -1 0 0 0 -1 1 0 1 1 0 1 1 0 0] |
| | 22 | [0 1 1 -1 1 0 -1 1 0 0 0 1 0 0 0 1 1 1 -1 0 -1 -1 1 0 -1 -1 1 -1 0 1 0 0 1 0 1 -1 0 1 1 1 -1 1 1 -1 -1 -1 1 1 -1 1 1 0 -1 0 1 1 -1 1 -1 1 1 1 1 0 1 0 0 -1 -1 0 -1 0 1 1 1 0 0 1 0 1 -1 0 0 1 1 -1 -1 1 1 0 1 1 1 1 -1 -1 1 0 1 0 -1 0 1 -1 1 0 1 -1 0 0 0 -1 -1 0 -1 -1 0 0 1 -1 -1 -1 -1 0 0] |
| | 23 | [0 0 -1 0 -1 -1 1 -1 0 1 0 -1 1 0 -1 -1 0 0 0 -1 1 0 1 1 1 0 1 -1 1 1 1 -1 1 1 -1 1 1 1 1 0 0 1 -1 1 0 1 -1 -1 -1 1 1 1 1 1 0 -1 0 0 1 1 1 -1 0 0 1 -1 -1 1 0 -1 1 -1 1 0 0 0 1 0 -1 1 1 1 -1 1 -1 0 0 1 0 0 0 0 1 1 -1 0 -1 0 0 -1 -1 0 -1 0 1 1 1 1 -1 1 1 1 0 -1 1 1 0 1 0 -1 0 -1 0 -1 1 0] |
| | 24 | [0 1 -1 1 1 1 0 0 1 0 0 0 0 1 1 0 1 0 1 0 0 1 -1 -1 0 0 -1 1 -1 -1 0 1 0 1 1 0 0 0 1 0 1 -1 1 1 -1 -1 -1 1 1 -1 -1 1 1 1 0 1 0 0 -1 -1 -1 0 0 1 -1 -1 -1 1 1 0 -1 0 -1 0 -1 0 -1 -1 1 1 1 1 0 -1 1 1 -1 1 1 1 1 0 0 -1 -1 0 1 1 0 0 1 1 0 -1 0 -1 1 1 0 1 -1 1 1 1 1 -1 0 -1 1 0 -1 1 -1 -1 1 -1 1 1 -1 1 0 0 -1] |
| 2 | 1 | [0 1 0 0 -1 0 -1 1 1 -1 1 1 -1 1 1 1 -1 -1 -1 0 0 0 -1 -1 1 -1 1 0 -1 0 -1 0 -1 0 1 0 -1 1 1 1 1 1 0 -1 0 -1 -1 1 1 0 0 1 1 0 1 -1 0 1 1 0 0 -1 1 -1 0 0 0 1 -1 1 -1 0 -1 -1 0 1 1 1 0 1 0 0 0 0 1 0 -1 1 1 0 0 1 -1 0 0 1 1 1 1 1 1 -1 -1 1 0 1 1 1 -1 1 1 1 1 -1 0 1 -1 0 -1 1 -1 1 -1 1 0 1 -1 1 -1 1 0 1 0] |
| | 2 | [0 1 1 1 0 1 -1 -1 0 1 1 1 0 0 1 1 -1 1 1 0 -1 1 0 -1 -1 -1 -1 -1 1 1 -1 1 0 0 1 -1 -1 -1 0 1 0 0 0 0 0 0 1 -1 1 -1 1 1 0 -1 0 1 -1 0 -1 0 -1 0 1 0 1 -1 1 1 0 1 0 0 -1 1 0 -1 1 0 0 1 0 1 -1 0 1 0 1 1 1 -1 0 1 1 1 1 -1 -1 1 1 1 -1 -1 0 0 -1 -1 1 1 1 0 1 1 1 1 -1 -1 0 -1 0 0 0 -1 1 1 0 0 1 -1 1 -1 -1 -1 1] |
| | 3 | [-1 0 -1 -1 -1 -1 0 1 1 1 1 -1 0 1 1 0 0 -1 1 0 0 0 -1 -1 1 0 1 0 0 0 1 0 -1 0 0 0 -1 -1 1 1 -1 1 1 1 1 -1 0 1 -1 1 -1 0 0 1 -1 0 1 0 1 1 -1 1 -1 1 -1 1 0 -1 -1 0 -1 -1 1 -1 1 -1 1 1 -1 0 -1 1 1 0 -1 1 1 0 1 0 0 1 1 1 -1 1 -1 0 1 0 1 1 1 1 -1 0 0 0 1 0 0 1 -1 0 -1 1 1 1 1 0 0 -1 0 0 -1 0 1 1 -1 1 -1 0] |
| | 4 | [1 -1 1 1 0 -1 -1 1 0 0 0 -1 1 0 0 1 0 0 -1 1 1 1 0 0 0 1 -1 1 -1 0 -1 -1 1 -1 1 1 1 1 0 -1 0 -1 0 -1 0 0 1 0 -1 -1 -1 1 1 -1 0 0 -1 0 0 1 1 1 0 1 0 0 1 0 -1 0 -1 0 -1 1 1 -1 1 0 1 1 0 1 -1 1 1 0 1 0 0 0 -1 0 1 0 1 1 -1 -1 1 -1 -1 1 1 0 0 -1 0 -1 1 1 1 -1 1 1 0 1 1 1 -1 0 1 1 1 0 1 -1 1 1 1 1 -1 0 1] |
| | 5 | [0 0 -1 0 1 0 1 1 1 -1 0 1 -1 1 1 -1 1 1 0 1 -1 1 1 1 0 0 1 0 0 1 -1 1 -1 1 0 0 -1 -1 -1 -1 1 -1 1 1 1 -1 -1 1 0 1 0 -1 1 0 -1 0 1 -1 1 0 1 0 0 0 1 -1 1 0 -1 0 1 1 -1 1 1 1 1 1 1 0 -1 -1 -1 0 -1 -1 1 0 0 -1 1 1 1 1 -1 1 0 -1 1 0 0 0 0 1 1 0 0 -1 1 0 1 1 0 1 0 1 0 0 -1 0 -1 1 1 1 1 0] |
| | 6 | [0 -1 1 1 1 0 0 -1 0 1 1 1 1 1 -1 -1 -1 1 1 0 1 -1 1 1 0 0 1 1 1 -1 1 1 -1 1 1 1 -1 1 0 1 1 1 0 1 -1 1 0 0 0 -1 -1 0 1 -1 1 0 1 0 -1 1 1 -1 -1 1 -1 1 0 -1 0 0 0 1 -1 0 -1 0 -1 0 1 0 1 0 1 1 -1 0 1 1 -1 0 1 1 -1 1 1 1 1 1 0 -1 0 -1 0 -1 -1 0 0 -1 0 -1 1 1 1 0 0 0 0 1 0 0 -1 1 1 1 -1 0 1 0 0 1 -1 1 -1 0 1 -1 1 -1 0] |
| | 7 | [0 0 0 -1 0 1 0 0 1 -1 1 -1 0 1 0 -1 1 1 1 -1 0 -1 0 0 1 1 1 1 1 -1 1 0 -1 0 -1 0 -1 1 1 1 1 0 0 -1 0 -1 1 -1 1 -1 0 1 1 0 -1 1 0 0 -1 1 -1 0 -1 -1 -1 -1 -1 0 1 -1 0 1 -1 0 0 -1 1 1 0 1 1 1 1 -1 -1 1 0 0 1 1 0 -1 1 -1 1 1 1 0 -1 1 -1 1 1 0 0 0 1 -1 -1 1 0 1 1 -1 0 1 1 1 -1 1 0 1 1 1 -1 1 1 0 -1 1 0 1 0 0 0] |
| | 8 | [-1 -1 -1 1 -1 1 1 0 1 -1 -1 1 1 1 1 -1 0 1 0 -1 1 1 0 -1 0 0 1 -1 -1 -1 -1 0 1 1 0 1 0 1 0 -1 -1 1 1 0 0 0 0 -1 1 1 1 1 0 -1 0 1 1 0 -1 1 1 1 -1 1 -1 1 -1 1 1 1 0 1 0 1 0 0 1 1 1 0 0 1 1 0 0 0 1 0 1 1 0 0 -1 1 -1 0 0 -1 1 1 1 -1 1 1 0 -1 0 0 -1 0 0 1 -1 0 -1 1 -1 1 1 -1 1 1 1 0 1 0 0 1 1 -1 1 0 -1] |
| | 9 | [1 1 -1 0 0 1 -1 1 -1 -1 1 0 0 1 1 1 0 0 0 -1 1 0 1 1 1 1 0 -1 1 1 1 -1 1 -1 1 1 0 -1 1 1 1 1 1 0 1 0 -1 1 1 -1 1 -1 0 -1 0 0 1 0 0 -1 1 0 0 -1 0 -1 1 1 0 -1 1 0 0 -1 1 0 -1 0 1 0 0 1 -1 -1 1 1 1 1 0 -1 0 0 0 0 0 1 -1 -1 -1 0 -1 1 -1 1 0 1 -1 1 1 1 1 1 1 1 0 1 1 -1 1 1 0 -1 0 1 0 -1 1 1 0 1 -1 1 -1 1 1] |
| | 10 | [0 1 1 0 1 0 1 0 0 0 1 1 -1 1 1 1 -1 1 1 0 -1 1 1 0 -1 0 1 -1 1 1 -1 1 1 0 0 -1 0 -1 1 0 -1 1 1 1 1 0 1 1 1 -1 -1 1 1 -1 1 1 1 0 1 -1 1 1 1 1 1 1 0 0 1 -1 0 0 -1 0 0 1 -1 1 0 1 -1 1 -1 1 1 0 0 0 0 1 0 -1 -1 -1 0 1 -1 0 -1 1 1 1 -1 1 0 1 1 0 0 0 -1 1 1 1 0 0 -1 1 -1 1 -1 1 0 1 0 -1 0 -1 0 1 0] |
| | 11 | [-1 1 1 1 0 -1 1 0 -1 0 0 1 1 -1 1 -1 1 0 1 1 1 1 1 0 0 -1 -1 -1 1 1 1 1 -1 0 0 1 -1 1 -1 0 -1 0 1 1 0 1 0 1 0 1 0 -1 1 1 0 -1 1 -1 0 -1 1 0 0 1 1 1 -1 1 1 1 -1 1 1 1 1 -1 1 0 1 1 0 1 0 0 -1 0 0 1 -1 1 -1 1 1 -1 1 1 -1 1 1 -1 1 -1 1 0 1 1 0 0 1 -1 1 1 -1 1 -1 1 1 0 0 0 0 -1 1 1 1 0 0 -1 1 0 -1 0 -1 0 -1 0 -1 0 -1 0 0 0] |

(continued)

| Sequence group index | Sequence index | Sequence |
|---|---|---|
| | 12 | [-1 1 -1 -1 0 1 0 0 1 1 0 1 -1 1 1 1 1 -1 0 0 0 0 -1 0 -1 1 0 0 -1 0 1 -1 -1 0 1 0 -1 -1 -1 0 0 1 -1 1 0 0 -1 0 0 1 -1 1 1 0 0 0 1 1 0 -1 1 - 1 -1 1 -1 0 1 -1 1 1 0 0 -1 -1 -1 0 -1 -1 1 1 -1 1 1 0 1 -1 0 -1 1 1 1 1 -1 -1 0 1 -1 1 0 0 -1 0 1 0 -1 0 -1 0 0 1 0 1 1 1 1 1 -1 0 1 1 1] |
| | 13 | [ -1 1 -1 0 0 -1 -1 1 0 0 1 0 1 0 1 1 0 0 0 0 1 0 0 1 1 1 -1 1 0 -1 0 0 1 -1 1 -1 -1 1 -1 0 1 -1 0 -1 1 1 1 -1 1 0 1 1 -1 0 -1 0 1 1 0 0 1 1 0 -1 -1 0 0 1 1 1 -1 1 1 1 -1 0 1 1 1 -1 -1 0 -1 0 -1 0 1 -1 -1 -1 1 1 0 0 -1 -1 -1 0 0 1 0 1 1 -1 -1 1 -1 -1 -1 1 -1 1 0 1 0 0 0 1 1 0 1 0 -1] |
| | 14 | [-1 -1 -1 1 0 0 -1 0 1 -1 -1 0 1 0 -1 1 1 1 -1 -1 1 0 1 1 -1 1 -1 -1 -1 -1 0 -1 1 1 0 0 1 0 1 0 1 1 -1 1 -1 1 1 -1 0 -1 1 0 0 -1 0 0 -1 0 1 -1 1 1 -1 -1 0 0 -1 1 -1 0 0 1 1 0 1 0 0 0 1 1 0 0 1 1 1 0 0 1 0 1 0 1 1 -1 1 -1 -1 1 -1 1 1 1 -1 0 -1 -1 0 1 1 1 -1 0 0 0 0 1 -1 -1 0 1 0 1 0 1 1 0 -1] |
| | 15 | [0 1 1 -1 -1 -1 1 0 0 1 1 1 0 1 0 0 -1 1 1 -1 0 -1 -1 0 1 1 0 1 0 1 1 0 0 0 1 1 -1 1 0 -1 1 1 1 0 0 1 -1 1 1 1 0 -1 -1 0 -1 1 -1 1 1 -1 1 1 -1 1 1 -1 1 1 1 - 1 -1 -1 0 1 0 1 1 -1 -1 -1 -1 0 -1 0 0 -1 1 -1 0 1 0 1 0 0 0 1 0 1 0 1 1 1 -1 -1 1 1 -1 -1 0 1 -1 0 0 -1 0 0 0 1 -1 -1 1 0 0 -1 0 0 1 1 -1] |
| | 16 | [0 0 -1 1 -1 0 0 1 1 0 -1 1 0 1 1 0 0 1 1 -1 -1 0 -1 0 1 1 1 1 -1 0 1 0 -1 0 -1 0 -1 1 -1 -1 0 0 0 -1 -1 -1 1 1 -1 1 -1 1 1 1 -1 0 -1 0 0 1 0 0 1 0 -1 1 -1 1 1 0 -1 -1 1 1 -1 0 -1 1 0 -1 1 0 -1 1 1 1 1 -1 1 1 1 0 1 -1 -1 1 1 1 1 1 0 0 -1 1 0 0 1 -1 -1 0 1 0 1 0 0 0 0 1 0 1 1 1 0 -1 -1 0 -1 -1 1 0] |
| | 17 | [-1 -1 1 0 1 1 0 1 -1 0 1 0 1 -1 0 1 1 0 0 0 0 0 1 -1 1 -1 1 -1 -1 0 1 1 -1 0 0 0 1 1 0 0 1 -1 1 1 0 1 0 1 0 -1 0 -1 0 -1 0 1 0 1 1 -1 0 1 0 1 1 1 -1 -1 0 0 -1 1 1 -1 1 1 1 1 -1 0 0 0 0 -1 1 1 0 -1 0 0 -1 1 0 0 1 1 1 1 -1 -1 -1 1 0 -1 -1 1 -1 0 1 -1 0 -1 -1 -1 -1 -1 1 0 -1 1 1 1 -1 1 1 0 1] |
| | 18 | [0 1 1 1 1 1 -1 1 0 1 1 -1 1 -1 1 -1 -1 -1 1 1 1 1 0 1 1 1 -1 0 1 -1 0 -1 0 0 1 -1 1 -1 1 1 0 -1 0 1 -1 1 -1 0 1 -1 1 1 1 -1 1 1 1 0 0 0 1 0 1 0 1 1 0 0 1 0 -1 -1 0 -1 0 1 0 1 -1 1 -1 -1 -1 1 0 0 1 1 -1 0 0 0 1 1 0 -1 1 -1 1 1 1 -1 -1 0 1 1 0 -1 1 -1 -1 1 0 1 0 0 0 0 1 -1 -1 1 0 1 -1 1 0 0 -1 0 0 -1 1 0] |
| | 19 | [-1 -1 1 -1 1 1 -1 1 0 -1 1 0 1 -1 0 -1 1 -1 -1 0 1 0 1 1 0 0 0 -1 0 1 0 0 0 -1 -1 1 1 1 -1 0 0 1 1 0 1 1 0 -1 0 1 0 1 0 0 1 0 -1 -1 1 -1 1 1 1 1 0 0 -1 1 1 1 1 -1 1 1 1 0 0 -1 0 -1 1 0 0 0 0 1 1 -1 1 0 1 -1 0 0 0 1 1 -1 0 - 1 -1 -1 0 -1 -1 -1 0 1 1 -1 -1 -1 -1 1 1 -1 -1 1 1 1 0 1 0 1 0 1 1 0 0] |
| | 20 | [0 1 1 1 -1 -1 -1 1 -1 -1 -1 -1 0 -1 0 1 1 1 1 1 -1 0 0 1 0 1 0 1 1 -1 1 0 0 1 -1 -1 -1 0 1 -1 1 1 0 -1 0 -1 1 0 -1 1 1 1 -1 0 1 -1 0 -1 -1 - 1 0 0 1 1 -1 0 -1 0 0 0 1 0 -1 1 1 1 -1 1 -1 -1 1 1 1 0 1 1 0 -1 0 1 0 0 1 0 0 -1 1 0 0 0 1 -1 1 1 1 0 0 0 0 1 1 0 1 -1 1 1 -1 1 1 0 1 -1 -1 1 0 1 1 0] |
| | 21 | [-1 1 1 1 1 1 0 0 -1 0 -1 1 1 1 -1 -1 0 1 0 -1 -1 1 0 0 0 1 0 -1 0 0 0 0 0 0 0 1 0 1 -1 0 1 -1 1 1 1 1 0 -1 1 1 0 1 -1 -1 1 1 0 0 0 1 -1 1 1 -1 0 1 1 1 - 1 1 -1 0 1 1 0 0 1 -1 -1 1 1 1 1 1 0 1 1 -1 0 0 -1 1 0 -1 -1 1 -1 -1 -1 -1 1 0 -1 1 -1 1 0 0 1 -1 0 1 1 0 -1 -1 1 -1 0 -1 0 0 1 1 1 -1 0 -1 0 -1 0 1] |
| | 22 | [0 0 1 0 -1 -1 0 1 0 -1 0 1 0 1 -1 1 0 1 -1 1 -1 -1 -1 -1 0 -1 -1 1 0 0 0 -1 -1 0 0 -1 -1 1 1 1 1 1 0 1 -1 1 0 1 1 0 0 1 -1 1 1 1 -1 1 -1 0 -1 1 0 1 1 -1 1 -1 0 -1 0 1 1 -1 1 1 1 1 -1 1 1 1 0 1 1 -1 0 -1 -1 1 0 1 -1 1 0 0 0 0 1 1 1 -1 1 0 0 0 -1 0 0 -1 0 1 0 0 -1 1 1 1 1 0 1 1 -1 1 1 -1 0 -1 1 1 1 1 -1 0] |
| | 23 | [0 1 0 1 1 0 -1 -1 0 -1 1 1 -1 1 0 0 1 0 1 1 1 0 0 1 -1 -1 -1 1 1 1 0 -1 1 1 1 0 0 -1 0 0 1 -1 -1 1 1 0 0 0 -1 0 0 -1 1 0 -1 -1 1 -1 -1 1 1 1 1 0 1 0 1 0 0 0 1 0 1 0 -1 1 -1 1 0 0 -1 0 -1 -1 -1 -1 1 1 1 0 1 0 -1 - 1 - 1 1 1 1 -1 1 1 -1 1 1 -1 1 1 -1 0 -1 -1 0 1 1 1 -1 1 1 0 0 1 1 -1 1 0 1 -1 1 1 1 0 0 0 1 1] |

(continued)

| Sequence group index | Sequence index | Sequence |
|---|---|---|
| 3 | 1 | [0 1 -1 0 0 1 1 0 0 1 0 1 1 -1 0 1 0 0 -1 0 1 1 0 -1 0 -1 0 -1 1 0 -1 1 1 -1 1 1 0 0 0 -1 0 0 0 -1 1 1 1 0 0 -1 1 -1 -1 1 1 1 -1 -1 1 0 0 1 1 -1 -1 0 -1 -1 0 -1 1 -1 1 0 0 0 0 1 1 1 1 -1 1 0 -1 -1 -1 0 -1 0 1 0 -1 1 -1 0 -1 -1 -1 1 0 1 -1 -1 0 1 1 -1 1 -1 1 1 1 1 1 0 -1 1 0 1 0] |
|  | 2 | [1 -1 1 1 1 0 1 1 1 0 -1 -1 0 0 1 1 1 0 0 1 0 -1 0 -1 0 1 -1 -1 -1 1 0 0 0 1 0 -1 -1 1 1 1 -1 0 -1 -1 -1 1 1 1 1 0 0 0 0 0 -1 1 0 1 0 1 -1 1 0 0 -1 -1 1 0 0 -1 1 -1 1 1 0 0 1 0 1 -1 0 -1 0 1 -1 -1 -1 -1 -1 1 -1 -1 1 -1 1 1 1 1 0 -1 1 1 -1 0 1 1 0 1 -1 0 0 1 0 -1 1 0 -1 1 -1 0 1 1 0 0 0] |
|  | 3 | [-1 0 1 1 1 -1 -1 1 0 0 1 0 -1 0 1 -1 0 0 -1 -1 0 1 -1 1 -1 0 -1 0 0 1 -1 0 0 1 0 0 -1 0 -1 1 -1 1 -1 0 1 0 1 1 1 1 -1 0 1 -1 1 -1 1 1 1 -1 0 1 1 1 1 0 -1 -1 0 0 0 1 1 1 0 0 -1 -1 -1 1 0 0 -1 1 1 1 1 -1 -1 1 0 1 -1 0 1 0 -1 0 1 -1 1 1 0 1 1 1 1 1 -1 1 0 -1 1 -1 0 -1 -1 -1 1 0 0 0 0 0] |
|  | 4 | [0 1 -1 1 0 0 0 -1 0 -1 1 -1 -1 0 -1 0 -1 0 0 -1 -1 -1 -1 1 1 1 -1 1 1 1 1 -1 1 1 1 0 -1 0 1 1 0 -1 1 0 1 1 -1 0 -1 1 -1 1 1 1 0 1 1 -1 0 1 0 -1 1 0 0 -1 1 1 -1 1 0 1 -1 1 0 0 -1 0 -1 0 0 1 0 1 0 0 1 1 0 0 1 1 0 -1 -1 1 0 1 1 -1 0 0 1 0 -1 0 -1 1 -1 1 1 1 0 0 0 -1 1 1 1 1 1 1 -1 -1 -1 -1 1 0 0 0] |
|  | 5 | [0 0 -1 -1 1 -1 1 1 1 0 -1 -1 -1 -1 1 1 1 1 1 0 1 0 1 0 0 1 -1 -1 1 1 -1 -1 0 -1 -1 0 -1 1 1 1 -1 0 1 0 1 0 1 1 -1 -1 1 0 1 1 1 0 0 1 0 1 -1 1 0 0 1 1 0 0 0 1 0 0 0 0 1 -1 1 -1 1 1 0 -1 -1 0 1 -1 0 -1 1 0 -1 1 0 -1 1 1 0 0 -1 -1 1 -1 1 0 -1 0 1 1 -1 0 0 1 0 -1 1 -1 -1 1 1 1 0 -1 0 1 0 0 -1 1 0] |
|  | 6 | [1 1 0 0 -1 -1 1 1 1 -1 0 1 -1 -1 -1 0 0 -1 1 1 1 -1 1 0 1 0 1 1 0 0 0 -1 0 1 -1 0 -1 1 -1 1 1 1 -1 1 -1 -1 1 1 0 1 -1 1 -1 1 -1 1 1 -1 -1 0 -1 -1 1 1 0 0 0 -1 0 0 -1 -1 1 1 1 1 0 0 1 1 0 -1 1 0 1 0 -1 0 1 0 1 0 0 0 -1 -1 1 1 1 -1 1 0 1 0 0 1 0 1 1 0 1 0 -1 1 0 0 1 1 1 1 1 -1 -1 0 0 -1 -1 -1 0] |
|  | 7 | [0 0 0 1 1 1 -1 -1 0 -1 0 0 1 -1 1 1 -1 0 0 0 -1 1 1 0 -1 1 1 1 1 0 -1 0 0 0 1 0 0 1 0 1 0 1 -1 1 0 1 1 -1 1 -1 1 0 0 -1 -1 0 -1 -1 -1 0 0 -1 -1 1 1 0 0 1 -1 0 1 -1 1 1 1 -1 -1 1 0 1 -1 0 -1 0 -1 0 1 0 1 -1 0 0 1 0 -1 0 -1 0 1 1 1 1 1 -1 0 1 0 -1 1 1 1 1 -1 1 1 -1 1 1 1 1 1 0 1 -1 -1 1 1 -1 0 1 1 0] |
|  | 8 | [0 -1 1 1 0 0 -1 0 0 -1 0 -1 1 -1 1 0 1 1 0 0 -1 -1 -1 -1 1 1 1 0 1 -1 1 1 0 -1 0 0 1 -1 -1 1 0 0 -1 1 0 1 0 -1 0 1 0 1 -1 1 -1 1 -1 1 1 0 1 -1 1 -1 1 -1 1 -1 -1 1 1 0 0 0 1 1 1 1 0 -1 0 1 1 0 0 -1 -1 1 -1 -1 1 1 -1 -1 1 1 1 -1 1 0 1 1 0 1 -1 0 1 0 1 0 1 1 1 1 1 -1 0 1 1 0 0 0 0 -1 -1 0 0 0 -1 1] |
|  | 9 | [1 1 1 -1 1 0 1 1 1 1 -1 0 0 0 1 0 0 -1 0 0 -1 0 1 1 0 0 1 1 0 0 1 -1 1 -1 1 1 0 -1 1 0 -1 0 -1 1 1 0 -1 1 1 1 -1 1 1 1 0 0 0 0 0 1 1 1 1 0 1 -1 1 -1 0 0 1 0 -1 1 1 0 0 -1 0 1 0 -1 1 -1 1 -1 1 -1 1 0 -1 0 -1 0 -1 0 -1 1 0 1 0 1 -1 1 -1 1 1 0 -1 1 -1 1 -1 1 1 1 0 1 1 -1 0 -1 0 -1 1 -1 1 0 0 1 1 -1] |
|  | 10 | [0 1 -1 -1 1 1 1 1 -1 1 -1 1 -1 1 0 0 1 1 1 -1 0 0 0 -1 0 0 0 1 1 -1 1 1 1 -1 0 1 -1 0 -1 0 -1 0 1 1 0 -1 0 0 1 0 -1 1 1 0 1 0 0 1 1 0 0 -1 1 0 1 0 0 1 -1 0 1 -1 1 1 1 1 1 -1 1 -1 1 1 1 0 -1 0 -1 1 0 1 -1 1 -1 1 -1 0 -1 1 -1 0 1 0 -1 0 -1 -1 -1 0 1 -1 1 1 1 1 1 0 0 0 0 1 -1 1 -1 0 -1 -1 0 -1 1 1 1 0] |
|  | 11 | [-1 -1 -1 1 0 -1 0 -1 1 0 1 0 0 1 -1 1 -1 1 0 1 -1 -1 0 0 1 -1 1 0 1 0 1 -1 0 0 0 0 0 1 1 1 -1 -1 -1 1 0 -1 1 1 -1 -1 0 1 0 0 0 1 -1 -1 -1 1 1 0 -1 0 -1 0 1 0 0 1 1 1 0 0 -1 0 1 0 1 1 1 0 1 1 1 -1 1 1 0 0 0 1 1 0 -1 1 -1 0 1 -1 0 1 0 0 -1 1 0 1 1 0 -1 1 1 1 -1 0 1 1 1 1 -1 1 1 -1 -1 1 1 -1 1 -1 -1] |
|  | 12 | [0 0 0 1 0 -1 0 0 1 1 1 -1 1 1 1 -1 1 1 -1 1 -1 0 -1 1 -1 1 1 0 0 0 1 1 -1 -1 1 0 1 -1 1 -1 0 0 -1 0 0 0 1 -1 -1 1 1 0 1 0 0 1 -1 0 1 -1 1 1 0 1 -1 0 -1 -1 0 0 1 0 1 0 1 0 1 1 1 0 1 0 -1 1 0 0 1 1 0 -1 1 -1 1 0 1 1 1 1 1 -1 -1 1 1 1 1 -1 0 1 0 1 -1 1 1 -1 1 1 0 0 -1 1 -1 -1 -1 -1 0 1 0 -1 0 -1 0 -1 1 1 1 0] |
|  | 13 | [0 -1 -1 -1 0 -1 1 1 0 -1 1 1 1 -1 -1 1 0 1 -1 1 0 -1 0 1 -1 1 1 0 -1 -1 -1 1 0 0 1 -1 1 1 1 0 1 0 1 0 0 -1 1 1 1 1 1 0 -1 0 -1 -1 -1 -1 1 1 -1 -1 -1 1 1 1 1 0 0 1 1 0 -1 -1 1 0 1 -1 1 1 -1 1 1 0 1 1 0 0 0 0 1 1 -1 1 1 0 0 0 1 -1 0 0 1 0 0 1 0 -1 0 1 1 0 1 1 -1 1 -1 1 1 1 -1 0 1 0 0 0 -1 0 -1 1 1 1 0] |
|  | 14 | [0 -1 1 -1 -1 0 1 -1 1 -1 0 -1 1 1 1 0 0 0 1 0 0 0 1 -1 0 1 -1 1 1 1 0 0 0 -1 -1 -1 -1 1 1 0 0 -1 -1 1 0 -1 -1 -1 0 0 0 -1 1 0 1 -1 1 1 0 -1 0 1 0 1 -1 1 -1 1 1 1 1 1 0 1 -1 1 -1 1 1 1 0 0 -1 1 0 1 0 0 1 1 1 0 -1 0 -1 1 0 0 1 0 1 1 1 -1 1 -1 1 1 1 0 -1 0 1 -1 1 1 -1 1 -1 -1 1 1 1 -1 1 1 1 1 0 -1 1 0 1 0 0 1] |
|  | 15 | [0 -1 0 0 1 1 0 0 1 0 -1 -1 1 1 1 0 0 0 0 1 0 1 -1 0 -1 0 1 0 -1 1 1 0 1 0 1 0 0 0 -1 1 -1 -1 -1 1 1 -1 -1 1 1 1 1 0 1 -1 1 1 -1 1 0 0 1 1 -1 0 0 1 -1 0 1 0 0 1 -1 1 -1 1 1 1 0 -1 0 -1 0 -1 -1 -1 -1 1 1 0 -1 0 1 -1 1 0 1 1 -1 1 1 0 -1 1 0 0 0 1 1 1 0 -1 -1 -1 1 1 1 -1 1 0 -1 1 1 1 1 1 1 0] |

(continued)

| Sequence group index | Sequence index | Sequence |
|---|---|---|
| | 16 | [0 0 1 1 0 0 1 0 1 0 0 -1 0 -1 0 1 -1 1 0 -1 1 1 -1 0 0 1 -1 0 1 0 -1 1 1 0 1 1 -1 1 -1 0 -1 1 1 0 1 -1 0 1 1 0 -1 0 1 1 -1 1 1 1 -1 1 1 1 -1 -1 -1 -1 0 0 -1 0 -1 -1 1 -1 0 -1 0 0 0 1 -1 1 0 0 0 0 -1 -1 -1 -1 -1 1 1 1 1 1 -1 0 0 0 1 1 -1 1 -1 0 -1 -1 0 1 0 0 -1 1 1 0 1 -1 -1 0 1 1] |

In still another possible implementation, the first sequence set includes the at least two ternary 133-length sequences. The first sequence set may include at least two items in any sequence group in three groups of ternary 133-length sequences shown in Table 5. In other words, the first sequence set may be any sequence group shown in Table 5, or the first sequence set may be included in any sequence group shown in Table 5. Table 5 lists the three groups of ternary 133-length sequences. The first device and/or the second device may obtain a corresponding first binary sequence and a corresponding second binary sequence based on any ternary sequence in Table 5.

It may be understood that a sequence obtained by performing any cyclic shift on any sequence in Table 5 and the sequence have a same correlation property, and therefore may be understood as a same sequence. In other words, the sequence obtained by performing any cyclic shift on any sequence in Table 5 may be used as the sequence in this embodiment. In other words, the sequence in the first sequence set may be a sequence obtained by performing any cyclic shift on the sequence shown in Table 5. Sequences of a sequence group index and a sequence index are not limited in this embodiment of this application. In Table 5, first binary sequences (namely, binary sequences whose elements belong to {0, 1}) corresponding to two sequences in each row are obtained by performing different cyclic shift on a same binary sequence whose elements belong to {0, 1}. Therefore, the first device may select either of the two sequences in each row.

Table 5

| Sequence group index | Sequence index | Sequence |
|---|---|---|
| 1 | 1 | [0 -1 -1 1 -1 1 1 1 -1 1 1 -1 0 1 1 -1 1 1 1 1 -1 -1 -1 -1 1 -1 0 1 - 1 1 1 -1 1 1 1 1 -1 -1 -1 1 1 1 -1 1 1 1 1 1 1 1 -1 1 1 -1 -1 1 1 -1 1 1 -1 -1 -1 -1 1 -1 1 0 0 1 1 1 -1 1 -1 1 1 -1 -1 1 -1 -1 -1 -1 -1 0 -1 1 -1 -1 0 1 -1 0 -1 1 1 -1 -1 1 1 1 -1 1 1 -1 -1 -1 -1 1 1 1 1 -1 -1 -1 -1 1 1 0 -1 0 -1 1 1 1 1 -1 0 -1 -1 -1 0 -1 -1 1 1 1] <br> or <br> [1 0 0 -1 -1 -1 1 1 -1 1 -1 -1 1 1 1 -1 -1 -1 0 -1 -1 -1 1 1 0 -1 -1 0 1 1 -1 -1 1 1 -1 -1 1 -1 -1 1 1 1 1 1 -1 1 1 1 1 1 -1 1 1 1 1 0 1 0 1 -1 -1 1 1 -1 -1 0 1 1 -1 0 1 -1 1 1 -1 1 0 1 -1 1 -1 -1 1 1 1 1 1 1 1 0 1 -1 -1 -1 1 -1 1 -1 1 1 -1 1 1 1 -1 0 -1 1 -1 1 1 1 1 1 -1 1 1 1 1 -1 -1 1 1 -1 -1 1 -1 -1 1 -1 1 1 1 1 1 1 1 -1 -1 -1 -1 1 1] |
| | 2 | [1 0 1 -1 -1 1 1 1 -1 1 1 -1 1 1 -1 1 1 1 -1 1 1 -1 1 -1 1 -1 1 1 1 1 -1 1 1 -1 1 1 1 1 1 1 1 -1 -1 1 1 1 -1 1 -1 -1 1 1 -1 1 1 1 1 -1 1 -1 1 1 1 -1 -1 0 1 -1 1 1 1 1 -1 -1 - 1 0 0 -1 -1 1 1 -1 1 1 -1 0 -1 -1 1 1 1 -1 1 -1 -1 -1 -1 1 1 1 1 -1 1 0 1 -1 1 1 -1 1 1 -1 -1 1 -1 0 1 1 0 1 1 1 1 1 1 -1 1 -1 -1 1 0 -1 -1 -1 -1 0 1 -1 1 1 1 -1 1 1 1 -1 -1 1 0 1 1 1 0] <br> or <br> [0 1 -1 1 -1 -1 1 1 1 -1 1 1 1 0 -1 -1 1 1 1 -1 1 -1 1 1 -1 1 -1 0 1 -1 0 -1 1 1 -1 1 -1 1 1 1 -1 1 1 -1 0 -1 -1 1 1 0 -1 -1 -1 -1 1 1 1 -1 1 1 -1 1 1 1 1 1 -1 1 1 -1 0 1 1 1 0 1 0 -1 1 1 -1 1 1 1 1 -1 1 -1 1 1 -1 -1 1 -1 -1 - 1 1 1 -1 1 1 -1 1 1 1 1 1 1 1 1 -1 1 -1 -1 -1 -1 1 1 1 1 1 1 -1 -1 1 1 -1 - 1 -1 1 0 1 -1 1 1 1 -1 1 1 1 0 0 1 -1 -1 -1 1 1 1] |
| | 3 | [0 1 -1 1 -1 1 1 -1 1 1 -1 1 1 -1 1 -1 -1 -1 -1 1 0 -1 1 1 -1 1 1 1 1 1 -1 -1 - 1 1 1 0-1 0 1 1 -1 -1 -1 -1 -1 1 1 -1 1 1 -1 1 1 1 -1 1 -1 -1 -1 1 1 1 -1 1 1 1 -1 1 1 0 -1 1 1 1 1 1 0 0 1 1 0 -1 1 1 1 1 -1 -1 0 -1 1 -1 1 1 -1 -1 -1 -1 - 1 1 0 1 1 1 -1 0 -1 -1 -1 -1 1 -1 -1 1 1 1 1 1 1 1 1 1 -1 1 0 -1 -1 1 1 1 -1 1 1 1 -1 -1 -1 -1 1 -1 -1 -1 1 1 1 -1 1 -1 -1 1 1] <br> or <br> [1 1 1 1 0 0 1 1 0 -1 1 -1 1 1 -1 1 1 0 1 -1 1 1 1 1 -1 1 1 -1 1 0 -1 1 1 1 1 0 - 1 -1 -1 -1 1 1 -1 1 1 -1 1 -1 1 -1 1 1 -1 1 -1 1 1 0 -1 1 1 1 1 1 -1 -1 -1 - 1 1 -1 -1 -1 1 1 1 -1 1 -1 -1 1 1 -1 -1 1 -1 -1 1 1 0 1 -1 1 1 1 1 1 -1 1 1 1 -1 1 1 1 -1 -1 1 1 0 -1 1 1 -1 -1 1 1 1 1 -1 -1 -1 1 1 -1 0 1 0 -1 1 1 1 -1 1 -1 -1 1 1 -1 -1 1 1 1 1 -1 1 1 1 1 1 1 1 -1 1 1 1 1 -1 -1 -1 1 0 1] |

(continued)

| Sequence group index | Sequence index | Sequence |
|---|---|---|
| | 4 | [1 -1 1 -1 1 1 1 1-1 0 0 1 1 -1 1 1 1 1-1 -1 -1 1 1 1 -1 1 1 1 1 1 1 1 0 -1 -1 1 -1 -1 1 1 1 -1 -1 -1 -1 -1 0 1 -1 1 -1 1 1 -1 1 1 1 -1 1 1 -1 1 1 -1 1 -1 1 1 0 -1 -1 1 -1 0 -1 -1 -1 1 1 -1 -1 1 -1 -1 1 1 0 1 1 1 1-1 -1 1 0 -1 1 0 -1 1 1 0 1 0-1 1 1 1 1 1 -1 -1 -1 0 -1 1 -1 - 1-1111-111-1-11-11-1-11-11] <br> or <br> [0 1 0 1 1 -1 1 1 1 -1 -1 1 0 -1 1 1 -1 -1 -1 1 1 -1 1 1 1 1 -1 1 1 -1 -1 1 1 1 1 1 -1 -1 1 1 -1 1 1 -1 -1 -1 1 0 0 1 -1 -1 -1 -1 -1 -1 1 1 -1 1 -1 1 -1 1 1 1 -1 -1 -1 -1 1 1 0 1 -1 -1 -1 1 1 -1 -1 1 1 1 1 -1 -1 0 1 1 -1 1 -1 1 -1 -1 1 1 1 1 1 1 1 1 -1 -1 -1 -1 0 1 -1 1 -1 0 -1 1 -1 -1 1 -1 1 1 1 -1 1 1 0 1 1 1 -1 1 -1 1 1 0 -1 -1 0 1 1 1] |
| | 5 | [0 -1 1 1 1 -1 -1 -1 1 1 1 0 1 -1 0 -1 1 1 -1 1 -1 1 -1 -1 1 1 -1 -1 -1 1 1 -1 1 1 0 -1 -1 1 1 0 -1 -1 -1 1 1 -1 -1 1 -1 -1 1 1 1 1 -1 1 1 1 1 -1 -1 1 1 -1 1 0 1 0 1 1 1 1 -1 1 0 0 1 1 -1 -1 0 1 -1 1 1 1 1 1 1 -1 -1 -1 1 1 0 1 -1 1 -1 -1 1 -1 -1 -1 -1 1 1 1 1 1 1 1 1 1 1 0 1 -1 -1 1 1 -1 1 1 -1 1 1 -1 -1-1-11-111-111-1-11-111-1111] <br> or <br> [1 0 1 -1 1 1 -1 -1 0 0 1 1 1 -1 0 1 -1 1 1 -1 -1 1 1 -1 1 1 1 1 -1 0 -1 1 1 - 1 1 -1 1 1 -1 -1 -1 -1 -1 -1 -1 -1 -1 1 1 1 1 1 -1 0 1 1 -1 1 1 1 -1 -1 -1 -1 1 1 1 1 1 -1 1 1 -1 1 -1 -1 1 1 1 1 -1 1 1 1 -1 1 1 1 1 0 -1 1 1 1 -1 -1 1 1 1 - 1 -1 1 0 -1 -1 0 1 -1 1 1 1 -1 -1 1 1 1 -1 1 -1 -1 1 1 1 1 0 -1 1 1 0 1 1 -1 1 1 -1 1 1 1 -1 1 1 1 1 1 1 1 -1 1 -1 1 -1 -1 -1 1 0] |
| | 6 | [1 -1 -1 -1 1 -1 1 1 -1 -1 1 1 0 -1 1 1 -1 1 -1 1 1 1 -1 1 -1 1 1 1 0 1 1 1 1 1 -1 -1 1 1 0 1 1 1 -1 1 -1 1 1 -1 1 1 -1 1 -1 1 -1 -1 -1 -1 1 1 -1 1 1 -1 1 -1 -1 1 1 -1 1 0 -1 1 -1 1 1 1 1 -1 0 -1 1 1 -1 1 -1 1 -1 -1 -1 -1 1 1 1 -1 1 1 1 1 -1 1 1 1 -1 -1 -1 1 0 1 -1 -1 -1 1 1 -1 0 1 1 1 0 1 0 1 1 0 -1 1 1 1 1 1 1 1 1 -1 - 1 -1 1 1 0 0 1 -1 1 1 1 -1 1 -1 1 1 -1 1 1 -1 1 1 1] <br> or <br> [0 1 1 0 -1 1 1 1 -1 1 1 1 -1 -1 1 1 1 -1 -1 1 1 0 0 1 -1 1 1 1 -1 -1 1 -1 -1 -1 -1 -1 -1 1 1 1 1 1 1 -1 1 1 -1 1 1 -1 1 1 1 1 -1 0 -1 1 1 1 1 1 -1 1 -1 -1 -1 1 1 0 -1 -1 -1 -1 -1 1 1 1 -1 1 1 0 1 1 -1 1 1 1 -1 1 -1 -1 1 1 1 1 -1 -1 -1 -1 1 1 -1 1 1 -1 -1 1 1 1 1 0 -1 -1 1 1 1 -1 -1 -1 0 -1 1 1 -1 1 1 1 -1 -1 1 1 -1 1 1 -1 1 1 1 1 1 1 1 -1 -1 -1 0 1 1 1 -1 1 1 1 0 -1 1 1 1 0 1] |
| | 7 | [1 1 1 -1 -1 1 1 -1 1 1 -1 1 1 -1 1 -1 -1 -1 1 1 -1 1 1 -1 1 1 1 1 -1 1 0 0 -1 -1 1 1 1 -1 -1 1 -1 0 1 -1 1 1 -1 1 1 -1 1 1 1 -1 0 1 -1 -1 -1 0 1 1 -1 1 1 1 -1 1 0 -1 -1 -1 1 1 1 -1 1 1 1 1 1 -1 -1 1 1 -1 -1 -1 -1 1 1 1 1 -1 1 0 -1 1 1 0 1 0 1 0 -1 -1 1 1 1 -1 1 1 1 -1 1 1 -1 0 -1 1 0 -1 1 1 1 1 1 1 -1 -1 1 1 1 -1 1 -1 1 1 -1 -1 -1 -1 -1 -1 1 1 1 1 1 1 0 1 1 1 1 1 1 1 -1 1 1 1 -1 1] <br> or <br> [0 1 -1 -1 1 1 1 1 -1 -1 1 1 -1 1 1 -1 1 1 1 1 1 1 1 -1 -1 1 1 1 -1 -1 1 1 1 1 1 1 -1 1 1 -1 -1 1 1 0 0 1 -1 1 1 1 1 1 -1 0 1 1 -1 1 -1 1 -1 -1 1 1 1 0 -1 -1 -1 -1 1 0 -1 -1 -1 -1 1 1 -1 0 1 -1 1 -1 1 1 1 1 1 -1 1 -1 1 1 -1 1 1 1 1 -1 -1 1 0 1 1 -1 0 -1 0 -1 1 1 1 1 1 1 -1 1 1 -1 1 0 -1 1 0 1 -1 1 1 -1 1 1 -1 1 1 1 1 1 1 -1 1 1 1 -1 1 -1 -1 -1 1 1 -1 1 1 -1 1] |
| | 8 | [1 0 -1 1 -1 1 1 1 -1 1 1 -1 1 1 -1 0 1 -1 1 -1 -1 -1 1 -1 1 1 1 1 -1 1 - 1 -1 1 -1 1 1 -1 1 1 1 1 1 1 -1 1 1 1 -1 1 0 1 1 -1 1 -1 1 1 1 -1 1 -1 -1 1 1 -1 1 -1 1 -1 1 -1 1 -1 -1 -1 1 1 1 -1 1 1 1 1 1 0 -1 1 1 1 0 -1 -1 1 1 -1 1 -1 -1 -1 -1 0 -1 1 1 1 1 1 1 1 -1 -1 1 0 -1 1 1 1 -1 -1 0 1 1 1 -1 1 -1 1 1 1 1 0 -1 1 1 1 1 1 -1 -1 1 1 1 -1 1 1 1 1 -1 1 1 0 -1 1 1 1 0 0] <br> or <br> [0-1 1 1 -1 1 1-1 1 1 1-1 1 -1 1 -1 1 1 -1 1 1 -1 1 1 1 1 1 -1 0 -1 -1 1 1 0 1 1 -1 1 -1 -1 -1 -1 1 0 -1 1 1 1 1 1 1 1 1 1 1 0 -1 1 1 1 -1 -1 -1 0 -1 - 1 1 -1 -1 -1 1 1 -1 -1 1 0 1 -1 -1 -1 1 1 1 -1 1 -1 1 1 1 1 -1 -1 1 0 -1 1 1 1 0 0 1 0 -1 1 1 1 1 1 1 -1 1 1 -1 -1 0 1 1 -1 -1 1 1 1 1 1 -1 -1 -1 1 1 -1 1 1 1 -1 1 1 1 -1 -1 1 1 1 1 1 -1 -1 -1 1 1] |

(continued)

| Sequence group index | Sequence index | Sequence |
|---|---|---|
| | 9 | [0 1 -1 -1 -1 1 1 1 -1 -1 1 1 -1 1 -1 -1 1 -1 1 1 -1 -1 -1 -1 1 0 -1 1 1 1 -1 1 -1 -1 1 1 1 1 1 1 -1 -1 1 -1 1 1 1 -1 -1 0 1 1 0 0 1 1 1 1 -1 1 -1 0 -1 -1 1 1 0 -1 0 1 1 1 1 -1 1 1 1 -1 1 1 1 1 -1 -1 1 1 1 0 1 1 -1 - 1 -1 -1 -1 -1 -1 -1 1 1 0 -1 1 -1 1 1 -1 1 1 -1 1 1 0 1 -1 1 1 1 -1 -1 -1 -1 - 1 1 -1 1 1 1 -1 1 -1 1 1 1 -1 1 1 -1 1 1 0 1 -1 1 1 1]<br>or<br>[1 -1 1 1 -1 -1 -1 1 -1 1 1 -1 1 -1 1 1 -1 1 1 1 -1 0 -1 1 0 0 -1 1 1 1 -1 1 1 0 -1 -1 -1 -1 0 1 0 1 -1 -1 -1 1 -1 1 1 1 1 1 1 -1 -1 -1 1 -1 0 -1 1 -1 1 -1 1 1 1 -1 1 1 -1 1 0 1 -1 -1 -1 1 1 -1 1 1 -1 1 0 -1 -1 1 -1 1 -1 1 -1 1 1 1 1 -1 1 1 -1 1 1 1 1 1 1 0 1 1 1 1 0 1 -1 -1 -1 1 1 1 -1 -1 1 1 -1 1 1 1 1 -1 -1 -1 1 1 1 -1 1 -1 1 1 1 0 1 -1 -1 1 1]<br>1 0 1 -1 -1 1 1] |
| | 10 | [1 0 1 1 -1 1 -1 -1 -1 -1 1 1 -1 -1 -1 -1 -1 -1 1 1 -1 1 1 1 -1 1 1 0 -1 1 1 -1 1 1 -1 1 -1 -1 1 1 -1 1 -1 1 1 1 1 -1 1 1 -1 -1 -1 1 1 1 1 1 1 1 -1 -1 -1 1 1 -1 1 -1 1 0 1 1 -1 -1 -1 1 1 1 1 -1 1 1 -1 0 -1 1 1 0 0 1 -1 -1 -1 1 1 1 -1 1 1 -1 1 -1 1 1 1 -1 1 -1 1 1 1 1 1 -1 1 1 1 1 1 0 1 -1 1 1 1 1 1 0 -1 1 1 1 -1 1 -1 0 -1 1 1 1 0 -1 1 1 1 1 -1 1 1 1 -1 1 0 -1 1 1<br>-1 1 1 1 1 -1 0]<br>or<br>[0 -1 1 0 0 1 1 1 1 -1 -1 1 1 1 -1 -1 1 1 -1 1 1 -1 1 1 -1 1 -1 1 1 -1 1 -1 -1 1 0 1 -1 -1 -1 -1 -1 0 1 1 -1 -1 1 0 1 -1 1 1 1 0 1 -1 -1 -1 1 1 1 1 1 0 -1 1 1 -1 -1 -1 1 1 -1 0 1 0 1 1 1 1 -1 1 1 1 -1 1 1 1 1 -1 -1 1 1 1 -1 1 1 1 1 1 0 -1 1 1 1 1 -1 1 1 -1 1 1 1 -1 1 -1 -1 1 1 1 1 1 -1 1 1 1 1 -1 1 1 -1 1 -1 -1 1 -1 1 -1 1 0 -1 1 1 1<br>-1 1 1 1 1 -1 1 1] |
| | 11 | [1 1 1 1 -1 0 0 -1 1 -1 0 1 -1 1 1 1 -1 1 -1 1 1 -1 1 -1 -1 -1 -1 -1 -1 -1 -1 - 1 1 1 0 1 1 -1 1 -1 1 1 1 -1 1 -1 -1 1 1 -1 1 1 1 1 -1 1 1 -1 1 1 -1 1 0 -1 1 1 -1 1 1 -1 1 -1 1 1 1 -1 1 1 1 -1 1 -1 1 1 1 1 1 -1 1 -1 -1 -1 1 1 1 1 -1 0 1 1 0 -1 1 1 1 1 0 1 1 1 -1 -1 -1 -1 1 1 1 -1 1 1 -1 1 1 -1 1 -1 1 1 1 1 -1 1 1 1 1 -1 1 1 0 1 1 - 1 1 -1 1 -1 0 -1 1 1 -1 1 1 1 -1 1 1<br>0 1 0 1 1 1 -1 1]<br>or<br>[0 1 -1 1 1 1 1 -1 1 1 1 1 -1 1 1 -1 -1 1 1 1 1 0 -1 1 1 1 1 -1 1 1 1 -1 1 1 -1 -1 1 -1 -1 1 1 1 1 -1 1 1 -1 1 -1 -1 1 1 0 -1 1 -1 1 1 1 -1 1 -1 -1 -1 -1 1 -1 1 -1 -1 1 1 -1 1 1 1 1 1 -1 1 -1 1 1 1 -1 1 0 1 -1 1 0 -1 1 1 1 -1 1 -1 0 -1 -1 1 -1 1 1 1 1 1 1 -1 1 -1 1 -1 -1 -1 1 1 -1 1 1 1 -1 1 1 1 -1 1 1 0 1 1 -1 1 1 1 1 0 -1 1 -1 1 -1 1 -1 1 1 1 0 -1 0 1 1 -1 1 -1 1 -1 -1 1 1 -1 1 1<br>-1 1 0 0 1 1 1] |
| | 12 | [1 1 -1 -1 -1 1 0 -1 1 1 -1 1 1 -1 1 1 -1 1 -1 -1 -1 -1 -1 1 1 -1 1 -1 1 1 1 -1 1 -1 1 1 1 -1 1 -1 1 1 1 -1 1 -1 -1 1 1 1 -1 1 1 0 -1 1 1 1 0 1 -1 1 1 -1 1 0 1 -1 -1 -1 -1 1 1 1 1 -1 1 -1 1 1 -1 0 1 -1 1 1 1 1 1 -1 1 1 0 0 1 0 1 -1 1 1 -1 1 -1 1 1 1 1 1 -1 1 -1 1 1 1 0 1 1 1 0 -1 -1 -1 -1 -1 -1 -1 1 1 1 -1 1 1 1 1 -1 1 1 1 1 1 -1 1 1 -1 1 1 -1 1 1 -1 1 1 1 -1 1 1 1 -1 1 1 1 -1 1 1 1 0 -1 1 1<br>1 1 1 1 0 1 1]<br>or<br>[0 -1 1 -1 1 -1 1 1 0 1 1 1 -1 1 1 -1 1 1 0 1 1 1 1 -1 -1 -1 1 1 -1 1 -1 -1 1 -1 -1 1 1 -1 1 1 1 -1 1 -1 -1 1 -1 -1 -1 -1 1 1 1 -1 1 -1 1 1 0 -1 1 1 -1 1 -0 -1 -1 1 1 1 0 1 1 1 1 1 1 1 -1 -1 -1 1 1 -1 1 0 1 -1 1 -1 1 1 1 -1 1 0 0 1 0 1 1 1 -1 -1 1 1 1 1 1 -1 1 1 1 0 -1 1 1 -1 0 1 -1 1 1 1 -1 1 -1 1 1 1 -1 1 1 1 1 -1 -1 -1 1 1 -1 1 11<br>1 -1 -1 1 1 -1 -1 -1 1 1 1 -1 -1 -1 -1 1 1 1] |
| 2 | 1 | [0 1 1 -1 -1 -1 1 1 1 -1 -1 0 1 -1 1 -1 1 1 -1 1 -1 1 1 -1 1 0 1 0 -1 1 1 -1 -1 1 -1 1 1 -1 1 -1 -1 1 1 -1 1 1 -1 1 0 1 1 1 1 -1 1 1 1 -1 1 1 1 -1 1 -1 1 1 1 0 1 -1 1 -1 -1 -1 -1 1 0 -1 1 1 -1 1 1 1 1 0 0 1 1 -1 1 0 -1 1 1 -1 1 1 1 -1 1 -1 1 -1 1 1 1 1 1 -1 1 1 1 1 1 1 1 1 1 1 -1 1 1 1 1 1 1 -1 -1 -1 -1 -1 1 1 -1 1 1 -1 1 -1 1 0 -1 1 0 1 1 1 1 -1 1 -1 -1 1 1 -1 1 1 1 1 -1 1 1 1 1 1 1 1 1 1 -1 1 1 1 1 1 1 -1 -1 -1<br>-1 1 1 -1 1 1 -1 1]<br>or<br>[1 -1 -1 1 1 1 1 1 -1 -1 1 1 1 -1 1 1 1 -1 1 1 -1 1 -1 -1 1 -1 1 1 -1 1 -1 1 1 1 0 1 -1 -1 -1 1 1 1 -1 1 -1 1 1 0 1 -1 1 1 -1 1 1 -1 -1 1 1 0 1 0 -1 1 1 -1 1 1 1 -1 1 -1 1 -1 1 1 -1 1 1 1 1 0 -1 1 1 -1 1 1 -1 1 1 1 1 1 -1 1 1 -1 1 -1 1 1 1 0 1 -1 1 1 1 1 0 1 -1 1 1 1 1 0 0 -1 1 1 -1 0 1 -1 1 -1 1 1 -1 1 1 1 1 1 1 1 1 -1 -1 -1 -1 -1 -1 -1 1 0 -1 -1 0 1 1 -1 -1 -1 1<br>1 -1 -1 1 1 1 1] |

(continued)

| Sequence group index | Sequence index | Sequence |
|---|---|---|
| | 2 | [0 1 1 -1 1 -1 1 1 1 1 -1 -1 1 1 -1 -1 0 1 -1 0 -1 1 1 -1 1 1 0 1 -1 1 0 0 1 1 1 -1 1 -1 1 -1 1 1 -1 1 1 1 1 -1 -1 -1 1 1 1 1 1 -1 -1 1 1 -1 -1 1 1 -1 1 1 1 -1 0 1 1 -1 1 -1 -1 -1 -1 -1 -1 -1 1 -1 1 -1 0 -1 -1 -1 1 -1 1 1 1 0 -1 -1 1 1 1 -1 -1 -1 -1 1 1 1 1 -1 1 1 1 1 -1 1 1 1 1 0 -1 1 -1 -1 1 1 1 -1 1 1 1 -1 1 -1 -1 -1 -1 -1 -1 0 -1 1 1 1 -1 0 1]<br><br>or<br><br>[1 -1 1 1 -1 1 1 1 -1 1 1 1 1 -1 1 -1 1 1 -1 -1 1 1 -1 -1 -1 1 0 1 -1 1 -1 -1 1 1 -1 -1 1 1 1 1 1 0 -1 1 1 -1 1 -1 -1 1 0 1 1 1 -1 -1 -1 1 -1 1 1 1 -1 -1 -1 1 1 -1 1 1 1 -1 0 1 -1 -1 -1 -1 1 1 1 -1 -1 -1 1 1 1 1 -1 -1 -1 1 0 1 -1 1 1 1 1 0 1 0 -1 -1 1 1 1 -1 1 1 1 1 1 -1 1 1 1 1 1 1 0 1 -1 0 -1 1 -1 1 1 -1 1 1 0 1 1 1 0 0 1 1 -1 -1 -1 -1 -1 -1 1 1 1 -1 1 1] |
| | 3 | [1 1 -1 1 -1 1 -1 0 1 1 -1 -1 -1 1 1 1 1 1 1 1 1 0 -1 -1 1 1 1 -1 1 1 -1 -1 -1 -1 1 1 0 1 -1 1 1 -1 1 1 1 1 1 1 0 1 -1 1 -1 1 1 -1 1 1 -1 1 1 1 -1 1 1 -1 1 1 0 -1 1 0 1 -1 1 -1 1 -1 1 -1 -1 -1 1 1 1 1 1 1 -1 1 0 1 1 -1 0 0 1 -1 1 1 -1 0 1 0 -1 1 -1 1 -1 1 -1 -1 -1 -1 -1 -1 1 1 1 -1 1 -1 1 -1 1 -1 -1 1 1 -1 -1 1 -1 1 1 1 -1 1 1 1 0 1 -1 1 1 1 1 1 -1 -1 1 1]<br><br>or<br><br>[0 1 0 -1 1 1 1 1 1 -1 1 1 1 -1 1 1 -1 1 1 1 -1 1 1 -1 1 -1 1 1 -1 1 1 -1 1 -1 -1 1 1 1 -1 1 1 1 1 -1 1 1 1 0 -1 -1 1 1 -1 1 -1 1 1 -1 1 1 1 1 -1 -1 -1 1 1 1 -1 0 1 1 1 -1 -1 -1 1 1 -1 -1 -1 -1 -1 1 0 1 1 1 1 1 -1 1 -1 -1 -1 1 1 1 0 1 1 1 -1 1 -1 1 1 1 1 -1 0 -1 1 -1 -1 -1 -1 -1 -1 1 1 1 -1 1 -1 1 1 0 1 -1 0 -1 -1 1 1 1 1 -1 1 -1 -1 1 1 -1 1 1 1 1 -1 1 0 -1 1 1 0 0 1 -1 1 1 1 1] |
| | 4 | [0 1 1 1 0 -1 1 -1 1 1 1 1 -1 1 1 -1 1 1 1 1 -1 -1 -1 -1 1 0 1 -1 -1 -1 1 0 -1 1 -1 -1 1 -1 1 1 -1 -1 1 -1 1 0 -1 1 0 -1 1 1 -1 1 1 -1 1 -1 1 1 1 -1 -1 0 1 1 1 -1 1 1 1 1 -1 1 -1 1 -1 1 1 0 1 1 -1 -1 -1 1 1 0 0 1 1 -1 1 1 1 1 -1 1 1 0 1 -1 -1 -1 1 1 -1 1 -1 1 1 1 1 1 1 -1 -1 -1 -1 -1 1 1 -1 1 1 1 1 1 1 1 -1 1 1 1 -1 1 1 1 -1 1 -1 -1 -1 1 1 -1 1 1 -1 1 -1 1 1 1 1 -1 1 1 1 -1 1 0 1]<br><br>or<br><br>[1 1 1 -1 -1 -1 -1 1 1 -1 1 1 0 -1 -1 -1 -1 0 -1 1 -1 -1 1 1 1 1 1 1 1 0 1 1 0 -1 -1 1 1 -1 1 -1 1 1 1 -1 1 1 -1 1 0 -1 1 1 1 1 -1 -1 -1 -1 1 1 1 -1 1 -1 0 -1 1 1 -1 1 1 -1 1 -1 1 0 0 -1 1 -1 1 1 1 1 -1 1 1 0 -1 1 1 1 -1 1 1 -1 1 1 1 1 -1 1 -1 -1 -1 1 1 1 1 -1 1 1 1 1 1 1 1 -1 1 -1 1 1 1 1 -1 1 -1 1 1 -1 1 1 1 -1 1 -1 1 1 -1 1 1 0 1 0 1 1 1 0 -1 -1 1 1 1 -1 1 1] |
| | 5 | [0 -1 -1 -1 -1 -1 -1 1 1 -1 -1 -1 1 1 1 1 0 -1 1 1 1 -1 -1 -1 1 1 1 1 -1 1 1 -1 1 -1 1 -1 1 0 1 1 -1 1 1 1 1 -1 1 1 -1 1 1 -1 1 1 -1 1 1 1 -1 1 1 -1 1 1 1 -1 1 1 1 1 1 1 -1 0 1 0 1 1 1 -1 1 1 0 0 1 1 -1 1 0 1 -1 1 1 1 1 -1 1 1 -1 -1 -1 1 1 1 1 -1 1 -1 0 -1 1 1 0 1 -1 1 1 -1 1 1 1 -1 1 -1 -1 -1 -1 -1 -1 1 1 -1 1 0 -1 1 1 1 1 -1 1 -1 1 1 1 1 0 1 1 -1 1 -1 1 1 -1 1 1 1 1 1 1]<br><br>or<br><br>[1 -1 -1 1 1 1 -1 1 1 1 -1 1 1 1 -1 1 -1 -1 -1 -1 1 1 -1 1 -1 -1 1 1 -1 1 1 1 -1 1 -1 -1 -1 -1 -1 -1 1 1 -1 1 0 1 0 -1 1 1 1 -1 1 1 0 0 -1 1 1 1 0 -1 1 1 1 1 1 1 1 -1 -1 -1 1 1 -1 1 -1 1 1 0 1 -1 1 0 1 -1 1 1 -1 1 -1 1 1 1 -1 1 1 -1 1 1 -1 1 -1 1 1 0 1 1 1 1 1 -1 1 1 -1 1 1 0 1 -1 -1 -1 -1 1 1 -1 1 1 1 -1 1 0 1 1 1 1 1 1 1 1 -1 1 -1 -1 1 1 1 0 -1 1 1 -1 1 1 -1 1 1 1 1 -1 1 -1 1 1 1 1 1 -1 1 1 0 1] |
| | 6 | [0 1 -1 -1 -1 -1 1 1 1 -1 1 1 -1 1 1 -1 1 1 1 -1 -1 -1 -1 -1 -1 1 1 0 0 1 -1 1 -1 1 1 -1 1 -1 1 1 1 1 1 -1 1 -1 1 1 1 -1 1 1 1 1 1 -1 1 1 1 -1 1 -1 -1 1 1 1 -1 1 0 1 -1 1 -1 1 1 1 1 -1 1 1 1 0 1 0 1 1 1 0 -1 1 0 1 -1 1 1 -1 1 1 1 1 1 0 1 1 -1 1 1 1 -1 1 -1 1 1 -1 1 1 -1 0 -1 1 1 1 1 0 -1 1 -1 1 -1 -1 -1 1 1 1 1 1 1 1 1 1 -1 1 -1 1 1 -1 1 1 1 0 -1 1 1 1 1 1 -1 1 1 -1 1 -1 -1 -1 1 1]<br><br>or<br><br>[1 -1 1 1 1 1 -1 -1 1 1 -1 0 -1 1 -1 -1 1 1 1 1 1 1 -1 1 0 1 0 1 1 -1 1 0 1 -1 1 0 1 -1 1 -1 1 1 1 1 1 0 1 -1 -1 -1 1 1 -1 1 1 1 -1 1 -1 1 1 1 -1 1 -1 1 0 -1 1 1 -1 1 0 1 -1 1 -1 1 -1 1 1 -1 1 1 -1 1 1 -1 1 1 1 1 -1 1 1 1 -1 1 1 -1 1 1 0 -1 -1 -1 -1 -1 1 1 1 1 -1 1 -1 -1 1 1 -1 1 0 1 1 1 1 1 1 1 1 -1 1 1 1 1 -1 1 -1 -1 1 1 1 1 1 -1 1 1 1 0 0 -1 1 1 1 1 1 -1 1 1 -1 1 1 1 -1 1 1 -1 1 -1 1 1 -1 1 -1 -1 1 1] |

29

(continued)

| Sequence group index | Sequence index | Sequence |
|---|---|---|
| | 7 | [1 -1 1 0 1 1 -1 1 -1 1 1 -1 -1 1 -1 -1 -1 1 1 -1 1 -1 1 0 1 -1 1 -1 - 1 0 1 -1 -1 -1 0 -1 1 -1 0 -1 1 -1 -1 -1 -1 -1 1 1 1 -1 1 1 1 -1 1 1 1 -1 1 1 1 0 1 1 -1 -1 1 -1 -1 1 -1 1 1 -1 1 1 -1 0 -1 -1 -1 1 1 -1 0 0 1 0 1 0 1 1 -1 1 -1 1 1 1 -1 -1 -1 1 1 0 -1 1 -1 1 1 1 1 -1 -1 1 1 -1 0 1 1 1 1 -1 -1 -1 - 1 1 1 -1 1 1 1 1 1 1 1 1 -1 -1 -1 1 1 -1 1 1] or [0 -1 1 1 1 1 -1 1 -1 1 1 1 1 1 -1 1 -1 1 1 1 1 -1 -1 -1 1 1 1 1 1 1 -1 0 -1 -1 1 1 -1 -1 -1 1 -1 -1 1 -1 -1 1 -1 1 1 -1 1 1 1 -1 0 1 -1 -1 -1 -1 0 1 -1 -1 1 0 1 1 -1 0 1 -1 -1 1 1 -1 1 1 1 1 -1 -1 -1 1 1 -1 0 -1 - 1 1 -1 1 1 -1 1 1 1 -1 -1 -1 0 -1 -1 1 1 1 1 0 0 1 0 -1 1 1 1 -1 1 1 1 -1 -1 1 -1 -1 -1 0 -1 -1 1 -1 1 1 -1 1 1 1] |
| | 8 | [0 -1 1 1 1 -1 -1 1 1 1 1 -1 1 1 -1 -1 -1 1 1 -1 1 -1 -1 -1 -1 1 1 1 -1 -1 0 1 -1 -1 1 1 -1 1 1 -1 -1 1 1 1 -1 -1 1 1 -1 1 1 1 1 -1 0 1 1 1 1 -1 -1 1 1 -1 1 1 1 1 -1 1 1 1 1 1 -1 1 0 1 1 1 0 0 1 -1 1 1 -1 1 -1 -1 -1 1 1 -1 0 -1 0 1 1 -1 1 -1 -1 -1 0 1 1 1 -1 1 1 1 0 1 -1 1 1 1 -1 1 1 1 -1 -1 -1 -1 -1 -1 1 1 1 1 1 1 -1 -1 1 1 -1 -1 0 -1 1 1 1 -1 0 -1 1] or [1 -1 1 -1 0 -1 -1 1 -1 1 1 1 0 1 -1 1 1 1 1 -1 1 1 1 1 -1 -1 1 1 -1 1 1 -1 1 1 1 -1 -1 -1 -1 1 1 1 1 0 1 1 1 -1 -1 0 1 1 0 -1 1 1 1 1 -1 -1 -1 -1 1 1 1 1 1 -1 -1 1 1 1 -1 1 1 1 -1 1 -1 -1 1 1 1 -1 1 0 -1 1 -1 1 1 -1 1 1 1 1 -1 1 -1 -1 -1 1 1 1 -1 -1 1 1 1 0 1 1 -1 -1 -1 -1 -1 -1 1 -1 1 -1 -1 1 -1 1 1 1 -1 1 1 0 -1 1 1 -1 1 0 0 -1 1 1 1 1 1 1 -1 1 1 1 1 0 1 0 1 -1 1] |
| | 9 | [0 0 1 1 1 1 -1 0 1 -1 1 1 1 -1 1 1 1 -1 -1 1 1 -1 1 1 1 -1 1 1 -1 1 1 1 -1 1 -1 -1 -1 -1 -1 1 1 1 0 -1 0 1 1 -1 1 -1 -1 1 1 1 1 -1 -1 1 1 -1 0 -1 -1 -1 -1 -1 1 1 -1 1 -1 1 1 -1 1 1 -1 1 1 0 1 -1 1 1 1 -1 -1 1 1 1 -1 1 1 1 -1 1 -1 -1 -1 1 1 1 1 - 1 1 1 1 -1 -1 1 0 1 -1 1 1 1 1 1 1 1 1 1 1 -1 -1 1 1 1 -1 -1 -1 0 -1 1 1 1 1 0 1 -1 1 -1 -1 -1 1 1 -1 1 1 -1 0 -1 1 1 1 1 1 -1 0 1 1] or [1 1 1 -1 1 1 1 1 -1 1 1 -1 1 -1 -1 -1 -1 -1 -1 -1 1 1 1 -1 1 0 1 0 -1 1 1 -1 1 -1 -1 1 1 1 1 -1 1 -1 1 1 -1 1 0 1 1 -1 1 -1 1 1 1 -1 1 1 1 -1 1 1 1 1 1 -1 1 1 0 1 -1 1 -1 1 1 -1 1 -1 -1 - 1 1 1 1 -1 1 -1 -1 1 1 -1 1 -1 -1 1 -1 1 1 1 1 1 -1 1 0 1 -1 1 1 -1 1 1 1 -1 1 -1 1 1 -1 1 1 1 -1 1 -1 -1 -1 -1 1 0 1 1 1 -1 0 -1 1 1 -1 1 1 1 1 -1 1 1 0 1 1 -1 1 1 -1 1 1 -1 1 0 1 1 0 0 1 1 1 1 1 1 0 -1 -1 -1 1 1 1 -1 1 1] |
| | 10 | [0 1 0 -1 1 1 -1 -1 -1 1 1 -1 1 0 1 1 1 1 -1 -1 -1 1 1 0 1 1 -1 1 1 0 1 -1 1 -1 1 1 1 0 -1 -1 -1 -1 -1 1 1 0 1 -1 1 -1 1 1 -1 1 1 -1 1 1 -1 1 1 -1 1 1 -1 -1 -1 1 1 1 -1 1 -1 1 1 1 1 1 0 0 1 -1 0 1 -1 1 1 1 1 1 -1 1 1 1 -1 1 -1 0 -1 -1 1 1 -1 1 -1 -1 -1 -1 -1 1 1 -1 1 1 1 1 -1 1 1 1 1 1 -1 -1 -1 1 1 -1 1 -1 -1 1 1 1 1 -1 -1 1 0 1 1 1 1 -1 1 1 1 -1 1 -1 1 1 1 1 -1 1 1 -1 1 1 1 1] or [1 -1 1 1 1 -1 0 1 1 -1 1 -1 0 -1 -1 1 1 1 -1 0 1 1 1 1 -1 1 1 0 1 1 1 1 -1 1 1 1 1 1 -1 1 1 -1 1 1 1 -1 1 -1 -1 -1 1 -1 1 1 -1 1 1 1 -1 1 -1 -1 1 1 0 0 1 -1 0 -1 1 1 -1 1 1 1 1 -1 1 -1 1 1 1 0 -1 -1 1 1 -1 1 -1 -1 1 1 1 1 1 1 1 1 -1 -1 1 -1 -1 1 1 -1 1 1 1 1 1 -1 -1 -1 1 -1 -1 -1 -1 -1 1 1 -1 1 -1 1 -1 -1 -1 -1 -1 1 1 -1 1 -1 -1 -1 -1 1 1 1 1 0 1 0 -1 1 1 1 1 -1 1 -1 0 -1 1] |
| | 11 | [0 1 -1 1 1 -1 -1 -1 -1 -1 0 1 -1 1 -1 -1 1 1 -1 1 1 1 1 1 -1 0 -1 1 1 1 1 - 1 1 -1 1 1 -1 1 1 1 1 1 1 -1 -1 -1 -1 -1 -1 -1 1 1 1 -1 1 1 0 0 1 -1 1 -1 1 1 1 -1 1 -1 1 1 1 -1 1 1 1 -1 1 0 1 1 0 1 0 1 0 1 1 -1 0 1 1 -1 1 1 1 1 0 -1 1 1 -1 1 1 1 1 1 1 1 -1 1 1 -1 1 1 -1 1 -1 1 1 -1 1 1 -1 1 1 0 -1 -1 1 1 1 -1 1 -1 0 1 1 1 -1 1 -1 1 1 -1 1 -1 1 -1 -1 -1 -1 1 1 1 1 -1 -1 1 1 -1 1 1 -1 1 1] or [1 -1 1 0 0 1 -1 -1 -1 1 1 1 1 1 1 1 1 1 -1 0 1 1 0 1 0 1 1 1 0 -1 1 1 -1 - 1 -1 1 1 0 -1 -1 -1 1 1 1 -1 1 1 1 1 -1 1 1 1 -1 -1 -1 -1 1 1 -1 1 1 -1 1 0 -1 1 1 1 1 -1 1 -1 0 1 -1 1 1 -1 -1 -1 1 1 -1 1 1 -1 -1 -1 -1 1 1 -1 1 1 1 -1 1 1 -1 -1 -1 1 1 1 1 0 1 -1 -1 -1 1 1 1 1 1 1 0 1 1 -1 1 1 1 1 -1 -1 1 -1 1 0 1 1 -1 1 -1 1 1 -1 1 -1 -1 -1 -1 1 1 1 1 1 -1 1 1 1 -1 1 1 -1 -1 1 1] |

(continued)

| Sequence group index | Sequence index | Sequence |
|---|---|---|
| | 12 | [1 1 1 1 1 -1 1 1 -1 -1 -1 -1 -1 1 1 1 1 0 -1 1 -1 -1 1 1 1 1 -1 1 -1 0 1 1 -1 -1 -1 1 1 1 -1 1 -1 1 1 1 0 1 0 0 -1 1 1 -1 -1 -1 0 -1 1 1 -1 1 -1 1 1 -1 -1 1 1 0 1 1 1 -1 1 1 1 -1 1 1 1 1 -1 -1 -1 -1 1 1 -1 0 -1 1 1 -1 0 -1 -1 -1 1 1 0 -1 1 1 -1 1 0 -1 1 -1 1 1 -1 -1 -1 1 -1 -1 1 1 1 -1 1 1 -1 1 1 1 0 1 -1 1 1 1 1 -1 1 1 1 -1 -1 -1 1 1 1] <br> or <br> [0 -1 1 1 0 1 -1 -1 1 1 0 -1 -1 -1 -1 1 1 0 -1 1 1 1 1 -1 1 1 -1 1 -1 1 -1 -1 -1 1 1 1 -1 1 -1 0 -1 1 1 1 1 1 1 1 -1 -1 -1 1 1 1 1 -1 1 1 -1 1 1 1 1 1 1 -1 1 1 -1 1 1 1 1 1 -1 0 1 1 1 -1 1 -1 1 1 -1 1 -1 1 -1 0 -1 -1 -1 1 1 -1 -1 1 1 1 -1 1 1 1 1 -1 0 1 0 1 0 0 1 1 1 1 -1 -1 0 -1 -1 -1 1 1 1 -1 1 1 1 -1 1 1 -1 1 -1 0 -1 1 1 1 -1 1 -1 -1 1 1 1 1 -1 1 1 -1 1 1 -1 -1 1] |
| 3 | 1 | [1 1 1 -1 1 1 1 -1 1 -1 1 1 1 0 1 1 -1 0 1 1 1 -1 1 -1 1 1 -1 1 1 1 -1 1 -1 1 1 1 -1 1 1 0 -1 1 0 -1 1 1 1 -1 1 -1 1 1 1 1 -1 1 0 1 1 1 -1 1 1 1 -1 1 1 1 1 -1 -1 -1 1 1 -1 1 1 1 1 1 -1 -1 -1 -1 1 1 1 -1 1 1 0 -1 1 1 1 1 1 -1 -1 -1 -1 1 -1 -1 -1 -1 1 1 -1 1 1 -1 1 1 -1 1 -1 0 -1 1 1 1 1 -1 1 -1 1 -1 1 1 0 -1 1 1 1 0 0 -1 -1 1 1 1 -1 1 0 1 0 -1 -1 -1 1 1 -1 1 1 -1 1 1 1 1] <br> or <br> [0 0 1 -1 1 1 1 1 0 1 0 -1 1 -1 -1 1 1 1 -1 1 1 1 1 -1 1 -1 1 1 -1 1 -1 1 1 - 1 -1 -1 0 1 -1 1 -1 1 0 1 1 -1 1 1 -1 1 -1 -1 1 -1 1 1 -1 1 -1 1 1 -1 1 -1 0 -1 1 0 1 1 1 -1 1 -1 -1 1 1 1 1 -1 0 1 1 1 -1 1 1 1 -1 1 1 -1 1 -1 1 1 1 -1 1 1 1 -1 1 1 -1 1 -1 1 -1 1 1 -1 1 1 -1 1 -1 1 1 0 1 1 1 1 1 1 1 1 1 -1 -1 -1 -1 1 1 1 -1 1 -1 1 1 -1 1 0 1 -1 -1 -1 1 1 1 1 1 1 -1 1 1 0 -1 -1 1 1 1] |
| | 2 | [1 -1 1 1 -1 -1 1 1 1 1 1 -1 0 1 1 1 -1 1 -1 1 1 -1 1 1 1 1 0 -1 -1 1 1 1 -1 1 -1 0 -1 -1 1 1 1 1 1 1 1 -1 0 -1 -1 -1 -1 -1 1 -1 -1 -1 0 1 1 -1 0 1 -1 1 1 1 - 1 1 1 -1 -1 -1 -1 -1 1 1 -1 1 -1 1 -1 1 -1 1 -1 1 0 1 -1 1 1 1 -1 1 1 1 1 1 1 1 -1 1 -1 1 1 -1 -1 1 1 1 1 -1 1 -1 -1 1 -1 -1 -1 -1 1 1 -1 1 0 -1 1 -1 1 -1 1 1 1 1 -1 1 -1 1 0 1 0 0 1 1 1 -1 0 1 -1 1 1] <br> or <br> [0 -1 -1 -1 1 1 -1 -1 -1 1 -1 -1 1 0 -1 -1 -1 1 1 1 -1 0 1 1 1 1 1 1 1 -1 - 1 0 -1 -1 -1 -1 1 1 -1 1 1 1 0 1 -1 -1 1 0 -1 1 1 1 1 1 -1 1 1 -1 1 1 -1 1 1 -1 1 1 - 1 1 1 1 -1 1 1 1 -1 1 1 1 -1 0 1 -1 -1 -1 -1 1 1 1 1 1 -1 -1 1 1 1 -1 1 1 1 1 - 1 1 1 -1 -1 -1 1 1 1 1 1 -1 -1 1 1 1 0 1 -1 1 -1 1 1 -1 1 1 1 1 1 1 -1 0 1 0 0 1 1 1 -1 0 1 -1 1 -1 1 1 1 1 -1 1 1 -1 1 -1 1 -1 -1 1] |
| | 3 | [1 -1 1 1 1 -1 1 1 1 -1 1 1 1 -1 1 1 -1 1 1 -1 1 1 1 1 1 -1 1 1 1 1 -1 1 1 1 1 1 -1 1 1 1 1 -1 1 -1 -1 1 -1 1 1 1 -1 1 -1 1 0 1 1 1 0 1 1 -1 1 -1 1 1 1 1 1 -1 1 -1 1 1 1 1 1 -1 1 -1 -1 1 0 1 0 0 1 -1 1 1 1 1 1 -1 1 1 0 -1 1 1 -1 1 -1 1 1 1 1 -1 1 -1 -1 -1 1 1 0 -1 1 -1 1 1 1 0 1 1 -1 1 -1 0 1 -1 1 1 1 -1 1 -1 -1 1 1 1 -1 1 1 1 -1 1 1 1 -1 1 -1 1 -1 -1 -1 -1 -1 1 1 -1 1 1 - 1 1 1 -1 0 -1 -1 -1 1 1 1 1 1 0 1 1 1 1 -1 -1 0 1] <br> or <br> [0 -1 1 -1 -1 -1 1 1 1 1 1 1 1 0 1 1 -1 -1 -1 0 -1 1 1 -1 0 1 1 -1 1 - 1 1 1 -1 -1 -1 1 1 1 -1 -1 -1 1 1 1 1 1 0 1 -1 1 1 - 1 1 1 1 1 0 1 -1 1 1 -1 1 0 1 1 -1 1 -1 -1 1 -1 1 -1 -1 -1 1 1 1 -1 1 -1 -1 1 -1 -1 1 1 -1 1 -1 -1 -1 1 1 1 1 -1 1 1 1 -1 1 1 1 -1 1 -1 1 -1 1 1 1 1 1 1 -1 -1 1 1 1 1 0 1 0 0 1 -1 1 1 1 -1 1 1 -1 1] |
| | 4 | [0 1 1 1 1 1 -1 1 1 -1 1 1 1 -1 1 -1 1 1 1 1 1 1 1 -1 1 1 -1 -1 -1 -1 -1 1 1 1 1 -1 1 1 1 1 -1 1 -1 1 1 1 1 1 1 -1 1 -1 1 1 -1 0 1 -1 1 1 1 -1 1 -1 0 -1 -1 -1 1 1 -1 0 1 -1 1 1 -1 1 1 1 1 -1 1 -1 0 1 -1 1 1 -1 0 -1 -1 -1 1 1 1 1 -1 1 -1 -1 1 1 1 1 -1 1 -1 -1 1 1 -1 1 1 1 -1 1 1 -1 1 1 0 0 1 0 1 1 1 -1 1 -1 1 -1 1 0 -1 -1 -1 1 1 -1 1 -1 0 1 -1 1 1 1 -1 1 1 -1 1 1 1 1 1 -1 1 -1 0 1 -1 1 1] <br> or <br> [1 1 1 0 -1 1 1 -1 -1 1 0 1 1 -1 1 1 -1 1 -1 -1 -1 1 0 -1 1 1 -1 1 0 -1 1 1 1 1 1 1 -1 1 -1 1 1 1 1 -1 1 -1 1 -1 1 1 -1 -1 1 1 -1 -1 1 1 -1 0 0 1 0 -1 1 1 1 1 - 1 1 -1 1 -1 0 -1 1 -1 1 1 1 1 1 0 1 -1 1 1 -1 1 1 1 -1 1 -1 -1 1 -1 1 0 1 1 -1 0 -1 1 1 1 1 -1 1 1 -1 1 1 -1 1 1 -1 1 1 1 1 1 1 1 1 -1 -1 1 1 1 1 1 -1 1 1 1 1 1 -1 1 1 -1 1 1 1 -1 1 -1 1 1 1 -1 -1 1 1 1 -1 1 0 -1 1 -1 1 1] |

(continued)

| Sequence group index | Sequence index | Sequence |
|---|---|---|
| | 5 | [0 0 1 1 1 -1 1 -1 0 -1 -1 -1 -1 1 0 1 1 -1 -1 1 1 1 -1 -1 1 1 -1 1 1 1 1 1 0-1 1 -1 1 -1 -1 -1 -1 1 -1 1 -1 -1 1 1 -1 0 1 0 -1 1 -1 -1 1 1 -1 -1 1 0 -1 -1 1 1 1 -1 -1 -1 1 1 1 0 1 -1 1 -1 1 1 -1 -1 -1 -1 1 1 1 1 1 -1 1 1 1 1 1 1 1 1 -1 -1 1 1 1 -1 -1 1 1 -1 -1 -1 1 1 1 1 1 0 -1 -1 0 -1 1 1 -1 1 1 -1 1 1 1 1 -1 1 -1 -1 1 1 1 -1 1 1 -1 0 -1 1 1] <br> or <br> [1 0 -1 -1 0 -1 -1 -1 -1 -1 -1 -1 1 1 1 1 1 1 1 -1 1 -1 -1 1 1 0 -1 1 1 - 1 0 0 1 1 1 1 -1 1 0 1 1 1 -1 1 1 0 1 1 -1 -1 1 1 -1 1 1 1 1 -1 1 -1 1 1 -1 0 1 1 1 -1 1 -1 1 1 -1 -1 1 1 -1 1 -1 0 1 0 1 -1 -1 1 1 -1 1 -1 1 1 0 1 -1 -1 1 1 1 -1 -1 -1 1 1 0 1 1 -1 -1 1 1 -1 -1 1 -1 1 1 1 -1 -1 1 1 1 -1 -1 -1 1 1 1 1 1 1 -1 -1 1 1 1 1 1 1 -1 -1 1 1 -1 -1 -1 1 1] |
| | 6 | [ 1 0 1 1 1 1 1 -1 -1 -1 -1 1 1 -1 -1 1 1 -1 1 1 1 -1 -1 1 1 1 1 1 -1 -1 1 0 1 -1 0 -1 1 -1 1 1 1 -1 1 1 1 -1 1 -1 1 0 1 0 1 1 -1 0 -1 1 1 1 1 -1 -1 -1 1 1 -1 - 1 1 1 1 1 1 -1 1 1 1 -1 -1 -1 1 0 -1 1 1 -1 1 1 1 0 -1 -1 -1 1 1 0 -1 1 1 1 -1 1 -1 1 1 -1 1 0 -1 -1 -1 1 1 1 -1 -1 0 0 -1 1 1 1 1 -1 1 -1 1 1 -1 -1 -1 -1 1 1 -1 1 1 -1 1 -1 1 -1 1 1 1 1 1 -1 1 1 1 -1 1 1 1 1 1 1 1] <br> or <br> [0 -1 1 -1 -1 -1 -1 0 -1 -1 -1 -1 0 1 1 -1 -1 1 1 -1 -1 1 1 1 0 -1 1 1 1 1 -1 1 0 0 1 -1 -1 1 1 -1 1 1 1 1 1 1 -1 -1 1 1 1 -1 -1 1 1 1 1 1 1 1 -1 1 -1 1 -1 1 -1 1 1 1 1 -1 1 -1 -1 1 0 1 -1 1 1 -1 1 1 1 -1 1 -1 -1 1 1 -1 1 1 1 -1 1 1 1 1 1 1 -1 1 1 -1 1 1 -1 1 0 -1 -1 0 -1 -1 1 1 -1 1 1 1 1 1 1 1 -1 0 -1 0 -1 1 1 1 0 -1 - 1-1 1 1 1 1-1 1 1-1-1 1 1 1 1 1-1 1-1-1 1-1 1 1] |
| | 7 | [ 1 0 0 1 1 1 0 1 -1 1 -1 1 1 -1 0 -1 1 0 1 1 1 1 1 -1 1 1 1 1 1 -1 1 1 1 -1 1 1 1 -1 -1 0 1 0 1 0 1 1 1 -1 1 1 0 -1 -1 -1 1 1 1 -1 -1 -1 1 1 1 -1 -1 -1 1 1 0 -1 1 1 1 -1 -1 1 1 -1 -1 -1 1 1 1 -1 1 -1 -1 1 -1 -1 1 1 1 1 0 1 -1 -1 1 -1 1 1 1 -1 0 1 1 1 1 -1 -1 1 1 -1 1 1 -1 -1 0 -1 -1 1 1 -1 1 -1 -1 1 1 -1 1 1 1 1 1 -1 1 1 1 1 -1 1 -1 1 1 1 -1 1 1 1 -1 -1 1 1 1 -1 -1 -1 -1 -1 1 1] <br> or <br> [0 -1 1 1 1 -1 1 1 -1 -1 1 1 -1 -1 1 1 1 1 1 1 -1 -1 -1 1 1 1 1 1 -1 1 1 1 -1 1 1 -1 1 1 -1 1 1 1 1 0 0 1 -1 1 0 1 1 -1 1 1 1 -1 0 -1 1 1 0 -1 1 1 1 -1 1 1 1 1 1 -1 1 1 -1 1 1 1 0 1 0 -1 1 1 1 1 -1 0 -1 -1 -1 -1 -1 1 1 -1 1 1 -1 1 1 1 -1 -1 1 1 -1 0 1 1 1 -1 1 1 1 1 -1 1 1 1 -1 -1 -1 -1 1 1 1 -1 -1 1 0 1 1 1 -1 1 -1 -1 -1 1 0 -1 1 -1 -1 -1 -1 -1 -1 1 1 -1 1 1] |
| | 8 | [1 1 1 1 -1 1 1 -1 1 -1 1 0-1 -1 1 -1 -1 1 1-1 -1 1 1-1 0 1-1 -1 1 1 1 1 1 -1 -1 1 1 -1 -1 1 -1 1 1 1 1 -1 1 1 1 1 0 1 -1 -1 -1 -1 -1 1 0 1 1 1 -1 -1 1 0 -1 - 1 0 1 0 -1 -1 1 1 1 1 1 -1 1 1 1 -1 1 1 1 -1 -1 -1 1 1 0-1 1 -1 0-1 1 -1 1 1 1 -1 1 0 1 -1 -1 1 1 1 1 -1 1 -1 -1 1 1 -1 1 1 -1 1 1 -1 1 1 1 1 -1 -1 -1 1 1 1 1 1-1 1 1 1 1 1-1 1 1 1 1 1 1-1 1 1-1 1-1 0 0 1-1 1] <br> or <br> [0 -1 -1 -1 -1 1 -1 1 1 1 1 1 1 1 1 -1 1 1 -1 1 1 1 -1 -1 -1 1 1 1 -1 1 -1 1 1 1 1 1 -1 1 1 1 -1 -1 -1 -1 -1 1 1 1 0 0 1 -1 -1 1 1 1 -1 -1 -1 1 1 -1 1 1 -1 -1 0 -1 -1 -1 -1 1 1 -1 -1 -1 1 1 0 0 1 1 -1 1 1 1 -1 1 1 -1 -1 1 1 1 1 -1 1 -1 -1 -1 1 1 1 1 -1 0 1 -1 -1 1 1 1 0 1 -1 1 1 -1 -1 0 1 -1 0 -1 0 -1 0 1 1 -1 1 -1 1 -1 1 1 1 1 -1 1 1 1 1 1 -1 1 0 1 -1 1 1 0 -1 -1 1 1 1 1 1] |
| | 9 | [0 -1 -1 1 1 1 1 -1 1 1 -1 1 1 0 -1 1 1 -1 -1 -1 0 -1 -1 1 1 1 -1 1 0 -1 1 -1 -1 1 1 1 1 1 1 -1 1 1 1 1 -1 1 1 1 1 -1 -1 -1 -1 -1 1 1 -1 1 1 1 1 1 1 1 -1 -1 1 1 1 -1 1 -1 -1 1 1 1 1 1 1 0 1 -1 1 0 -1 -1 1 1 1 1 1 -1 1 -1 1 1 1 -1 1 1 0 -1 - 1 1 -1 -1 -1 -1 1 0 -1 1 -1 1 1 -1 1 -1 1 1 1 1 0 1 0 0 1 -1 1 1 -1 1 1 1 -1 1 -1 1 1 1 1 -1 -1 1 1 1 1 -1 -1 -1 1 0 -1 1 -1 1 1] <br> or <br> [1 -1 1-1 1 1 1 1 -1 1 1 1 1-1 -1 1 1 1 1 1 1 1 1 -1 1 -1 -1 1 1-1 -1 1 1 -1 1 1 1 1 -1 1 0 -1 1 1 1 0 -1 1 1 -1 -1 1 1 -1 1 1 1 1 -1 1 1 -1 1 0 1 1 1 1 -1 - 1 -1 1 0 -1 1 1 -1 1 -1 1 1 1 1 -1 0 1 0 0 -1 1 -1 -1 -1 1 1 1 -1 1 -1 -1 1 1 1 1 -1 1 1 -1 1 1 1 1 1 1 -1 0 -1 1 1 -1 -1 1 0 -1 -1 -1 -1 1 1 -1 1 1 1 0 -1 1 1 -1 -1 -1 0 1 1 1 1 -1 -1 1 0 -1 -1 1 1 1 -1 -1 1 1] |

(continued)

| Sequence group index | Sequence index | Sequence |
|---|---|---|
| | 10 | [1 -1 -1 -1 1 1 1 1 -1 1 -1 -1 1 1 -1 -1 -1 1 0 1 1 1 1 1 0 1 1 1 1 1 1 -1 1 -1 1 1 1 1 -1 -1 1 1 -1 -11 -1 -1 0 1 -1 1 -1 1 -1 -1 -1 1 0 -1 1 1 1 -1 1 1 -1 1 -1 -1 0 -1 1 -1 -1 -1 1 1 1 1 1 1 -1 1 -1 -1 -1 1 0 1 0 -1 -1 -1 -1 0 1 1 -1 1 1 1 -1 0 0 1 -1 0 -1 1 1 -1 1 -1 -1 1 -1 1 1 -1 -1 -1 1 1 1 -1 1 1 1 -1 1 1 0 1 1 -1 -1 1] <br> or <br> [0 -1 0 1 1 -1 -1 0 -1 1 -1 1 1 1 1 0 0 1 1 0 -1 1 1 1 -1 1 -1 -1 1 1 1 1 1 -1 -1 1 -1 1 1 1 -1 0 1 -1 -1 -1 -1 1 1 -1 1 -1 1 -1 -1 1 -1 1 1 1 -1 -1 1 1 1 1 -1 -1 -1 1 1 0 1 1 1 -1 1 0 1 -1 1 -1 1 1 1 -1 -1 1 1 -11 -1 -1 -1 -1 -1 1 1 -1 1 0 1 -1 1 -1 1 1 -1 -1 1 -1 0 1 -1 -1 -1 -1 -1 -1 -1 1 1 0 1 1 1 -1 -1 1 1 1 1 -1 1 1 1 -1 1 1 1 1 1 1] |
| | 11 | [0 0 1 -1 1 -1 -1 -1 1 -1 1 1 1 -1 -1 1 1 1 -1 1 1 1 1 1 1 1 1 -1 1 1 1 1 -1 -1 -1 1 1 1 1 -1 1 1 1 -1 1 1 0 -1 1 -1 -1 -1 -1 1 1 1 1 -1 1 1 0 -1 1 1 1 -1 1 1 1 1 -1 1 -1 -1 1 0 1 1 1 -1 -1 0 -1 -1 -1 0 -1 1 1 1 1 1 -1 0 -1 0 1 0 1 1 -1 -1 1 1 -1 -1 1 1 1 1 1 -1 -1 1 1 -1 1 1 -1 1 1 1 1 -1 -1 1 1 1 -1 0 -1 1 1 0 -1 - 1 1 -1 0 -1 -1 -1 -1 1 1 -1 -1 1 1 -11 -1 1 1 1 1] <br> or <br> [1 -1 -1 1 1 -1 -1 1 -1 -1 1 1 -1 1 -1 1 1 1 1 -1 1 1 1 1 1 -1 1 1 -1 1 0 -1 1 1 1 -1 1 1 -1 1 1 -1 1 1 -1 1 -1 -1 -1 1 0 1 1 1 1 1 1 -1 -1 1 1 -1 1 0 1 -1 1 1 -1 1 0 -1 1 1 1 0 -1 -1 1 1 -1 -1 1 1 0 1 0 1 1 1 -1 -1 1 1 1 1 1 1 -1 1 1 1 1 1 -1 1 -1 1 1 -1 -1 1 1 1 0 -1 -1 0 1 -1 -1 -1 1 0 -1 -1 -1 1 1 1 -1 -1 1 1 -1 1 1 1 -1 -1 -1 0 0 1 1 -1 -1 -1 -1 1 1 1 1 1 1 1] |
| | 12 | [1 1 1 1 -1 1 1 1 1 -1 1 1 1 1 -1 1 1 1 1 1-1 -1 -1 1 1 1 1-1 1 -1 1 -1 1 1 -1 -1 -1 1 1 -1 1 1 1 1 -1 1 -1 1 1 0 -1 -1 1 1 1 -1 1 1 -1 0 -1 1 -1 0 1 -1 -1 -1 1 1 1 -1 1 1 1 -1 1 1 1 1 1 -1 1 -1 0 1 0 -1 0 -1 0 -1 -1 1 1 1 1 0 -1 -1 -1 -1 -1 1 1 0 1 1 1 -1 1 1 1 1 -1 -1 1 1 -1 -1 1 1 1 1 1 -1 -1 1 1 0 -1 1 1 -1 -1 1 1 -1 -1 -1 -1 0 -1 1 -1 1 1 1 -1 1 1 1 1 1 1 -1 1 0 0 -1 1 -1 1 1 -1 1 1] <br> or <br> [0 1 -1 -1 -1 1 1 -1 -1 -1 -1 0 -1 -1 1 1 -1 1 1 -1 -1 -1 1 1 1 -1 -1 1 1 0 0 1 1 -1 1 -1 -1 -1 -1 1 1 1 -1 1 1 1 1 1 -1 1 -1 -1 -1 1 1 1 -1 -1 1 1 1 -1 1 1 1 1 1 1 1 1 1 -1 1 -1 -1 -1 -1 1 0 1 1 1 1 -1 -1 -1 0 1 -1 1 0 1 -1 1 1 1 1 -1 1 1 1 1 -1 1 1 -1 1 -1 -1 -1 1 1 1 0 -1 0 -1 1 1 0 -1 -1 1 1 -1 1 0 1 1 1 -1 -1 1 1 0 -1 1 1 1 1 -1 -1 1 1 -1 1 1 1 1 -1 1 1 -1 1 1 -1 1 1] |

In this implementation, in the non-coherent receiving scenario (in other words, the second device is the non-coherent receiving device), the first device may use the first sequence or the first binary sequence corresponding to the first sequence as a sending sequence to generate the first UWB signal, and the second device may use the second binary sequence corresponding to the first sequence as a local reference sequence to generate the local preamble symbol. A cross-correlation between the first binary sequence corresponding to the first sequence and a second binary sequence corresponding to another sequence in the first sequence set is less than the first threshold, so that there is a low cross-correlation between a sending sequence used by a device (namely, a non-target sending device) other than the first device and the local reference sequence of the second device. This can suppress an interference signal corresponding to the non-target sending device, and reduce inter-user interference.

Example 2: The first sequence set meets: The element in any sequence in the first sequence set belongs to {0, 1}, the second sequence and the third sequence are any two different sequences in the first sequence set, and the cross-correlation between the second sequence and the second binary sequence corresponding to the third sequence is less than the second threshold. The second binary sequence corresponding to the third sequence is determined based on the third sequence, and the element in the second binary sequence corresponding to the third sequence belongs to {1, b}, where b is the integer not equal to -1.

In this example, the first sequence set includes at least two binary 121-length sequences, at least two binary 133-length sequences, at least two binary 73-length sequences, or at least two binary 91-length sequences.

It may be understood that, for specific descriptions of the second binary sequence corresponding to the third sequence and b, refer to the foregoing related descriptions. Details are not described one by one herein again.

In this embodiment of this application, in a non-coherent receiving scenario, a plurality of sequences may be generated in a differential set mapping manner, where the plurality of sequences have the perfect periodic autocorrelation characteristic; and the plurality of sequences are filtered and grouped, to obtain a plurality of sequence groups, where the plurality of sequence groups all meet: A cross-correlation between any sequence in a sequence group and a second binary sequence corresponding to another sequence in the sequence group is less than the second threshold.

In a possible implementation, the first sequence set includes the at least two binary 73-length sequences. The first sequence set may include at least two of eight binary sequences shown in Table 6. In other words, the first sequence set may be a sequence group shown in Table 6, or the first sequence set may be included in the sequence group shown in Table 6. Table 6 lists eight binary 73-length sequences. The first device and/or the second device may obtain a corresponding second binary sequence based on any binary sequence in Table 6.

It may be understood that a sequence obtained by performing any cyclic shift on any sequence in Table 6 and the sequence have a same correlation property, and therefore may be understood as a same sequence. In other words, the sequence obtained by performing any cyclic shift on any sequence in Table 6 may be used as the sequence in this embodiment. In other words, the sequence in the first sequence set may be a sequence obtained by performing any cyclic shift on the sequence shown in Table 6. Sequences of a sequence group index and a sequence index are not limited in this embodiment of this application.

Table 6

| Sequence group index | Sequence index | Sequence |
|---|---|---|
| 1 | 1 | [1 0 1 1 1 0 1 0 0 1 1 1 1 1 1 1 1 0 1 1 1 1 1 1 1 0 1 1 1 1 1 1 1 1 1 1 1 1 1 1 1 0 1 1 1 1 0 1 1 1 1 1 1 1 1 1 1 1 1 1 0 1 1 1 1 1 1] |
| | 2 | [1 1 1 1 1 1 0 1 1 0 1 1 1 1 0 1 1 1 1 1 0 1 1 1 0 0 1 1 1 1 1 1 1 1 1 1 1 1 0 1 1 1 1 1 1 1 0 1 0 1 1 1 1 1 1 1 1 1 1 1 1 1 1 1 1 1 1 1] |
| | 3 | [1 1 1 1 1 1 1 1 0 1 1 1 1 1 1 1 1 1 1 1 1 1 1 1 1 1 1 1 1 1 0 1 1 1 0 1 1 1 1 1 0 0 1 1 1 1 1 1 1 0 1 1 1 1 1 1 1 1 1 1 1 0 1 0 1 1 0 1 1 1 1] |
| | 4 | [1 0 1 1 1 1 1 1 1 1 1 1 0 1 1 1 1 1 1 0 0 1 1 1 1 1 0 1 1 1 0 1 1 1 1 1 1 1 1 1 1 1 1 1 1 1 1 1 1 1 0 1 1 1 1 1 1 1 1 1 1 1 0 1 1 0] |
| | 5 | [1 1 1 1 1 1 1 1 1 1 1 1 1 0 1 1 1 0 1 1 1 1 1 1 1 1 1 1 1 1 1 1 0 1 1 1 1 1 1 1 0 1 1 1 1 1 1 1 1 0 0 1 0 1 1 1 0 1 1 1 1 1 1 1 0 1] |
| | 6 | [1 1 1 1 1 1 1 1 1 0 1 0 1 1 0 1 1 1 0 1 1 1 1 1 0 1 1 1 1 1 1 1 0 1 1 1 1 1 1 1 1 1 0 0 1 1 1 1 1 1 1 1 1 1 1 1 1 0 1 1 1 1 1 1 1 1 1 1 1] |
| | 7 | [1 1 1 1 1 1 1 1 1 1 1 1 1 0 1 0 1 1 1 1 1 1 0 1 1 1 1 1 1 1 1 1 1 1 1 1 0 0 1 1 1 0 1 1 1 1 1 0 1 1 1 1 0 1 1 0 1 1 1 1 1 1 1 1 1 1 1 1 1] |
| | 8 | [1 1 1 0 1 1 1 1 1 1 1 1 1 1 1 1 1 0 0 1 1 1 1 1 1 1 1 1 1 0 1 1 1 1 1 1 0 1 1 1 1 1 0 1 1 1 0 1 1 0 1 0 1 1 1 1 1 1 1 1 1 1 1 1 1 1 1 1] |

In another possible implementation, the first sequence set includes the at least two binary 91-length sequences. The first sequence set may include at least two of 12 binary sequences shown in Table 7. In other words, the first sequence set may be a sequence group shown in Table 7, or the first sequence set may be included in the sequence group shown in Table 7. Table 7 lists 12 binary 91-length sequences. The first device and/or the second device may obtain a corresponding second binary sequence based on any binary sequence in Table 7.

It may be understood that a sequence obtained by performing any cyclic shift on any sequence in Table 7 and the sequence have a same correlation property, and therefore may be understood as a same sequence. In other words, the sequence obtained by performing any cyclic shift on any sequence in Table 7 may be used as the sequence in this embodiment. In other words, the sequence in the first sequence set may be a sequence obtained by performing any cyclic shift on the sequence shown in Table 7. Sequences of a sequence group index and a sequence index are not limited in this embodiment of this application.

Optionally, the 12 sequences in Table 7 may alternatively be divided into a plurality of sequence groups, for example, two sequence groups. Each sequence group includes six sequences, and each sequence included in one of the sequence groups is different from that in the other.

Table 7

| Sequence group index | Sequence index | Sequence |
|---|---|---|
| 1 | 1 | [0 1 1 1 1 0 1 0 1 1 1 1 1 1 0 1 1 1 1 0 1 1 1 1 1 1 1 1 1 0 1 1 1 1 1 1 1 0 1 1 0 0 1 1 1 1 1 1 1 1 1 1 1 1 1 1 0 1 1 1 1 1 1 1 1 1 1 1 1 1 1 1 1 1 1 1 1 1 1] |
| | 2 | [0 1 1 1 1 1 1 1 1 1 1 1 1 1 1 1 1 0 1 1 1 1 1 1 1 0 1 1 1 1 1 1 1 0 1 1 1 1 1 1 1 1 1 1 1 1 1 1 1 1 1 1 0 1 1 1 1 1 1 1 1 0 1 1 0 1 1 1 1 1 1 1 1 0 0 1 1 1 0 1] |
| | 3 | [0 1 1 1 1 1 1 1 0 1 1 1 1 1 1 1 1 1 1 1 1 0 1 1 1 1 1 1 1 1 1 1 1 1 1 1 0 1 1 1 1 0 1 1 1 1 1 1 1 1 1 1 1 1 1 1 1 1 1 1 0 0 1 1 1 0 1 1 0 1 1 1 1 1 1 1 1 0 1] |
| | 4 | [1 1 0 1 0 0 1 1 1 1 1 1 1 1 0 1 1 1 0 1 1 1 1 1 1 1 1 1 1 1 1 1 1 0 1 1 1 1 0 1 1 1 1 1 1 0 1 1 1 1 1 1 1 1 1 1 1 1 1 1 1 1 1 0 1 1 1 1 1 1 1 1 1 1 1 1 1 1 1 1 0 1 1 1] |
| | 5 | [0 1 1 1 1 1 0 1 1 1 1 0 1 1 1 1 1 1 1 1 1 1 1 1 1 1 0 1 1 1 0 1 1 1 1 1 1 1 0 0 1 0 1 1 1 1 0 1 1 1 1 1 1 1 1 1 1 1 1 1 1 1 0 1 1 1 1 1 1 1 1 1 1 1 1 1 1 1 1 1 1 1] |
| | 6 | [1 1 1 1 1 1 1 1 1 1 1 1 1 1 1 1 1 1 0 1 1 1 0 1 1 1 1 1 1 0 1 0 1 1 0 1 1 1 1 1 1 1 1 1 1 1 1 1 1 1 1 1 0 0 1 1 1 1 0 1 1 1 1 1 1 1 0 1 1 1 1 1 1 1 1 0 1 1 1 1 1 1 1] |
| | 7 | [0 1 1 1 1 1 1 1 1 1 1 1 0 1 1 0 1 1 1 1 1 1 0 1 1 1 1 1 1 0 1 1 1 1 1 1 1 1 1 0 1 0 1 1 1 1 1 1 1 1 1 1 1 1 1 1 1 1 1 1 1 1 1 1 1 1 1 1 0 0 1 1 1 1 0 1 1 1] |
| | 8 | [1 1 1 1 0 1 1 1 1 0 1 1 1 1 1 1 0 1 0 1 1 1 0 1 1 1 1 1 1 1 1 1 1 1 1 1 1 1 1 1 1 1 0 1 1 1 1 1 1 1 1 1 1 1 1 0 0 1 1 0 1 1 1 1 1 1 1 0 1 1 1 1 1] |
| | 9 | [1 1 1 1 1 1 1 0 1 1 0 1 1 1 1 1 1 1 0 1 1 1 1 1 1 1 1 1 1 1 1 1 1 1 1 1 1 0 1 1 1 1 1 1 1 0 1 1 1 1 1 1 0 1 1 1 1 1 1 1 1 1 1 1 1 1 1 1 0 1 0 1 1 1 0 0 1 1] |
| | 10 | [1 1 1 1 1 1 1 1 0 1 1 1 1 1 1 1 0 1 1 1 1 0 0 1 1 1 1 1 1 1 1 1 1 1 1 1 1 0 1 1 0 1 0 1 1 1 1 1 1 0 1 1 1 0 1 1 1 1 1 1 1 1 1 1 1 1 1 1 1 1 1 1 1 1 1 1 0 1] |
| | 11 | [1 1 1 1 0 1 1 1 1 1 1 0 1 1 0 1 1 1 1 1 1 1 1 1 1 1 0 1 1 1 0 1 1 1 1 0 0 1 1 1 1 1 1 1 1 1 1 1 1 1 1 1 1 1 1 1 1 1 1 1 1 0 1 0 1 1 1 1 1 1 1 1 1 1 0 1 1] |
| | 12 | [0 1 1 1 1 0 1 1 1 1 1 1 1 1 1 1 1 1 1 1 0 1 1 1 1 1 1 1 1 1 1 1 1 1 0 1 1 1 1 1 1 1 0 1 0 1 1 1 1 1 1 1 1 0 1 1 0 1 1 1 0 0 1 1 1 1 1 1 1 1 1 1 1 1 1 1 1 1 1 1 1 1 1] |

In still another possible implementation, the first sequence set includes the at least two binary 121-length sequences. The first sequence set may include at least two sequences in any one of three sequence groups shown in Table 8. In other words, the first sequence set may be any sequence group shown in Table 8, or the first sequence set may be included in any sequence group shown in Table 8. Table 8 lists three groups of binary 121-length sequences. The first device and/or the second device may obtain a corresponding second binary sequence based on any binary sequence in Table 8.

It may be understood that a sequence obtained by performing any cyclic shift on any sequence in Table 8 and the sequence have a same correlation property, and therefore may be understood as a same sequence. In other words, the sequence obtained by performing any cyclic shift on any sequence in Table 8 may be used as the sequence in this embodiment. In other words, the sequence in the first sequence set may be a sequence obtained by performing any cyclic shift on the sequence shown in Table 8. Sequences of a sequence group index and a sequence index are not limited in this embodiment of this application.

Table 8

| Sequence group index | Sequence index | Sequence |
|---|---|---|
| 1 | 1 | [0 1 1 0 1 1 0 1 1 1 0 1 1 0 0 1 0 1 1 1 1 0 0 0 1 0 0 1 1 1 0 1 1 1 1 0 0 011101111111110010100011110110101111 11001111101011111111101111011001010 1 1 1 0 1 0 1 0] |
| | 2 | [1 0 0 0 1 1 1 0 1 1 1 1 1 0 1 1 0 1 0 1 0 1 0 1 1 0 1 0 0 0 1 1 1 1 1 0 1 1111011110010100100011111000011011011 10111111110101111011011111111001101101 11111001] |
| | 3 | [1 1 0 1 1 0 1 1 0 0 1 0 1 1 0 1 1 1 1 1 1 1 1 1 1 1 0 1 0 1 0 1 1 0 1 0 1 1 11101110011001011101110111101111110001 11111011110100011101100000011110011101 1 1 1 0 1 0 1 0] |
| | 4 | [1 1 1 1 1 1 1 0 0 0 0 0 1 1 0 1 1 0 1 0 1 1 0 1 1 0 1 1 1 1 0 1 1 1 1 1 1 011111101101110111111001100101100001 11111110011111010111010101101010111001 1 0 0 0 1 1 1 0] |
| | 5 | [1 0 1 0 1 1 1 0 1 1 1 1 0 0 0 1 1 1 1 1 1 1 1 1 1 1 1 1 0 1 1 1 1 0 1 1 0001001010111001011100011110010101111 100110111010011011111110100110101101 11 11111001] |
| | 6 | [0 1 1 1 0 0 1 1 1 0 1 1 0 0 1 1 1 1 1 0 1 1 1 0 1 0 0 1 0 0 0 1 0 1 1 1 1 011100011110010111110000110111110111 11 11111110101111110110101001101010110111 1 1 1 1 0 1 1 0] |
| | 7 | [1 1 1 0 1 1 1 0 1 0 1 1 1 0 1 0 0 1 0 1 1 0 1 1 1 1 1 0 0 0 1 1 0 1 1 0 1 1 0 0 0 1 0 1 1 1 0 0 1 1 1 1 1 1 1 1 1 1 1 1 0 1 1 1 1 1 0 1 1 0 1 1 1 010111111000011011111111011000110010101 0 1 1 1 1 0 0 0] |
| | 8 | [1 1 1 1 0 0 0 1 1 0 1 0 0 1 1 1 1 1 1 1 0 0 1 1 1 1 1 1 1 0 1 0 0 1 0 1 0 110110011110001010001101011111010110110 11111111001101010111111111101110111101 1 1 0 0 0 1 1 0] |
| | 9 | [0 1 1 1 0 1 0 0 1 1 1 0 1 1 1 1 1 0 1 0 1 1 1 1 1 0 1 1 0 1 1 1 1 1 1 0 0 101011111111011111110001100101011111 010011101011110011101101101011111000 0 1 0 0 0 1 1 0] |
| | 10 | [0 1 0 1 0 1 0 1 1 0 1 1 0 0 1 1 1 1 1 0 0 1 0 0 0 1 1 1 0 1 1 1 1 1 1 1 1 1011111111110110100011010111100111101 11110011011100111111100110101101001011 11110001] |
| | 11 | [0 0 1 0 1 1 1 0 1 1 0 1 1 0 1 0 1 1 1 1 1 1 1 1 1 1 0 0 1 1 1 1 1 0 0 1 001111011111011110101000111101001010 11 01100110000110111111001101110111111 1 0 1 0 1 1 1 0] |
| | 12 | [0 0 1 0 1 1 1 0 0 0 1 1 0 0 1 1 0 1 1 1 1 1 0 1 1 1 1 0 1 0 1 1 1 1 0 1 0 0100111101100100011110101111110010111 01110111111011111110101100111101111111 11000101] |
| | 13 | [1 0 0 0 1 0 1 1 1 0 1 1 0 1 1 1 1 0 1 0 1 0 0 1 0 1 1 1 0 0 1 0 0 1 1 1 1 1 0 1 0 0 1 0 1 0 1 1 0 1 1 1 1 1 1 1 0 1 1 1 0 0 0 1 1 1 1 0 0 1 0 0 1 1 0 0 0 1 1 1 0 1 1 1 1 0 1 1 1 1 1 1 0 1 1 1 0 1 1 1 1 0 1 1 1 1 1 0 0 1 1 1 1 1 1 1 1 0 1 0] |
| | 14 | [0 1 1 1 1 1 1 0 1 1 0 0 1 1 1 0 1 0 0 1 1 1 0 1 1 1 1 0 0 0 0 0 1 1 1 1 1 110111010110111100110011010010010000111 110111111100111101011101111110111110 10110101] |
| | 15 | [0 1 1 1 1 1 0 1 0 1 0 1 1 1 1 1 1 1 0 1 1 1 1 0 1 1 1 1 1 1 1 1 0 1 1 0 1 011111110000111000110100101110111111111 001000101100111101110011011011110110 1 1 1 0 1 0 1 0] |
| | 16 | [0 1 0 1 1 0 0 0 1 1 1 0 0 0 0 1 1 1 1 1 1 1 0 1 0 1 0 1 1 0 1 1 1 1 1 1 1 0 111101111111101010111100101011100110 11 110110110011101111001101000100111111 1 1 0 1 1 1 0 1 0] |

(continued)

| Sequence group index | Sequence index | Sequence |
|---|---|---|
| | 17 | [0 1 1 1 0 0 1 1 1 1 0 1 1 1 1 1 1 1 1 1 1 0 0 0 1 0 1 0 1 1 1 0 1 0 1 0110100001111010011001001111101111110 1110001101111011101101111101101011111 1 0 0 1 0 1 1 0] |
| | 18 | [1 1 0 1 1 0 0 1 1 1 1 1 1 0 1 0 1 0 0 1 1 1 1 0 0 0 1 1 1 0 1 0 0 1 1 0 101001000110111011111111111111110001111 0 1 1 1 0 1 0 1 1 0 0 1 1 1 1 1 1 1 1 0 1 1 0 1 0 1 1 0 0 1 0 1 1 1 1 1 1 1 01100101] |
| | 19 | [1 1 1 1 1 1 1 0 0 1 1 1 1 1 0 1 1 1 1 0 0 1 0 1 1 0 1 1 1 0 0 0 1 0 1 0 1 010110011100001111110011011111111111100 1 0 0 1 0 1 1 0 1 1 1 1 1 1 1 1 1 1 1 0 0 1 1 0 1 1 1 0 1 1 0 1 0 1 0 1 1 0 1 0 1 1 1 0 0] |
| | 20 | [1 1 1 1 1 1 1 0 1 1 0 1 1 1 1 0 0 1 1 1 0 1 1 1 0 1 1 1 0 1 1 1 1 1 0 0 1 1000101111101111001111111111011110101 1010011011001011101010110101111000000 1 0 1 1 1 1 0 0] |
| | 21 | [0 1 1 1 1 0 1 1 0 1 0 0 1 0 1 1 1 1 0 1 0 1 1 1 0 1 1 1 0 0 1 1 1 1 0 1 010100110001101111111101100001111110101 0 1 1 1 0 1 1 0 1 1 1 1 1 0 1 1 1 1 1 1 1 1 1 1 1 1 1 1 0 0 1 1 1 0 1 0 0 0 0 1 1 0 1 1 0 1 1 0 0] |
| | 22 | [0 1 1 1 1 0 1 1 0 0 0 1 0 0 0 1 1 1 1 0 1 1 1 0 1 1 1 1 0 1 0 0 1 0 1 1 0 11111111111101011111110100110101110 01 0110011111011111110101011101100011011 0 0 1 1 1 1 0 0] |
| | 23 | [0 0 1 0 1 1 1 1 0 1 0 1 1 0 1 1 0 0 0 1 1 0 1 1 1 0 1 1 1 1 1 1 1 1 1 0 01110111111110100111100111101111100101 11111001000011101001101101111111011101 01010110] |
| | 24 | [0111110010000110101001100111101011 00 010111111111101001110011111010101111 0 1 1 1 1 1 1 1 0 0 1 1 0 1 1 0 0 1 1 0 1 0 1 1 1 0 1 1 1 1 1 0 1 1 0 1 1 11111001] |
| 2 | 1 | [0 1 0 0 1 0 1 1 1 1 1 1 1 1 1 1 0 0 0 1 1 1 1 0 1 0 1 0 1 0 1 1 1 1 1 0 1 0 1 1 1 1 0 0 1 1 0 1 1 0 1 1 0 0 1 1 1 0 0 0 1 1 1 0 1 1 0 1 1 1 0 1 0 0 0 0 1 0 1 1 1 0 0 1 1 0 0 1 1 1 1 1 1 1 1 0 1 1 1 1 1 1 1 0 1 1 0 1 1 1 1 0 1 1 1 0 1 0] |
| | 2 | [0 1 1 1 0 1 1 1 0 1 1 1 0 0 1 1 1 1 0 1 1 0 1 1 1 1 1 1 0 0 1 1 1 1 0 1 000000111110101101010111010011011001 01 1010111101111111111001111011111101000 1 1 0 0 1 1 1 1 1] |
| | 3 | [1011110111110110011000111010010100011 11111110111100110101111111011111101110 11101001111110101111100010011011110010 0 1 0 1 1 1 0] |
| | 4 | [1 1 1 0 1 1 1 0 0 0 1 1 0 0 1 0 0 1 1 1 1 0 0 0 1 1 1 0 1 1 1 1 1 1 0 1 101001011111001001110100101011111011 01 11010001010111111110011111101111011 10 11111101] |
| | 5 | [0 0 1 0 1 0 1 1 1 1 0 1 1 1 1 1 0 1 1 1 1 0 0 1 0 0 1 1 1 1 1 0 0 1 1 1 1 1111110101101101110100011101011111111 0111011100111111101100001100110110101 0 0 1 0 1 1 1 0] |
| | 6 | [0 1 1 1 1 0 0 1 0 1 1 1 1 1 1 1 1 1 0 1 1 1 0 0 1 1 1 1 1 1 1 1 1 1 1 0 1 1 10110001101101011101000110101010111 01 111111011101101011100001001111110100111 1 0 1 1 1 1 0] |
| | 7 | [0 0 0 1 0 1 0 0 1 1 1 0 1 0 1 1 1 1 1 0 1 0 0 1 1 1 1 1 1 1 0 1 0 1 0 1 1 11001011110110110011101111101100111011 1 1 1 1 1 0 0 1 1 0 1 1 1 1 1 1 0 1 1 1 1 0 0 0 1 1 1 1 0 1 1 1 0 1 1 1 1 1 0 1 1 0 1 0 0 0] |
| | 8 | [1 1 1 1 1 1 1 0 1 1 1 1 1 1 1 0 1 0 1 1 1 0 1 0 0 1 1 1 1 1 0 1 1 0 1 0 1 011100001111011011111111101010011100 11 000101100111001111110100100110111111 10 10011101] |

(continued)

| Sequence group index | Sequence index | Sequence |
|---|---|---|
| | 9 | [1 1 1 0 0 1 1 1 1 0 0 1 1 1 0 0 0 1 1 0 1 1 1 1 0 1 1 1 1 1 1 0 1 1 1 1 1 0 1 0 1 0 1 1 1 1 0 1 0 0 1 0 0 1 1 0 0 1 0 1 1 1 0 1 1 0 0 1 1 0 1 0 1 0 0 1111110100000111101110111111101111101010 1 1 0 1 1 1 1] |
| | 10 | [0 1 1 0 1 0 1 0 0 0 1 1 1 1 1 1 0 1 1 1 0 1 0 1 1 1 1 0 0 1 0 1 1 0 1 1110111111111011111110011001001110111 1 0 0 0 0 1 0 1 1 1 0 1 1 0 1 1 1 1 1 1 0 1 1 0 0 0 1 1 1 0 0 1 1 1 1 1 0 1 0 1 0 1 1 0 1 0] |
| | 11 | [1 1 1 0 1 1 0 1 0 0 1 1 1 1 0 1 1 1 1 1 0 0 1 1 1 1 1 1 1 0 0 1 1 1 0 1 0 110101011011101100111111111111101101001 0 0 1 1 1 1 1 1 1 1 1 1 0 1 1 0 0 1 1 1 1 1 1 0 0 0 0 1 1 1 0 0 1 1 0 1 6 0 1 0 1 0 1 0 0 0] |
| | 12 | [1 1 1 1 0 1 0 0 1 1 0 1 1 1 1 1 1 0 0 0 0 1 0 1 1 0 0 1 0 1 1 1 0 1 0 1 1100111001001111000110111111011110111 0 1 1 1 1 1 1 0 1 1 0 1 1 1 1 1 1 1 0 1 1 1 0 0 1 0 1 0 1 0 1 0 0 1 0 1 1 1 1 1 1 0 1 1 1] |
| | 13 | [1110011100101011000010011111010011111 11011011111101110101100110110011111110 1111101010111100111001011111111111010 00110101] |
| | 14 | [1 1 1 1 0 0 1 0 1 1 1 0 1 0 1 1 1 1 1 1 1 0 1 1 1 1 1 1 1 1 0 1 1 1 0 0 1 01111111011001001011111100111001101000 110011100101011111111011011110000111 0 1 0 1 0 1 1 0 1] |
| | 15 | [0 1 1 1 1 1 0 0 1 1 1 0 1 0 0 1 1 1 1 0 1 1 0 1 1 0 1 0 1 1 0 0 0 1 1 1 10111001111101101111111111101011111110 100111010100010101111111101100100001111 0 0 1 0 0 1 1 1] |
| | 16 | [0 0 1 1 1 0 0 1 1 0 1 1 0 1 1 0 0 1 1 1 1 0 1 0 1 1 1 1 0 1 0 1 0 1 0 1 111000111111111101001001011110111011 01111111011111111001100111010000101111 0 1 1 0 1 1 1 0] |
| | 17 | [1 1 1 0 1 1 0 1 1 0 1 0 1 1 0 1 1 0 0 0 0 0 1 1 1 1 1 1 1 0 1 1 1 0 0 0 1 10011101010110101011101011111001111111 100001101001100111111110111011011111110 11111101] |
| | 18 | [0 1 1 1 1 1 1 0 1 1 1 1 1 1 1 1 1 0 1 1 1 1 0 1 1 0 1 0 0 1 1 1 1 1 0 10111011111110001010110010110101011111 001110001101111110110111010000111101111 0 0 1 0 0 1 1 0] |
| | 19 | [1 1 1 1 1 1 1 1 0 1 1 0 1 1 0 1 1 1 1 1 0 1 0 1 1 0 0 0 1 0 1 0 0 0 1 1 1 110011011010100101111111001111111100101 100011110110001110111011101111111111110 1 0 1 0 1 1 0 0] |
| | 20 | [0 1 1 1 1 1 1 1 1 1 1 0 1 0 1 0 1 1 1 1 1 1 0 0 1 0 1 0 1 1 1 1 0 0 1 1 1 1 01110101101111011011100111010001011111 111110110101001001100011110000110111111 0 1 1 1 0 1 1 0] |
| | 21 | [1 1 1 1 1 1 0 0 1 0 1 1 1 1 1 0 1 0 1 0 1 1 1 0 0 1 0 1 0 1 0 0 0 0 0 0 1 0 1 1 0 11111011101111000111101111110110011111 1 1 0 1 1 1 0 0 1 1 0 1 1 1 1 1 0 1 1 1 0 0 1 1 0 1 1 0 1 1 1 1 0 1 0 0 1 1 11010101] |
| | 22 | [0 0 1 0 1 1 0 1 0 1 0 1 0 1 1 0 1 1 1 1 1 0 1 1 1 0 0 0 1 1 0 0 1 1 1 1 1 10110110011111110110111101011111111101 110111011000011110001001010011110111110 1 0 1 1 1 1 1 0] |
| | 23 | [0 1 0 1 1 0 1 1 0 1 1 1 1 0 0 1 0 1 1 1 0 0 1 1 1 1 1 1 0 1 1 1 0 0 1 0 0 1111000100110111111110101000101011100 1 0 1 1 1 1 1 1 0 1 0 1 0 1 1 1 1 1 1 1 1 1 1 1 1 0 1 1 0 1 1 1 1 1 1 0 0 1 1 1 0 1 1 11100011] |

(continued)

| Sequence group index | Sequence index | Sequence |
|---|---|---|
| 3 | 1 | [0 1 1 0 0 1 1 0 0 1 0 1 1 1 0 1 0 0 1 0 1 1 0 1 0 1 0 1 1 0 1 1 1 1 1 0 0010001111001111111110011110110111100 0 0 1 1 1 1 1 0 1 1 1 0 1 0 1 0 1 1 1 0 1 1 1 1 0 1 1 1 0 1 1 1 1 1 1 1 1 1 0 1 1 0 1 0] |
| | 2 | [111110111011001110010101011110001011 11101111110000011010111001101111001011 0 1 0 1 1 1 1 1 1 1 1 1 1 1 1 1 1 0 1 1 1 1 0 1 1 0 1 1 0 0 1 0 1 1 0 1 1 1 0 1 1 0 0 0] |
| | 3 | [1 0 1 1 1 1 1 0 0 1 0 1 0 1 1 0 0 1 1 0 1 1 1 0 1 0 0 1 1 0 0 1 0 0 1 0 11111010111110111111011110110001110011 1 1 0 0 1 1 1 1 1 1 0 1 1 0 1 0 1 0 1 1 1 1 0 1 1 1 1 1 1 0 1 1 1 0 1 1 1 1 0 0 0 0 0] |
| | 4 | [0 1 1 1 0 0 0 1 0 1 1 1 1 0 1 0 0 1 1 1 1 1 1 1 1 1 1 1 1 1 0 1 0 1 1 0 11011101111011101011001111011101010010010011001101110111001011011111000111111 1 1 1 1 0 0 0] |
| | 5 | [0 0 1 1 1 1 1 1 0 1 1 1 1 1 1 1 1 0 1 0 1 0 0 1 1 1 1 1 1 0 1 1 0 1 1 11101011111011100101110011000100001111 1011011011011100111110101110010111111001 0 1 0 0 1 1 0] |
| | 6 | [1 1 0 0 1 1 1 1 1 0 1 1 1 1 0 0 1 1 1 1 1 0 1 0 1 1 0 0 0 1 0 1 1 0 1 1 1 111111101111111110111000100111110011011 010101010001111101000101101101100111111 1 1 0 0 1 1 1 0] |
| | 7 | [00011111010011110001110111101000100101110111100110111001110011011111110110 101011001010110111111010111111111111011 1 1 1 0 1 1 0] |
| | 8 | [0 1 1 1 0 0 1 0 0 1 0 1 1 1 0 1 1 0 0 1 1 1 1 1 1 0 1 1 1 0 1 0 0 1 1 1100110101010111110111111100011110101 100111111111110110110101011111011000 0 1 1 0 0 0 1 1] |
| | 9 | [1 1 1 1 1 0 1 1 1 1 1 0 0 0 1 0 0 1 0 0 1 0 1 1 0 0 1 1 0 0 1 1 1 1 0 1 1 01011011111110000011110111001011100110111111010101101011110111111101110101 1 1 1 0 0 1 1 1] |
| | 10 | [0 1 1 1 1 1 1 1 1 1 0 0 1 1 1 1 0 0 0 1 0 0 0 1 1 1 1 1 1 0 1 1 0 1 0 1 01101001011101001100110010110111111111 10111011110111010101110111111000011110 1 1 0 1 1 1 1 0] |
| | 11 | [11110101101001110111001110101100000111111011111010001111101010100111001101 110111110001101101110100110110111101111 11111111] |
| | 12 | [0 0 0 1 0 1 0 0 1 1 1 1 1 1 1 1 1 0 1 1 1 0 0 0 1 1 1 1 0 1 1 1 0 0 1 0 0 0 1 1 1 1 0 1 00110111011011001010101110101100 11011110111111111101011111001111110101 1 0 1 1 1 1 0] |
| | 13 | [0 1 1 1 0 1 1 0 1 1 1 1 1 0 1 1 0 1 0 1 1 1 0 1 1 1 1 0 0 1 1 1 1 0 1 0 1 00111111010111111111100110111011111011000011110001100100101011011111111010 0 0 1 0 1 1 1 0] |
| | 14 | [01111011101111000100011011110001111100110110001101110101011111110111110011010011101011001011111111101011111111111 01101001] |
| | 15 | [010011001011110000101101010111010100011111111110111110011100110100111111101011011111011011101111011000111011111 1 0 1 1 1 1 1 10] |

(continued)

| Sequence group index | Sequence index | Sequence |
|---|---|---|
| | 16 | [0 0 1 1 0 0 1 0 1 0 0 1 0 1 0 1 1 1 0 1 1 1 1 0 0 1 1 0 1 0 1 1 1 0 1 1 1 1 1 0 1 1 1 0 1 1 0 1 1 0 1 0 1 1 1 1 1 1 1 1 1 1 1 1 0 0 1 0 1 1 1 1 0 1 0 0 0 1 1 1 0 0 0 0 1 1 1 1 1 1 1 1 1 1 0 0 0 1 1 1 1 1 0 1 1 0 1 0 0 1 1 1 0 1 1 1 0 1 1] |

In still another possible implementation, the first sequence set includes the at least two binary 133-length sequences. The first sequence set may include at least two sequences in any one of three sequence groups shown in Table 9. In other words, the first sequence set may be any sequence group shown in Table 9, or the first sequence set may be included in any sequence group shown in Table 9. Table 9 lists three groups of binary 133-length sequences. The first device and/or the second device may obtain a corresponding second binary sequence based on any binary sequence in Table 9.

It may be understood that a sequence obtained by performing any cyclic shift on any sequence in Table 9 and the sequence have a same correlation property, and therefore may be understood as a same sequence. In other words, the sequence obtained by performing any cyclic shift on any sequence in Table 9 may be used as the sequence in this embodiment. In other words, the sequence in the first sequence set is a sequence obtained by performing any cyclic shift on the sequence shown in Table 9. Sequences of a sequence group index and a sequence index are not limited in this embodiment of this application.

Table 9

| Sequence group index | Sequence index | Sequence |
|---|---|---|
| 1 | 1 | [0 1 1 1 1 1 1 1 1 1 1 0 1 1 1 1 1 1 1 1 1 1 1 0 1 1 1 1 1 1 1 1 1 1 1 1 1 1 1 1 1 1 1 1 1 1 1 1 1 1 1 1 1 1 1 1 1 1 0 0 1 1 1 1 1 1 1 1 1 1 1 1 1 0 1 1 1 0 1 1 0 1 1 1 1 1 1 1 1 1 1 1 1 1 1 1 1 1 1 1 1 0 1 0 1 1 1 1 1 0 1 1 1 0 1 1 1 1 1] |
| | 2 | [1 0 1 1 1 1 1 1 1 1 1 1 1 1 1 1 1 1 1 1 1 1 1 1 1 1 1 1 1 1 1 1 1 1 1 1 1 1 1 1 1 1 1 1 1 1 1 0 1 1 1 1 1 1 1 1 0 0 1 1 1 1 1 0 1 1 1 1 1 1 1 1 1 1 1 0 1 1 1 1 1 1 1 1 1 1 1 0 1 1 0 1 1 1 1 1 1 1 1 1 0 1 1 1 0 1 1 1 1 1 1 1 1 1 1 1 1 1 1 1 1 0 1 1 1 0] |
| | 3 | [0 1 1 1 1 1 1 1 1 1 1 1 1 1 0 1 1 1 1 1 1 1 1 1 1 1 0 1 0 1 1 1 1 1 1 1 1 1 1 1 1 1 1 1 1 1 1 1 1 0 1 1 1 1 0 0 1 1 0 1 1 1 1 1 1 1 0 1 1 1 1 1 1 1 1 0 1 1 1 1 0 1 1 1 1 1 1 1 1 1 1 1 1 1 0 1 1 1 1 1 1 1 1 1 1 1 1 1 1 1 1 1 1 1 1 1] |
| | 4 | [1 1 1 1 1 1 1 1 0 0 1 1 1 1 1 1 1 1 1 1 1 1 1 1 1 1 1 1 0 1 1 1 1 1 1 1 1 1 1 1 1 0 1 1 1 1 1 1 1 1 1 1 1 1 1 1 0 1 1 1 1 0 1 1 1 1 1 1 1 1 1 1 0 1 1 1 1 1 1 1 0 1 1 0 1 1 0 1 0 1 1 1 1 1 1 1 1 1 0 1 1 1 1 1 1 1 1 1 1 1 1 1 1 1 1 1 1 1] |
| | 5 | [0 1 1 1 1 1 1 1 1 1 0 1 1 0 1 1 1 1 1 1 1 1 1 1 1 1 0 1 1 1 0 1 1 1 1 1 1 1 1 1 1 1 1 1 0 1 0 1 1 1 1 1 0 0 1 1 1 1 0 1 1 1 1 1 1 1 1 1 1 0 1 1 1 1 1 1 1 1 1 1 1 1 1 1 1 1 1 1 1 0 1 1 1 1 1 1 1 1 1 1 1 1 1 1 1 1 1 1 1] |
| | 6 | [1 1 1 1 1 1 1 1 1 1 0 1 1 1 1 1 1 1 1 1 0 1 1 1 1 1 1 1 1 0 1 1 1 1 1 1 0 1 1 1 1 1 1 1 1 1 1 1 1 1 0 1 1 1 1 1 1 1 0 1 1 1 1 1 1 1 1 1 1 1 1 1 0 1 1 1 1 1 0 1 1 1 0 1 0 1 1 0 1 1 1 1 1 1 1 1 1 1 1 0 0 1 1 1 1 1 1 1 1 1 1 1 1 1] |
| | 7 | [1 1 1 1 1 1 1 1 1 1 1 1 1 1 1 1 1 1 1 1 0 0 1 1 1 1 1 1 1 0 1 1 1 1 1 1 1 1 1 0 1 1 1 1 0 1 1 1 1 1 1 0 1 1 1 0 1 1 1 1 1 1 1 1 1 1 1 1 1 1 0 1 1 1 0 1 0 1 1 1 1 1 1 1 1 0 1 1 0 1 1 1 1 1 1 1 1 1 1 1 1 1 1 1 1 1 1 1 1 1 0 1 1 1 1 1 1 1 1 1 1 1 1] |

(continued)

| Sequence group index | Sequence index | Sequence |
|---|---|---|
| | 8 | [1 0 1 1 1 1 1 1 1 1 1 1 0 1 1 1 1 1 1 1 1 1 1 1 1 1 1 1 1 1 1 1 1 1 11111110111111111111111111111101110 1 1 1 1 1 1 1 0 1 1 1 1 1 1 1 1 0 1 1 1 1 1 1 0 1 1 1 1 1 1 1 1 1 0 1 1 1 1 1 1 1 1 1 1 1 1 1 1 0 1 1 1 1 0 0] |
| | 9 | [0 1 1 1 1 1 1 1 1 1 1 1 1 1 1 1 1 1 1 1 1 1 1 0 1 1 1 1 1 1 1 1 1 1 1 1 1111111110110011111101111010111111 1111111110111111111011111111110111111 1 1 1 1 1 1 1 1 1 1 1 1 1 1 1 0 1 1 1 1 1] |
| | 10 | [1 0 1 1 1 1 1 1 1 1 1 1 1 1 1 1 1 1 1 1 0 1 1 1 1 1 1 1 1 1 1 1 1 1 11111111111111111011111111111011001 1 1 1 1 1 1 1 1 1 1 1 1 1 1 1 1 1 1 1 1 1 1 0 1 1 1 1 1 0 1 1 1 1 1 0 1 1 1 1 0 1 1 1 1 1 1 1 0 1 1 1 1 1 1 1 0] |
| | 11 | [1 1 1 1 1 0 0 1 1 1 0 1 1 1 1 1 1 1 1 1 1 1 1 1 1 1 1 1 1 1 0 1 1 1 1 1 1 1 1 1 1 1 1 1 1 1 1 1 1 1 1 0 1 1 1 1 1 1 1 1 1 1 1 1 1 1 1 1 1 1 1 1 1 1 110110111101111111111111111111110 1 1 1 1 1 0 1 1 1 1 1 1 0 1 0 1 1 1 1 1] |
| | 12 | [1 1 1 1 1 0 1 1 1 1 1 1 1 1 1 1 1 1 1 1 1 1 1 1 1 1 1 1 1 1 1 0 1 1 1 1 011111011111111111011111111001011111 1 1 1 1 1 1 1 0 1 1 1 0 1 1 1 1 1 1 1 1 1 1 1 1 1 1 1 1 1 1 1 1 1 1 1 1 1 1 1 1 1 1 1 1 1 0 1 1 1 1 1 1 0 1 1] |
| 2 | 1 | [0 1 1 1 1 1 1 1 1 0 1 1 1 1 1 1 1 0 1 0 1 1 1 1 1 1 1 1 1 1 1 1 0 111111111111110111110111111001110111 11111111111111011011111111111111111 1 1 1 1 1 1 1 1 1 1 1 1 1 1 1 1 1 1 1 1 1] |
| | 2 | [0 1 1 1 1 1 1 1 1 1 1 1 1 1 1 0 1 1 0 1 1 1 1 1 1 0 1 1 1 0 0 1 1 1 1 1 11111111111111111111111111101111111 1 1 1 1 1 0 1 1 1 1 1 1 1 1 0 1 1 1 1 1 1 1 1 1 1 1 1 1 1 1 1 1 1 0 1 1 1 1 1 1 1 1 1 1 1 1 1 1 0 1 1 1 1 1 0 1] |
| | 3 | [1 1 1 1 1 1 0 1 1 1 1 1 1 1 1 1 1 1 0 1 1 1 1 1 1 1 1 1 1 0 1 1 1 1 1 1 1 1 0 1 1 1 1 1 1 1 0 1 1 1 1 1 1 1111111101101111111111111101110011110101111111 1 1 1 1 1 1 1 1 1 1 1 1 1 1 1 1 1 1 1 1 0 1 1 1 1 1 1 1 1 1] |
| | 4 | [0 1 1 1 0 1 1 1 1 1 1 1 1 1 1 1 1 1 1 0 1 1 1 1 0 1 1 1 1 1 1 1 1 101101111111011111111111101111110 0111111110111111111111111111111111111 1 1 1 1 1 1 1 1 1 1 1 1 1 1 1 1 1 1 0 1] |
| | 5 | [0 1 1 1 1 1 1 1 1 1 1 1 1 0 1 1 1 1 1 1 1 1 1 1 1 1 1 1 0 1 1 1 1 1 1 1 1 1 1 1 1 1 1 1 1 1 1 1 1 1 1 0 1 0 1 1 1 1 0 0 11101111111111111011011111111111111 0 1 1 1 1 1 1 1 0 1 1 1 1 1 1 1 1 1 1] |
| | 6 | [0 1 1 1 1 1 1 1 1 1 1 1 1 1 1 1 1 1 1 1 0 0 1 1 1 1 1 1 1 1 1 1 1 1 1 11111111111111011111111101011101101 1 1 1 1 1 0 1 1 1 1 1 1 1 1 1 1 1 1 0 1 1 1 1 0 1 1 1 1 1 1 1 1 1 1 1 1 1 1 1 1 0 1 1 1 1 1 1 1 1 1 1 1 1 1] |

(continued)

| Sequence group index | Sequence index | Sequence |
|---|---|---|
| | 7 | [1 1 1 0 1 1 1 1 1 1 1 1 1 1 1 1 1 1 1 1 1 1 0 1 1 1 1 0 1 1 1 0 1 1 1 0 1 1 1 1 1 1 1 1 1 1 1 1 1 1 1 1 0 1 1 1 1 1 1 1 1 1 1 1 1 0 1 1 1 1 1 100101 1 1 1 1 1 1 1 1 1 1 0 1 1 1 1 1 1 1 1 1 0 1 1 1 1 1 1 1 1 1 1 1 1 1 1 1 1 1 1 1 1 1 1 1 1] |
| | 8 | [0 1 1 1 1 1 1 1 1 1 1 1 1 1 1 1 1 1 1 1 1 1 1 1 1 1 1 0 1 1 1 1 1 1 1 1 1 1 1 1 1 1 1 1 1 1 1 0 1 1 1 1 1 1 1 1 1 1 1 1 1 1 1 0 1 1 1 0 0 1 1 1 1 1 1 1 1 1 0 1 0 1 1 1 1 1 1 0 1 1 1 1 1 1 0 1 1 1 1 1 1 1 1 1 1 1 1 1 1 1 1 1 1 1 1 1 1 1 1 0 1 1 1 1 1 0 1 1] |
| | 9 | [0 0 1 1 1 1 1 0 1 1 1 1 1 1 1 1 1 1 1 1 1 1 1 1 1 1 1 1 1 1 1 1 0 1 0 1 1 1 1 1 1 1 1 1 1 1 1 0 1 1 1 1 1 1 1 1 1 1 1 1 1 1 0 1 1 1 1 1 1 1 1 1 1 1 1 1 1 1 1 1 1 1 1 1 1 1 1 1 1 0 1 1 1 1 1 1 1 1 1 1 1 1 1 1 1 1 1 1 1 0 1 1 1 1 0 1 1 1 1 1 1 1 0 1 1 1 1 1 1 1 0 1 1] |
| | 10 | [0 1 0 1 1 1 1 1 1 0 1 1 1 1 1 1 1 0 1 1 1 1 0 1 1 1 1 1 0 1 1 1 1 1 1 0 1 1 1 1 1 1 1 1 1 1 1 1 1 1 1 1 1 1 1 1 1 100110 1 1 1 1 1 1 1 1 1 0 1 1 1 1 1 1 1 1 1 1 1 1 1 1 1 1 1 1 1 1 1 1 1 1 1 1 1 1 0 1 1 1 1 1 1 1 1 1 1 1 1 1 1 1 1 1 1 1 1] |
| | 11 | [0 1 1 1 1 1 1 1 1 1 0 1 1 1 1 1 1 1 1 1 1 0 1 1 1 1 1 1 1 1 1 1 1 1 1 1 1 1 1 1 1 1 1 100 1 1 1 1 1 1 1 1 1 1 1 1 1 0 1 1 0 1 0 1 1 1 0 1 1 1 1 1 0 1 1 1 1 1 1 1 1 1 1 1 1 1 1 1 1 1 1 1 0 1 1 1 1 1 1 1 0 1 1 1 1 1 1 1 1 1 1 1 1 1 1 1 1 1 1 1 1 1 1 1 1] |
| | 12 | [1 1 1 1 1 1 1 1 1 1 1 1 1 1 1 1 0 1 1 1 1 1 1 1 1 1 1 1 0 1 1 1 1 1 1 1 1 1 1 1 1 0 1 0 0 1 1 1 1 1 0 1 1 1 1 1 1 1 1 1 1 1 0 1 1 1 1 1 1 1 1 1 1 1 1 1 1 1 0 1 1 1 0 1 1 1 1 0 1 1 1 1 1 0 1 1 1 1 1 1 1 1 1 1 1 1 1 1 1 1 1 0 1 1 1 1 1 1 1 1 1 1 1 1 1 1] |
| 3 | 1 | [1 1 1 1 1 1 1 1 1 1 1 0 1 1 1 0 1 1 1 1 1 1 1 1 1 1 1 1 1 1 0 1 1 0 1 1 1 1 1 1 1 1 1 1 1 0 1 1 1 1 1 1 1 1 1 1 1 1 1 1 1 1 1 1 1 1 1 1 1 1 1 1 1 1 1 1 1 01 1 1 1 1 1 1 1 1 1 1 1 1 1 1 1 1 0 1 1 1 1 1 1 1 1 1 1 1 0 1 1 1 1 0 0 1 1 1 1 1 0 1 0 1 1 1 1 1 1 1 1 1] |
| | 2 | [1 1 1 1 1 1 1 1 1 1 0 1 1 1 1 1 1 1 1 1 0 1 1 1 1 1 0 1 1 1 1 1 1 1 1 0 1 1 1 1 1 1 1 1 0 1 1 1 0 1 1 1 1 1 1 1 1 1 1 1 1 1 1 1 1 1 1 1 1110 1 1 1 1 1 1 1 1 1 1 1 1 1 1 1 1 1 1 1 1 1 1 1 0 1 1 1 1 1 1 1 1 1 1 0 1 0 0 1 1 1 1 0 1 1 1 1] |
| | 3 | [1 1 1 1 1 1 1 1 1 1 1 1 1 1 1 1 1 1 1 1 1 1 1 1 1 1 1 1 1 1 1 1 1 0 1 1 1 0 1 1 1 1 1 1 1 1 1 1 1 0 1 0 0 1 1 1 1 1 1 1 0 1 1 1 1 1 1 1 1 1 1 1 1 0 1 1 1 1 1 0 1 1 1 1 0 1 1 1 1 1 1 1 1 1 1 1 1 1 1 1 1 1 1 1 1 1 1 1 0 1 1 1 1 1 1 1 0 1 1 1 1 1 1 0 1] |
| | 4 | [0 1 1 1 1 1 1 1 1 1 1 1 1 1 1 1 1 1 1 1 1 1 1 1 1 1 1 1 1 1 1 1 1 1 1 1 1 1 1 1 1 0 1 1 1 1 1 0 1 1 1 1 0 1 1 1 1 1 1 1 0 1 1 1 1 0 1 1 1 1 1 1 1 1 1 1 1 1 1 1 1 1 1 1 1 1 0 0 1 0 1 1 1 1 1 1 1 0 1 1 1 1 1 1 0 1 1 1 1 1 1 1 1 1 1 1 0 1 1 1] |
| | 5 | [0 0 1 1 1 1 1 0 1 1 1 1 0 1 1 1 1 1 1 1 1 1 1 1 1 1 0 1 1 1 1 1 1 1 1 1 1 1 1 1 0 1 0 1 1 1 1 1 1 1 0 1 1 1 1 1 1 1 1 0 1 1 1 1 1 1 1 1 1 1 1 1 1 1 1 1 1 1 1 1 1 1 1 1 1 1 1 1 1 0 1 1 0 1 1 1 1 1 1 1 1 1 1 1 1 1 1 1 1 1 0 1 1 1] |

(continued)

| Sequence group index | Sequence index | Sequence |
|---|---|---|
| | 6 | [1 0 1 1 1 1 1 1 1 1 1 1 1 1 1 1 1 1 1 1 1 1 1 1 1 0 1 1 0 1 1 1 1 1 1 1 1 1 0 1 0 1 1 1 0 1 1 1 1 1 1 1 1 1 1 1 1 1 1 1 1 1 1 1 1 0 1 1 1 1 1 1011110111111110111111100111111111111 1 1 1 1 1 1 1 1 1 1 1 1 1 1 1 1 1 1 1 1] |
| | 7 | [1 0 0 1 1 1 0 1 1 1 1 1 1 0 1 1 0 1 1 1 1 1 1 1 1 1 1 1 1 1 1 0 1 0 1 1 11101111111111111110111111111111111 1 1 1 0 1 1 1 1 1 1 1 1 0 1 1 1 1 1 1 1 1 1 1 1 0 1 1 1 1 1 1 1 1 1 1 1 1 1 1 1 1 1 1 1 1 1 1 1 1 1 1 1 1 1 1] |
| | 8 | [1 1 1 1 1 1 1 1 1 0 1 1 1 1 1 1 1 0 1 1 1 1 1 1 1 1 1 1 1 1 1 1 1101111110111101101011111111111111 1011101111110111111111111111111111111 1 1 1 1 1 1 1 1 1 1 1 1 1 1 1 0 0 1 1 1] |
| | 9 | [0 1 1 1 1 1 1 1 1 1 0 1 1 1 1 1 0 1 1 1 1 1 1 0 1 1 1 1 1 1 1 1 1 1 1 1 1 1 1 1 1 1 1 1 1 1 1 1 1 1 1 1 1 1 1 1 1 1 1 1 1 1 0 1 1 1 0 1 1 1 1111111111011111110111111101001111111 1 1 1 1 1 1 1 1 1 1 1 1 1 1 1 1 0 1 1 1 1] |
| | 10 | [1 1 1 1 1 1 1 1 1 1 1 1 1 1 1 1 1 0 1 1 1 1 0 1 1 1 1 1 1 1 1 1 1 1111111110111111111011111111110111111 1111111111010111101111111001101111111 1 1 1 1 1 1 1 1 1 1 1 1 1 1 1 1 0 1 1 1 1 1] |
| | 11 | [0 0 1 1 1 1 1 1 1 1 1 1 1 1 1 1 1 1 1 1 1 1 1 1 1 1 1 1 1 1 1 1 1 1 1 1 1 1 1 1 0 1 1 1 1 1 1 1 1 1 1 1 1 1 0 1 1 1 1 1 1 1 1 1 1 0 1 1 1 1 1 0 1 1 1 0 1 1 1 1 1 0 1 0 1 1 1 1 1 1 1 1 1 1 1 1 1 1 1 1 1 1 1 1 1 0 1 1 0 1 1 1 0 1 1 1 1 1 1 1 1 1 1 1 1 1] |
| | 12 | [1 1 1 1 1 1 1 1 1 1 1 1 1 1 1 1 1 1 1 1 1 1 1 1 1 1 1 1 1 0 1 1 1 1 1 1 1 0 1 1 1 0 1 1 1 1 1 1 1 1 1 1 1 1 1 1 1 1 0 1 0 1 1 0 1 1 1 1 1 0111111011111111111111111110111111111 0 1 1 1 1 1 1 1 1 1 1 1 1 1 0 0 1 1 1 1 1 1] |

For example, in the non-coherent receiving scenario (in other words, the second device is the non-coherent receiving device), the element in the first sequence belongs to {0, 1}, the first device may use the first sequence as a sending sequence to generate the first UWB signal, and the second device may use the second binary sequence corresponding to the first sequence as a local reference sequence to generate the local preamble symbol. A cross-correlation between the first sequence and a second binary sequence corresponding to another sequence in the first sequence set is less than the second threshold, so that there is a low cross-correlation between a sending sequence used by a device (namely, a non-target sending device) other than the first device and the local reference sequence of the second device. This can suppress an interference signal corresponding to the non-target sending device, and reduce inter-user interference.

Example 3: The first sequence set meets: The element in any sequence in the first sequence set belongs to {0, 1, -1}, the second sequence and the third sequence are any two different sequences in the first sequence set, a cross-correlation between the second sequence and the third sequence is less than a third threshold, and the cross-correlation between the first binary sequence corresponding to the second sequence and the second binary sequence corresponding to the third sequence is less than the first threshold.

In this example, the first sequence set includes at least two ternary 121-length sequences or at least two ternary 133-length sequences. For example, the third threshold is less than or equal to -10 dB.

It may be understood that, for specific descriptions of the first binary sequence corresponding to the second sequence and the second binary sequence corresponding to the third sequence, refer to the foregoing related descriptions. Details are not described herein again.

In this embodiment of this application, in a scenario in which a coherent receiving device and a non-coherent receiving device coexist, a plurality of sequences may be generated in a differential set mapping manner, where the plurality of sequences have the perfect periodic autocorrelation characteristic; and the plurality of sequences are filtered and grouped, to obtain a plurality of sequence groups, where the plurality of sequence groups all meet: A cross-correlation between any two different sequences in a sequence group is less than the third threshold, and a cross-correlation between a first binary sequence corresponding to any sequence in the sequence group and a second binary sequence corresponding to another sequence in the sequence group is less than the first threshold. The first sequence set may be any one of the plurality of sequence groups or a subset of any one of the plurality of sequence groups (in other words, the first sequence set may be included in any one of the plurality of sequence groups). To be specific, a cross-correlation between the first sequence and another sequence in the first sequence set is less than the third threshold, and a cross-correlation between the first binary sequence corresponding to the first sequence and a second binary sequence corresponding to the another sequence in the first sequence set is less than the first threshold.

For example, 66 ternary 121-length sequences and 72 ternary 133-length sequences may be generated in the differential set mapping manner. The 66 ternary 121-length sequences and the 72 ternary 133-length sequences are filtered and grouped, and an obtained grouping result may be shown in Table 10. As shown in Table 10, five sequence groups may be obtained by filtering and grouping the 66 ternary 121-length sequences and the 72 ternary 133-length sequences, and include three groups of ternary 121-length sequences and two groups of ternary 133-length sequences. Each sequence group meets: A cross-correlation between any two different sequences in the sequence group is less than the third threshold, and a cross-correlation between a first binary sequence corresponding to any sequence in the sequence group and a second binary sequence corresponding to another sequence in the sequence group is less than the first threshold. Quantities of sequences in the three groups of ternary 121-length sequences are 12, 12, and 8 respectively, and quantities of sequences in the two groups of ternary 133-length sequences are 11 and 10 respectively. In a coherent receiver architecture, a maximum intra-group cross-correlation of the three groups of ternary 121-length sequences is -11.7 dB, in other words, a cross-correlation between any two sequences in any one of the three groups of ternary 121-length sequences is less than or equal to -11.7 dB. In a non-coherent receiver architecture, a maximum intra-group cross-correlation of the three groups of ternary 121-length sequences is -10.6 dB, in other words, a cross-correlation between any two sequences in any one of the three groups of ternary 121-length sequences is less than or equal to -10.6 dB. In the coherent receiver architecture, a maximum intra-group cross-correlation of the two groups of ternary 133-length sequences is -11.8 dB. In the non-coherent receiver architecture, a maximum intra-group cross-correlation of the two groups of ternary 133-length sequences is -11.3 dB.

Table 10

| Sequence length N | 121 | 133 |
|---|---|---|
| Quantity M of elements 0 in a sequence | 40 | 12 |
| Value of b | -2 | -10 |
| Quantity of sequences | Group 1: 12<br>Group 2: 12<br>Group 3: 8 | Group 1: 11<br><br>Group 2: 10 |
| Maximum intra-group cross-correlation in a coherent receiver architecture | -11.7 dB | -11.8 dB |
| Maximum intra-group cross-correlation in a non-coherent receiver architecture | -10.6 dB | -11.3 dB |

For example, the first sequence set may be any one of the three groups of ternary 121 - length sequences or the two groups of ternary 133-length sequences, or the first sequence set may be included in the three groups of ternary 121-length sequences or the two groups of ternary 133-length sequences.

In a possible implementation, the first sequence set includes the at least two ternary 121-length sequences. The first sequence set may include at least two items in any one of three sequence groups shown in Table 11. In other words, the first sequence set may be any one of the three sequence groups shown in Table 11, or the first sequence set may be included in any one of the three sequence groups shown in Table 11. The first device and/or the second device may obtain a corresponding first binary sequence and a corresponding second binary sequence based on any ternary sequence in Table 11.

It may be understood that a sequence obtained by performing any cyclic shift on any sequence in Table 11 and the sequence have a same correlation property, and therefore may be understood as a same sequence. In other words, the sequence obtained by performing any cyclic shift on any sequence in Table 11 may be used as the sequence in this embodiment. In other words, the sequence in the first sequence set may be a sequence obtained by performing any cyclic shift on the sequence shown in Table 11. Sequences of a sequence group index and a sequence index are not limited in this embodiment of this application.

Table 11

| Sequence group index | Sequence index | Sequence |
|---|---|---|
| 1 | 1 | [1 0 1 -1 0 0 0 -1 0 1 1 1 0 0 1 1 -1 -1 1 1 -1 1 -1 1 -1 -1 1 0 -1 -1 -1 1 1 0 1 -1 0 1 1 -1 0 -1 0 1 -1 -1 -1 1 -1 0 0 0 0 -1 1 0 -1 1 -1 -1 -1 -1 1 1 1 0 1 -1 0 0 0 -1 1 0 0 -1 0 -1 0 1 0 1 1 1 1 0 0 -1 1 1 0 1 1 -1 0 1 0 1 1 1 -1 0 -1 0 0 -1 0 -1 -1 0 1 1 -1 1 -1 -1 0 0 0 1 1 0 1] |
| 1 | 2 | [0 1 -1 1 -1 1 0 -1 0 1 -1 0 -1 0 1 0 1 -1 1 0 1 0 0 -1 1 0 -1 1 0 0 1 0 1-1010111-101111-1-111-1-100-1-11101111 -1 -1 0 -1 0 0 0 -1 1 0 0 1 -1 1 -1 -1 0 1 1 1 0 1 -1 -1 0 1 1 1 0 0 1 1 -1 1 0 -1 1 0 -1 -1 -1 -1 -1 1 -1 0 0 1 -1 -1 -1 0 1 0 0 0 0 0] |
| 1 | 3 | [-1 1 1 -1 0 0 -1 -1 -1 1 0 -1 1 1 -1 -1 0 0 1 1 0 -1 -1 -1 0 0 -1 -1 1 1 1 1 1 0 0 1 -1 0 1 0 1 1 0 1 0 0 1 0 1 -1 1 1 -1 -1 0 0 0 1 0 1 0 -1 0101-101100111-1-100-10001-1-10-1-11-11-11-1 -1 0 1 1 -1 -1 -1 1 1 -1 1 -1 0 -1 1 0 -1 0 0 0 1 1 0 1 0 1] |
| 1 | 4 | [-1 0 1 0 -1 -1 1 1 -1 0 -1 0 0 1 1 1 1 1 -1 1 0 -1 0 -1 0 -1 1 1 1 0 0 -1 0 -1 1 -1 -1 0 1 1 0 -1 1 0 0 -1 1 -1 0 -1 -1 -1 -1 -1 0 1 -1 0 0-11101111-1-1100110-11-11110-11-110001-1-1 1 0 1 1 -1 0 1 1 1 -1 1 0 -1 1 0 1 0 0 0 0 0 0 -1 0 1 0 0 1 -1] |
| 1 | 5 | [0 1 0 0 0 -1 1 1 1 1 0 1 -1 1 1 1 -1 1 1 0 0 -1 -1 1 -1 0 -1 0 -1 1 1 0 1 1 -1 1 -1 -1 -1 0 1 1 -1 -1 1 0 1 0 1 -1 0 -1 0 -1 0 -1 -1 1 -1 1 1 -10-1-10011-10100-1-11011110000011-111-1 -1 0 1 1 -1 0 -1 0 1 -1 0 1 -1 -1 1 0 0 1 1 0 0 1 1 0 -1 0 0 -1 0] |
| 1 | 6 | [-100011010010-11-101-1-1-1111100-1000-1 0 -1 1 0 0 -1 1 -1 -1 -1 0 -1 -1 0 0 1 -1 0 -1 -1 0 1 1 1 -1 0 1 1 0 0 1 1 1 0 -1 0 1 0 0 -1 -1 1 1 -1 0 -1 0 -1 0 1 1 -1 1 -1 1 1 0 1 -1 1 -1 0 -1 1 1 -1 1 1 -1 -1 0 1 -1 0 1 0 1 0 1 1 1 1 -1 1 0 0 0 0 1 -1] |
| 4 | 7 | [1 0 0 0 1 1 0 0 1 1 1 0 0 1 0 1 0 1 1 -1 1 -1 -1 1 1 1 -1 0 -1 -1 0 1 1 1 -1 0 0 0 0 1 -1 -1 0 1 0 1 0 1 1 0 -1 -1 -1 -1 1 0 0 -1 0 1 -1 -1 0 1 0 -1 1 1 1 1 -1 -1 0 1 1 -1 1 -1 -1 -1 -1 -1 0 -1 1 1 0 0 1 0 1 1 -1 1 -1 -1 -1 0 -1 1 0 0 -1 0 0 -1 0 1 -1 1 1 -1 -1 0 0 -1 1 -1 0 0 1 1 0] |
| 4 | 8 | [1 1 0 -1 -1 1 0 1 1 -1 0 0 1 0 -1 -1 0 -1 1 -1 1 1 1 0 0 0 -1 1 1 1 1 1 1 -1 -1 -1 -1 0 0 0 0 1 -1 1 0 0 0 -1 0 -1 1 -1 -1 0 -1 0 0 -1 -1 -1 -1 1 1 1 -1 1 1 1 -1 1 1 1 0 -1 0 1 1 0 -1 1 0 1 1 -1 0 -1 1 -1 1 1 0 1 1 -1 0 1 0 -1 1 0 0 -1 1 1 -1 0 1 -1 1 1 0 -1 0 -1 0 0 1 0 1 0 0 1 1 0 0] |
| 4 | 9 | [-1 1 -1 -1 0 1 1 -1 0 0 0 1 1 0 0 1 -1 1 0 1 0 1 0 -1 -1 0 -1 0 1 0 1 1-1010111-1-100-111-1111-10000-110-100-1 1 0 0 1 1 1 1 -1 -1 -1 1 1 0 -1 -1 -1 0 1 -1 0 -1 -1 -1 -1 -1 1 0 -1 1 1 1 -1 1 1 0 1 -1 -1 1 0 1 1 0 1 -1 0 1 0 1 -1 0 1 1 0 0 0 0 0 1 -1 1 1] |
| 4 | 10 | [0 0 0 1 0 0 0 1 1 1 -1 0 -1 -1 1 0 -1 -1 1 -1 0 1 0 0 1 0 1 -1 0 1 1 1 -1 1 1 -1 -1 -1 1 -1 1 1 0 -1 0 1 1 -1 1 -1 1 1 1 1 0 1 0 0 -1 -1 0 -1 0 1 0 1 1 1 0 0 1 0 1 -1 0 0 1 1 -1 -1 1 0 1 1 1 1 -1 -1 1 0 1 0 -1 0 1 -1 1 0 1 -1 0 0 0 -1 -1 0 -1 -1 0 0 1 -1 -1 -1 -1 0 0 0 1 1 -1 1 1 0 -1 1] |
| 4 | 11 | [-100000111-1-1-10-111-1-1010001-1-1-110-10-1010011100-1-101110111-11000110-11-1 0 1 -1 0 1 0 0 -1 1 0 1 1 0 -1 1 1 -1 1 0 1 1 1 1 -1 1 -1 -1 1 1 -1 -1 -1 - 1 -1 1 0 -1 0 -1 1 0 1 0 0 1 -1 1 1 -1 1 0 1 -1 -1 0 0 1 -1 1 1 0 1 0 1] |
| 4 | 12 | [-1 -1 0 0 0 0 1 1 0 -1 1 1 1 1 1 0 1 0 1 0 -1 1 0 1 1 0 1 -1 1 1 1 -1 -1 1 1 -1 -1 1 1 -1 -1 0 0 1 1 0 -1 0 1 1 1 1 0 0 0 1 -1 -1 -1 1 -1 1 1 0 1 -1 1 -1 -1 1 1 0 1 0 -1 0 1 0 1 -1 0 0 1 -1 -1 1 0 0 -1 0 1 -1 1 0 1 1 1 -1 1 -1 -1 -1 0 0 1 1 0 -1 -1 1 -1 0 -1 0 0 -1 0 0 1 1 -1 0 1 -1 0 0 0] |

| Sequence group index | Sequence index | Sequence |
|---|---|---|
| 2 | 1 | [-1 1 1 0 1 0 0 1 -1 0 1 1 1 1 1 1 -1 0 1 0 0 - 1 1 0 1 0 1 -1 0 1 -1 -1 1 -1 1 -1 1 0 0 1 1 0 -1 0 1 -1 1 0 -1 -1 -1 -1 0 0 0 1 1 1 -1 1 -1 -1 -1 1 1 -1 -1 -1 -1 0 1 -1 1 -1 0 1 1 0 0 0 -1 0 0 1 0 1 0 -1 1 -1 0 0 1 0 -1 1 1 0 0 0 1 1 1 -1 0 0 1 0 -1 0 1 1 -1 -1 -1 -1 0 0 -1 1 0] |
|  | 2 | [0 1 1 0 0 -1 1 -1 0 0 -1 -1 1 1 -1 1 0 -1 0 0 -1 0 0 1 -1 0 -1 1 -1 1 -1 1 1 1 0 1 0 0 1 1 -1 0 -1 -1 -1 -1 1 -1 1 1 1 0 1 -1 -1 1 1 1 -1 0 1 0 - 1 -1 1 0 -1 0 0 1 -1 -1 -1 -1 0 1 1 0 1 0 1 0 -1 -1 1 0 0 0 0 -1 1 1 1 0 -1 -1 0 -1 1 1 -1 -1 1 -1 -1 1 1 1 0 1 0 1 0 0 1 1 1 0 0 1 1 0 0 0 1] |
|  | 3 | [-1 0 -1 0 0 1 0 0 -1 1 0 0 -1 0 -1 -1 1 0 -1 -1 0 0 -1 1 0 -1 0 1 0 0 1 -1 -1 1 1 1 0 -1 0 0 0 0 0 1 -1 -1 -1 0 -1 1 -1 0 1 -1 1 1 1 1 1 1 0 1 1 -1 1 0 -1 0 1 0 -1 1 0 1 -1 -1 1 1 1 1 -1 0 0 1 -1 -1 -1 0 0 1 1 1 0 0 0 -1 -1 0 1 1 1 1 0 -1 1 1 -1 1 -1 1 1 0 -1 1 1 1 1 0 1 0 -1 1 -1 1 1] |
|  | 4 | [-1 0 -1 0 -1 0 -1 0 0 0 -1 1 1 0 -1 1 0 -1 0 0 1 1 -1 -1 0 1 1 1 1 1 0 0-1-1-1 1 1 1 -1 0 0 1 -1 -1 0 -1 0 1 1 0 1 1 0 1 0 1 0 -1 -1 0 0 1 1 1 -1 1 1 -1 1 1 1 -1 1 1 0 1 1 0 1 0 0 -1 0 0 1 -1 -1 1 -1 1 1 1 -1 1 -1 1 1 0 1 1 0 0 1 -1 1 -1 -1 1 1 0 0 0 0 -1 1 1 1 0 0 -1 -1 0] |
| 3 | 5 | [1 -1 0 0 -1 -1 1 0 0 1 0 1 0 1 1 0 0 0 0 1 0 0 1 1 1 -1 1 0 -1 0 0 1 -1 1 -1 1 -1 1 0 1 -1 0 -1 1 1 1 -1 1 1 0 1 1 -1 0 -1 0 1 1 0 0 1 1 0 -1 -1 0 0 1 1 1 -1 1 1 -1 0 1 1 1 -1 -1 0 -1 0 -1 0 -1 0 1 -1 -1 -1 1 0 0 -1 - 1 -1 0 0 1 0 1 1 -1 -1 1 -1 -1 -1 -1 -1 1 -1 1 0 1 0 0 0 1 1 0 1 0 -1 -1] |
|  | 6 | [1 0 1 0 1 -1 1 0 0 -1 -1 1 0 -1 1 -1 1 0 0 1 0 1 -1 0 -1 0 1 -1 -1 -1 -1 -1 -1 1 1 -1 -1 1 1 -1 1 1 1 1 1 0 -1 1 1 -1 0 1 1 0 1 -1 0 0 1 0 -1 1 0 -1 1 -1 0 1 1 0 0 0 1 -1 1 1 1 0 1 1 1 0 -1 -1 0 0 1 1 1 0 0 1 0 -1 0 -1 0 1 -1 -1 -1 1 0 0 0 0 1 0 -1 -1 1 1 -1 0 -1 -1 -1 1 1 1 1 0 0 0 0 0 -1] |
|  | 7 | [1 0 1 1 0 0 0 -1 1 -1 1 1 0 -1 -1 0 -1 0 0 -1 0 -1 1 1 1 0 1 0 -1 1 1 011-1001111010-10-1001-1000-110111-1-1-11 -1 0 1 -1 0 0 0 0 -1 1 -1 -1 -1 1 0 -1 0 -1 1 1 0 -1 1 0 1 1 -1 -1 - 1 0 1 -1 -1 1 -1 1 1 -1 1 1 -1 1 1 1 0 0 1 1 1 0 -1 0 0 0 -1 1 0 1] |
|  | 8 | [-1 1 1 -1 1 1 1 0 0 -1 1 1 1 -1 1 1 0 0 -1 0 -1 1 0 0 0 1 1 -1 1 0 1 -1 0 0 0 1 1 -1 0 -1 -1 -1 0 -1 -1 -1 0 1 1 -1 -1 -1 -1 -1 1 -1 -1 1 1 1 0 1 0 1 0 1 1 0 0 -1 -1 1 -1 1 1 1 -1 1 0 -1 1 0 1 -1 0 -1 1 -1 -1 1 0 1 0 1 1 0 0 0 -1 0 1 0 0 0 -1 -1 1 1 1 -1 0 0 1 1 0 1 1 0 -1 0 1 0 0 1 0 -1] |
|  | 9 | [0 0 -1 0 0 -1 0 1 1 0 0 1 1 0 0 1 -1 -1 1 1 0 -1 1 1 0 -1 0 -1 1 1 1 0 -1 - 111-11100000111101-1-10010-11100-1-10-11 -1 1 -1 -1 0 -1 0 -1 0 -1 0 -1 1 0 1 0 1 -1 -1 1 1 1 0 -1 -1 -1 1 -1 1 1 0 1 1 -1 0 -1 0 -1 1 -1 -1 0 0 1 1 -1 1 1 1 -1 1 1 0 1 1 1 1 -1 0 0 0 1] |
|  | 10 | [1 0 0 0 -1 -1 0 0 -1 1 1 1 1 1 0 1 -1 0 1 1 0 0 1 -1 1 1 1 -1 1 1 -1 1 0 -1 1 0 1 1 -1 -1 0 -1 0 1 1 -1 1 1 1 1 -1 1 1 1 0 1 1 -1 0 -1 1 1 0 1 -1 0 000111-11000-100-10100-1111011-11-10-111 1 -1 0 0 0 1 0 -1 -1 0 1 0 -1 0 1 0 1 -1 1 0 1 -1 -1 -1 -1 0 -1 -1]|
|  | 11 | [1 0 0 0 1 0 1 0 -1 1 -1 0 0 -1 0 -1 -1 -1 -1 1 1 0 1 0 -1 -1 -1 1 1 1 - 1 1 -1 1 -1 1 -1 1 0 -1 -1 0 1 1 1 -1 1 0 0 1 1 -1 0 1 -1 1 1 1 0 0 0 1 1 0 10110-1-10-111-10010111001-1-1-1110-11100 -1 0 0 1 -1 -1 1 0 0 0 -1 0 0 -1 1 0 -1 -1 1 -1 -1 1 1 1 1 0 1 0] |
|  | 12 | [0 0 1 1 0 0 1 0 1 0 0 -1 0 -1 0 1 -1 1 0 -1 1 1 -1 0 0 1 -1 0 1 0 -1 1 1 0 1 1 -1 1 -1 1 0 -1 1 1 0 1 -1 0 1 1 0 -1 0 1 1 -1 1 1 1 1 -1 1 1 1 1 -1 - 1 -1 -1 0 0 -1 0 -1 -1 1 1 -1 0 -1 0 0 0 1 -1 1 0 0 0 0 -1 -1 -1 -1 1 1 1 1 1 1 -1 0 0 0 1 1 -1 1 -1 -1 0 -1 -1 0 1 0 0 -1 1 1 1 0 1 -1 -1 -1 0 1 1] |
| 3 | 1 | [-1 -1 1 0 -1 -1 1 1 0 0 0 1 -1 -1 0 -1 -1 1 -1 1 1 1 -1 1 1 1 1 0 0 -1 0 1 0 0 0 0 0 1 1 1 -1 0 -1 -1 0 1 0 -1 -1 -1 -1 1 1 -1 0 0 1 -1 1 1 -1 1 0 1 0 -1 1 1 1 1 -1 -1 1 1 1 1 1 1 0 -1 1 1 -1 -1 0 1 1 0 0 1 -1 0 1 0 1 1 1 0 1 0 1 0 0 -1 -1 0 -1 1 0 1 -1 1 1 0 -1 1 0 0 1 0 1 -1 -1 1 1 0 0 0 -1 0 0] |

| Sequence group index | Sequence index | Sequence |
|---|---|---|
| | 2 | [1 0 1 0 -1 0 -1 -1 0 1 0 0 1 1 0 1 0 1 0 0 0 1 1 -1 1 1 -1 1 0 -1 -1 1 0 -1 0 1 -1 1 -1 1 0 0 -1 0 -1 1 0 -1 1 1 1 0 1 1 1 -1 -1 -1 1 -1 1 1 0 1-111111001-100-1001-1101-1-11000010-1-1 -1 0 1 -1 0 -1 -1 1 1 -1 -1 0 1 1 0 0 0 -1 1 1 0 0 -1 -1 -1 -1] |
| | 3 | [1 -1 -1 0 1 1 0 0 1 1 1 -1 -1 -1 1 -1 -1 -1 -1 0 -1 0 1 1 1 1 1 -1 0 0 1 0 1 0 1 1 -1 1 0 0 1 -1 -1 -1 0 1 -1 1 0 -1 0 -1 1 0 -1 -1 1 1 -1 0 1 -1 0 -1 -1 -1 0 0 1 1 -1 0 -1 0 0 0 1 0 -1 1 1 -1 -1 -1 -1 1 1 0 1 1 0 -1 0 1 0 0 1 0 0 -1 1 0 0 0 1 -1 1 1 0 0 0 0 1 1 0 1 -1 1 -1 1 0] |
| | 4 | [0 1 -1 1 -1 1 0 1 1 0 0 0 0 1 1 -1 1 0 0 0 1 -1 0 0 1 0 0 1 0 -1 0 1 1 0 1 1-1-11-111-101000-10-11100-1-1-10-110-1 1 1 -1 -1 0 1 -1 0 -1 0 1 -1 1 0 -1 -1 -1 1 0 0 1 -1 1 1 0 1 0 1 0 0 -1 1 1 1 1 1 0 -1 0 -1 -1 -1 -1 1 -1 -1 -1 1 1 1 0 0 1 1 0 -1 -1 1 ] |
| | 5 | [1 1 0 0 0 -1 0 1 0 1 1 1 -1 0 1 -1 1 -1 1 0 1 -1 1 1 1 0 0 1 0 0 1 -1 -1 1-100-1-1-1-11-111-1-11010-110-1-101-1-101 0001-110-1011-1111110-1-1-10-1-1100-1-111 1-1-10-1100001100-11011010100-10-11] |
| | 6 | [1 -110011000100001-11-110-1-101-10-110-1 1100-1-1-11-10-1011-10010-11-1-1110-10100 -1 1 0 0 0 -1 -1 1 -1 1 1 1 0 -1 -1 -1 -1 1 1 1 1 1 0 1 0 1 0 0 1 -1 -1 1 -1 -1 0 -1 -1 0 -1 1 1 1 -1 0 1 0 1 1 -1 -1 1 0 1 1 1 0 0 1 0] |
| | 7 | [-1 0 0 0 -1 1 1 0 -1 1 1 1 0 -1 0 0 0 1 0 0 1 0 1 -1 1 0 1 1 -1 1 1 0 0 -1 -1 0 -1 -1 -1 0 0 -1 -1 1 0 0 1 -1 0 1 -1 1 1 -1 -1 1 1 0 1 -1 0 -1 0 -1 0 1 -1 0 0 1 0 -1 0 -1 -1 0 1 1 1 1 1 -1 0 1 0 -1 -1 1 1 1 -1 1 -1 -1 1 1 1 1 0 1 -1 -1 1 1 -1 0 1 1 0 0 0 0 1 1 1 -1 -1 0 -1 0 0 1 -1 1] |
| | 8 | [-1 0 0 0 1 -1 -1 1 0 1 0 0 1 -1 0 1 -1 1 0 1 -1 0 -1 -1 0 0 1 0 1 0 1 1 1 0 1 0 -1 1 0 0 1 1 0 -1 -1 1 -1 0 1 1 1 1 1 -1 -1 1 1 1 1 -1 0 1 0 1 -1 1 -1 1 0 0 -1 1 1 -1 -1 -1 -1 -1 0 1 0 -1 -1 0 -1 1 1 1 1 0 0 0 0 0 1 0 -1 0 0 1 1 1 -1 1 1 1 -1 1 -1 -1 -1 0 -1 -1 1 0 0 0 1 1 -1 -1 0 1 -1 1 -1 0 0] |

In a possible implementation, the first sequence set includes the at least two ternary 133-length sequences. The first sequence set may include at least two items in either of two sequence groups shown in Table 12. In other words, the first sequence set may be a sequence group shown in Table 12, or the first sequence set may be included in the sequence group shown in Table 12. Table 12 lists the two sequence groups. The first device and/or the second device may obtain a corresponding first binary sequence and a corresponding second binary sequence based on any ternary sequence in Table 12.

It may be understood that a sequence obtained by performing any cyclic shift on any sequence in Table 12 and the sequence have a same correlation property, and therefore may be understood as a same sequence. In other words, the sequence obtained by performing any cyclic shift on any sequence in Table 12 may be used as the sequence in this embodiment. In other words, the sequence in the first sequence set may be a sequence obtained by performing any cyclic shift on the sequence shown in Table 12. Sequences of a sequence group index and a sequence index are not limited in this embodiment of this application.

Table 12

| Sequence group index | Sequence index | Sequence |
|---|---|---|
| 1 | 1 | [1 1 0 1 -1 -1 -1 -1 0 - 1 1 -1 1 1 1 0 0 1 1 -1 0 -1 1 -1 1 1 -1 -1 1 -1 1 1 1 1 -1 1 -1 1 1 -1 0 -1 -1 0 1 1 1 1 -1 -1 -1 1 -1 -1 1 1 1 - 1 -1 1 1 1 1 1 1 1 1 1 -1 1 1 1 1 -1 -1 -1 -1 1 -1 1 -1 1 0 1 1 -1 -1 -1 1 1 -1 -1 1 0 1 -1 -1 1 -1 -1 1 -1 0 1 0 -1 1 -1 -1 1 -1 1 -1 -1 -1 -1 1 -1 1 -1 -1 1 0 1 1 1 1 -1 1 1 -1 -1 1 1 -1 -1] |
| | 2 | [1 1 -1 -1 0 1 -1 -1 1 -1 1 1 1 -1 -1 1 1 -1 1 1 -1 1 1 1 1 -1 0 1 1 1 1 -1 -1 1 1 -1 1 1 1 1 -1 1 1 1 1 -1 1 1 0 1 1 1 0 0 1 -1 1 -1 1 -1 -1 -1 1 1 - 1 0 -1 0 1 1 -1 1 -1 -1 -1 0 1 1 1 -1 1 1 0 1 -1 1 1 -1 1 1 1 -1 -1 -1 -1 -1 -1 1 1 1 1 1 1 -1 -1 1 1 -1 -1 0 -1 -1 1 1 1 -1 0 -1 1 0 -1 1 1 1 1 -1 -1 1 1 1 1 -1 1 1 -1 -1 -1 1 1 -1 1 -1 -1 -1 -1 -1] |
| | 3 | [-1 1 -1 1 1 1 -1 1 1 1 1 1 -1 -1 -1 1 1 -1 1 1 1 -1 1 -1 1 1 1 1 -1 1 -1 0 1 1 1 1 -1 1 1 1 -1 1 -1 1 1 1 1 -1 1 1 1 -1 1 1 1 1 0 1 0 -1 1 -1 -1 -1 1 1 -1 0 1 1 1 1 -1 -1 -1 1 1 0 1 1 -1 1 0 1 -1 -1 1 1 1 0 -1 -1 -1 -1 -1 1 1 0 1 -1 -1 1 1 -1 -1 1 1 -1 1 1 -1 1 1 -1 1 -1 -1 -1 1 1 1 -1 1 -1 1 1 1 1 1 0 0 1 -1 0 1 -1 1 1 1 1 1 -1 1 1 1 -1 1 -1 0 -1 -1 1 1 -1 -1 -1 -1] |
| | 4 | [-1 -1 -1 -1 1 -1 1 1 -1 -1 -1 1 1 -1 1 1 1 1 1 -1 -1 1 1 1 1 -1 1 0 1 -1 0 -1 1 1 1 -1 -1 1 0 -1 1 -1 1 -1 1 -1 1 1 1 1 1 1 1 -1 -1 -1 -1 -1 -1 -1 1 1 1 -1 1 1 1 - 1 1 0 1 1 -1 1 1 1 1 0 -1 -1 -1 1 -1 1 1 1 0 -1 0 -1 1 -1 -1 -1 1 1 -1 1 1 - 1 1 0 0 1 1 1 0 1 -1 1 1 1 1 1 -1 1 1 1 1 -1 1 1 -1 -1 -1 1 1 1 1 1 1 0 -1 1 1 1 1 -1 11 -11 -1 -1111 -11 -1 -110 -1 -111] |
| | 5 | [-1 -1 1 1 1 -1 -1 1 1 1 -1 1 1 1 1 1 0 -1 1 -1 1 -1 -1 -1 1 -1 1 1 -1 -1 1 1 -1 0 1 0 -1 1 -1 -1 1 -1 -1 1 -1 -1 1 1 0 -1 -1 1 1 1 -1 -1 -1 1 1 1 0 1 -1 1 -1 1 1 -1 1 -1 -1 -1 -1 1 1 1 1 1 1 -1 1 1 1 1 -1 -1 1 -1 1 -1 -1 -1 1 1 1 1 1 0 -1 -1 0 -1 1 1 1 -1 1 1 -1 1 1 1 1 1 -1 1 1 -1 -1 1 1 1 -1 1 1 -1 1 0 -1 1 1 0 0 1 1 1 -1 1 1 -1 0 -1 -1 -1 -1 1 1 0 1 1] |
| | 6 | [1 -1 1 1 1 -1 1 1 1 -1 -1 -1 -1 -1 -1 -1 1 1 1 0 0 1 1 1 0 1 -1 1 1 -1 1 1 -1 1 0 - 1 1 0 1 1 1 1 1 -1 1 1 1 1 1 -1 1 1 1 -1 0 1 0 1 0 1 1 1 -1 1 1 0 -1 -1 -1 1 1 1 1 -1 -1 -1 1 1 1 -1 -1 -1 -1 1 1 0 -1 1 1 -1 -1 1 1 -1 -1 -1 1 1 1 -1 1 1 - 1 -1 -1 1 1 1 1 0 1 -1 -1 1 1 -1 1 1 1 -1 1 0 1 1 1 1 -1 -1 1 1 -1 -1 1 1 -1 1 1 0 -1 -1 1 1 -1 1 -1 -1 1 1 -1 1 1 1 11 -1 1 1 1 -1] |
| | 7 | [1 1 1 0 -1 -1 -1 1 1 1 -1 1 1 1 1 1 1 -1 1 1 1 1 -1 1 1 -1 -1 -1 -1 -1 -1 -1 1 1 1 -1 0 1 0 -1 1 -1 -1 -1 1 1 1 -1 -1 1 1 -1 0 1 -1 1 1 1 -1 1 1 1 -1 1 1 1 1 1 -1 1 0 1 -1 1 1 -1 -1 1 -1 -1 1 1 1 -1 -1 1 -1 -1 -1 -1 1 1 1 1 1 -1 0 1 -1 1 1 -1 1 1 1 -1 1 1 -1 1 1 1 -1 1 -1 -1 -1 -1 1 0 1 1 1 -1 0 -1 1 1 -1 1 1 1 1 -1 1 1 0 1 1 -1 1 1 -1 1 1 -1 1 0 1 1 0 0 1 1] |

(continued)

| Sequence group index | Sequence index | Sequence |
|---|---|---|
| | 8 | [1 1 0 -1 1 1 -1 -1 -1 0 -1 -1 1 -1 -1 -1 1 -1 -1 -1 0 1 -1 -1 -1 1 1 -1 1 -1 1 1 1 -1 -1 1 0 -1 1 1 1 0 0 1 0 -1 1 1 1 1 1 -1 1 -1 -1 1 0 1 1 -1 -1 1 1 1 1 -1 -1 -1 1 -1 1 1 -1 1 -1 1 1 1 -1 -1 1 1 1 1 1 -1 -1 -1 1 0 -1 1 1 -1 1 1 1 -1 1 1 1 -1 1 1 1 -1 -1 1 1 1 1 -1 1 0 -1 -1 1 0 0 1 1 -1 1 -1 -1 -1 -1 0 -1 -1 1 1 1 1 1] |
| | 9 | [1 1 1 1 1 -1 -1 0 -1 -1 -1 -1 1 -1 1 1 0 1 -1 -1 0 -1 1 1 1 1 -1 1 -1 1 1 -1 1 -1 1 1 -1 1 1 1 1 -1 1 1 1 -1 1 1 1 -1 0 1 -1 -1 -1 1 1 1 1 -1 -1 1 1 1 -1 1 1 -1 1 1 1 -1 1 -1 -1 -1 1 1 1 1 1 -1 -1 1 1 1 0 1 -1 -1 1 1 -1 1 1 1 1 1 -1 0 1 0 0 1 1 1 -1 0 1 -1 -1 1 1 1 1 -1 1 1 -1 1 1 1 -1 -1 -1 1 1 0 -1 -1 -1 1 1 -1 1 -1 -1 1 1 -1 -1 1 0 -1 -1 -1 1 1 -1 0 1 1] |
| | 10 | [1 -1 1 1 1 -1 -1 1 1 1 1 -1 -1 -1 1 1 0 1 1 1 -1 1 1 0 1 -1 1 1 -1 1 1 1 -1 1 1 1 1 -1 1 -1 1 -1 1 -1 1 -1 -1 1 1 1 -1 1 1 0 1 -1 1 1 -1 1 1 -1 -1 1 -1 1 0 1 -1 1 -1 -1 1 -1 1 -1 -1 1 1 1 0 1 1 1 -1 1 -1 1 1 1 1 -1 1 1 1 -1 1 1 1 1 1 1 0 -1 0 1 1 -1 1 -1 0 -1 1 1 -1 1 1 1 1 1 0 0 1 1 0 -1 -1 1 1 1 -1 1 1 -1 1 -1 1 1 1 1 1 1 1 -1 -1 1 1 -1 1 1 1 1 -1 0 1 -1 -1 -1 -1 1 1 -1 1 1 -1 -1 -1] |
| | 11 | [-1 -1 1 1 1 1 1 1 -1 1 1 -1 1 1 -1 -1 1 1 1 1 -1 -1 1 1 0 1 -1 1 1 -1 1 1 1 -1 1 -1 1 -1 1 1 -1 1 1 1 -1 1 1 1 1 1 1 -1 1 1 -1 1 1 -1 1 1 0 -1 -1 0 -1 1 -1 -1 1 1 1 1 1 1 -1 0 -1 0 -1 1 1 1 0 -1 -1 -1 1 1 1 1 -1 1 1 1 -1 1 -1 1 1 1 1 1 -1 1 -1 -1 1 1 0 -1 1 1 -1 -1 -1 -1 1 0 -1 -1 -1 -1 0 1 1 -1 1 -1 -1 -1 1 1 1 0 -1 1 1 1 1 1 -1 1 1 0 0 1 -1 1 -1 1 1 -1 1 1 1 1 1 1 -1 -1 1 1] |
| 2 | 1 | [1 1 1 1 1 1 1 1 1 0 1 -1 -1 1 1 -1 1 1 -1 1 1 -1 -1 -1 1 1 -1 1 1 1 -1 1 1 1 -1 1 -1 1 1 -1 1 1 1 -1 1 1 1 1 0 -1 1 1 1 1 -1 1 -1 -1 1 1 1 1 0 1 -1 0 -1 1 1 0 1 -1 1 0 -1 1 1 -1 1 1 -1 1 -1 1 -1 1 -1 -1 1 1 -1 1 1 1 0 -1 1 1 0 -1 1 -1 -1 1 1 -1 1 -1 1 -1 -1 1 -1 1 1 1 1 -1 1 1 1 1 -1 -1 1 1 -1 1 0 1 0 1 1 1 1 -1 1 1 0 0 1 1 -1 1 -1 0 1 -1 1 1 1 1 1 1 -1 1 -1 -1 1 0 1 -1 1 1 -1 1 -1 -1 1 1 1 -1 1 -1 -1 -1 -1 -1] |
| | 2 | [1 0 0 1 -1 1 1 1 -1 -1 -1 -1 -1 -1 -1 1 1 1 1 1 1 -1 1 -1 1 1 -1 1 1 1 1 -1 1 0 -1 1 1 1 1 1 -1 1 1 -1 -1 -1 1 1 0 -1 -1 -1 -1 1 1 1 -1 1 1 0 1 1 -1 1 1 1 -1 1 -1 -1 1 1 1 1 -1 1 -1 -1 -1 -1 1 1 -1 1 1 -1 -1 1 1 1 1 0 -1 1 -1 1 1 1 -1 1 1 1 1 1 1 1 1 -1 1 1 -1 0 1 1 1 -1 1 1 1 0 -1 1 1 0 1 0 1 0 1 1 0 -1 1 1 1 -1 1 1 1 -1 1 -1 1 1 -1 -1] |
| | 3 | [-1 -1 1 1 1 -1 1 1 1 -1 1 1 1 -1 1 0 1 1 0 1 0 1 0 1 1 -1 0 1 1 -1 1 1 1 1 0 -1 1 1 -1 1 1 1 1 1 1 1 -1 1 1 -1 1 1 -1 1 -1 1 1 1 -1 1 1 -1 1 0 -1 -1 -1 1 1 1 -1 1 -1 0 1 1 1 -1 1 -1 1 1 -1 -1 -1 -1 -1 1 1 1 1 -1 1 -1 1 1 -1 1 1 1 -1 1 1 1 0 1 -1 1 1 1 -1 -1 -1 -1 -1 1 0 1 -1 1 -1 -1 1 1 -1 1 1 1 1 1 -1 0 -1 1 1 1 1 -1 1 1 -1 1 1 -1 1 1 1 1 1 1 1 -1 -1 -1 -1 -1 -1 -1 1 1 1 -1 1 1 0 0 1] |
| | 4 | [-1 1 1 -1 1 1 -1 1 1 1 1 -1 1 0 1 -1 -1 -1 -1 1 0 1 -1 -1 1 1 0 1 1 -1 1 0 1 -1 -1 1 1 1 -1 1 1 -1 1 1 1 1 -1 -1 -1 1 1 1 -1 0 -1 1 1 -1 1 1 1 -1 1 1 1 -1 -1 -1 1 0 -1 -1 1 1 1 1 1 1 0 0 1 0 -1 1 1 1 1 -1 1 1 1 -1 -1 1 -1 -1 -1 0 -1 -1 1 1 1 -1 1 1 -1 1 1 -1 1 1 -1 1 1 1 1 0 -1 1 1 1 1 1 -1 1 1 -1 1 1 1 1 1 1 -1 1 1 -1 1 1 1 1 -1 -1 1 1 1 1 1 1 1 1 -1 0 -1 1 1 1 -1 -1 -1 1 1 -1 1] |

(continued)

| Sequence group index | Sequence index | Sequence |
|---|---|---|
| | 5 | [-1 -1 -1 -1 1 1 -1 -1 1 -1 1 0 1 -1 -1 -1 1 1 1 1 1 -1 1 0 -1 -1 1 1 0 0 1 -1 1 1 1 1 0 1 0 -1 1 -1 -1 1 1 1 -1 1 1 1 -1 -1 -1 -1 1 -1 -1 1 -1 -1 -1 0 1 -1 -1 0 1 1 -1 1 -1 -1 -1 -1 1 -1 -1 1 -1 -1 -1 1 -1 -1 0 -1 1 0 1 1 1 -1 -1 -1 1 1 1 1 -1 0 1 1 1 -1 1 1 1 -1 1 -1 -1 -1 1 1 1 -1 1 1 1 -1 1 1 - 1 -1 -1 1 1 -1 1 1 -1 1 1 -1 -1 1 1 0 1 1 1 1 1 1 1 1 1] |
| | 6 | [-1 0 1 1 1 1 1 -1 1 -1 -1 1 1 0 1 1 1 -1 -1 1 1 1 1 -1 0 -1 1 -1 1 -1 -1 -1 -1 -1 -1 -1 -1 1 1 1 -1 1 1 -1 1 1 0 1 -1 0 -1 -1 1 1 1 1 -1 -1 -1 1 1 -1 1 1 1 1 -1 1 1 0 -1 1 1 0 0 1 -1 1 1 1 1 0 1 0 -1 1 1 1 1 1 1 -1 1 1 1 -1 1 -1 1 1 1 -1 1 -1 -1 1 1 -1 1 -1 1 -1 1 1 1 -1 1 1 1 1 -1 1 1 0 -1 -1 1 1 -1 -1 1 1 -1 1 1 1 1 -1 -1 -1 1 1 1 -1 0 1 1 1 -1 -1 -1 1 1 -1 -1 -1 -1 -1 -1] |
| | 7 | [1 1 -1 -1 1 1 1 0 1 0 1 -1 -1 1 1 -1 -1 1 0 1 1 -1 1 0 1 -1 1 1 -1 1 1 0 1 -1 1 1 -1 -1 1 1 1 1 1 1 0 1 -1 -1 -1 -1 1 -1 1 -1 1 -1 1 1 1 -1 0 -1 1 -1 1 1 1 1 1 -1 1 1 1 -1 1 1 1 1 -1 -1 1 1 -1 1 -1 1 1 -1 1 -1 1 1 -1 1 -1 1 1 1 1 1 1 1 -1 - 1 -1 -1 1 1 0 0 -1 -1 -1 1 1 1 -1 1 1 -1 -1 1 1 1 -1 1 -1 -1 1 0 -1 -1 -1 1 1 0 -1 -1 0 1 1 -1 1 -1 1 1 -1 1 -1 1 1 1 1 1 -1 1 1 1] |
| | 8 | [1 -1 0 -1 -1 -1 1 1 1 1 0 1 -1 1 1 -1 1 1 1 1 -1 1 1 -1 1 -1 -1 1 1 -1 0 1 1 -1 0 -1 1 1 1 1 -1 1 1 -1 1 -1 -1 1 1 -1 1 1 1 1 1 1 1 1 -1 -1 1 1 1 1 1 -1 1 1 1 1 1 -1 1 1 -1 1 1 1 -1 -1 1 1 1 -1 -1 1 -1 -1 -1 -1 1 0 -1 -1 1 1 1 1 1 0 -1 -1 1 1 -1 -1 1 0 1 1 1 -1 1 -1 1 1 -1 -1 -1 -1 1 0 -1 -1 1 1 -1 0 -1 1 1 1 1 1 1 -1 1 1 -1 1 1 1 1 -1 -1 1 1 1 1 -1 -1 -1 1 1 -1 0 0 1 0 -1 1 1 1 1 -1 -1] |
| | 9 | [-1 1 1 -1 -1 -1 1 1 1 -1 -1 1 0 -1 1 1 1 1 1 1 1 1 -1 -1 -1 1 1 1 1 1 -1 1 1 -1 1 1 1 1 1 1 -1 1 1 -1 1 1 1 1 1 -1 1 0 1 1 1 -1 1 1 -1 1 1 -1 1 1 -1 -1 1 -1 0 -1 -1 1 -1 1 -1 1 1 1 -1 1 1 1 1 -1 1 0 1 0 0 1 1 1 1 -1 -1 0 -1 -1 -1 1 1 1 -1 1 1 1 - 1 1 1 -1 -1 0 -1 1 1 1 -1 -1 -1 1 1 1 1 -1 1 1 -1 1 1 1 -1 -1 1 1 0 -1 1 1 1 0 1 - 1 -1 1 1 0 -1 -1 -1 -1 1 1 0 -1 1 1 1 1 -1 1 1 -1 1 1 -1] |
| | 10 | [-1 -1 1 1 1 1 -1 0 1 0 0 -1 1 -1 -1 -1 1 1 1 -1 1 1 -1 1 -1 1 1 1 1 -1 1 1 -1 1 1 1 1 1 1 -1 0 -1 1 1 -1 -1 1 0 -1 -1 -1 1 1 -1 -1 1 -1 1 1 1 0 -1 -1 1 1 -1 -1 1 0 1 1 1 1 -1 -1 1 0 -1 -1 1 1 1 -1 -1 1 1 1 -1 1 1 -1 1 1 1 1 1 -1 1 1 1 1 1 -1 -1 1 1 1 1 1 1 1 1 1 -1 1 1 -1 -1 1 -1 1 -1 -1 1 -1 1 1 1 1 -1 1 0 -1 1 1 1 0 -1 1 1 -1 -1 1 1 -1 1 1 1 1 -1 1 1 -1 1 1 0 1 1 1 1 -1 -1 -1 0 -1 1 1] |

In this embodiment of this application, in the scenario in which the coherent receiving device and the non-coherent receiving device coexist, the first sequence is any one of the ternary sequences shown in Table 11 or Table 12. If the second device is the coherent receiving device, the first device may use the first sequence as a sending sequence to generate the first UWB signal, and the second device may use the first sequence as a local reference sequence to process the first UWB signal. Because the cross-correlation between the first sequence and the another sequence in the first sequence set is less than the third threshold, there is a low cross-correlation between a sending sequence used by a device (namely, a non-target sending device) other than the first device and the local reference sequence of the second device. This can suppress an interference signal corresponding to the non-target sending device, and reduce inter-user interference.

If the second device is the non-coherent receiving device, the first device may use the first sequence or the first binary sequence corresponding to the first sequence as a sending sequence to generate the first UWB signal, and the second device may use the second binary sequence corresponding to the first sequence as a local reference sequence to process the first UWB signal. Because the cross-correlation between the first binary sequence corresponding to the first sequence and the second binary sequence corresponding to the another sequence in the first sequence set is less than the first threshold, there is a low cross-correlation between a sending sequence used by a device (namely, a non-target sending device) other than the first device and the local reference sequence of the second device. This can suppress an interference signal corresponding to the non-target sending device, and reduce inter-user interference.

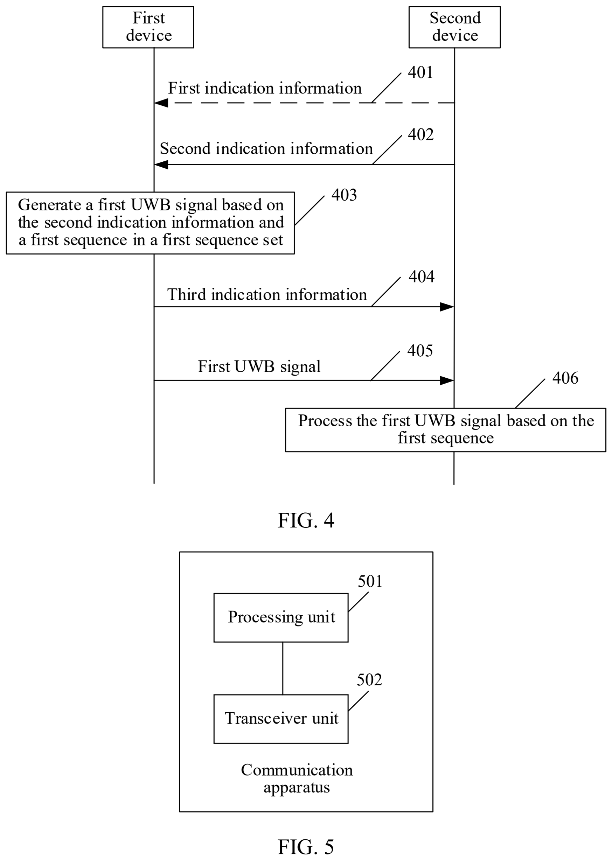

FIG. 4 is a diagram of interaction of another communication method according to an embodiment of this application. As shown in FIG. 4, the communication method includes but is not limited to the following steps.

In a possible implementation, the method shown in FIG. 4 includes step 401.

401: A second device sends first indication information, and correspondingly, a first device receives the first indication information. The first indication information indicates whether the second device is a coherent receiving device or a non-coherent receiving device.

For example, the second device may indicate, by using the first indication information, that the second device is the coherent receiving device or the non-coherent receiving device, so that the first device determines a parameter of a SYNC field in a first UWB signal based on different receiver types. The parameter of the SYNC field may include a parameter of a preamble symbol in the SYNC field. For example, the parameter of the preamble symbol may include at least one of the following: a length of a first sequence, information about a time interval between two adjacent elements in the first sequence, a quantity of repetitions of the preamble symbol, and the like.

402: The second device sends second indication information, and correspondingly, the first device receives the second indication information. The second indication information indicates channel information or multipath delay spread information between the first device and the second device.

For example, when the second device is the non-coherent receiving device, the second device performs square processing on a received signal. In a multipath channel environment, if a time interval between adjacent elements in the first sequence in the first UWB signal sent by the first device is less than a maximum multipath delay spread, interference between adjacent elements exists in the signal received by the second device. As a result, interference between different elements cannot be eliminated in a sequence correlation manner after the second device squares the received signal, and performance deteriorates. Therefore, the second device may send the second indication information to the first device, and report the channel information or the multipath delay spread information between the first device and the second device to the first device by using the second indication information. After receiving the second indication information, the first device may determine, based on the channel information or the multipath delay spread information, the time interval between adjacent elements in the first sequence (or referred to as a time interval between adjacent transmit pulses in the SYNC field). This can avoid a case in which the interference between different elements cannot be eliminated in the sequence correlation manner after the second device squares the received signal, thereby improving performance.

403: The first device generates the first UWB signal based on the second indication information and the first sequence in a first sequence set.

For example, when the second device is the coherent receiving device, the first sequence is a ternary sequence whose elements belong to {0, 1, -1}. For example, the first sequence may be any one of the ternary sequences shown in Table 11 or Table 12.

When the second device is the non-coherent receiving device, the first sequence is a ternary sequence whose elements belong to {0, 1, -1}. For example, the first sequence may be any one of the ternary sequences shown in Table 2, Table 3, Table 4, Table 5, Table 11, or Table 12. Alternatively, the first sequence is a binary sequence whose elements belong to {0, 1}. For example, the first sequence may be any one of the binary sequences shown in Table 6, Table 7, Table 8, or Table 9.

The first device determines the parameter of the SYNC field (or the parameter of the preamble symbol) in the first UWB signal based on the second indication information, for example, the length of the first sequence, the time interval between adjacent elements in the first sequence, and the quantity of repetitions of the preamble symbol, and generates the preamble symbol based on the first sequence, to generate the first UWB signal. For example, the parameter of the SYNC field may be shown in Table 13. Table 13 shows SYNC parameters corresponding to a first sequence whose length is 121 or 133. As shown in Table 13, when the length of the first sequence is 121, the time interval between two adjacent elements in the first sequence may be 32 chips, duration of the preamble symbol in the SYNC field is 7756.4 nanoseconds (nanosecond, ns), the preamble symbol is repeated for eight times in the SYNC field, and duration of the SYNC field is 62.1 microseconds (microsecond, $\mu$s).

Table 13

| Length of a first sequence | Time interval L between two adjacent elements in the first sequence | Duration of a preamble symbol (ns) | Quantity of repetitions of the preamble symbol | SYNC duration ($\mu$s) |
|---|---|---|---|---|
| 121 | 32 | 7756.4 | 8 | 62.1 |
| 121 | 64 | 15512.8 | 4 | 62.1 |
| 133 | 32 | 8525.6 | 8 | 68.2 |
| 133 | 64 | 17051.3 | 4 | 68.2 |

It may be understood that a parameter of the SYNC field shown in Table 13 is merely an example, and the parameter of the SYNC field shown in Table 13 should not be understood as a limitation on this application.

404: The first device sends third indication information, and correspondingly, the second device receives the third indication information. The third indication information indicates the parameter corresponding to the preamble symbol in the first UWB signal, the preamble symbol is the preamble symbol generated based on the first sequence, and the parameter corresponding to the preamble symbol includes at least one of the following: the length of the first sequence, the information about the time interval between two adjacent elements in the first sequence, or the quantity of repetitions of the preamble symbol.

For example, the first device sends the third indication information to the second device, so that the second device can process the received first UWB signal based on the third indication information.

405: The first device sends the first UWB signal, and correspondingly, the second device receives the first UWB signal.

It may be understood that a sequence of step 405 and step 404 is not limited in this application. To be specific, the first device may first send the third indication information, and then send the first UWB signal. Alternatively, the first device may first send the first UWB signal, and then send the third indication information. Alternatively, the first device may simultaneously send the first UWB signal and the third indication information.

406: The second device processes the first UWB signal based on the first sequence.

For example, when the second device is the coherent receiving device, the second device may generate a local preamble symbol based on the first sequence, and perform sliding correlation on the local preamble symbol and the first UWB signal, to implement synchronization, ranging, and the like. When the second device is the non-coherent receiving device, the second device may generate a local preamble symbol based on a second binary sequence corresponding to the first sequence, and perform sliding correlation on the local preamble symbol and the first UWB signal, to implement synchronization, ranging, and the like.

In this embodiment of this application, the second device may report a receiver type and the channel information or the multipath delay spread information of the second device to the first device, so that the first device can determine the parameter of the SYNC field in the first UWB signal based on the receiver type, the channel information, or the multipath delay spread information. This can avoid the case in which the interference between different elements cannot be eliminated in the sequence correlation manner after the second device squares the received signal, thereby improving performance.

The following describes communication apparatuses provided in embodiments of this application.

FIG. 5 is a diagram of a structure of a communication apparatus according to an embodiment of this application. As shown in FIG. 5, the communication apparatus includes a processing unit 501 and a transceiver unit 502.

In some embodiments of this application, the communication apparatus may be the first device shown above or a chip, and the chip may be used in the first device. In other words, the communication apparatus may be configured to perform steps, functions, or the like performed by the first device in the foregoing method embodiments.

In some other embodiments of this application, the communication apparatus may be the second device shown above, a chip in the second device, or the like. In other words, the communication apparatus may be configured to perform steps, functions, or the like performed by the second device in the foregoing method embodiments.

The foregoing describes the first device and the second device in embodiments of this application. The following describes possible product forms of the first device and the second device. It should be understood that any form of product that has a function of the first device in FIG. 5 or any form of product that has a function of the second device in FIG. 5 falls within the protection scope of embodiments of this application. It should be further understood that the following descriptions are merely examples, and product forms of the first device and the second device in embodiments of this application are not limited thereto.

In a possible implementation, in the communication apparatus shown in FIG. 5, the processing unit 501 may be one or more processors. The transceiver unit 502 may be a transceiver, or the transceiver unit 502 may be a sending unit and a receiving unit. The sending unit may be a transmitter machine, the receiving unit may be a receiver machine, and the sending unit and the receiving unit are integrated into one component, for example, a transceiver. In a process of performing the foregoing method, a process of sending information in the foregoing method may be understood as a process of outputting the information by the processor. When outputting the information, the processor outputs the information to the transceiver, so that the transceiver transmits the information. After the information is output by the processor, other processing may further need to be performed on the information before processed information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed on the information before processed information is input into the processor.

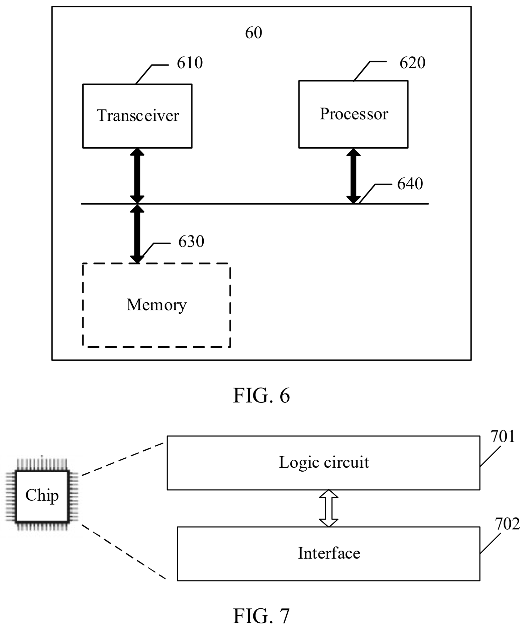

As shown in FIG. 6, a communication apparatus 60 includes one or more processors 620 and a transceiver 610. For example, the communication apparatus may be configured to perform steps, methods, or functions performed by the first device, or the communication apparatus may be configured to perform steps, methods, or functions performed by the second device.

In various implementations of the communication apparatus shown in FIG. 6, the transceiver may include a receiver and a transmitter. The receiver is configured to perform a receiving function (or operation). The transmitter is configured to perform a transmitting function (or operation). The transceiver is configured to communicate with another device/apparatus through a transmission medium.

Optionally, the communication apparatus 60 may further include one or more memories 630, configured to store program instructions, data, and/or the like. The memory 630 is coupled to the processor 620. The processor 620 may cooperate with the memory 630. The processor 620 may execute the program instructions stored in the memory 630. Optionally, at least one of the one or more memories may be included in the processor. For example, the memory may be used for a first sequence set and the like.

In embodiments of this application, a specific connection medium among the transceiver 610, the processor 620, and the memory 630 is not limited. In embodiments of this application, in FIG. 6, the memory 630, the processor 620, and the transceiver 610 are connected to each other through a bus 640. The bus is represented by using a thick line in FIG. 6. A manner of connection between other components is merely an example for description, and is not limited thereto. The bus may be classified into an address bus, a data bus, a control bus, and the like. For ease of representation, only one thick line is for representing the bus in FIG. 6, but this does not mean that there is only one bus or only one type of bus.

It may be understood that the communication apparatus shown in embodiments of this application may further have more components than those in FIG. 6, or the like. This is not limited in embodiments of this application. The methods performed by the processor and the transceiver are merely examples. For specific steps performed by the processor and the transceiver, refer to the methods described above.

In another possible implementation, in the communication apparatus shown in FIG. 5, the processing unit 501 may be one or more logic circuits, and the transceiver unit 502 may be an input/output interface, which is also referred to as a communication interface, an interface circuit, an interface, or the like. Alternatively, the transceiver unit 502 may be a sending unit and a receiving unit. The sending unit may be an output interface, and the receiving unit may be an input interface. The sending unit and the receiving unit are integrated into one unit, for example, an input/output interface. As shown in FIG. 7, a communication apparatus includes a logic circuit 701 and an interface 702. In other words, the processing unit 501 may be implemented through the logic circuit 701, and the transceiver unit 502 may be implemented through the interface 702. The logic circuit 701 may be a chip, a processing circuit, an integrated circuit, a system on chip (system on chip, SoC), or the like. The interface 702 may be a communication interface, an input/output interface, a pin, or the like. For example, FIG. 7 is an example in which the communication apparatus is a chip. The chip includes the logic circuit 701 and the interface 702.

It may be understood that the chip shown in embodiments of this application may include an ultra-bandwidth chip, and the foregoing step of sending a UWB signal or receiving a UWB signal may be performed by the ultra-bandwidth chip.

In embodiments of this application, the logic circuit and the interface may be coupled to each other. A specific manner of connection between the logic circuit and the interface is not limited in embodiments of this application. For ease of description, the following uses a narrowband chip as an example for description. However, this should not be construed as a limitation on embodiments of this application. For example, after the narrowband chip outputs a sensing signal, the ultra-bandwidth chip may send the sensing signal. For example, after receiving the sensing signal, the ultra-bandwidth chip may send the sensing signal to the narrowband chip.

For example, the communication apparatus may be configured to perform steps, methods, or functions performed by the first device, or the communication apparatus may be configured to perform steps, methods, or functions performed by the second device.

Optionally, the chip shown in FIG. 7 may further include a memory, and the memory may be used for a first sequence set and the like.

It may be understood that the communication apparatus shown in embodiments of this application may implement the method provided in embodiments of this application in a form of hardware, or may implement the method provided in embodiments of this application in a form of software. This is not limited in embodiments of this application.

For specific implementations of the embodiments shown in FIG. 7, refer to the foregoing embodiments. Details are not described herein again.

An embodiment of this application further provides a wireless communication system. The wireless communication system includes a first device and a second device. The first device and the second device may be configured to perform the method in any one of the foregoing embodiments (for example, FIG. 3 and FIG. 4).

In addition, this application further provides a computer program. The computer program is configured to implement operations and/or processing performed by the first device or the second device in the method provided in this application.

This application further provides a computer-readable storage medium. The computer-readable storage medium stores computer code. When the computer code is run on a computer, the computer is enabled to perform operations and/or processing performed by the first device or the second device in the method provided in this application.

This application further provides a computer program product. The computer program product includes computer code or a computer program. When the computer code or the computer program is run on a computer, operations and/or processing performed by the first device or the second device in the method provided in this application are/is performed.

In several embodiments provided in this application, it should be understood that the disclosed systems, apparatuses, and methods may be implemented in other manners. For example, the apparatus embodiments described above are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, in other words, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes a plurality of instructions for instructing a computer device (which may be a personal computer, a server, or a network device) to perform all or a part of the steps of the methods described in embodiments of this application. The storage medium includes various readable media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A communication method, comprising:

    generating, by a first device, a first ultra-wideband UWB signal based on a first sequence in a first sequence set, wherein the first sequence set comprises at least two 121-length sequences, at least two 133-length sequences, at least two 73-length sequences, or at least two 91-length sequences; and
    the first sequence set meets: an element in any sequence in the first sequence set belongs to {0, 1, -1}, a second sequence and a third sequence are any two different sequences in the first sequence set, and a cross-correlation between a first binary sequence corresponding to the second sequence and a second binary sequence corresponding to the third sequence is less than a first threshold, wherein the first binary sequence corresponding to the second sequence is determined based on the second sequence, an element in the first binary sequence corresponding to the second sequence belongs to {0, 1}, the second binary sequence corresponding to the third sequence is determined based on the third sequence, an element in the second binary sequence corresponding to the third sequence belongs to {1, b}, and b is an integer not equal to -1; or
    the first sequence set meets: an element in any sequence in the first sequence set belongs to {0, 1}, a second sequence and a third sequence are any two different sequences in the first sequence set, and a cross-correlation between the second sequence and a second binary sequence corresponding to the third sequence is less than a second threshold, wherein the second binary sequence corresponding to the third sequence is determined based on the third sequence, an element in the second binary sequence corresponding to the third sequence belongs to {1, b}, and b is an integer not equal to -1; and
    sending, by the first device, the first UWB signal to a second device.

2.  The method according to claim 1, wherein the second device is a non-coherent receiving device, and generating, by the first device, the first ultra-wideband UWB signal based on the first sequence in the first sequence set comprises:
    generating, by the first device, the first UWB signal based on a first binary sequence corresponding to the first sequence, wherein the first binary sequence corresponding to the first sequence is determined based on the first sequence, and an element in the first binary sequence corresponding to the first sequence belongs to {0, 1}.

3. The method according to claim 1 or 2, wherein the method further comprises:
receiving, by the first device, first indication information from the second device, wherein the first indication information indicates whether the second device is a coherent receiving device or a non-coherent receiving device.

4. The method according to any one of claims 1 to 3, wherein the method further comprises:

receiving, by the first device, second indication information from the second device, wherein the second indication information indicates channel information or multipath delay spread information between the first device and the second device; and
generating, by the first device, the first ultra-wideband UWB signal based on the first sequence in the first sequence set comprises:
generating, by the first device, the first UWB signal based on the second indication information and the first sequence in the first sequence set.

5. The method according to any one of claims 1 to 4, wherein the method further comprises:
sending, by the first device, third indication information to the second device, wherein the third indication information indicates a parameter corresponding to a preamble symbol in the first UWB signal, the preamble symbol is a preamble symbol generated based on the first sequence, and the parameter corresponding to the preamble symbol comprises at least one of the following:

a length of the first sequence;
information about a time interval between two adjacent elements in the first sequence; or
a quantity of repetitions of the preamble symbol.

6. A communication method, comprising:

receiving, by a second device, a first ultra-wideband UWB signal from a first device, wherein the first UWB signal is generated based on a first sequence, the first sequence is comprised in a first sequence set, and the first sequence set comprises at least two 121-length sequences, at least two 133-length sequences, at least two 73-length sequences, or at least two 91-length sequences; and
the first sequence set meets: an element in any sequence in the first sequence set belongs to {0, 1, -1}, a second sequence and a third sequence are any two different sequences in the first sequence set, and a cross-correlation between a first binary sequence corresponding to the second sequence and a second binary sequence corresponding to the third sequence is less than a first threshold, wherein the first binary sequence corresponding to the second sequence is determined based on the second sequence, an element in the first binary sequence corresponding to the second sequence belongs to {0, 1}, the second binary sequence corresponding to the third sequence is determined based on the third sequence, an element in the second binary sequence corresponding to the third sequence belongs to {1, b}, and b is an integer not equal to -1; or
the first sequence set meets: an element in any sequence in the first sequence set belongs to {0, 1}, a second sequence and a third sequence are any two different sequences in the first sequence set, and a cross-correlation between the second sequence and a second binary sequence corresponding to the third sequence is less than a second threshold, wherein the second binary sequence corresponding to the third sequence is determined based on the third sequence, an element in the second binary sequence corresponding to the third sequence belongs to {1, b}, and b is an integer not equal to -1; and
processing, by the second device, the first UWB signal based on the first sequence.

7. The method according to claim 6, wherein the second device is a non-coherent receiving device, and that the first UWB signal is generated based on the first sequence comprises:
the first UWB signal is generated based on a first binary sequence corresponding to the first sequence, the first binary sequence corresponding to the first sequence is determined based on the first sequence, and an element in the first binary sequence corresponding to the first sequence belongs to {0, 1}.

8. The method according to claim 7, wherein the second device is the non-coherent receiving device, and processing, by the second device, the first UWB signal based on the first sequence comprises:
processing, by the second device, the first UWB signal based on a second binary sequence corresponding to the first sequence, wherein the second binary sequence corresponding to the first sequence is determined based on the first sequence, and an element in the second binary sequence corresponding to the first sequence belongs to {1, b}.

9. The method according to any one of claims 6 to 8, wherein the method further comprises:
sending, by the second device, first indication information to the first device, wherein the first indication information indicates whether the second device is a coherent receiving device or a non-coherent receiving device.

10. The method according to any one of claims 6 to 9, wherein the method further comprises:
sending, by the second device, second indication information to the first device, wherein the second indication information indicates channel information or multipath delay spread information between the first device and the second device.

11. The method according to any one of claims 6 to 10, wherein the method further comprises:
receiving, by the second device, third indication information from the first device, wherein the third indication information indicates a parameter corresponding to a preamble symbol in the first UWB signal, the preamble symbol is a preamble symbol generated based on the first sequence, and the parameter corresponding to the preamble symbol comprises at least one of the following:

a length of the first sequence;
information about a time interval between two adjacent elements in the first sequence; or
a quantity of repetitions of the preamble symbol.

12. The method according to any one of claims 1 to 11, wherein a length of the first binary sequence corresponding to the second sequence is equal to a length of the second sequence, locations of elements 1 in the first binary sequence corresponding to the second sequence are the same as locations of an element -1 and an element 1 in the second sequence, and a location of an element 0 in the first binary sequence corresponding to the second sequence is the same as a location of an element 0 in the second sequence;

a length of the second binary sequence corresponding to the third sequence is equal to a length of the third sequence, a location of an element b in the second binary sequence corresponding to the third sequence is the same as a location of an element 0 in the third sequence, and locations of elements 1 in the second binary sequence corresponding to the third sequence are the same as locations of an element 1 and an element -1 in the third sequence; and/or
a length of the second binary sequence corresponding to the third sequence is equal to a length of the third sequence, a location of an element b in the second binary sequence corresponding to the third sequence is the same as a location of an element 0 in the third sequence, and a location of an element 1 in the second binary sequence corresponding to the third sequence is the same as a location of an element 1 in the third sequence.

13. The method according to any one of claims 1 to 12, wherein b is determined based on N and M, N is the length of the third sequence, and M is a quantity of elements 0 in the third sequence.

14. The method according to claim 13, wherein b, N, and M satisfy the following formula:

$$b = -\left\lfloor \frac{N-1-M}{M} \right\rfloor.$$

15. The method according to any one of claims 1 to 14, wherein a cross-correlation between the second sequence and the third sequence is less than a third threshold, and the first sequence set comprises at least two 121-length sequences or at least two 133-length sequences.

16. The method according to claim 15, wherein the first sequence set comprises the at least two 121-length sequences, and an element in any sequence in the first sequence set belongs to {0, 1, -1}; and

a sequence in the first sequence set is obtained by performing any cyclic shift on at least two of the following sequences:

[1 0 1 -1 0 0 0 -1 0 1 1 1 0 0 1 1 -1 -1 1 1 1 -1 1 1 -1 -1 1 -1 0 -1 -1 -1 1 1 0 1 -1 0 1 1 -1 0 -1 0 1 -1 -1 -1 1 1 -1 0 0 0 0 -1 1 0 -1 1 -1 -1 -1 1 1 1 1 0 1 -1 0 0 0 -1 1 0 0 -1 0 -1 0 1 0 1 1 1 1 0 0 -1 1 1 0 1 1 -1 0 1 0 1 1 1 -1 0 -1 0 0 -1 0 -1 -1 0 1 1 -1 1 -1 -1 1 0 0 0 1 1 0 1],
[0 1 -1 1 -1 0 -1 0 1 -1 0 -1 0 1 0 1 -1 1 1 0 1 0 0 -1 1 0 -1 1 0 0 1 0 1 -1 1 0 1 0 1 1 1 -1 0 1 1 1 1 -1 1 -1 1 1 1 -1 1 -1 0 0 -1 -1 1 1 1 0

1111-1-10-1000-11001-11-1-1011101-1-101110011-110-110-1-1-1-1-11-1001-1-1-1010 0 0 0 0],

[-111-100-1-1-110-111-1-100110-1-1-100-1-111111001-1010110100101-111-1-100010 10-10101-101100111-1-100-10001-1-10-1-11-11-11-11011-1-1-111-11-10-110-100011 0 1 0 1],

[-1010-1-111-10-10011111-110-10-10-111100-10-11-1-10110-1100-11-10-1-1-1-1-101-1 00-11101111-1-1100110-11-11110-11-110001-1-11011-10111-110-1101000000-101001 -1],

[01000-1111101-1111-11100-1-11-10-10-110011-11-1-1011-1-110101-10-10-10-1-11 -11-10-1-10011-10100-1-11011110000011-111-1-1011-10-101-101-1-11001100110-10 0 -1 0],

[-1000110100010-11-101-1-1-1111100-1000-10-1100-11-1-1-10-1-11001-10-1-10111-10 11001110-10100-1-111-10-10-1011-11-11101-11-10-111-111-1-101-101011111-110000 1 -1],

[1000110011100101011-11-1-111-10-1-10111-100001-1-101010110-1-1-1-1100-101-1 -1010-1111-1-11011-11-1-1-1-10-111001011-11-11-10-1100-100-101-111-1-100-11-100 1 1 0],

[110-1-11011-10010-1-10-11-111000-111111-1-1-1-100001-11000-10-11-1-10-100-1-1 -1-1111-1111-1110-10110-11011-10-11-111011-1010-1100-111-101-110-10-100101001 1 0 0],

[-11-1-1011-100011001-1101010-1-10-101011-1010111-1-100-111-1111-10000-110-10 0-11001111-1-1-110-1-1-101-10-1-1-1-1-110-1111-1101-1-1101101-10101-1011000001 -1 1],

[0001000111-10-1-110-1-11-10100101-10111-111-1-1-11-110-1011-11-11110100-1-10-1 011100101-10011-1-1101111-1-11010-101-1101-1000-1-10-1-1001-1-1-1-100011-110 -1 1],

[-100000111-1-1-10-111-1-1010001-1-1-110-10-1010011100-1-101110111-11000110-1 1-101-10100-110110-111-101111-11-1-11-1-1-1-110-10-1101001-11-101-1-1001-11010 1], and

[-1-10000110-11111101010-1101101-111-1-11-1-11-1-100110-1011110001-1-1-11-110 1-11-1-11010-10101-1001-1-1100-101-110111-1-1-1-100110-1-11-10-100-10011-101-1 0 0 0];

a sequence in the first sequence set is obtained by performing any cyclic shift on at least two of the following sequences:

[-11101001-10111111-10100-110101-101-1-11-11-1100110-101-110-1-1-1-1000111-11 -1-1-111-1-1-1-101-11-1011000-1001010-11-10010-111000111-10010-1011-1-1-1-100 -1 1 0],

[01100-11-100-1-111-110-100-1001-10-11-11-111010011-10-1-1-1-11-11101-1-1111-10 10-1-110-1001-1-1-1-101101010-1-110000-11110-1-10-111-1-11-11101010011100110 0 0 1],

[-10-100100-1100-10-1-110-1-100-110-101001-1-11110-1000001-1-1-10-11-101-11111 1011-110-1010-1101-1-1111-1001-1-1-100111000-1-1011110-111-11-110-11111010-11 -1 1],

[-10-10-10-1000-1110-110-10011-1-101111100-1-1-1111-1001-1-10-101101010-110-1-11 0-1-100111-111-1111-110110100-1001-1-11-111-11-11011001-11-1-110000-11100-1-1 0],

[1-100-1-1100101011000010 0111-110-1001-11-1-11-101-10-1111-11011-10-10110011 0-1-100111-111-10111-1-10-10-101-1-1-1100-1-1-1001011-1-11-1-1-11-110100011010 -1 -1],

[10101-1100-1-110-11-1100101-10-101-1-1-1-1-11-1-11-111110-111-101101-10010-110 -11-10110001-111101110-1-1001110010-10-101-1-1-1100010-1-111-10-1-1-11110000 0 -1],

[1011000-11-1110-1-10-100-10-1111010-111011-1001111010-10-1001-1000-110111-1 -1-11-101-10000-11-1-1-110-10-1110-110 11-1-1-101-1-11-11-111-1-111001110-1000-11 0 1],

[-11-111100-1111-11100-10-11000 11-1101-1000 11-10-1-1-10-1-1-1011-1-1-1-11-1-11101

0 1 0 1 1 0 0 -1 -1 1 -1 1 1 -1 1 0 -1 1 0 1 -1 0 -1 1 -1 -1 1 0 1 0 1 1 0 0 0 -1 0 1 0 0 0 -1 -1 1 1 -1 0 0 1 1 0 1 1 0 -1 0 1 0 0 1 0 -1],

[0 0 -1 0 0 -1 0 1 1 0 0 1 1 0 0 1 -1 -1 1 0 -1 1 0 -1 0 -1 1 1 0 -1 1 1 1 -1 1 1 1 0 0 0 0 0 1 1 1 1 0 1 -1 -1 0 0 1 0 -1 1 1 0 0 -1 -1 0 -1 1 1 1 -1 -1 0 -1 0 -1 0 -1 1 0 1 0 1 -1 -1 1 1 1 0 -1 -1 -1 1 -1 1 1 0 1 1 -1 0 -1 0 -1 1 -1 -1 0 0 1 1 -1 1 1 1 1 -1 1 0 1 1 1 1 -1 1 0 0 0 1],

[1 0 0 0 -1 -1 0 0 -1 -1 1 1 1 1 1 0 1 -1 0 1 1 0 0 1 -1 1 1 1 -1 1 -1 0 -1 1 0 1 1 -1 1 -1 0 -1 0 1 0 1 1 -1 1 1 1 1 -1 1 1 1 0 1 1 -1 0 -1 -1 1 0 1 -1 0 0 0 0 1 1 1 -1 1 1 0 0 0 -1 0 0 -1 0 1 0 0 -1 1 1 1 0 1 1 -1 1 1 -1 0 -1 1 1 1 -1 0 0 0 1 0 -1 -1 0 1 0 -1 0 1 0 1 -1 1 0 1 -1 1 -1 -1 -1 -1 0 -1 -1],

[1 0 0 0 1 0 1 0 -1 1 -1 1 0 0 -1 0 -1 -1 -1 -1 1 1 1 0 1 0 -1 -1 -1 1 1 1 -1 1 -1 1 1 -1 1 1 -1 1 1 -1 1 0 -1 -1 0 1 1 1 -1 1 1 0 0 1 1 -1 0 1 -1 -1 1 1 1 0 0 0 1 1 0 1 0 1 1 0 -1 -1 0 -1 1 1 -1 0 0 1 0 1 1 1 0 0 1 -1 -1 -1 1 1 0 -1 1 1 1 0 0 -1 0 0 1 -1 1 1 0 0 0 -1 0 0 -1 1 0 -1 1 1 0 -1 1 1 -1 -1 1 1 1 1 0 1 0], and

[0 0 1 1 0 0 1 0 1 0 0 -1 0 -1 0 1 -1 1 0 -1 1 1 -1 1 0 0 1 -1 0 1 0 -1 1 1 1 0 1 1 -1 1 1 -1 0 -1 1 1 0 1 -1 1 0 1 1 0 -1 0 1 1 -1 1 1 1 1 -1 1 1 1 -1 1 -1 -1 -1 -1 1 0 0 -1 0 -1 1 1 -1 0 -1 0 0 0 1 -1 1 0 0 0 0 -1 -1 -1 -1 1 1 1 1 1 1 -1 0 0 0 1 1 -1 1 1 -1 0 -1 -1 0 1 0 0 -1 1 1 0 1 -1 1 -1 1 -1 0 1 1]; or

a sequence in the first sequence set is obtained by performing any cyclic shift on at least two of the following sequences:

[-1 -1 1 0 -1 -1 1 1 0 0 0 1 -1 1 -1 0 -1 1 -1 1 1 1 -1 1 1 1 1 0 0 -1 0 1 0 0 0 0 1 1 1 -1 0 -1 1 0 1 0 -1 -1 -1 -1 1 -1 1 0 0 1 -1 1 1 -1 1 1 0 1 0 -1 1 1 1 1 -1 1 -1 1 1 1 1 1 0 -1 1 -1 1 -1 0 1 1 0 0 1 -1 0 1 0 1 1 1 0 1 0 1 0 0 -1 -1 0 -1 1 0 1 -1 1 1 0 -1 1 0 0 1 0 1 -1 1 -1 1 1 0 0 0 -1 0 0],

[1 0 1 0 -1 0 -1 -1 0 1 0 0 1 1 0 1 0 1 0 0 0 1 1 -1 1 1 1 -1 1 1 0 -1 -1 1 0 -1 1 0 1 -1 1 1 -1 1 1 0 0 -1 0 -1 1 0 -1 1 1 1 1 0 1 1 1 -1 1 -1 -1 -1 1 -1 1 1 1 0 1 -1 1 1 1 1 1 1 0 0 1 -1 0 0 -1 0 0 1 -1 1 1 0 1 -1 1 -1 1 0 0 0 0 0 1 0 -1 -1 -1 0 1 -1 0 -1 -1 1 -1 1 -1 0 -1 1 1 1 -1 1 -1 0 1 1 0 0 0 -1 1 1 0 0 -1 -1 -1 -1],

[1 -1 -1 0 1 1 0 0 1 1 1 -1 1 -1 -1 1 1 -1 -1 -1 -1 0 -1 0 1 1 1 1 1 -1 0 0 1 0 1 0 1 1 -1 1 1 0 0 1 -1 1 -1 -1 1 0 1 -1 1 1 0 -1 0 -1 1 0 -1 1 1 1 -1 0 1 -1 0 -1 -1 1 0 0 1 1 -1 0 -1 0 0 0 1 0 -1 1 1 1 1 -1 1 -1 1 1 0 1 1 0 -1 0 1 0 0 1 0 0 -1 1 0 0 0 1 -1 1 1 1 0 0 0 0 1 1 0 1 -1 1 -1 1 0],

[0 1 -1 1 -1 1 1 0 1 1 0 0 0 0 1 1 -1 1 1 0 0 0 1 -1 0 0 1 0 0 1 0 -1 0 1 0 1 1 0 1 1 -1 1 -1 1 1 -1 1 1 1 -1 1 0 1 0 0 0 -1 0 -1 1 1 1 0 0 -1 -1 -1 0 -1 1 1 0 -1 1 1 -1 1 -1 0 1 -1 0 -1 0 1 -1 1 1 0 -1 1 -1 1 1 1 0 1 0 1 0 0 -1 1 1 1 1 1 0 -1 0 -1 -1 -1 -1 1 1 -1 1 -1 1 -1 1 1 1 1 0 0 1 1 0 -1 -1 1 1],

[1 1 0 0 0 -1 0 1 0 1 1 1 -1 0 1 -1 1 1 -1 0 1 -1 1 1 1 0 0 1 0 0 1 -1 1 -1 1 1 -1 0 0 -1 1 -1 -1 -1 -1 1 1 -1 1 1 1 -1 1 -1 1 1 0 1 0 -1 1 0 -1 0 -1 0 1 -1 -1 0 1 0 0 0 1 -1 1 1 0 -1 0 1 1 -1 1 1 1 1 1 1 0 -1 -1 -1 0 -1 -1 1 0 0 -1 1 1 1 1 -1 1 -1 1 0 -1 1 0 0 0 0 1 1 0 0 -1 1 0 1 1 0 1 0 1 0 0 -1 0 -1 1],

[1 -1 1 0 0 1 1 0 0 0 1 0 0 0 0 1 -1 1 1 -1 1 0 -1 1 0 1 -1 0 -1 1 0 -1 1 1 1 0 0 -1 -1 1 -1 1 1 -1 0 -1 0 1 1 -1 0 0 1 0 -1 1 -1 -1 1 1 1 0 -1 0 1 0 0 -1 1 0 0 -1 1 0 1 0 1 0 0 -1 1 0 0 0 -1 1 -1 1 1 -1 1 0 -1 1 -1 -1 -1 -1 1 1 1 1 1 1 0 1 0 1 0 0 1 -1 -1 1 -1 -1 0 -1 0 -1 0 -1 1 1 1 1 -1 0 1 0 1 0 1 1 -1 1 -1 1 1 0 1 1 1 0 0 1 0],

[-1 0 0 0 -1 1 1 0 -1 1 1 1 1 0 -1 0 0 0 1 0 0 1 0 1 -1 1 1 0 1 1 -1 1 1 1 0 0 -1 -1 0 -1 0 -1 -1 1 0 0 -1 -1 1 0 0 1 -1 0 1 -1 1 1 1 -1 -1 1 1 0 1 -1 0 -1 0 -1 0 -1 0 1 -1 0 0 1 0 -1 0 -1 0 1 1 1 1 1 -1 0 1 0 -1 -1 1 1 1 -1 1 1 -1 1 -1 1 1 1 1 1 0 1 -1 1 -1 1 1 -1 0 1 1 0 0 0 0 1 1 1 -1 1 -1 0 -1 0 0 1 -1 1], and

[-1 0 0 0 1 -1 1 -1 1 0 1 0 0 1 -1 0 1 -1 1 0 1 -1 0 -1 1 0 -1 1 -1 0 0 1 0 1 0 1 1 1 0 1 0 -1 1 1 0 0 1 1 0 -1 0 -1 1 1 -1 0 1 1 1 1 1 -1 1 -1 1 1 1 0 1 0 1 0 1 -1 1 1 -1 1 0 0 -1 1 -1 1 -1 -1 -1 -1 0 1 0 0 -1 0 -1 0 -1 1 1 1 1 0 0 0 0 1 0 -1 0 0 1 1 1 -1 1 1 1 -1 1 1 -1 1 -1 0 -1 0 -1 -1 1 0 0 0 1 1 -1 1 -1 0 1 -1 0 0].

17. The method according to claim 15, wherein the first sequence set comprises the at least two 133-length sequences, and an element in any sequence in the first sequence set belongs to {0, 1, -1}; and

a sequence in the first sequence set is obtained by performing any cyclic shift on at least two of the following sequences:

[1 1 0 1 -1 -1 -1 -1 0 -1 1 -1 1 1 1 1 0 0 1 1 -1 0 -1 1 -1 1 1 1 -1 1 -1 1 1 1 1 1 -1 1 1 -1 1 1 1 -1 1 0 -1 1 0 1 1 1 1 -1 1 -1 -1 1 1 -1 1 -1 1 1 1 1 -1 -1 -1 1 1 -1 1 1 1 1 1 1 1 -1 1 1 1 1 1 1 -1 1 -1 1 -1 -1 -1 1 1 -1 1 1 -1 0 1 1 -1 1 -1 1 -1 1 1 -1 0 1 0 -1 0 1 0 1 1 1 1 -1 -1 1 1 1 -1 1 1 1 -1 1 -1],

[1 1 -1 1 0 1 -1 1 -1 1 1 1 1 1 -1 1 -1 1 1 1 1 1 -1 1 1 1 1 -1 0 1 1 1 1 -1 1 -1 1 1 1 1 -1 1 1 1 1 1 -1 1 1 1 1 1 -1 1 1 0 1 1 1 0 0 1 -1 1 1 -1 1 -1 1 -1 1 0 -1 0 1 0 1 1 -1 1 1 -1 1 -1 1 0 1 1 1 -1 1 1 1 0 1 1 1 1 1 -1 1 -1 1 -1 1 -1 1 -1 1 1 1 1 1 1 1 1 -1 1 -1 1 -1 1 0 -1 1 1 0 -1 1 0 1 1 0 -1 1 -1 1 -1],

[-1 1 1 -1 1 1 1 1 -1 1 1 1 1 1 -1 -1 -1 1 1 -1 1 1 1 -1 1 1 -1 1 1 1 1 -1 1 0 1 1 1 1 1 -1 1 1 1 1 -1 1 1 1 -1 1 1 1 1 1 1 1 0 1 0 -1 1 -1 1 -1 1 1 -1 0 1 1 1 1 -1 1 -1 1 1 0 1 -1 1 1 1 0 1 -1 1 1 1 0 -1 1 -1 1 -1 1 -1 1 -1 1 -1 1 -1 1 -1 1 -1 1 -1 1 1 1 -1 1 -1 1 1 1 1 1 0 0 1 -1 0 1 -1 1 1 1 1 -1 1 1 1 -1 -1 0 -1 1 -1 -1 -1 -1 -1],

[-1 -1 -1 1 -1 1 1 -1 1 -1 1 1 1 1 1 -1 1 -1 1 1 1 -1 0 1 -1 0 -1 1 1 -1 1 -1 0 -1 1 -1 1 -1 1 1 1 1 1 1 -1 1 -1 1 -1 1 -1 1 1 1 -1 1 -1 1 1 1 1 0 -1 -1 0 1 -1 1 1 1 1 0 -1 1 -1 -1 1 1 1 0 -1 0 1 1 -1 1 -1 1 -1 1 -1 1 1 1 0 0 1 1 1 0 1 -1 1 -1 1 1 1 1 -1 1 -1 1 1 1 1 1 0 -1 1 -1 1 1 1 1 1 0 -1 -1 1 -1 -1 1 1 1 -1 -1 1 1 0 -1 1 1 1],

[-1 -1 1 1 1 -1 1 -1 1 1 1 1 1 1 1 0 -1 1 -1 1 1 -1 1 -1 1 -1 1 -1 1 1 -1 1 1 -1 1 0 1 0 -1 1 1 -1 1 -1 1 -1 1 -1 1 1 0 -1 1 1 1 -1 1 -1 1 1 -1 1 -1]

-1 -1 -111111 -1111111111 -1 -1111 -1 -11 -1 -1 -111110 -1 -10 -111 -11 -11111 -11 -1 -111 -11 -10 -11 1 0 0 1 1 1 -1 1-1 1 0 -1 -1 -1 -1 1 0 1 1 ]],

[1 -111 -111 -1 -1 -1 -1 -1 -1110 0 1 1 1 0 1 -11 -11 -10 -11 0 1 1 1 1 1 -11111 -111 -1 -1010111 -110 -1 -1 -11 11 -1 -1 -111 -1 -1 -1 -110 -111 -1 -11 -1 -1 -111 -11 -1 -1 -111101 -1 -11 -111 -101111 -1 -11 -1 -11 -110 -1 -1 -11 -1 -11 -11 -11111 -1111 -1],

[1110 -1 -1 -1111 -111111 -1111 -11 -1 -1 -1 -1 -1 -111 -1010 -11 -1 -1 -1111 -1 -11 -101 -1 -111 -111 -11 111 -1101 -1 -11 -1 -1 -111 -1 -1 -11 -1 -1 -1 -11111 -101 -11 -111 -1 -11 -111 -11 -1 -1 -1 -10111 -10 -11 -1 1 1 1 -11 0 1 1 -11 -11 -1 0 1 1 0 0 1 1 ],

[110 -111 -1 -1 -10 -1 -11 -1 -1 -11 -1 -1 -101 -1 -1 -111 -11 -1111 -1 -110 -11110 0 1 0 -111111 -11 -1 -11 0 1 1 -1 -11111 -1 -1 -11 -111 -11 -111 -1 - 11111 -1 -1 -110 -111 -111 -1111 -11 -11 -11 -11 -11111 -10 -1 -11011 -11 -1 -1 -1 -1 -1 0 -1 -1111111],

[11111 -1 -10 -1 -1 -1 -11 -11101 -1 -10 -11111 -11 -11 -11 -11 -1111 -111 -111 -101 -1 -1 -11111 -1 -111 -11 -111 -11 -1 -1 -11111 -1 -11101 -1 -11 -111111 -10100111 -101 -1 -1111 -11 -111 -1 -1 -110 -1 -1 -11 -1 -1 -11 -1 -1 -10 -1 -1 -111 -1011],

[1 -111 -1111 -1 -1 -110111 -1101 -11 -111 -1 -111 -11 -1 -1 -1 -1 -111 -1101 -11 -110111 -1 -1111 -111 -1111110 -1011 -1 -10 -11 -1111100110 -1 -111 -11 -1 -1111111 -1 -11 -1111 -101 -1 -1 -1 -11 -11 -1 -1], and

[-1 -1111111 -11 -11 -1111 -1 -1101 -11 -111 -1 -1 -11 -111 -111111 -11 -11 -110 -1 -10 -1 -11 -111111 -1 0 -10 -1110 -1 -1 -1111 -111 -1 -11111 -11 -1 -110 -11 -1 -1 -1 -10 -1 -1 -1011 -1 -11 -1 -1110 -11111 -11 0 0 1 -1 -11 -1 1 1 1 1 1 -1 -1 1 1]; or

a sequence in the first sequence set is obtained by performing any cyclic shift on at least two of the following sequences:

[1111111111 0 1 -1 -11 -11 -11 -1 -1 -11 -111 -111 -1 -11 -111 -11110 -1111 -1 -1 -111101 -10 -1 -11 -11 -1 -11 -1 -1 -11 -1110 -1 -110 -1 -1 -11 -1 -11 -1 -1 -1111 -1111 -1 -11 -10101111 -11000 11 -1 -101 -111111 -1 -1 -1101 -11 -1 -111 -1 -1 -1 -1],

[1 0 0 1 -111 -1 -1 -1 -1 -1 -1 -111111 -11 -11 -1111 -10 -11111 -11 -1 -1 -110 -1 -1 -1 -111 -11011 -111 -11 -1 -1111 -1 -1 -1 -11 -11 -1 -11110 -1 -111 -1 -1 -10 -11 -111 -1 -11 -11 -1111111 -11 -10111 -1110 -1 1 1 0 1 0 1 1 0 -111 -111 -1 -111 -1 -1]],

[-1 -111 -1 -111 -111 -101101011 -1011 -11110 -11 -1111111 -11 -11 -1 -111 -11 -10 -1 -1 -111 -1 -10 111 -1 -11 -11 -1 -1 -1 -1111 -1 -11 -111 -11101 -111 -1 -1 -1 -1 -101 -1 -1 -11 -11111 -10 -1111 -11 -11 -11 1 1 1 1 -1 -1 -1 -1 -1 -1 -111 -11 0 0 1 ],

[-11 -11 -1111 -101 -1 -1 -1 -101 -1 -11011 -101 -1 -111 -11 -1111 -1 -1 -111 -10 -1 -11 -111 -111 -1 -1 -1 0 -1 -111110010 -1111 -111 -1 -11 -1 -1 -10 -1 -11 -11 -11 -11110 -11111 -11 -111111 -11 -11111 -1 -1 -11111111 -10 -1 -111 -1 -1 -11 -1],

[-1 -1 -1 -111 -1 -11 -1101 -1 -1 -111111 -110 -1 -111001 -11111010 -11 -1 -1111 -1111 -1 -1 -11 -1 -11 -1 -1 -101 -1 -1011 -11 -1 -1 -11 -1 -11 -11 -1 -10 -110111 -1 -1 -1111 -10111 -111 -11 -1 -111 -111 -11 -1 -1 -11 -11 - 11 -1 -1101111111111],

[-1011111 -11 -1 -1110111 -1 -1111 -10 -11 -1 -1 -1 -1 -1 -111 -11 -1101 -10 -1 -1111 -1 -1 -11 -1111 -11 0 -111001 -1111010 -111111 -111 -11 -111 -11 -1 -11 -11 -1 -111 -1111 -1110 -1 -11 -1 -11 -1111 -1 -1 -111 -10111 -1 -1 -11 -1 -1 -1 -1 -1],

[11 -1 -11110101 -1 -11 -1 -1011 -101 -11 -1101 -11 -1 -111111101 -1 -1 -11 -11 -11 -111 -10 -11 -111 11 -111 -1111 -1 -11 -1 -11 -1 -11 -1 -11111111 -1 -1 -1 -11100 -1 -1 -111 -11 -1 -111 -1 -1 -10 -1 -1 -110 -1 -1011 -1 -11 -11 -1 -11111 -1111],

[1 -10 -1 -1 -1111101 -11 -1111 -11 -1 -11 -1011 -10 -1111 -11 -1 -11 -1 -11 -11111111 -1 -11111 -1111 1 -11 -111 -1 -111 -1 -10 -1 -111110 -1 -11 -1 -1011 -1 -11 -1 -1 -10 -1 -11 -10 -111111 -11 -1111 -1 -11 -111 -1 - 1 -11 -10010 -1111 -1 -1],

[-11 -1 -1 -111 -1 -10 -11111111 -1 -1 -11111 -11 -111111 -11 -11111 -10111 -11 -11 -11 -1 -10 -1 -1 -11 -1 -111 -1111 -101001111 -1 -10 -1 -1 -111 -111 -11 -1 -10 -111 -1 -1 -1111 -11 -111 -1 -110 -11101 -1 -110 -1 -1 - 1 -110 -1111 -11 -11 -1], and

[-1 -1111 -10100 -11 -1 -1 -111 -11 -1 -1111 -11 -111111 -10 -11 -1 -10 -1 -1 -11 -1 -1110 -1 -11 -1 -101 111 -1 -10 -1 -111 -1 -111 -11 -11111 -11111 -1 -11111111 -11 -1 -11 -1 -11 -1111 -10 -1110 -11 -1 -11 -1111 -11 -1101111 -1 -1 -10 -11].

18. The method according to any one of claims 1 to 14, wherein the first sequence set comprises at least two 73-length sequences; and

a sequence in the first sequence set is obtained by performing any cyclic shift on at least two of the following sequences:

[1 0 1 1 1 0 1 0 0 -1 1 1 -1 1 1 1 -1 1 1 0 1 -1 -1 -1 1 -1 1 1 0 -1 1 -1 -1 -1 -1 1 -1 1 1 1 -1 -1 -1 1 1 1 1 0 1 -1 1 1 0 -1 -1 -1 1 -1 1 -1 1 1 -1 -1 1 1 1 1 0 -1 1 -1 1 -1 1 0],

[1 1 1 -1 -1 -1 0 -1 -1 0 -1 -1 1 -1 1 1 0 1 -1 1 -1 -1 1 1 0 -1 1 1 0 0 1 1 1 -1 1 1 1 1 -1 -1 -1 1 1 -1 1 0 -1 -1 1 1 1 1 1 -1 0 1 0 1 1 1 1 -1 1 1 -1 -1 -1 1 1 1 -1 1 1 1 1 -1 -1 1 1 -1 1 1 -1 1 1],

[1 1 -1 1 -1 1 1 1 0 -1 1 1 1 1 1 -1 1 1 1 -1 1 1 1 -1 1 1 1 -1 1 1 -1 -1 -1 1 1 1 -1 1 0 -1 1 -1 1 0 1 1 1 -1 -1 1 0 0 -1 -1 1 -1 -1 1 1 0 1 1 1 1 -1 1 1 1 -1 -1 -1 1 1 0 1 0 1 -1 0 -1 -1 -1 1],

[1 0 1 -1 -1 -1 1 1 -1 1 1 1 1 0 1 -1 1 -1 1 -1 -1 -1 0 0 -1 -1 1 1 1 1 0 -1 1 -1 0 -1 1 1 -1 1 -1 -1 1 1 -1 1 1 1 -1 1 1 1 -1 1 1 1 1 1 1 -1 0 1 1 1 -1 1 1 -1 1 1 1 1 -1 -1 -1 1 0 -1 1 1 0],

[1 1 1 -1 -1 1 1 1 -1 -1 -1 1 -1 -1 1 0 1 1 -1 1 0 1 1 1 1 -1 -1 -1 1 1 1 -1 1 -1 -1 1 -1 -1 -1 -1 1 1 -1 0 1 1 -1 1 -1 -1 -1 -1 1 0 1 1 -1 1 1 1 -1 1 1 1 -1 1 0 0 1 0 1 0 1 1 1 0 1 1 -1 1 1 -1 1 1 -1 0 1],

[1 -1 1 1 -1 -1 -1 -1 -1 1 1 -1 0 1 0 -1 -1 0 1 1 -1 0 1 -1 1 1 -1 1 1 0 1 1 1 1 1 -1 1 0 -1 1 -1 1 1 1 1 -1 -1 1 0 0 -1 1 -1 1 1 1 1 1 1 1 -1 -1 -1 1 1 1 1 -1 0 -1 -1 1 1 1 1 -1 1 1 -1 1 -1 1 1],

[1 1 -1 1 1 1 -1 1 -1 1 1 1 1 1 0 0 1 0 -1 1 1 1 1 1 -1 1 -1 0 -1 1 1 -1 1 -1 1 -1 1 1 1 1 -1 1 1 1 1 0 0 1 1 -1 0 1 -1 1 -1 1 1 0 1 -1 1 -1 1 1 -1 1 -1 1 0 -1 -1 1 0 1 1 1 1 1 -1 1 1 -1 1 1 -1 1 1], and

[1 -1 -1 0 -1 1 1 -1 1 1 1 1 1 1 1 -1 1 -1 1 0 0 1 -1 1 1 1 1 -1 1 -1 1 -1 0 1 -1 1 1 1 1 1 1 0 1 -1 1 1 -1 1 0 -1 1 1 1 0 -1 0 1 0 -1 0 1 1 0 1 1 1 1 -1 -1 -1 -1 1 1 -1 1 1 1 1 -1 -1 1 1 -1 1 1]; or

a sequence in the first sequence set is obtained by performing any cyclic shift on at least two of the following sequences:

[1 0 1 1 1 0 1 0 0 1 1 1 1 1 1 1 1 0 1 1 1 1 1 1 1 0 1 1 1 1 1 1 1 1 1 1 1 1 1 1 0 1 1 1 0 1 1 1 1 1 1 1 1 1 1 1 0 1 1 1 1],

[1 1 1 1 1 0 1 1 0 1 1 1 1 0 1 1 1 1 1 0 1 1 0 0 1 1 1 1 1 1 1 1 1 1 1 0 1 1 1 1 1 0 1 0 1 1 1 1 1 1 1 1 1 1 1 1 1 1 1 1 1 1],

[1 1 1 1 1 1 1 0 1 1 1 1 1 1 1 1 1 1 1 1 1 1 1 1 1 0 1 1 0 1 1 1 1 0 0 1 1 1 1 1 0 1 1 1 1 1 1 1 1 0 1 0 1 1 0 1 1 1 1],

[1 0 1 1 1 1 1 1 1 1 1 0 1 1 1 1 1 0 0 1 1 1 1 0 1 1 0 1 1 1 1 1 1 1 1 1 1 1 1 1 1 1 1 1 1 0 1 1 1 1 1 1 1 1 1 0 1 1 0],

[1 1 1 1 1 1 1 1 1 1 1 0 1 1 1 0 1 1 1 1 1 1 1 1 1 1 1 1 1 0 1 1 1 1 1 1 1 0 1 1 1 1 1 1 1 0 0 1 0 1 1 1 0 1 1 1 1 1 1 0 1],

[1 1 1 1 1 1 0 1 0 1 1 0 1 1 0 1 1 1 1 0 1 1 1 1 1 1 0 1 1 1 1 1 1 1 1 0 0 1 1 1 1 1 1 1 1 0 1 1 1 1 1 1 1 1 1 1],

[1 1 1 1 1 1 1 1 1 1 1 0 1 0 1 1 1 1 1 0 1 1 1 1 1 1 1 1 1 0 0 1 1 0 1 1 1 1 0 1 1 1 1 0 1 1 0 1 1 1 1 1 1 1 1 1 1 1],

[1 1 1 0 1 1 1 1 1 1 1 1 1 1 1 0 0 1 1 1 1 1 1 1 1 0 1 1 1 1 1 0 1 1 1 1 0 1 1 0 1 1 0 1 0 1 1 1 1 1 1 1 1 1 1 1 1 1].

19. The method according to any one of claims 1 to 14, wherein the first sequence set comprises at least two 91-length sequences; and

a sequence in the first sequence set is obtained by performing any cyclic shift on at least two of the following sequences:

[0 1 -1 1 -1 0 -1 0 -1 1 1 -1 1 -1 -1 1 1 0 -1 -1 1 1 1 0 -1 1 -1 1 -1 1 1 1 -1 1 -1 1 0 -1 -1 1 1 -1 1 1 1 -1 1 0 1 1 0 0 1 1 -1 1 1 1 -1 1 -1 -1 -1 1 -1 1 1 1 1 1 1 1 -1 0 1 -1 1 -1 1 1 -1 1 1 -1 1 1 1 1 1 1 1 1 -1 1 1 1],

-1 -1 1 1 1 -1 0 1 1 0 0 -1 -1 1 1 1 -1 1 -1 1 1 1 1 -1 1 -1 1 -1 1 -1 -1 1 0 1 1 1 -1 1 1 1 1 1 1 -1 1 -1 1 1 1 -1 1 -1 1 -1 1 1 -1 1 -1 1 -1 1 1 0 -1 1 1 -1 -1 1 0 1 0 1 -1 1 1 1 -1 1 1 1 0 1 -1 1 1 -1 -1 0 1 -1 1 0 1 -1 1 1 -1 1 1 1 0 1 1],

[0 1 -1 1 -1 1 -1 1 1 1 1 1 1 -1 1 1 1 1 -1 1 -1 1 -1 1 -1 1 0 1 -1 1 -1 1 1 -1 1 1 0 1 1 -1 1 1 1 1 1 -1 1 0 -1 1 1 1 1 1 -1 1 1 1 -1 1 -1 1 -1 1 -1 1 -1 1 1 1 -1 1 -1 1 0 1 -1 1 1 1 1 -1 1 -1 -1 -1 1 0 -1 1 1 0 1],

[0 1 -1 1 -1 1 -1 1 1 1 0 -1 1 -1 1 1 -1 1 -1 1 -1 1 -1 1 1 1 -1 1 1 1 1 -1 1 -1 1 1 1 1 1 1 1 0 1 1 1 -1 1 -1 1 1 -1 1 -1 1 0 1 -1 0 1 -1 1 1 1 1 -1 1 1 1 -1 1 1 -1 0 1 -1 0 -1 0 1 1 1 1 -1 1 1 1 -1 1 1 -1 1 -1 -1 1 1 -1 -1 -1 -1 -1 1 1],

[0 1 1 -1 -1 1 1 1 1 0 -1 1 1 1 -1 1 1 1 -1 1 1 1 1 -1 1 1 0 -1 -1 -1 1 1 -1 1 1 -1 1 -1 1 -1 1 -1 1 1 0 -1 1 -1 1 1 0 1 -1 1 1 -1 1 -1 -1 1 1 -1 -1 1 -1 -1 1 1 1 1 1 1 1 1 1 0 0 1 -1 1 -1 0 -1 1 1 0 1 1 1 -1 1 -1 1 -1 1 1 1 -1 1 0 1],

[1 0 -1 1 -1 1 -1 1 -1 1 -1 0 1 -1 1 1 1 -1 1 1 1 -1 1 -1 1 -1 1 -1 1 0 1 -1 1 1 1 1 -1 1 1 1 1 -1 1 1 1 1 1 1 0 1 -1 1 1 -1 1 0 -1 1 1 1 1 1 1 -1 1 -1 -1 1 1 1 1 -1 -1 1 -1 1 1 1 -1 1 1 1 -1 1 -1 1 0 0 -1 1 1 1 0 -1 1 0 1 1 -1 1 -1 1 1 1 1 -1 1 1 0],

[1 -1 0 1 0 0 -1 -1 1 1 1 -1 1 1 -1 1 -1 1 0 -1 1 1 0 1 1 1 -1 1 -1 1 1 1 1 -1 1 -1 1 -1 1 1 -1 1 1 -1 1 0 -1 1 -1 1 0 1 1 -1 1 1 -1 1 1 0 -1 1 1 1 1 1 1 1 1 1 1

-1 -1 1 -1 -1 1 1 -1 1 1 0 1 1 -1 1 -1 1 -1 -1 1 1 -1 -1 1 1 1 1 -1 -1 -1 0 -1 1 1],

[0 1 0 0 1 1 1 -1 -1 1 1 -1 1 1 0 -1 -1 -1 0 -1 -1 -1 1 -1 1 1 1 -1 1 -1 1 1 -1 1 1 1 1 0 1 -1 -1 -1 0 -1 1 1 -1 1 -1 1 0 1 -1 -1 1 1 -1 1 1 1 -1 1 1 -1 -1 -1 1 1 1 1 -1 -1 1 1 1 -1 1 1 0 -1 -1 -1 -1 1 1 1 -1 1 1 1 1 1 1 -1 1 -1 1 1 0 -1 1 1 1 1],

[0 -1 1 -1 1 1 1 -1 0 -1 -1 -1 1 0 1 1 1 -1 1 -1 1 1 -1 1 1 1 -1 1 -1 -1 -1 0 -1 -1 -1 0 1 -1 1 1 1 -1 1 0 1 -1 1 1 1 1 0 0 1 0 1 1 1 1 -1 0 1 -1 1 -1 1 1 1 1 1 1 -1 1 1 1 1 -1 -1 -1 0 1 -1 1 1 1 1 -1 -1 1 1 1 1 - 1 -1 -1 1 1 1 -1 1 1 1 -1 -1 1 1],

[1 -1 -1 1 -1 -1 1 1 -1 1 -1 1 1 1 0 1 1 -1 1 1 1 -1 1 -1 1 -1 1 1 1 1 1 1 1 1 1 1 -1 0 1 -1 1 1 -1 1 1 1 0 -1 -1 1 1 -1 0 -1 1 1 -1 1 -1 -1 1 1 1 1 -1 1 -1 -1 1 1 1 0 1 1 -1 0 -1 -1 1 1 -1 1 1 1 -1 1 -1 -1 1 0 0 1 0 -1 1 1 1 1 -1 0 -1 -1 -1 1 1 1],

[1 1 1 1 -1 1 -1 1 1 1 -1 1 -1 1 -1 1 -1 1 1 1 -1 1 -1 -1 1 1 -1 0 1 1 1 0 -1 1 1 1 1 -1 1 0 1 0 -1 -1 0 1 -1 1 0 1 -1 1 1 1 -1 1 1 1 1 1 1 1 -1 1 -1 1 1 -1 1 1 0 0 1 1 1 -1 1 -1 0 1 -1 1 -1 1 -1 -1 1 -1 -1 1 -1 0 1 -1 1 1 -1 1 1 -1 1 -1 -1 1 1 1 0 1 -1 1 1 -1 1 -1 -1 1 1],

[0 -1 1 1 1 1 1 -1 1 1 -1 -1 1 1 1 1 -1 -1 1 1 1 0 0 1 -1 1 -1 1 1 -1 0 -1 -1 -1 -1 1 1 1 -1 0 -1 1 -1 1 1 1 1 1 -1 1 1 -1 0 1 1 -1 1 1 1 1 -1 1 1 -1 1 1 1 1 -1 1 -1 1 1 -1 1 -1 1 1 -1 1 1 -1 1 1 1 1 -1 1 1 1 1 1 0 -1 -1 -1 0 -1 -1 1 1 1 -1 1 1 1 0 -1 0 -1 1],

[0 1 1 1 1 1 -1 -1 1 1 1 1 -1 1 -1 0 -1 1 0 1 -1 1 1 -1 1 -1 1 -1 -1 1 0 -1 1 1 -1 1 1 -1 1 0 1 -1 1 1 1 -1 1 1 -1 1 1 1 1 0 -1 0 1 1 1 1 -1 1 -1 1 -1 1 -1 1 1 1 1 1 1 1 -1 1 1 1 -1 1 1 0 0 1 -1 1 -1 1 1 0 -1 -1 1 1],

[1 1 -1 1 -1 1 0 1 0 -1 1 -1 1 1 1 -1 1 1 1 -1 1 -1 -1 1 -1 1 -1 1 1 1 1 1 1 1 1 1 1 1 -1 -1 -1 1 -1 1 1 1 -1 1 -1 1 1 1 0 0 -1 1 -1 1 1 0 -1 1 -1 0 -1 1 1 -1 -1 -1 1 1 1 1 -1 1 1 1 1 0 -1 -1 0 1 1 -1 1 -1 1 1 -1 1 0 -1 - 1 -1 1 1 1 -1 0 -1 -1 -1 -1 1 1],

[1 1 1 1 0 -1 -1 1 1 -1 1 0 1 1 -1 1 1 1 -1 1 0 0 1 0 -1 -1 1 1 -1 0 1 -1 1 1 -1 -1 -1 1 -1 1 1 -1 -1 1 -1 -1 1 -1 1 1 1 -1 1 1 -1 1 -1 -1 -1 1 1 1 -1 1 1 -1 1 1 1 1 0 -1 -1 1 1 1 1 0 -1 -1 1 -1 1 1 1 0 1 1 -1 1 1 -1 1 1 -1 1],

[0 0 1 1 0 -1 -1 1 1 1 -1 1 -1 0 -1 1 -1 1 1 1 -1 1 1 -1 1 1 -1 0 1 1 -1 1 -1 -1 1 0 1 -1 1 -1 1 1 1 -1 0 -1 0 -1 1 -1 1 1 0 1 1 1 -1 1 1 1 1 1 1 1 1 -1 -1 1 1 1 1 -1 1 1 -1 1 -1 1 1 1 -1 1 1 -1 1 -1 1 -1 1 1 0 -1 1 1 1 1 1 1 1 -1 -1 -1 1 -1 1 1 1 -1 1 1],

[1 -1 1 1 1 1 -1 1 1 0 1 -1 0 -1 1 -1 1 -1 1 1 1 1 -1 1 0 -1 -1 1 1 1 -1 1 -1 1 1 -1 1 -1 1 -1 1 -1 1 -1 1 -1 1 -1 1 1 1 -1 1 1 1 1 1 -1 0 -1 1 1 1 1 1 -1 1 1 0 1 1 -1 1 1 -1 1 1 1 0 1 1 -1 1 1 -1 1 -1 1 -1 1 1 -1 1 0 1 0 1 1 -1 1 0 0 -1 1],

[0 -1 1 0 -1 1 1 -1 -1 1 1 1 1 0 1 1 1 1 1 1 -1 1 -1 1 1 1 -1 1 1 1 -1 1 -1 1 -1 1 -1 1 0 1 1 -1 1 -1 1 -1 1 -1 1 -1 1 1 0 1 1 -1 1 -1 1 1 -1 1 0 1 -1 1 1 -1 1 -1 1 -1 1 1 1 1 1 0 -1 0 -1 1 1 0 0 1 -1 1 1 1 1 -1 1 1 1 -1 1 1],

[1 -1 -1 -1 1 -1 1 1 -1 1 1 0 1 1 -1 1 -1 1 -1 1 -1 1 1 0 -1 1 -1 1 1 1 1 0 0 1 1 -1 1 1 -1 1 -1 1 1 1 1 1 1 1 -1 1 1 1 -1 1 1 0 -1 1 0 1 0 1 -1 1 1 1 1 1 -1 1 0 1 1 1 0 -1 1 1 -1 1 -1 -1 1 1 1 -1 1 -1 1 1 -1 1 -1 1 1 1 1 1 1 1 -1 1 -1 -1 1 1 -1 1 1 0 1],

[0 -1 1 -1 1 1 1 1 1 -1 1 1 -1 0 -1 1 1 1 -1 1 -1 1 -1 -1 -1 -1 1 0 -1 1 -1 1 1 0 0 1 1 -1 1 -1 1 1 1 1 -1 1 -1 1 -1 1 1 1 1 1 -1 0 1 -1 0 -1 0 1 1 -1 1 1 1 -1 1 -1 -1 1 1 1 1 1 1 1 0 1 -1 1 0 1 -1 1 -1 1 1 0 0 1],

[1 -1 -1 -1 0 -1 1 -1 1 1 -1 1 1 1 0 -1 1 0 1 1 1 -1 1 -1 1 -1 1 1 1 -1 1 0 -1 1 1 -1 0 1 -1 1 -1 1 1 1 -1 1 0 1 -1 1 0 1 -1 1 -1 1 1 1 0 1 1 1 1 1 1 1 0 1 -1 1 -1 -1 0 -1 1 0 -1 1 1 1 0 0 -1 1 1 1 1 1 1 1 -1 1 1 -1 1 -1 1 -1 1 1 1 1 1 -1 1 1],

[0 -1 0 1 1 1 -1 1 1 -1 1 1 1 -1 1 -1 1 0 1 -1 1 1 -1 1 1 -1 0 -1 -1 -1 -1 1 1 -1 1 0 -1 1 0 -1 1 1 1 1 -1 1 -1 1 1 1 1 1 0 1 -1 1 0 1 -1 1 -1 1 1 0 0 1 -1 1 1 1 -1 -1 -1 -1 1 1 -1 1 1 -1 -1 1 -1 -1 1 -1 1 1 1 1 1],

[0 1 -1 1 -1 1 0 1 1 -1 1 -1 1 -1 1 -1 1 -1 1 -1 -1 1 -1 1 -1 1 0 1 -1 1 1 1 1 -1 1 1 1 1 -1 1 0 1 1 1 -1 1 -1 -1 1 1 1 0 1 0 -1 1 1 1 -1 1 -1 -1 1 -1 1 1 1 1 1 1 1 1 -1 1 1 -1 -1 1 1 -1 1 -1 - 1 1 -1 1 1 1 1 -1 -1 1 1 -1 1 1], and

[1 0 -1 -1 0 1 1 -1 0 0 -1 -1 1 1 1 -1 1 1 1 -1 1 1 -1 1 -1 1 -1 1 1 1 1 1 1 -1 1 -1 -1 1 1 1 1 -1 1 1 -1 1 0 1 -1 1 1 -1 1 1 0 1 1 1 1 1 -1 1 1 1 1 -1 1 1 0 -1 -1 1 -1 1 -1 1 -1 1 1 1 -1 1 1 1 -1 1 0 -1 -1 -1 -1 1 1 -1 1 1 - 1 0 1 0 1 -1 1 1 1 1 -1 1 -1 1]; or

a sequence in the first sequence set is obtained by performing any cyclic shift on at least two of the following sequences:

[0 1 1 1 1 0 1 0 1 1 1 1 1 1 0 1 1 1 1 1 0 1 1 1 1 1 1 1 1 1 0 1 1 1 1 1 1 1 0 1 1 0 0 1 1 1 1 1 1 1 1 1 1 1 1 1 1 1 0 1 1 1 1 1 1 1 1 1 1 1 1 1 1 1 1 1 1 1 1 1 1 1 1],

[0 1 1 1 1 1 1 1 1 1 1 1 1 1 1 1 1 1 0 1 1 1 1 1 1 0 1 1 1 1 1 1 1 0 1 1 1 1 1 1 1 1 1 1 1 1 1 1 1 1 1 1 0 1 1 1 1 1 1 1 1 0 1 1 0 1 1 1 1 1 1 1 1 1 0 0 1 1 1 0 1],

[0 1 1 1 1 1 1 1 0 1 1 1 1 1 1 1 1 1 1 0 1 1 1 1 1 1 1 1 1 1 1 1 0 1 1 1 1 0 1 1 1 1 1 1 1 1 1 1 1 1 1 1 1 1 1 1 1 1 0 0 1 1 1 0 1 1 0 1 1 1 1 1 1 1 1 0 1],

[1 1 0 1 0 0 1 1 1 1 1 1 1 0 1 1 0 1 1 1 1 1 1 1 1 1 1 1 0 1 1 1 0 1 1 1 1 1 0 1 1 1 1 1 1 1 1 1 1 1 1 1 1 1 0 1 1 1 1 1 1 1 1 1 1 1 1 1 1 1 1 0 1 1 1],

[0 1 1 1 1 1 0 1 1 1 0 1 1 1 1 1 1 1 1 1 1 1 0 1 1 0 1 1 1 1 1 1 1 0 0 1 0 1 1 1 1 0 1 1 1 1 1 1 1 1 1 1 1 1 1 0 1 1 1 1 1 1 1 1 1 1 1 1 1 1 1 1 1 1 1 1],

[1 1 1 1 1 1 1 1 1 1 1 1 1 1 1 1 1 1 0 1 1 1 0 1 1 1 1 1 1 0 1 0 1 1 0 1 1 1 1 1 1 1 1 1 1 1 1 1 1 0 0 1 1 1 1 0 1 1 1 1 1 1 1 0 1 1 1 1 1 1 1 0 1 1 1 1 1 1 1],

[0 1 1 1 1 1 1 1 1 1 1 1 0 1 1 0 1 1 1 1 1 1 0 1 1 1 1 1 0 1 1 1 1 1 1 1 1 1 0 1 0 1 1 1 1 1 1 1 1 1 1 1 1 1 1 1 1 1 1 1 1 1 1 1 1 1 1 1 1 0 0 1 1 1 1 0 1 1 1],

[1 1 1 1 0 1 1 1 1 0 1 1 1 1 1 1 0 1 0 1 1 1 0 1 1 1 1 1 1 1 1 1 1 1 1 1 1 1 1 1 1 1 1 1 0 1 1 1 1 1 1 1 1 1 1 1 1 1 0 0 1 1 0 1 1 1 1 1 1 1 0 1 1 1 1 1],

[1 1 1 1 1 1 1 0 1 1 0 1 1 1 1 1 1 1 0 1 1 1 1 1 1 1 1 1 1 1 1 1 1 1 1 0 1 1 1 1 1 1 1 0 1 1 1 1 1 0 1 1 1 1 1 1 0 1 1 1 1 1 1 1 1 1 1 1 1 1 0 1 0 1 1 1 0 0 1 1],

[1 1 1 1 1 1 1 1 0 1 1 1 1 1 1 1 0 1 1 1 1 0 0 1 1 1 1 1 1 1 1 1 1 1 1 1 1 0 1 1 0 1 0 1 1 1 1 1 1 0 1 1 1 0 1 1 1 1 1 1 1

1 1 1 1 1 1 1 1 1 1 1 1 1 1 1 1 1 1 0 1],
[1 1 1 1 0 1 1 1 1 1 1 0 1 1 0 1 1 1 1 1 1 1 1 1 1 0 1 1 0 1 1 1 0 0 1 1 1 1 1 1 1 1 1 1 1 1 1 1 1 1 1 1 1 1 1 1 1 1 1 1 1 1 1 1 1 0 1 0 1 1 1 1 1 1 1 1 1 1 1 1 0 1 1], and
[0 1 1 1 1 1 0 1 1 1 1 1 1 1 1 1 1 1 1 0 1 1 1 1 1 1 1 1 1 1 1 0 1 1 1 1 1 1 1 0 1 0 1 1 1 1 1 1 1 1 0 1 1 0 1 1 1 0 0 1 1 1 1 1 1 1 1 1 1 1 1 1 1 1 1 1 1 1 1 1 1 1].

20. The method according to any one of claims 1 to 14, wherein the first sequence set comprises at least two 121-length sequences; and

a sequence in the first sequence set is obtained by performing any cyclic shift on at least two of the following sequences:

[0 -1 -1 0 -1 1 0 1 -1 1 0 -1 1 0 0 1 0 1 -1 -1 1 0 0 0 -1 0 0 -1 -1 1 0 -1 -1 1 1 0 0 0 1 -1 -1 0 -1 -1 1 -1 1 1 -1 1 1 1 1 0 0 -1 0 1 0 0 0 0 1 1 1 -1 0 -1 -1 0 1 0 -1 -1 -1 -1 1 -1 0 0 1 -1 1 1 -1 1 1 0 1 0 -1 1 1 1 1 -1 -1 1 1 1 1 1 1 0 -1 1 -1 -1 0 1 1 0 0 1 -1 0 1 0 1 1 1 0 1 0 1 0],
[-1 0 0 0 1 -1 -1 0 -1 -1 -1 -1 1 0 -1 1 0 1 0 -1 0 1 0 -1 0 -1 0 1 0 0 0 -1 1 1 1 -1 0 -1 1 -1 1 1 1 0 1 1 1 -1 0 0 1 0 -1 0 0 -1 0 0 0 1 -1 1 1 1 1 0 0 0 0 -1 1 0 1 -1 -1 0 -1 1 1 0 1 1 -1 1 1 1 1 -1 1 1 1 0 -1 0 -1 -1 1 0 1 -1 0 -1 1 -1 1 1 1 -1 1 1 0 0 1 1 0 -1 1 0 1 1 1 1 -1 -1 0 0 -1],
[-1 1 0 -1 -1 0 1 -1 0 0 1 0 -1 1 0 1 1 -1 1 -1 1 1 1 1 1 1 -1 -1 1 1 0 -1 0 -1 1 0 1 0 1 1 -1 1 1 1 0 -1 1 -1 1 0 0 1 1 0 0 1 0 1 1 -1 1 0 -1 -1 1 1 0 -1 1 1 -1 1 -1 1 0 -1 1 1 1 1 0 0 0 -1 -1 -1 1 -1 1 1 0 -1 -1 -1 -1 1 0 -1 0 0 0 -1 1 1 0 1 -1 1 0 0 0 0 0 0 -1 1 1 1 1 0 0 1 1 -1 0 1 1 1 -1 1 0 -1 0 1 0],
[-1 -1 1 1 -1 1 -1 1 1 0 0 0 0 0 0 1 1 0 -1 1 0 1 0 -1 1 0 1 1 0 1 -1 1 -1 1 0 1 -1 1 1 1 1 -1 0 1 -1 1 -1 -1 -1 -1 -1 0 -1 1 0 -1 -1 -1 1 0 1 -1 -1 -1 1 1 1 1 0 0 1 -1 0 0 -1 0 1 -1 1 0 0 0 0 -1 1 1 1 1 -1 1 1 1 -1 0 0 -1 1 1 1 1 0 1 0 -1 1 1 1 0 1 0 -1 0 -1 0 1 0 1 0 1 -1 1 1 0 0 1 1 0 0 0 -1 1 1 0],
[1 0 -1 0 1 -1 1 0 -1 -1 -1 -1 0 0 0 1 1 1 -1 1 1 -1 1 -1 -1 1 -1 -1 -1 1 0 -1 1 -1 1 0 1 1 0 0 0 -1 0 0 1 0 1 0 -1 0 -1 1 -1 0 0 1 0 -1 0 -1 1 1 0 0 0 1 1 1 -1 0 0 1 0 -1 0 -1 0 1 1 -1 -1 -1 -1 1 0 0 -1 1 0 -1 1 1 0 1 0 0 1 -1 0 1 1 1 1 1 1 -1 0 1 0 0 -1 1 0 1 0 1 -1 1 0 1 -1 1 0 1 -1 1 -1 -1 1 0 0 1],
[0 1 -1 -1 0 0 -1 -1 -1 0 -1 -1 0 0 1 1 -1 1 1 1 0 1 -1 1 0 1 0 0 1 0 0 0 -1 0 1 1 1 1 -1 0 1 1 -1 1 000 -1 1 -1 1 1 00 -1 0 1 -1 1 1 1 1 0 0 0 0 1 1 0 -1 1 -1 -1 1 -1 0 1 0 1 1 1 1 0 -1 1 1 1 1 1 0 -1 1 0 -1 0 -1 0 1 0 0 -1 1 0 -1 0 -1 0 -1 -1 0 1 0 1 -1 1 -1 1 1 1 -1 1 0 -1 1 0],
[-1 1 1 0 1 1 -1 0 1 0 1 1 1 -1 0 -1 0 0 -1 0 -1 -1 0 1 1 -1 1 1 -1 1 0 0 0 1 1 0 1 1 0 1 -1 0 0 0 -1 0 1 1 1 0 0 1 1 -1 1 -1 1 1 1 -1 1 -1 1 1 -1 -1 1 0 -1 -1 -1 1 1 0 1 -1 0 1 1 -1 0 -1 0 1 -1 1 -1 1 -1 11 -1 0 0 0 0 -1 1 0 -1 1 -1 1 -1 -1 -1 1 1 1 0 1 -1 1 0 0 0 -1 1 0 1 0 1 0 1 1 1 1 0 0],
[1 -1 1 1 1 0 0 0 1 -1 0 -1 0 0 1 1 -1 1 1 1 1 -1 0 0 1 1 1 -1 1 1 -1 -1 1 -1 0 1 0 0 1 0 -1 0 1 1 0 1 1 0 0 -1 1 1 -1 1 -1 1 0 0 0 1 0 -1 0 0 0 1 1 0 1 0 1 -1 1 -1 1 1 -1 0 -1 1 0 1 -1 0 1 -1 0 1 -1 1 1 -1 1 1 -1 -1 1 -1 0 0 1 1 0 1 0 1 0 1 1 -1 1 -1 1 -1 -1 -1 -1 1 1 1 0 -1 1 -1 1 0 -1 1 -1 0 -1 1 1 -1 0 -1 1 1 0 0 0 -1 1 0],
[0 1 -1 1 0 1 0 0 1 1 1 0 1 -1 1 -1 1 1 1 0 1 0 -1 1 1 1 1 -1 0 -1 -1 0 -1 -1 1 -1 1 -1 1 1 0 0 1 0 1 0 1 1 1 1 1 -1 -1 -1 -1 1 0 1 1 1 -1 1 1 -1 1 -1 1 0 0 0 1 -1 0 0 1 0 -1 0 0 1 0 -1 0 1 1 -1 1 -1 1 -1 0 1 0 0 -1 1 1 0 -1 0 -1 0 -1 1 -1 1 -1 1 -1 0 1 1 0 -1 1 0 1 -1 1 1 -1 1 1 0 0 0 0 0 1 0 0 0 1 1 0],
[0 1 0 -1 0 1 0 1 -1 0 1 1 0 0 1 1 1 -1 1 -1 1 0 0 -1 0 0 0 1 -1 0 -1 0 -1 1 -1 1 1 -1 1 1 -1 1 1 -1 1 1 0 1 1 -1 1 -1 -1 -1 1 1 -1 1 1 -1 0 -1 1 1 0 -1 0 0 0 1 1 0 1 0 1 -1 1 1 1 -1 0 0 -1 -1 1 1 0 -1 1 1 -1 1 -1 0 0 1 1 0 -1 1 -1 1 0 0 -1 1 -1 1 1 1 1 1 0 0 1 -1 0 1 0 1 1 0 1 0 0 1 0 1 -1 1 1 -1 1 0 0 0 1],
[0 0 1 0 -1 1 1 0 -1 1 0 1 -1 0 1 0 1 -1 1 -1 1 1 -1 -1 -1 -1 1 0 0 -1 1 -1 1 -1 1 0 0 1 0 0 1 1 -1 1 0 1 -1 1 1 -1 1 0 -1 1 1 1 0 1 0 -1 0 0 0 1 1 1 -1 0 -1 0 0 1 0 1 0 1 1 0 1 -1 0 0 1 1 0 0 0 0 1 -1 0 -1 1 1 1 1 -1 1 -1 0 0 1 -1 0 -1 0 -1 1 -1 1 0 1 1 1 1 1 -1 1 1 1 0 -1 0 1 0 1 -1 1 0],
[0 0 1 0 -1 -1 -1 0 0 0 1 -1 0 0 1 1 0 -1 1 1 1 1 0 -1 -1 -1 -1 0 -1 0 -1 -1 1 1 1 0 -1 0 0 -1 0 0 1 1 1 -1 1 0 -1 1 0 0 1 0 0 0 -1 1 1 1 1 1 0 0 1 0 1 1 -1 0 1 1 -1 0 1 1 -1 0 -1 1 1 1 -1 -1 1 -1 -1 -1 -1 1 -1 0 1 -1 1 -1 1 1 1 0 1 0 -1 1 0 0 -1 1 -1 1 1 0 -1 1 1 1 1 1 1 1 -1 -1 0 0 0 -1 0 1],
[-1 0 0 0 1 0 1 -1 1 0 1 1 0 1 -1 1 -1 1 -1 0 -1 0 1 0 0 1 0 1 1 1 0 0 -1 0 0 -1 1 -1 1 -1 1 0 1 0 0 -1 0 -1 0 1 0 1 1 1 -1 1 -1 1 0 -1 1 -1 0 -1 1 1 0 0 0 1 1 -1 1 0 0 1 0 0 1 -1 0 0 0 1 -1 1 0 1 -1 1 1 0 -1 1 1 1 -1 1 1 0 1 -1 1 1 1 0 1 -1 1 1 1 -1 1 -1 1 -1 0 0 1 -1 -1 -1 1 -1 -1 1 -1 1 1 1 0 1 0],
[0 -1 1 1 -1 1 -1 0 -1 1 0 0 1 1 -1 0 1 0 0 -1 1 1 0 1 1 1 1 0 0 0 0 0 1 1 -1 1 1 -1 1 -1 0 -1 0 1 -1 1 0 1 -1 1 -1 1 1 0 0 1 1 0 0 1 1 0 -1 0 0 -1 0 0 1 0 0 0 -1 1 1 1 1 1 0 1 -1 1 1 1 1 1 1 0 0 -1 1 -1 1 -1 0 -1 0 1 1 1 0 1 1 -1 1 1 -1 1 -1 -1 -1 0 1 1 -1 1 -1 1 1 0 1 0 1 -1 1 0 -1 0 -1],
[0 -1 1 1 1 -1 0 -1 0 -1 0 1 1 -1 1 1 -1 1 1 1 0 1 -1 1 1 -1 1 0 -1 1 1 1 1 1 1 -1 1 0 1 1 0 1 0 1 1 1 1 1 -1 1 1 0 0 0 0 1 -1 1 0 0 0 1 1 0 1 0 -1 1 -1 0 1 1 -1 1 -1 0 1 0 1 0 0 1 0 -1 1 -1 1 0 1 -1 1 -1 0 -1 0 -1 1 0 1 1 -1 -1 1 0 0 0 1 0 1 0 -1 0 1 1 1 1 -1 1 1 0 0 0 0 1 -1 1 0 0 0 1 -1 0 1 0 1 0],
[0 1 0 1 1 0 0 0 -1 -1 1 1 0 0 0 0 1 -1 1 1 1 1 1 1 0 1 0 -1 1 0 -1 1 0 -1 1 1 1 -1 1 1 1 -1 1 0 -1 1 -1 1 1 0 1 1 -1 1 1 -1 1 1 1 0 -1 0 -1 0 -1 1 1 1 -1 1 -1 0

010-1011100110-11110-1-10-11001-1-10-1-1-11-1001-10-1000-1001111-1-1-110-11-1 0 1 0],

[0-111001-11-110111-1-11-1-1-11-1000101011-1010-10-1101000011-1-101001100-10 011111-10-111-1-1-101110001-101-11101-110-1-101-1-1-1-10-1-10-1011-11-1-110010 -1 1 0],

[1-101-100-1-1-1-1110-10100-111100011-10100-11-1010100-1000110-11-110-1-1-1-1 11-1-1-11-1111000-1-1-1-101-110-1011001-11-11-1-110-110101-10010-11111110-110 0 1 0 1],

[-1111-1-1-100111110-1-11100-101-1011-1000-10-10-10-10-1-10011-100001-1-11-110 01101-11-111-11-1-1100-100101101-1111-111-111100-1-101-1-101-101010110-10-1-1 1 0 0],

[-11-1-1-1-1-101-101-111001110-1-1101110-1-11-11001-1000-10-1-11111011-1-100-1 -111-1-111110-1111010-1101001-101-100101-11010-10-110-101-11-1100000010-1-1 -1 1 0 0],

[0-11-1110-1-10-100-10-1111010-111011-1001111010-10-1001-1000-110111-1-1-11-1 01-10000-11-1-1-110-10-1110-11011-1-1-101-1-11-11-111-1-111001110-1000-1101101 1 0 0],

[011-110-110001000111-10-1-110-1-11-10100101-10111-111-1-1-11-110-1011-11-1111 0100-1-10-1011100101-10011-1-1101111-1-11010-101-1101-1000-1-10-1-1001-1-1-1 -1 0 0],

[00-10-1-11-1010-110-1-1000-11011101-111-11-1111001-1101-1-1-1111110-100111-10 01-1-110-11-110010-1-111-1-1001000011-10-100-1-10-1-101111-1110-111010-10-10 -1 1 0], and

[01-11110010000110101001-1-100-11-1-101011000101-11-1-1-1-11-1-1110100-1-1-100 1-1-1-110-10-10-1-11110-111-111100-1-101100110-10-11101-1111-10-110-11-1-11-110 0 -1 ];

a sequence in the first sequence set is obtained by performing any cyclic shift on at least two of the following sequences:

[0100-10-111-11-111-1-1-1000-1-11-10-10-1010-111110-10-1-111001101-101100-11-1 0001-1-10-1-1011101000010-1-11001-10011111-1-110111-1111-101-10-11-1-101-11-1 0 1 0],

[011101-1-101110011-110-110-1-1-1-1-11-1001-1-1-1010000001-11-110-101-10-1010 1-110100-110-1100101-1010111-101111-1-111-1-100-1-11101111-1-10-1000-11001-1 1 -1 -1 ],

[-10-1-1-1-101111-101100-11000-1-1-1010010-1000-1-111-1111-101-11-1001-101011 -11-1-110-1-11-11-10-1110-1110100111-11-10101111-10001001-10-111100-100-1011 -1 -1 0],

[1-110-1-11000-1100100-1-1110001-1-10-1-11-11110-1-10-10010-1-1-11-100-1001110 10010-10-1-11-1101101-1101000-101011-1-11-1-1-1100-1-111-110111-1011101-1111 -1 0 1],

[00-1010111-101-11-1101-111001001-1-11-100-1-1-1-11-111-1-11010-110-1-101-1-10 10001-110-1011-1111110-1-1-10-1-1100-1-1111-1-10-1100001100-11011010100-10-1 1 1 1 0],

[0-111100-1011111-1-1-1101-1100111-11-111-11011101-1000-1-101-1010-11-1-10-100 01-10-10-101011-1011-111110-1-10-1-100-10-1110000100-1-111-1-101001-11-101-1 -1 1 0],

[000-101001-1-1010-1-111-10-10011111-110-10-10-111100-10-11-1-10110-1100-11-1 0-1-1-1-1-101-100-11101111-1-1100110-11-11110-11-110001-1-11011-10111-110-1101 0 0 0],

[-1-1-11-11101-1-1111-1010-1-110-1001-1-1-1-101101010-1-110000-11110-1-10-111-1 -11-111010100111001100010110 0-11-100-1-111-110-100-1001-10-11-11-111010011 -1 0 -1],

[11-1001-1-1-100111000-1-1011110-111-11-110-11111010-11-11-10-100100-1100-10-1 -110-1-100-110-101001-1-11110-1000001-1-1-10-11-101-111111011-110-1010-1101-1 -1 1],

[0110101000011-111-110-1-110-101-11-1100-10-110-11110111-1-1-11-11101-11111100

1 -1 0 0 -1 0 0 1 -1 1 0 1 -1 -1 1 0 0 0 0 1 0 -1 -1 -1 0 1 -1 0 -1 -1 1 1 -1 -1 0 1 1 0 0 0 -1 1 1 0 0 -1 -1 -1 -1 1 0 1 0 -1 0 -1 -1 0 1 0],

[-1 1 1 0 -1 1 0 -1 0 0 1 1 -1 -1 0 1 1 1 1 0 0 -1 -1 -1 1 1 1 -1 0 0 1 -1 -1 0 -1 0 1 1 0 1 0 1 0 -1 1 0 -1 -1 0 -1 -1 0 -1 -1 0 0 1 1 1 -1 1 1 -1 1 1 1 -1 1 0 1 1 0 1 0 0 -1 0 0 1 -1 1 -1 1 1 1 -1 1 -1 1 0 1 1 0 0 1 -1 1 1 -1 1 -1 1 1 0 0 0 0 -1 1 1 0 0 -1 -1 0 -1 0 -1 0 -1 0 -1 0 0 0],

[-1 1 -1 -1 0 1 0 0 1 1 0 1 -1 1 1 1 1 -1 1 0 0 0 0 -1 0 -1 1 0 0 -1 0 1 1 -1 0 1 0 -1 -1 1 0 0 1 -1 1 0 0 -1 0 0 1 -1 1 1 1 0 0 0 1 1 0 -1 1 -1 1 -1 1 0 1 -1 1 1 0 0 -1 -1 -1 0 -1 1 1 1 -1 1 0 1 -1 0 -1 1 1 1 1 1 -1 -1 0 1 -1 1 0 0 -1 0 1 0 -1 0 -1 0 0 1 0 1 1 1 1 1 -1 0 1 1 1],

[-1 1 -1 0 0 -1 -1 1 0 0 0 1 0 1 0 1 1 0 0 0 0 1 0 0 1 1 1 -1 1 1 0 -1 0 0 1 -1 1 -1 1 1 -1 0 1 -1 0 -1 1 1 1 1 1 0 1 1 -1 1 0 -1 0 1 1 0 0 1 1 0 -1 1 0 0 1 1 1 1 1 1 -1 0 1 1 1 -1 1 -1 0 -1 0 -1 0 1 -1 1 -1 1 1 0 0 -1 1 -1 1 0 0 1 0 1 1 -1 1 -1 1 1 -1 -1 -1 1 1 1 0 1 0 0 0 1 1 0 1 0 -1],

[-1 -1 -1 1 0 0 -1 0 1 -1 1 0 1 0 -1 1 1 1 1 -1 1 -1 1 1 0 1 1 -1 1 -1 -1 -1 -1 1 0 -1 1 1 0 0 1 0 1 1 -1 1 1 -1 1 1 -1 0 -1 1 0 0 -1 0 0 -1 0 1 -1 1 -1 -1 1 -1 1 0 0 -1 1 -1 0 0 1 1 0 0 1 1 0 1 0 0 0 1 1 0 0 1 1 1 0 0 1 0 1 0 1 1 -1 1 1 -1 1 -1 1 1 1 0 -1 1 -1 0 1 1 1 -1 0 0 0 0 1 -1 1 0 1 0 1 0 1 1 0 -1],

[0 1 1 -1 -1 -1 1 0 0 1 1 1 0 1 0 0 -1 1 1 1 0 -1 0 1 1 0 1 0 1 1 0 0 0 1 1 -1 1 1 0 -1 1 1 0 0 1 -1 1 1 1 1 0 -1 1 0 -1 1 1 -1 1 1 -1 1 1 -1 1 1 -1 -1 -1 0 1 0 1 1 -1 -1 -1 -1 1 0 -1 0 0 -1 1 -1 0 1 0 1 0 0 0 1 0 1 0 1 1 1 -1 1 -1 1 -1 1 0 1 -1 0 0 -1 0 0 0 1 -1 1 1 0 0 -1 0 0 1 1 1 -1],

[0 0 -1 1 -1 0 0 1 1 0 -1 1 0 1 1 0 1 1 0 0 1 1 -1 1 -1 0 -1 0 1 1 1 1 -1 0 1 0 -1 0 -1 0 -1 0 -1 1 -1 1 0 0 0 -1 1 -1 1 1 1 -1 1 1 -1 1 1 1 -1 1 0 1 0 0 1 0 0 1 0 -1 1 1 1 0 -1 1 1 -1 0 -1 1 0 -1 1 0 -1 1 1 1 -1 1 1 1 1 0 1 -1 1 -1 1 1 1 1 1 0 0 -1 1 0 0 1 -1 1 0 1 0 0 0 0 1 0 1 1 1 0 -1 0 -1 0 1 -1 1 1 0],

[-1 -1 1 0 1 1 0 1 -1 0 1 0 1 -1 1 0 1 1 0 0 0 0 0 1 -1 1 1 -1 1 1 -1 1 -1 1 0 1 1 -1 1 0 0 0 1 1 0 0 1 -1 1 0 1 0 1 0 -1 0 -1 0 1 0 1 0 1 1 -1 1 0 1 0 1 1 1 -1 1 -1 0 0 -1 1 1 1 -1 1 1 1 1 -1 0 0 0 0 -1 1 1 0 -1 0 0 -1 1 1 0 0 1 1 1 1 -1 -1 -1 1 0 -1 -1 1 0 1 -1 0 -1 -1 -1 -1 -1 1 1 0 -1 1 1 1 -1 1 1 0 1],

[0 1 1 1 1 1 -1 1 1 0 1 1 -1 1 1 -1 -1 -1 -1 1 1 1 1 0 1 1 1 -1 1 0 1 -1 0 -1 0 0 1 -1 1 1 -1 1 1 0 -1 0 1 -1 1 -1 1 1 -1 1 1 1 -1 1 1 1 0 0 0 1 0 1 0 1 1 0 0 1 0 -1 -1 0 -1 0 1 0 1 -1 1 -1 -1 -1 -1 1 0 0 1 1 -1 0 0 0 1 1 0 1 0 -1 1 1 1 -1 1 -1 0 -1 1 0 -1 -1 0 -1 -1 -1 0 1 0 0 0 0 1 -1 1 -1 1 0 1 -1 1 0 0 -1 0 0 -1 1 0],

[-1 -1 1 1 -1 1 1 -1 1 1 0 -1 1 0 1 -1 1 0 -1 1 -1 1 1 0 1 0 1 1 0 0 0 -1 0 1 0 0 0 -1 1 1 1 -1 0 0 1 1 0 1 1 0 -1 0 1 0 0 1 0 -1 0 1 1 1 0 -1 1 -1 1 -1 1 1 1 0 0 -1 1 1 1 1 -1 1 1 1 0 0 -1 0 -1 1 0 0 0 0 1 1 -1 1 0 1 -1 0 0 0 1 1 -1 0 -1 -1 1 0 -1 -1 -1 1 0 -1 0 1 -1 1 -1 1 1 1 -1 0 1 0 1 0 1 1 0 0],

[0 1 1 1 -1 -1 -1 1 1 -1 -1 -1 -1 1 0 -1 0 1 1 1 1 1 -1 1 0 0 1 0 1 0 1 1 -1 1 1 0 0 1 -1 -1 1 0 1 -1 1 0 -1 0 -1 1 0 -1 0 -1 1 -1 1 1 0 1 -1 0 1 0 -1 1 0 -1 1 -1 0 1 -1 1 1 -1 1 0 1 -1 0 -1 0 -1 -1 1 0 0 1 1 -1 1 0 -1 0 0 0 1 0 -1 1 1 -1 1 1 -1 1 1 1 0 0 0 1 1 0 1 -1 1 1 -1 1 0 1 0 -1 0 -1 0 1 0 1 1 0],

[-1 1 1 1 1 1 1 0 0 -1 0 -1 1 1 1 -1 1 0 1 0 -1 -1 1 0 0 1 0 -1 0 0 0 0 0 0 1 0 1 -1 1 0 1 -1 1 1 1 1 0 -1 1 1 1 0 1 -1 1 -1 1 -1 0 0 0 1 -1 1 1 -1 0 1 1 1 -1 1 1 -1 0 1 1 0 0 1 -1 1 -1 1 1 1 1 1 0 1 1 -1 1 0 0 -1 1 0 -1 0 -1 1 0 -1 1 1 0 -1 1 1 -1 0 -1 0 0 1 1 1 -1 0 -1 0 -1 0 1 0 1],

[0 0 1 0 -1 0 1 0 -1 0 1 0 1 -1 1 0 1 -1 1 -1 -1 -1 0 -1 0 1 1 0 0 0 -1 0 1 0 0 -1 1 1 1 1 1 0 1 -1 0 1 1 0 0 1 -1 1 1 1 -1 1 1 -1 0 -1 1 0 1 1 -1 -1 -1 0 -1 0 1 1 -1 1 1 1 1 1 1 1 0 1 1 -1 1 0 -1 1 1 0 1 -1 1 0 0 0 0 1 1 1 -1 1 1 0 0 0 -1 0 0 1 0 1 0 0 -1 1 1 1 1 0 1 1 -1 1 1 -1 0 -1 1 1 1 -1 0], and

[0 1 0 1 1 0 -1 -1 0 -1 1 1 -1 1 0 0 1 0 1 1 1 0 0 1 -1 1 -1 1 -1 1 1 0 -1 1 1 1 0 0 -1 0 0 1 -1 1 1 0 0 0 -1 0 0 -1 1 0 -1 -1 1 -1 1 1 -1 1 1 1 1 0 1 0 1 0 0 0 1 0 1 0 -1 1 -1 0 0 -1 0 -1 -1 -1 1 1 1 0 1 0 -1 -1 -1 1 1 1 1 -1 1 -1 1 -1 1 1 0 -1 1 0 1 1 1 -1 1 0 0 1 1 -1 1 0 1 -1 1 1 1 0 0 0 1 1];

a sequence in the first sequence set is obtained by performing any cyclic shift on at least two of the following sequences:

[0 1 -1 0 0 1 1 0 0 1 0 1 1 -1 0 1 0 0 -1 0 1 1 0 -1 0 -1 0 -1 1 0 -1 1 1 -1 1 1 1 0 0 0 -1 0 0 0 -1 1 1 1 0 0 -1 1 -1 1 1 1 1 -1 1 -1 1 1 0 0 1 1 -1 1 0 0 -1 0 1 -1 0 -1 1 0 -1 1 -1 1 1 0 0 0 0 1 1 1 1 -1 1 0 -1 -1 0 -1 0 1 0 -1 0 -1 1 -1 1 0 -1 -1 1 1 0 1 -1 1 -1 0 1 1 -1 1 1 -1 1 1 1 1 1 1 0 -1 1 0 1 0],

[1 -1 1 1 1 1 0 1 1 1 0 -1 1 0 0 1 1 1 0 0 1 0 -1 0 -1 0 1 -1 1 -1 1 1 0 0 0 1 0 -1 1 1 1 -1 0 -1 -1 -1 1 1 1 1 0 0 0 0 0 -1 1 0 1 0 1 -1 1 1 0 0 -1 1 1 0 -1 1 0 -1 1 -1 1 1 0 0 1 0 1 -1 0 -1 0 1 -1 1 -1 1 -1 1 -1 -1 -1 -1 -1 1 1 -1 1 -1 1 1 1 1 1 0 -1 1 1 1 0 1 1 0 1 -1 0 0 1 0 -1 1 0 -1 1 1 0 1 1 0 0 0],

[-1 0 1 1 1 -1 -1 1 1 0 0 1 0 -1 0 1 -1 1 0 0 -1 1 0 1 -1 1 -1 0 -1 0 0 1 -1 0 0 1 0 0 1 0 0 -1 0 -1 1 -1 1 1 -1 0 1 0 1 1 1 1 -1 1 0 1 -1 1 -1 1 1 1 -1 1 0 1 1 1 1 0 -1 1 0 0 0 1 1 1 0 0 -1 -1 1 1 0 0 -1 1 -1 1 0 1 0 -1 0 -1 1 1 1 0 1 1 1 1 1 -1 1 0 -1 1 -1 0 -1 -1 1 1 0 0 0 0 0],

[0 1 -1 1 1 0 0 0 -1 0 -1 1 -1 1 0 -1 0 0 -1 -1 -1 -1 1 1 1 -1 1 1 1 1 -1 1 1 0 -1 0 1 1 0 -1 1 0 1 1 -1 0 -1 1 -1 1 1 1 0 1 1 -1 1 0 1 0 -1 1 0 0 -1 1 1 -1 0 -1 0 0 1 0 1 0 0 1 1 0 0 1 1 0 -1 -1 1 0 1 1 -1 0 0 1 0 -1 0 -1 1 -1 1 1 1 0 0 0 -1 1 1 1 1 1 1 -1 -1 -1 -1 1 0 0 0],

[0 0 -1 -1 1 -1 1 1 1 1 0 -1 -1 -1 -1 1 1 1 1 1 1 0 1 0 1 0 0 1 -1 1 -1 1 -1 1 0 -1 0 -1 0 -1 1 1 1 1 -1 0 1 0 1 1 -1 1 -1 1 1 0 1 1 1 0 0 1 0 1 -1 1 1 0 0 1 1 0 0 0 1 0 0 0 0 1 -1 1 -1 1 1 0 -1 0 1 -1 0 -1 1 0 -1 1 0 -1 1 1 1 0 0 -1 -1 1 -1 1 0 -1 0 1 1 -1 0 0 1 0 -1 1 -1 1 -1 1 1 1 0 -1 0 1 0 0 -1 1 0],

[1 1 0 0 -1 -1 1 1 -1 0 1 -1 -1 -1 0 0 -1 1 1 -1 1 0 1 0 1 1 0 0 0 -1 0 1 -1 0 -1 1 -1 1 1 -1 -1 -1 1 1 0 1 -1 1 -1 1 -1 1 1 -1 -1 -1 0 -1 -1 1 0 0 -1 0 0 -1 -1 1 1 1 1 0 0 1 1 0 -1 1 0 1 0 -1 0 1 0 1 0 0 0 -1 -1 1 1 -1 1 0 1 0 0 1 0 1 1 0 1 0 -1 1 0 0 1 1 1 1 1 -1 -1 0 0 -1 -1 -1 0],

[0 0 0 1 1 1 -1 -1 0 -1 0 0 1 -1 1 -1 0 0 0 -1 1 1 0 -1 1 1 1 0 -1 0 0 0 1 0 0 1 0 1 -1 1 0 1 1 -1 1 1 1 0 0 -1 -1 0 -1 -1 -1 0 0 -1 -1 1 0 0 1 -1 0 1 -1 0 1 -1 1 1 -1 -1 1 0 1 -1 1 -1 1 -1 1 0 1 -1 1 0 -1 0 -1 0 -1 0 1 -1 1 0 -1 0 -1 1 0 1 1 1 1 1 -1 0 1 0 -1 1 1 1 1 -1 1 -1 1 1 1 1 1 0 1 -1 1 -1 1 1 -1 0 1 1 0],

[0 -1 1 1 0 0 -1 0 0 -1 0 -1 1 -1 1 -1 0 1 1 0 0 -1 1 -1 -1 -1 1 1 1 0 1 -1 1 1 0 -1 0 0 1 -1 1 -1 1 0 0 -1 1 0 1 0 -1 0 1 0 1 -1 1 -1 1 1 1 0 1 -1 1 -1 1 -1 1 -1 1 1 0 0 0 1 1 1 1 0 -1 0 1 1 0 0 -1 1 1 -1 1 -1 1 1 -1 1 -1 1 1 1 -1 1 0 1 1 0 1 -1 0 1 0 1 0 1 1 1 1 1 -1 0 1 1 0 0 0 0 -1 1 0 0 0 -1 1 1],

[1 1 1 -1 1 0 1 1 1 1 -1 0 0 0 1 0 0 -1 0 0 -1 0 1 1 0 0 1 1 0 0 1 -1 1 -1 1 0 -1 1 0 -1 0 -1 1 1 0 1 -1 1 1 1 -1 1 1 1 0 0 0 0 0 1 1 1 1 0 1 -1 1 0 0 1 0 -1 1 1 0 0 -1 1 0 -1 1 -1 1 1 -1 1 0 -1 0 -1 0 -1 1 0 1 0 1 -1 1 -1 1 1 1 0 -1 1 -1 1 -1 1 1 1 0 1 1 -1 0 1 0 1 0 1 1 1 -1 1 0 0 1 1 -1],

[0 1 -1 -1 1 1 1 1 -1 1 -1 1 1 -1 0 0 1 1 1 -1 0 0 0 -1 0 0 0 1 1 -1 1 1 1 -1 0 1 -1 0 -1 0 -1 0 1 1 0 -1 0 0 1 0 -1 1 1 0 1 0 0 1 1 0 0 -1 1 0 0 1 0 1 -1 0 1 1 1 1 1 -1 1 1 -1 1 1 1 0 -1 -1 1 0 1 -1 1 -1 1 -1 1 0 1 0 -1 0 -1 1 -1 1 0 1 -1 1 1 1 1 1 0 0 0 0 1 -1 1 1 -1 0 -1 -1 0 -1 1 1 1 0],

[-1 -1 -1 1 1 0 1 0 -1 0 1 1 0 1 0 0 1 -1 1 1 -1 0 1 -1 1 0 0 1 -1 1 0 1 0 1 -1 0 0 0 0 0 1 1 1 -1 1 -1 1 -1 0 -1 1 1 -1 1 -1 1 0 1 0 0 0 1 -1 1 -1 -1 1 0 -1 0 -1 0 1 0 0 1 1 1 0 0 -1 1 0 1 1 1 0 1 1 1 -1 1 1 0 0 0 1 1 0 -1 1 -1 0 1 -1 0 1 0 0 -1 1 0 1 1 0 -1 1 1 -1 1 0 1 1 1 1 -1 1 -1 1 1 -1 -1 -1],

[0 0 0 1 0 -1 0 0 1 1 1 -1 1 1 1 -1 1 -1 1 0 -1 1 -1 0 -1 1 -1 0 0 1 1 -1 1 -1 0 1 -1 1 0 0 -1 0 0 0 1 -1 1 -1 0 1 0 0 1 -1 0 1 -1 1 1 0 1 0 -1 1 0 1 -1 1 0 1 -1 0 1 -1 0 0 1 0 1 0 1 1 1 0 1 0 -1 1 0 0 1 1 0 -1 0 -1 1 1 -1 0 1 1 1 1 1 -1 1 -1 1 1 1 -1 0 1 0 1 -1 1 1 -1 1 0 0 -1 1 -1 1 -1 -1 -1 -1 0 1 0 -1 0 -1 0 1 1 1 1 0],

[0 -1 -1 -1 0 -1 1 0 -1 1 1 -1 1 -1 1 0 1 -1 0 -1 0 1 -1 1 0 -1 1 -1 0 -1 0 1 -1 0 1 1 1 0 0 1 -1 1 1 0 1 0 1 0 0 -1 1 1 1 1 1 1 0 -1 0 -1 -1 -1 -1 1 -1 1 -1 1 1 1 0 0 1 1 0 -1 1 1 0 1 -1 1 1 1 1 0 1 1 0 0 0 1 1 -1 1 1 0 0 0 1 -1 0 0 1 0 0 1 0 -1 0 1 1 0 1 1 -1 1 -1 1 1 -1 1 1 1 -1 0 1 0 0 0 -1 0 -1 1 1 0],

[0 -1 1 -1 -1 0 1 -1 1 -1 0 -1 1 1 1 0 0 0 1 0 0 0 1 -1 0 1 -1 1 1 1 0 0 0 -1 -1 -1 -1 1 0 0 -1 0 -1 0 -1 1 0 0 0 -1 1 0 1 -1 1 1 0 -1 0 1 0 1 0 1 -1 -1 -1 1 1 1 1 0 1 -1 1 -1 1 1 0 0 -1 1 0 1 0 0 1 1 1 0 -1 0 -1 1 0 0 1 0 1 1 1 -1 1 1 -1 1 1 0 -1 0 1 -1 1 1 -1 1 -1 1 -1 -1 -1 1 1 -1 1 1 1 0 -1 1 0 1 0 0 1],

[0 -1 0 0 1 1 0 0 1 0 -1 -1 1 1 0 0 0 0 1 0 1 -1 0 -1 0 1 0 -1 1 1 0 1 0 1 0 0 0 -1 1 -1 -1 -1 1 -1 -1 1 1 1 0 1 -1 1 1 -1 1 0 0 1 1 -1 1 0 0 1 -1 0 1 0 0 1 -1 -1 1 -1 1 1 1 0 -1 0 -1 1 0 -1 1 0 -1 1 -1 1 -1 1 -1 1 0 -1 0 1 0 1 -1 1 0 1 1 -1 1 1 0 -1 1 0 0 0 1 1 1 0 -1 -1 -1 1 1 -1 0 1 1 1 1 1 1 0],  and

[0 0 1 1 0 0 1 0 1 0 0 -1 0 -1 0 1 -1 1 1 0 -1 1 1 -1 1 0 0 1 -1 0 1 0 -1 0 1 1 1 0 1 1 -1 1 1 -1 1 0 -1 0 1 1 1 0 1 -1 0 1 1 0 -1 0 1 1 -1 1 0 1 1 -1 1 -1 -1 -1 -1 -1 1 0 0 -1 0 -1 1 -1 1 -1 0 -1 0 0 0 1 -1 1 1 0 0 0 0 -1 -1 -1 -1 1 1 1 1 1 1 -1 0 0 0 1 1 -1 1 1 -1 0 -1 0 1 0 1 0 0 -1 1 1 1 0 1 -1 1 -1 0 1 1];

a sequence in the first sequence set is obtained by performing any cyclic shift on at least two of the following sequences:

[0 1 1 0 1 1 0 1 1 1 0 1 1 0 0 1 0 1 1 1 1 0 0 0 1 0 0 1 1 1 0 1 1 1 1 0 0 0 1 1 1 0 1 1 1 1 1 1 1 1 0 0 1 0 1 0 0 0 0 1 1 1 1 0 1 1 0 1 0 1 1 1 1 1 1 0 0 1 1 1 1 1 0 1 0 1 1 1 1 1 1 1 1 1 1 0 1 1 1 0 1 1 0 0 1 1 0 1 0 1 1 1 0 1 0 1 0],

[1 0 0 0 1 1 1 0 1 1 1 1 1 0 1 1 0 1 0 1 0 1 0 1 1 0 1 0 0 0 1 1 1 1 0 1 1 1 1 0 1 1 1 1 0 0 1 0 1 0 0 1 0 0 0 1 1 1 1 1 0 0 0 0 1 1 0 1 1 1 0 1 1 1 0 1 1 1 1 1 1 1 1 0 1 0 1 1 1 1 0 1 1 0 1 1 1 1 1 1 1 0 0 1 1 0 1 1 0 1 1 1 1 1 1 0 0 1],

[1 1 0 1 1 0 1 1 0 0 1 0 1 1 0 1 1 1 1 1 1 1 1 1 0 1 0 1 1 0 1 0 1 1 1 1 0 1 1 0 0 1 1 0 0 1 0 1 1 1 0 1 1 1 0 1 1 1 1 1 0 1 1 1 1 1 0 0 0 1 1 1 1 1 1 0 1 1 1 1 0 1 0 0 0 1 1 1 0 1 1 0 0 0 0 0 0 1 1 1 1 0 0 1 1 1 0 1 1 1 1 0 1 0 1 0],

[1 1 1 1 1 1 1 0 0 0 0 1 1 0 1 1 0 1 0 1 1 0 1 1 0 1 1 1 0 1 1 1 1 1 0 1 1 1 1 1 0 1 1 0 1 1 0 1 1 1 1 1 1 1 0 0 1 1 0 0 1 0 1 1 0 0 0 0 1 1 1 1 1 1 1 0 0 1 1 1 1 1 0 1 0 1 1 1 0 1 0 1 0 1 1 0 1 0 1 0 1 1 1 0 0 1 1 0 0 0 1 1 1 0],

[1 0 1 0 1 1 1 0 1 1 1 1 0 0 0 1 1 1 1 1 1 1 1 1 1 1 1 0 1 1 1 1 0 1 1 0 0 0 1 0 0 1 0 1 0 1 1 1 0 0 1 0 1 1 1 0 0 0 1 1 1 1 0 0 1 0 1 0 1 1 1 1 1 1 0 0 1 1 0 1 1 1 0 1 0 0 1 1 0 1 1 1 1 1 1 1 0 1 2 0 0 1 1 0 1 0 1 1 0 1 1 1 1 1 1 1 0 0 1],

[0 1 1 1 0 0 1 1 0 1 1 0 0 1 1 1 1 0 1 1 1 0 1 0 0 1 0 0 0 1 0 1 1 1 1 0 1 1 1 0 0 0 1 1 1 0 0 1 0 1 1 1 1 0 0 0 0 1 1 0 1 1 1 1 1 0 1 1 1 1 1 1 1 1 1 1 0 1 0 1 1 1 1 1 1 0 1 1 0 1 0 1 0 0 1 1 0 1 0 1 0 1 1 0 1 1 1 1 1 1 1 0 1 1 0],

[1 1 1 0 1 1 1 0 1 0 1 1 1 1 0 1 0 0 1 0 1 1 0 1 1 1 1 0 0 0 1 1 0 1 1 0 1 1 0 0 0 1 0 1 1 1 0 0 1 1 1 1 1 1 1 1 1 1 1 0 1 1 1 1 1 0 1 1 0 1 1 1 0 1 0 1 1 1 1 1 0 0 0 0 1 1 0 1 1 1 1 1 1 1 0 1 1 0 0 0 1 1 0 0 1 0 1 0 1 0 1 1 1 1 0 0],

[1 1 1 1 0 0 0 1 1 0 1 0 0 1 1 1 1 1 1 0 0 1 1 1 1 1 1 0 1 0 0 0 1 0 1 0 1 1 0 1 1 0 0 1 1 1 1 0 0 0 1 0 1 0 0 0 1 1 0 1 0 1 1 1 1 1 0 1 1 0 1 1 0 1 1 1 1 1 1 1 0 0 1 1 0 1 0 1 0 1 1 1 1 1 1 1 1 1 1 1 0 1 1 1 0 1 1 1 0 1 1 1 0 0 0 1 1 0],

[0 1 1 1 0 1 0 0 1 1 1 0 1 1 1 1 0 1 0 1 1 1 1 0 1 1 0 1 1 1 1 1 0 0 1 0 1 0 1 1 1 1 1 1 1 1 0 1 1 1 1 1 1 0 0 0 1 1 0 0 1 0 1 0 1 1 1 1 1 1 0 1 0 0 1 1 1 0 1 0 1 1 1 1 1 0 0 1 1 1 0 1 1 0 1 1 0 1 1 0 1 1 1 1 1 0 0 0 0 1 0 0 0 1 1 0],

[0 1 0 1 0 1 0 1 1 0 1 1 0 0 1 1 1 1 0 0 1 0 0 0 1 1 1 0 1 1 1 1 1 1 1 1 1 0 1 1 1 1 1 1 1 1 1 0 1 1 0 1 0 0 0 1 1 0 1 0 1 1 1 1 1 0 0 1 1 1 1 0 1 1 1 1 1 1 0 0 1 1 0 1 0 1 0 1 1 1 1 1 1 1 1 1 1 1 1 0 1 1 1 0 1 1 1 0 1 1 1 0 0 0 1 1 0],

[0 0 1 0 1 1 1 0 1 1 0 1 1 0 1 0 1 1 1 1 1 1 1 1 1 1 0 0 1 1 1 1 0 0 1 0 0 1 1 1 0 1 1 1 1 0 1 1 1 0 1 0 1 0 0 0 1 1 1 1 0 1 0 0

1 0 1 0 1 1 0 1 1 0 0 1 1 0 0 0 0 1 1 0 1 1 1 1 1 1 1 0 0 1 1 1 0 1 1 1 0 1 1 1 1 1 1 1 0 1 0 1 1 1 0],

[0 0 1 0 1 1 1 0 0 0 1 1 0 0 1 1 0 1 1 1 1 0 1 1 1 1 0 1 0 1 1 1 0 1 0 0 1 0 0 1 1 1 0 1 1 0 0 1 0 0 0 1 1 1 1 1 0 1 0 1 1 1 1 1 1 0 0 1 0 1 1 1 0 1 1 1 0 1 1 1 1 1 1 0 1 1 1 1 1 1 0 1 0 1 1 0 0 1 1 1 0 1 1 1 1 1 1 1 1 1 0 0 0 1 0 1],

[1 0 0 0 1 0 1 1 1 0 1 1 0 1 1 1 1 0 1 0 1 0 0 1 0 1 1 0 0 1 0 0 1 1 1 1 0 1 0 0 1 0 1 1 0 1 1 1 1 1 1 0 1 1 0 0 0 1 1 1 1 0 0 1 0 0 1 1 0 0 0 1 1 1 0 1 1 1 1 0 1 1 1 1 1 1 0 1 1 1 0 1 1 1 0 1 1 1 1 1 1 0 0 1 1 1 1 1 1 1 1 0 1 0],

[0 1 1 1 1 1 0 1 1 0 0 1 1 1 0 1 0 0 1 1 1 0 1 1 1 0 0 0 0 1 1 1 1 1 1 0 1 1 1 0 1 0 1 1 0 1 1 1 0 0 1 1 0 0 1 1 0 1 0 0 1 0 0 1 0 0 0 1 1 1 1 1 0 1 1 1 1 1 1 1 0 0 1 1 1 1 0 1 0 1 1 1 0 1 1 1 1 1 1 1 0 1 1 1 1 1 0 1 0 1 1 0 1 0 1],

[0 1 1 1 1 1 0 1 0 1 0 1 1 1 1 1 1 0 1 1 1 1 0 1 1 1 1 1 1 1 0 1 1 0 1 0 1 1 1 1 1 1 0 0 0 0 1 1 1 0 0 0 1 1 0 1 0 0 1 0 1 1 1 0 1 1 1 1 1 1 1 0 0 1 0 0 0 1 0 1 1 0 0 1 1 1 1 1 0 1 1 1 0 0 1 1 0 1 1 0 1 1 1 1 0 1 1 0 0 1 1 1 0 1 0 1 0],

[0 1 0 1 1 0 0 0 1 1 1 0 0 0 0 1 1 1 1 1 1 0 1 0 1 1 0 1 1 1 1 1 1 1 0 1 1 1 0 1 1 1 1 1 1 0 1 0 1 0 1 1 1 1 0 0 1 0 1 0 1 1 1 0 0 1 1 0 1 1 1 1 0 1 1 0 1 1 0 0 1 1 1 0 1 1 1 1 0 0 1 1 0 1 0 0 0 1 0 0 1 1 1 1 1 1 1 0 1 1 1 0 1 0],

[0 1 1 1 0 0 1 1 1 1 0 1 1 1 1 1 1 1 1 1 0 0 0 1 0 1 0 1 1 1 0 1 0 1 0 1 1 0 1 0 0 0 0 1 1 1 1 0 1 0 0 1 1 0 0 1 0 0 1 1 1 1 1 1 0 1 1 1 1 1 1 0 1 1 1 0 0 0 1 1 0 1 1 1 1 0 1 1 1 0 1 1 0 1 1 1 1 1 0 1 1 0 1 0 1 1 1 1 1 1 0 0 1 0 1 1 0],

[1 1 0 1 1 0 0 1 1 1 1 1 0 1 0 1 0 0 1 1 1 0 0 0 1 1 1 0 1 0 0 1 1 1 0 1 0 1 0 0 1 0 0 0 1 1 0 1 1 1 0 1 1 1 1 1 1 1 1 1 1 1 1 0 0 0 1 1 1 1 0 1 1 1 0 1 0 1 1 0 0 1 1 1 1 1 1 1 1 0 1 1 0 1 0 1 1 0 0 1 0 1 1 1 1 1 1 0 1 1 0 0 1 0 1],

[1 1 1 1 1 1 0 0 1 1 1 1 1 0 1 1 1 0 0 1 0 1 1 0 1 1 1 0 0 0 1 0 1 0 1 0 1 0 1 1 0 0 1 1 0 0 0 0 1 1 1 1 1 1 0 0 1 1 0 1 1 1 1 1 1 1 1 1 1 0 0 1 0 0 0 1 0 1 1 0 1 1 1 1 1 1 1 1 1 1 1 0 0 1 1 0 1 1 1 0 1 1 0 1 0 1 0 1 1 0 1 0 1 1 1 0 0],

[1 1 1 1 1 1 1 0 1 1 0 1 1 1 0 0 1 1 0 1 1 1 0 1 1 1 0 1 1 1 1 0 0 1 1 0 0 0 1 0 1 1 1 1 1 0 1 1 1 0 0 1 1 1 1 1 1 1 1 1 0 1 1 1 1 0 1 0 1 1 0 1 0 0 1 1 0 1 1 0 0 1 0 1 1 1 0 1 0 1 0 1 1 0 1 0 1 1 1 1 0 0 0 0 0 0 1 0 1 1 1 1 0 0],

[0 1 1 1 1 1 0 1 1 0 1 0 0 1 0 1 1 1 1 0 1 0 1 1 1 0 1 1 1 0 0 1 1 1 0 1 0 1 0 1 0 0 1 1 0 0 0 1 1 0 1 1 1 1 1 1 1 1 0 1 1 0 0 0 0 1 1 1 1 1 1 0 1 0 1 1 1 0 1 1 0 1 1 1 1 1 0 1 1 1 1 1 1 1 1 1 1 1 0 0 1 1 1 0 1 0 0 0 1 1 0 1 1 0 1 1 0 0],

[0 1 1 1 1 0 1 1 0 0 0 1 0 0 0 1 1 1 1 0 1 1 1 0 1 1 1 1 0 1 0 0 1 0 1 1 0 1 1 1 1 1 1 1 1 1 1 0 1 0 1 1 1 1 1 1 1 0 1 0 0 1 1 0 1 0 1 1 1 0 0 1 0 1 1 0 0 1 1 1 1 1 0 1 1 1 1 1 1 1 0 1 0 1 0 1 1 1 0 1 1 0 0 0 1 1 0 1 1 0 0 1 1 1 1 1 0 0],

[0 0 1 0 1 1 1 1 0 1 0 1 1 0 1 1 0 0 0 1 1 0 1 1 1 0 1 1 1 1 1 1 1 1 1 0 0 1 1 1 0 1 1 1 1 1 1 1 1 1 0 1 0 0 1 1 1 1 0 0 1 1 1 0 1 1 1 1 0 0 0 1 0 1 1 1 1 1 1 0 0 1 0 0 0 0 1 1 1 0 1 0 0 1 1 0 1 1 0 1 1 1 1 1 1 1 0 1 1 1 0 1 0 1 0 1 0 1 1 0],and

[0 1 1 1 1 1 0 0 1 0 0 0 0 1 1 0 1 0 1 0 0 1 1 0 0 1 1 1 1 0 1 0 1 1 0 0 0 1 0 1 1 1 1 1 1 1 1 1 1 0 1 0 0 1 1 0 0 1 1 1 1 1 0 1 0 1 0 1 0 1 1 1 1 0 1 1 1 1 1 1 0 0 1 1 0 1 1 0 0 1 1 0 1 0 1 1 1 0 1 1 1 1 1 1 0 1 1 0 1 1 1 1 1 1 0 0 1 1];

a sequence in the first sequence set is obtained by performing any cyclic shift on at least two of the following sequences:

[0 1 0 0 1 0 1 1 1 1 1 1 1 1 1 0 0 0 1 1 1 1 0 1 0 1 0 1 0 1 1 1 1 1 0 1 0 1 1 1 0 0 1 1 0 1 1 0 1 1 0 0 1 1 0 0 0 1 1 1 0 1 1 0 1 1 1 0 1 0 0 0 0 1 0 1 1 1 0 0 1 1 0 0 1 1 1 1 1 1 1 1 0 1 1 1 1 1 1 1 1 0 1 1 0 1 1 1 1 0 1 1 1 1 0 1 0],

[0 1 1 1 0 1 1 1 0 1 1 0 0 1 1 1 0 1 1 0 1 1 1 1 1 1 0 0 1 1 1 0 1 0 0 0 0 0 0 1 1 1 1 1 0 1 0 1 1 0 1 0 1 0 1 1 1 0 1 0 0 1 1 0 1 1 0 0 1 0 1 1 0 1 0 1 0 1 1 1 0 1 1 1 1 1 1 1 1 1 1 0 0 1 1 1 0 1 1 1 1 1 1 0 1 0 0 0 1 1 0 0 1 1 1 1 1],

[1 0 1 1 1 1 0 1 1 1 1 1 0 1 1 0 0 1 1 0 0 0 1 1 1 0 1 0 0 1 0 1 0 0 0 1 1 1 1 1 1 1 1 0 1 1 1 1 0 0 1 1 0 1 0 1 1 1 1 1 1 0 1 1 1 1 1 1 0 1 1 1 0 1 1 1 0 1 0 0 1 1 1 1 1 1 0 1 0 1 1 1 1 0 0 0 1 0 0 1 1 0 1 1 1 1 0 0 1 0 0 1 0 1 1 1 0],

[1 1 1 0 1 1 1 0 0 0 1 1 0 0 1 0 0 1 1 1 1 0 0 0 1 1 1 0 1 1 1 1 1 1 0 1 1 0 1 0 0 1 0 1 1 1 1 0 0 1 0 0 1 1 1 0 1 0 0 1 0 1 0 1 1 1 1 1 0 1 1 0 1 1 1 0 1 0 0 0 1 0 1 0 1 1 1 1 1 1 1 1 1 0 0 1 1 1 1 1 1 0 1 1 1 1 0 1 1 1 0 1 1 1 1 1 1 0 1],

[0 0 1 0 1 0 1 1 1 0 1 1 1 1 0 1 1 1 1 0 0 1 0 0 1 1 1 1 1 0 0 1 1 1 1 1 1 1 1 1 1 0 1 0 1 1 0 1 1 0 1 1 1 0 1 0 0 0 1 1 1 0 1 0 1 1 1 1 1 1 1 0 1 1 1 0 1 1 1 0 0 1 1 1 1 1 1 1 0 1 1 0 0 0 0 1 1 0 0 1 1 0 1 1 0 1 0 1 0 0 1 0 1 1 1 1 0],

[0 1 1 1 1 0 0 1 0 1 1 1 1 1 1 1 1 0 1 1 1 0 0 1 1 1 1 1 1 1 1 0 1 1 1 0 1 1 0 0 0 1 1 0 1 1 0 1 0 1 1 1 1 0 1 0 0 0 1 1 0 1 0 1 0 1 0 1 1 1 0 1 1 1 1 1 1 0 1 1 0 1 1 0 0 1 0 1 1 1 0 0 0 0 1 0 0 1 1 1 1 1 1 0 1 0 0 1 1 1 1 0 1 1 1 1 0],

[0 0 0 1 0 1 0 0 1 1 1 0 1 0 1 1 1 1 0 1 0 0 1 1 1 1 1 1 0 1 0 1 0 1 1 1 0 0 1 0 1 1 1 1 0 1 1 0 1 1 0 0 1 1 1 0 1 1 1 1 1 0 1 1 0 0 1 1 1 0 1 1 1 1 1 1 1 1 0 0 1 1 0 1 1 1 1 1 1 0 1 1 1 1 0 0 0 1 1 1 1 0 1 1 1 0 1 1 1 1 0 1 1 0 1 0 0 0],

[1 1 1 1 1 1 1 0 1 1 1 1 1 1 0 1 0 1 1 1 0 1 0 0 1 1 1 1 0 1 1 0 1 0 1 0 1 1 1 0 0 0 0 1 1 1 1 0 1 1 0 1 1 1 1 1 1 1 1 0 1 0 1 0 0 1 1 1 0 0 1 1 0 0 0 1 0 1 1 0 0 1 1 1 0 0 1 1 1 1 1 0 1 0 0 1 0 0 1 1 0 1 1 1 1 1 1 1 0 1 0 0 1 1 1 0 1],

[1 1 1 0 0 1 1 1 1 0 0 1 1 0 0 0 1 1 0 1 1 1 0 1 1 1 1 1 1 0 1 1 1 1 0 1 0 1 1 1 1 0 1 0 0 1 0 0 1 1 0 0 1 0 1 1 1 0 1 1 0 0 1 1 0 1 0 1 0 0 1 1 1 1 1 0 1 0 0 0 0 0 1 1 1 1 0 1 1 1 0 1 1 1 1 1 1 1 0 1 1 1 0 1 0 1 0 1 1 0 1 1 1 1],

[0 1 1 0 1 0 1 0 0 0 1 1 1 1 1 1 0 1 1 1 0 1 0 1 1 1 1 0 0 1 0 1 1 0 1 1 1 0 1 0 1 1 1 1 1 1 1 1 1 1 0 1 1 1 1 1 1 1 0 0 1 1 0 0 1 0 0 1 1 1 0 1 1 1 1 0 0 0 0 1 0 1 1 1 0 1 1 0 1 1 1 1 1 1 0 1 1 0 0 0 1 1 1 0 0 1 1 1 1 1 0 1 0 1 0 1 0 1 1 0 1 0],

[1 1 1 0 1 1 0 1 0 0 1 1 1 1 0 1 1 1 1 0 0 1 1 1 1 1 1 0 0 1 1 1 0 1 0 1 1 0 1 0 1 0 1 1 0 1 1 1 0 1 1 0 0 1 1 1 1 1 1 1 1 1 1 1 0 1 1 0 1 0 0 1 0 0 1 1 1 1 1 1 1 1 1 1 0 1 1 0 0 1 1 1 1 1 0 0 0 0 1 1 1 0 0 1 1 0 1 0 1 0 1 0 1 0 0 0],

[1 1 1 1 0 1 0 0 1 1 0 1 1 1 1 1 0 0 0 0 1 0 1 1 0 0 1 0 1 1 1 0 1 0 1 1 1 0 0 1 1 0 0 1 0 0 1 1 1 1 0 0 0 1 1 0 1 1 1 1 1 1 0 1 1 1 1 0 0 1 1 1 0 1 1 1 1 1 1 1 0 1 1 0 1 1 1 1 1 1 1 0 1 1 1 0 0 1 0 1 0 1 0 1 0 0 1 0 1 1 1 1 1 0 1 1 1],

[1 1 1 0 0 1 1 1 0 0 1 0 1 0 1 1 0 0 0 0 1 0 0 1 1 1 1 1 0 1 0 0 1 1 1 1 1 1 0 1 1 0 1 1 1 1 1 0 1 1 1 0 1 0 1 1 0 0 1 1 0 1 1 0 0 1 1 1 1 1 1 1 0 1 1 1 1 0 1 0 1 0 1 1 1 1 0 0 1 1 1 0 0 1 0 1 1 1 1 1 1 1 1 1 1 1 0 1 0 0 0 1 1 0 1 0 1],

[1 1 1 1 0 0 1 0 1 1 1 0 1 0 1 1 1 1 1 1 0 1 1 1 1 1 1 1 0 1 1 0 0 1 0 1 1 1 1 1 1 0 1 1 0 0 1 0 0 1 0 1 1 1 1 1 1 0 0 1 1 1 0 0 1

1 0 1 0 0 0 1 1 0 0 1 1 1 0 0 1 0 1 0 1 1 1 1 1 1 1 1 1 0 1 1 0 1 1 1 1 0 0 0 0 1 1 1 0 1 0 1 0 1 1 0 1],
[0 1 1 1 1 1 1 0 0 1 1 0 1 0 0 1 1 1 1 0 1 1 0 1 1 0 1 0 1 1 0 0 0 1 1 1 0 1 1 1 0 0 1 1 1 1 0 1 1 0 1 1 1 1 1 1 1 1 1 1 0 1 0 1 1 1 1 1 1 0 1 0 0 1 1 1 0 1 0 1 0 0 0 1 0 1 0 1 1 1 1 1 1 1 0 1 1 0 0 1 0 0 0 1 1 1 1 0 0 1 0 0 1 1 1],
[0 0 1 1 0 0 1 1 0 1 1 0 1 1 0 0 1 1 1 1 0 1 0 1 1 1 1 0 1 0 1 0 1 0 1 1 1 0 0 0 1 1 1 1 1 1 1 1 1 1 0 1 0 0 1 0 0 1 0 1 1 1 1 0 1 1 1 1 0 1 1 0 1 1 1 1 1 1 1 0 1 1 1 1 1 1 1 1 0 0 1 1 0 0 1 1 1 0 1 0 0 0 0 1 0 1 1 1 0 1 1 0 1 1 1 0],
[1 1 1 0 1 1 0 1 1 0 1 0 1 1 0 1 1 0 0 0 0 0 1 1 1 1 1 1 0 1 1 1 0 0 0 1 1 0 0 1 1 1 0 1 0 1 0 1 1 0 1 0 1 0 1 1 1 0 1 0 1 1 1 1 0 0 1 1 1 1 1 1 1 0 0 0 0 1 1 0 1 0 0 1 1 0 0 1 1 1 1 1 1 1 1 0 1 1 1 0 1 1 0 1 1 1 1 1 1 0 1 1 1 1 1 0 1],
[0 1 1 1 1 1 1 0 1 1 1 1 1 1 1 1 1 0 1 1 1 1 0 1 1 0 1 0 0 1 1 1 1 0 1 0 1 1 1 0 1 1 1 1 1 0 0 0 1 0 1 0 1 1 0 0 1 0 1 1 0 1 0 1 0 1 1 1 1 0 0 1 1 1 0 0 0 1 1 0 1 1 1 1 1 0 1 1 0 1 1 1 0 1 0 0 0 0 1 1 1 1 0 1 1 1 0 0 1 0 0 1 1 0],
[1 1 1 1 1 1 1 0 1 1 0 1 1 0 1 1 1 1 0 1 0 1 1 0 0 0 1 0 1 0 0 0 1 1 1 1 0 0 1 1 0 1 1 0 1 0 1 0 0 1 0 1 1 1 1 1 1 1 0 0 1 1 1 1 1 1 1 0 0 1 0 1 1 0 0 0 1 1 1 1 0 1 1 0 0 0 1 1 1 0 1 1 1 0 1 1 1 0 1 1 1 1 1 1 1 1 1 1 0 1 0 1 0 1 1 0 0],
[0 1 1 1 1 1 1 1 1 1 1 1 0 1 0 1 1 1 1 1 0 0 1 0 1 0 1 1 1 0 0 1 1 1 0 1 1 1 0 1 0 1 1 0 1 1 1 1 1 0 1 1 0 1 1 1 0 0 1 1 1 0 1 0 0 0 1 0 1 1 1 1 1 1 1 1 0 1 1 0 1 0 1 0 0 1 0 0 1 1 0 0 0 1 1 1 1 0 0 0 0 1 1 0 1 1 1 1 1 0 1 1 1 0 1 1 0],
[1 1 1 1 1 1 0 0 1 0 1 1 1 1 0 1 0 1 1 1 0 0 1 0 1 0 0 0 0 0 1 0 1 1 0 1 1 1 1 0 1 1 1 0 1 1 1 0 0 0 1 1 1 0 1 1 1 1 1 0 1 1 0 0 1 1 1 1 1 1 0 1 1 1 0 0 1 1 0 1 1 1 1 1 0 1 1 1 0 0 1 1 0 1 1 0 1 1 1 1 0 1 0 0 1 1 1 1 0 1 0 1 0 1],
[0 0 1 0 1 1 0 1 0 1 0 1 0 1 1 0 1 1 1 1 1 0 1 1 1 0 0 0 1 1 0 0 1 1 1 1 1 1 0 1 1 0 1 1 0 0 1 1 1 1 1 1 1 0 1 1 0 1 1 1 1 0 1 0 1 1 1 1 1 1 1 1 1 0 1 1 1 0 1 1 1 0 1 1 0 0 0 0 1 1 1 1 1 0 0 0 1 0 0 1 0 1 0 0 1 1 1 1 0 1 1 1 1 1 0 1 1 1 1 1 0], and
[0 1 0 1 1 0 1 1 0 1 1 1 1 0 0 1 0 1 1 1 0 0 1 1 1 1 1 1 0 1 1 1 0 0 1 0 0 1 1 1 0 0 0 1 0 0 1 1 0 1 1 1 1 1 1 1 0 1 0 1 0 0 0 1 0 1 0 1 1 1 0 0 1 0 1 1 1 1 1 0 1 0 1 1 1 1 1 1 1 1 1 1 1 0 1 1 0 1 1 1 1 1 0 0 1 1 1 0 1 1 1 1 0 0 0 1 1]; or

a sequence in the first sequence set is obtained by performing any cyclic shift on at least two of the following sequences:

[0 1 1 0 0 1 1 0 0 1 0 1 1 1 0 1 0 0 1 0 1 1 0 1 0 1 0 1 1 0 1 1 1 1 1 0 0 0 1 0 0 0 1 1 1 0 0 1 1 1 1 1 1 1 1 1 0 0 1 1 1 1 0 1 1 0 1 1 1 1 0 0 0 0 1 1 1 1 1 0 1 1 1 0 1 0 1 0 1 1 1 0 1 1 1 0 1 1 1 0 1 1 1 1 1 1 1 1 1 0 1 1 0 1 0],
[1 1 1 1 0 1 1 1 0 1 1 0 0 1 1 0 0 1 0 1 0 1 0 1 1 1 1 0 0 0 1 0 1 1 1 1 0 1 1 1 1 1 0 0 0 0 0 1 1 0 1 0 1 1 1 0 0 1 1 1 0 1 1 1 1 0 0 1 0 1 1 0 1 0 1 1 1 1 1 1 1 1 1 1 1 1 1 0 1 1 1 0 1 1 0 1 1 0 0 1 0 1 1 0 1 1 1 0 1 1 0 0 0],
[1 0 1 1 1 1 1 0 0 1 0 1 0 1 1 0 0 1 1 0 1 1 1 0 1 0 0 1 1 0 0 1 0 0 1 0 1 1 1 1 0 1 0 1 1 1 1 0 1 1 1 1 1 1 0 1 1 1 1 0 1 1 0 0 0 1 1 1 0 0 1 1 1 1 0 0 1 1 1 1 1 1 0 1 1 0 1 0 1 0 1 1 1 0 1 0 1 1 1 1 1 1 0 1 1 1 0 1 1 1 1 0 0 0 0 0],
[0 1 1 1 0 0 0 1 0 1 1 1 1 0 1 0 0 1 1 1 1 1 1 1 1 1 1 1 1 0 1 0 1 1 0 1 1 0 1 1 1 0 1 1 1 1 0 1 1 1 0 1 0 1 1 0 0 1 1 1 1 0 1 1 1 0 1 0 1 0 0 1 0 1 0 0 1 1 0 0 1 1 0 1 1 1 0 1 1 1 0 0 1 0 1 1 0 1 1 1 1 0 0 0 1 1 1 1 1 1 1 1 1 0 0 0],
[0 0 1 1 1 1 1 1 0 1 1 1 1 1 1 1 1 0 1 0 1 0 0 1 1 1 1 1 0 1 1 0 1 1 1 1 1 0 1 0 1 1 1 1 0 1 1 1 0 0 1 0 1 1 1 0 0 1 1 0 0 0 1 0 0 0 0 1 1 1 1 1 0 1 1 0 1 1 0 1 1 0 1 1 1 0 0 1 1 1 1 1 0 1 0 1 1 1 0 0 1 0 1 1 1 1 1 0 1 0 1 0 0 1 1 0],
[1 1 0 0 1 1 1 1 1 0 1 1 1 1 0 0 1 1 1 1 0 1 0 1 1 0 0 0 1 0 1 1 0 1 1 1 1 1 1 1 1 1 0 1 1 1 1 1 1 1 1 0 1 1 1 0 0 0 1 0 0 1 1 1 1 1 0 0 1 1 0 1 1 0 1 0 1 0 1 0 1 0 0 0 1 1 1 1 1 0 1 0 0 1 0 1 1 0 1 0 1 1 0 0 1 1 1 1 1 1 1 0 0 1 1 1 0],
[0 0 0 1 1 1 1 0 1 0 0 1 1 1 0 0 0 1 1 1 0 1 1 1 0 1 0 0 0 1 0 0 1 0 1 1 1 0 1 1 1 1 0 0 1 1 0 1 1 1 0 0 1 1 1 0 0 1 1 0 1 1 1 1 1 1 0 1 1 0 1 1 0 1 0 1 0 1 1 0 0 1 0 1 0 1 1 0 1 1 1 1 1 1 0 1 0 1 1 1 1 1 1 1 1 1 1 0 1 1 1 1 0 1 1 0],
[0 1 1 1 0 0 1 0 0 1 0 1 1 1 0 1 1 0 0 1 1 1 1 1 1 0 1 1 1 0 1 0 0 1 1 1 0 0 1 1 0 1 0 1 0 1 0 1 1 1 1 1 0 1 1 1 1 1 1 1 0 0 0 1 1 1 1 0 1 0 1 1 0 0 1 1 1 1 1 1 1 1 1 1 1 1 0 1 1 0 1 1 0 1 0 1 0 1 1 1 1 1 0 1 1 0 0 0 0 1 1 0 0 0 1 1],
[1 1 1 1 1 0 1 1 1 1 0 0 0 1 0 0 1 0 0 1 0 1 1 0 0 1 1 0 0 1 1 1 1 0 1 1 0 1 0 1 1 1 0 1 1 1 1 1 1 1 0 0 0 0 0 1 1 1 1 0 1 1 1 0 0 1 0 1 1 1 0 0 1 1 0 1 1 1 1 1 1 0 1 0 1 0 1 1 0 1 0 1 1 1 1 1 0 1 1 1 1 1 1 1 0 1 1 1 0 1 0 1 1 1 1 0 0 1 1 1],
[0 1 1 1 1 1 1 1 1 1 1 0 0 1 1 1 0 0 0 1 0 0 0 1 1 1 1 1 0 1 1 0 1 0 1 0 1 1 0 1 0 0 1 0 1 1 1 0 1 0 0 1 1 0 0 1 1 0 0 1 0 1 1 0 1 1 1 1 1 1 1 1 1 1 0 1 1 1 0 1 1 1 0 1 1 1 0 1 0 1 0 1 1 1 0 1 1 1 1 1 0 0 0 0 1 1 1 0 1 1 0 1 1 1 1 0],
[1 1 1 1 0 1 0 1 1 0 1 0 0 1 1 1 1 0 1 1 1 0 0 1 1 1 0 1 0 1 1 0 0 0 0 0 1 1 1 1 1 0 1 1 1 1 1 0 1 0 0 0 1 1 1 1 1 0 1 0 1 0 1 0 0 1 1 1 0 0 1 1 0 1 1 1 0 1 1 1 1 1 0 0 0 1 1 0 1 1 1 0 1 1 0 1 0 0 1 1 0 1 1 0 1 1 1 0 1 1 1 1 1 1 1 1 1 1],
[0 0 0 1 0 1 0 0 1 1 1 1 1 1 1 1 1 0 1 1 1 0 0 0 1 1 1 0 1 1 1 0 0 1 0 0 0 1 1 1 1 0 1 0 0 1 1 0 1 1 1 0 1 1 0 1 1 0 0 1 0 1 0 1 1 1 0 1 0 1 1 0 0 1 1 0 1 1 1 1 0 1 1 1 1 1 1 1 1 1 1 0 1 0 1 1 1 1 1 0 0 1 1 1 1 1 1 0 1 0 1 1 0 1 1 1 0],
[0 1 1 1 0 1 1 0 1 1 1 1 1 0 1 1 0 1 0 1 1 1 0 1 1 1 1 0 0 1 1 1 1 0 1 0 1 0 0 1 1 1 1 1 1 0 1 0 1 1 1 1 1 1 1 1 1 1 0 0 1 1 0 1 1 1 0 1 1 1 1 1 0 1 1 0 0 0 0 1 1 1 1 0 0 0 1 1 0 0 1 0 0 1 0 1 0 1 1 0 1 1 1 1 1 1 1 1 0 1 0 0 0 1 0 1 1 1 0],
[0 1 1 1 1 0 1 1 1 0 1 1 1 0 0 0 1 0 0 0 1 1 0 1 1 1 0 0 0 1 1 1 1 0 0 1 1 0 1 1 0 0 0 1 0 1 1 1 0 1 0 1 0 1 1 1 1 1 1 0 1 1 1 1 1 0 0 1 1 0 1 0 0 1 1 1 0 1 0 1 1 0 0 1 0 1 1 1 1 1 1 1 1 0 1 0 1 1 1 1 1 1 1 1 1 1 1 0 1 1 0 1 0 0 1],
[0 1 0 0 1 1 0 0 1 0 1 1 1 0 0 0 0 1 0 1 1 0 1 0 1 0 1 1 1 0 1 0 1 0 0 0 1 1 1 1 1 1 1 1 1 1 0 1 1 1 1 0 0 1 1 1 0 0 1 1 0 1 0 0 1 1 1 1 1 1 1 0 1 0 1 1 0 1 1 1 1 1 0 1 1 0 1 1 1 0 1 1 1 0 1 1 0 0 0 1 1 1 0 1 1 1 1 1 1 0 1 1 1 1 1 1 0], and
[0 0 1 1 0 0 1 0 1 0 0 1 0 1 0 1 1 1 0 1 1 1 0 0 1 1 0 1 0 1 1 1 0 1 1 1 1 0 1 1 1 0 1 1 0 1 1 0 1 0 1 1 1 1 1 1 1 1 1 1 1 1 0 0 1 0 1 1 1 1 0 1 0 0 0 1 1 1 0 0 0 0 1 1 1 1 1 1 1 1 1 1 0 0 0 1 1 1 1 0 1 1 0 1 0 0 1 1 1 0 1 1 1 0 1 1].

21. The method according to any one of claims 1 to 14, wherein the first sequence set comprises at least two 133-length sequences; and

a sequence in the first sequence set is obtained by performing any cyclic shift on at least two of the following sequences:

[0 -1 -1 1 -1 1 1 1 -1 1 1 -1 0 1 1 -1 1 1 1 1 -1 -1 -1 -1 1 -1 0 1 -1 1 1 -1 1 1 1 1 1 -1 -1 -1 1 1 1 1 -1 1 1 1 1 1 1 1 -1 1 1 -1 -1 1 1 -11 1 -1 -1 -1 1 -1 1 1 0 0 1 1 1 -1 1 -1 1 -1 1 -1 1 -1 -1 -1 1 0 -1 1 -1 1 0 1 -1 0 -1 1 1 -1 -1 1 1 1 1 1 -1 1 1 -1 1 -1 1 -1 1 1 1 1 1 -1 1 -1 -1 1 1 1 0 -1 0 -1 1 1 1 1 -1 0 -1 -1 -1 0 -1 -1 1 1 1],

[1 0 0 -1 -1 1 1 1 -1 1 1 -1 1 1 1 1 -1 -1 -1 0 -1 -1 -1 1 0 -1 1 0 1 1 -1 1 -1 1 1 -1 1 -1 1 1 1 1 1 -1 -1 1 1 1 1 0 1 0 1 -1 1 1 -1 -1 0 1 1 -1 0 1 -1 1 -1 1 1 0 1 -1 1 -1 -1 1 -1 1 1 1 1 1 1 0 1 -1 -1 -1 1 -1 1 1 -1 1 -1 1 -1 1 1 1 -1 1 0 -1 1 1 -1 1 1 1 1 -1 1 1 1 1 -1 1 -1 1 -1 1 1 -1 1 -1 1 -1 1 1 1 1 1 1 1 -1 -1 -1 -1 1],

[1 0 1 -1 -1 1 1 1 -1 1 1 -1 1 1 -1 1 1 1 -1 1 -1 -1 1 1 1 1 -1 1 1 -1 1 1 1 1 1 1 1 -1 -1 1 1 1 -1 1 -1 1 1 -1 1 1 1 -1 1 1 -1 1 1 1 -1 1 -1 1 0 1 -1 1 1 1 1 -1 1 -1 1 1 -1 1 0 -1 1 -1 1 -1 1 0 -1 1 1 -1 -1 -1 0 -1 1 1 -1 1 1 -1 1 0 -1 1 1 1 -1 1 -1 -1 -1 1 1 1 1 1 -1 1 -1 1 1 -1 0 1 1 1 1 1 1 -1 1 0 1 1 0 111 -1 1 -1 1 -1 -1 -1 1 1 1 1 -1 1 1 1 -1 -1 0 1 1 1 0],

[0 1 -1 1 -1 1 1 1 1 -1 1 1 1 1 0 -1 1 1 1 -1 1 -1 1 1 -1 1 -1 1 0 1 -1 0 -1 1 -1 1 1 1 -1 1 -1 1 1 -1 0 -1 1 -1 1 1 0 -1 1 -1 1 -1 1 1 1 1 -1 1 1 -1 1 1 1 1 1 1 -1 1 0 1 1 1 0 1 0 -1 1 1 1 -1 1 1 1 1 -1 1 -1 1 -1 1 -1 -1 -1 1 1 1 1 -1 1 1 -1 1 1 1 1 1 1 1 1 -1 1 -1 -1 1 -1 -1 1 1 1 1 1 1 -1 1 -1 1 1 -1 -1 1 0 1 -1 1 1 1 1 -1 1 1 1 0 0 1 -1 -1 -1 1 1],

[0 1 -1 1 -1 1 1 -1 1 -1 1 1 -1 1 -1 1 -1 1 -1 0 -1 1 -1 1 1 1 1 1 -1 1 -1 1 1 1 0 -1 0 1 1 -1 1 -1 1 -1 1 -1 1 1 -1 1 1 -1 1 1 1 -1 1 1 -1 1 -1 1 1 1 0 1 1 1 0 1 1 1 1 0 0 1 1 0 -1 1 1 1 1 1 -1 1 -1 0 -1 1 1 -1 1 1 -1 1 -1 1 1 0 1 1 1 -1 1 0 -1 1 -1 1 1 1 -1 1 -1 1 1 1 1 1 1 1 1 1 -1 1 0 -1 1 1 1 -1 1 1 1 -1 -1 1 -1 1 1 1 -1 1 1 1 -1 1 1 1 -1 1 1],

[1 1 1 1 0 0 1 1 0 -1 1 -1 1 1 -1 1 1 1 0 1 -1 1 1 1 1 -1 1 1 -1 1 0 -1 1 1 1 0 -1 -1 -1 1 -1 1 1 1 1 1 -1 1 -1 1 1 1 -1 1 -1 1 1 0 -1 1 1 1 1 1 -1 1 -1 -1 1 -1 -1 -1 1 -1 -1 1 1 0 1 -1 1 1 1 1 1 -1 1 1 1 -1 1 1 0 -1 1 -1 1 -1 1 1 1 -1 1 -1 -1 -1 1 0 1 0 -1 1 1 -1 1 -1 -1 -1 -1 -1 1 1 -1 1 1 1 1 -1 1 1 1 1 1 1 -1 1 1 1 1 -1 -1 -1 1 0 1],

[1 -1 1 -1 1 1 1 1 1 -1 0 0 1 1 -1 1 1 1 1 1 -1 1 -1 -1 1 1 1 1 -1 1 1 1 1 1 1 1 1 0 -1 1 -1 1 -1 1 1 1 1 -1 1 -1 -1 -1 -1 1 0 1 -1 1 1 -1 1 1 1 -1 1 1 1 1 -1 1 1 -1 1 1 -1 1 -1 1 1 0 -1 1 1 -1 1 0 -1 1 -1 1 0 -1 1 -1 1 -1 1 -1 1 -1 1 1 0 1 1 1 1 -1 1 -1 1 0 -1 1 0 -1 1 0 1 1 1 0 1 0 -1 1 1 1 1 1 1 -1 1 -1 -1 0 -1 1 1 -1 1 1 -1 1 -1 1 1 -1 1 1 -1 1 -1 1 1 -1 -1 1 1 -1 1 1],

[0 1 0 1 1 -1 1 1 1 1 -1 1 -1 1 0 -1 1 1 -1 1 -1 1 -1 1 1 1 -1 1 1 1 1 1 -1 1 1 1 -1 1 -1 1 1 1 1 1 -1 1 -1 1 1 -1 1 -1 1 -1 1 1 0 0 1 -1 1 -1 1 -1 1 -1 1 -1 1 -1 1 1 -11 -1 1 1 1 -1 1 -1 -1 1 1 0 1 -1 1 -1 1 -1 1 1 -1 1 -1 1 1 1 1 1 -1 1 0 1 1 -1 1 -1 1 1 -1 1 -1 1 -1 1 1 1 1 1 1 1 1 1 -1 1 -1 1 -1 1 0 1 -1 1 1 -1 0 -1 1 1 -1 1 -1 1 -1 1 1 1 -1 1 1 1 0 1 1 1 -1 1 1 -1 1 1 0 -1 1 0 1 1 1 ],

[0 -1 1 1 1 1 -1 1 -1 1 1 1 1 0 1 -1 0 -1 1 -1 1 1 -1 1 1 -1 1 -1 1 -1 1 -1 1 1 -1 1 1 1 0 -1 1 1 0 -1 1 -1 1 1 -1 1 -1 1 1 -1 1 -1 1 -1 1 -1 1 1 1 1 -1 1 1 1 1 -1 1 1 -1 0 1 0 1 1 1 1 -1 1 1 0 0 1 1 -1 1 -1 0 1 -1 1 1 1 1 1 1 -1 1 -1 1 1 0 1 -1 1 1 -1 1 -1 1 1 1 -1 1 -1 1 -1 1 -1 1 1 1 1 1 1 1 1 1 1 0 1 -1 1 -1 1 1 -1 1 1 -1 1 1 -1 1 -1 1 1 1 1 1 -1 1 1 -1 1 1 -1 1 1 1 -1 1 1 1 -1 1 1 1],

[1 0 1 -1 1 1 1 -1 1 -1 1 0 0 1 1 1 -1 1 0 1 -1 1 1 -1 1 -1 1 1 1 1 -1 1 0 -1 1 1 -1 1 1 -1 1 -1 1 -1 1 -1 1 -1 1 -1 1 -1 1 -1 1 1 1 1 1 -1 1 0 1 1 -1 1 1 1 -1 1 -1 1 -1 1 -1 1 1 1 1 1 -1 1 1 -1 1 1 1 1 1 1 1 1 0 -1 1 1 1 -1 1 1 1 -1 1 0 -1 1 0 1 -1 0 1 -1 1 1 1 -1 1 -1 1 1 1 -1 1 -1 1 1 1 1 0 -1 1 1 1 0 1 1 1 0 -1 1 -1 1 -1 1 1 1 -1 1 1 1 1 1 1 -1 1 1 -1 1 1 -1 1 -1 1 -1 1 0],

[1 -1 -1 -1 1 -1 1 1 -1 1 -1 1 1 1 0 -1 1 -1 1 -1 1 1 1 -1 1 1 1 0 1 1 1 1 1 -1 1 -1 1 1 0 1 1 1 -1 1 -11 -1 111 -1 1 -1 -1 -1 -1 1 1 -1 1 -1 1 -1 1 1 1 -1 1 1 0 -1 1 1 -1 1 1 1 -1 0 -1 1 -1 1 -1 1 -1 1 1 1 1 1 1 1 -1 1 -1 1 0 1 -1 1 -1 1 1 -1 0 1 1 1 0 1 0 1 1 0 -1 1 1 1 1 1 1 1 -1 1 -1 1 1 0 0 1 -1 1 1 1 -1 1 -1 1 1 -1 1 1 1 -1 1 1 1 1],

[0 1 1 0 -1 1 1 1 -1 1 1 1 -1 1 -1 1 1 -1 1 -1 1 1 0 0 1 -1 1 1 1 -1 1 -1 1 -1 1 -1 1 -1 1 1 1 1 1 1 -1 1 1 -1 1 1 -1 1 1 1 1 -1 1 0 -1 1 1 1 1 1 -1 1 1 -1 1 -1 1 -1 -1 1 1 0 -1 -1 -1 -1 -1 1 1 1 -1 1 0 1 1 -1 1 1 1 -1 1 1 -1 1 -1 1 -1 1 -1 1 1 -1 1 1 -1 1 -1 0 -1 1 1 1 -1 1 -1 -1 1 0 -1 1 1 1 1 1 -1 1 1 -1 1 1 -1 1 1 1 1 1 1 1 -1 1 -1 0 1 1 1 -1 1 1 1 0 -1 1 1 1 0 1],

[1 1 1 -1 -1 1 1 -1 1 1 -1 1 -1 1 -1 -1 -1 1 1 -1 1 1 -1 1 1 1 1 -1 1 0 0 -1 1 1 1 1 -1 1 -1 1 0 1 -1 1 1 -1 1 1 1 -1 1 0 1 -1 1 -1 1 0 1 1 1 1 1 -1 0 -1 -1 1 -1 1 1 1 1 1 1 1 1 -1 1 1 1 1 1 1 -1 1 1 1 -1 1 -1 1 -1 0 -1 1 1 1 0 1 0 -1 1 1 1 1 1 1 -1 1 1 0 -1 1 1 0 -1 1 0 -1 1 1 1 -1 1 -1 1 -1 1 1 -1 1 1 1 -1 1 -1 1 -1 1 -1 1 -1 -1 1 1 1 1 1 1 0 1 1 1 1 1 1 1 -1 1 1 -1 1 1],

[0 1 -1 1 1 1 1 -1 1 -1 1 1 -1 1 1 1 1 1 1 1 1 -1 1 1 1 -1 1 -1 1 1 1 1 1 1 -1 1 1 -1 1 -1 1 1 0 0 1 -1 1 1 1 1 1 -1 0 1 1 -1 1 -1 1 1 -1 1 1 1 0 -1 -1 -1 -1 1 1 -1 1 0 1 -1 1 -1 1 1 1 1 1 -1 1 -1 1 1 1 1 -1 1 -1 1 0 1 1 -1 1 0 -1 0 1 1 1 1 1 1 1 1 -1 1 -1 1 0 -1 1 -1 0 1 -1 1 1 -1 1 1 -1 1 1 1 1 1 -1 1 1 1 -1 1 1 -1 1 -1 1 -1 1 -1 1 1 1 -1 1 1 -1 1 -1 1 1],

[1 0 -1 1 -1 1 1 1 1 -1 1 1 -1 1 1 -1 1 0 1 -1 1 1 -1 1 -1 -1 -1 -1 1 1 -1 1 1 1 -1 1 -1 1 -1 1 1 1 1 1 1 1 1 1 -1 1 1 1 -1 1 1 0 1 1 -1 1 -1 1 1 1 -1 1 -1 -1 -1 -1 1 1 1 1 1 1 1 -1 0 -1 1 1 0 -1 1 1 0 -1 1 -1 1 -1 1 -1 0 -1 1 1 1 1 1 1 1 -1 1 0 -1 1 -1 1 1 1 -1 1 -1 1 0 1 1 1 -1 1 -1 1 1 -1 1 1 -1 1 0 1 1 1 -1 1 1 1 1 1 -1 1 -1 1 1 1 -1 -1 1 1 1 -1 1 1 1 1 -1 1 1 0 -1 1 1 1 1 0 0],

[0 -1 1 1 1 -1 1 1 1 -1 1 1 1 1 -1 1 1 -1 1 1 -1 1 -1 1 1 1 1 1 -1 1 0 -1 1 1 0 1 1 -1 1 1 -1 1 1 -1 1 -1 1 -1 -1 1 0 -1 1 1 1 1 1 1 1 0 -1 1 1 -1 1 1 -1 1 -1 1 -1 1 1 1 -1 1 1 0 1 1 1 1 0 0 1 0 -1 1 1 1 1 1 1 -1 1 1 -1 1 -1 1 0 1 1 0 1 1 -1 1 -1 1 1 -1 1 1 -1 1 1 -1 1 -1 1 1 1 -1 1 1 1 1 1 -1 1 1 -1 1 -1 1 1 1 -1 1 -1 1 1 1 1 1 1 -1 1 -1 1 1 1 -1 1 -1 1 -1 1 1],

[0 1 -1 -1 1 1 1 1 -1 1 -1 1 1 1 -1 1 -1 1 -1 1 1 -1 1 -1 1 -1 1 -1 1 -1 1 1 0 -1 1 1 1 1 -1 1 -1 1 1 1 1 1 1 1 -1 1 1 -1 1 1 1 1 1 -1 1 0 1 1 0 0 1 1 1 1 -1 1 1 -1 1 0 -1 1 1 1 0 -1 0 1 1 1 1 1 -1 1 1 1 -1 1 1 1 1 1 0 1 1 -1 1 -1 -1 -1 -1 -1 1 1 0 -1 1 -1 1 -1 -1 1 1 -1 1 -1 1 1 -1 0 1 1 1 -1 1 -1 1 -1 1 1 1 -1 -1 1 -1 1 1 -1 1 1 0 1 -1 1 1 1 1],

[1 -1 1 1 1 -1 1 -1 1 1 1 1 -1 1 1 -1 1 1 1 -1 1 0 -1 1 1 0 0 -1 1 1 1 1 -1 1 1 1 1 -1 1 1 1 0 -1 0 1 0 1 -1 1 -1 1 1 -1 1 1 1 1 1 1 1 1 -1 1 -1 -1 1 1 -1 1 0 -1 1 1 -1 1 -1 1 -1 1 -1 1 1 1 1 1 -1 1 -1 1 1 1 0 1 1 1 1 1 0 1 -1 1 -1 -1 -1 1 1 1 1 1 1 1 1 -1 0 1 1 1 1 1 0 1 -1 1 -1 -1 -1 1 1 1 -1 1 -1 1 1 1 -1 1 0 1 -1 1 1 1 -1 1 1 1 -1 1 1 1 1 1 1 1 0 1 1 1 1 0 1],

-1 0 1 1 -1 -1 -1 1 1 1 -1 1 -1 0 -1 1 0 0 1 -1 -1 -1 1 1 -1 1 -1 -1 1 1 1 -1 1 -1 1 1 1 1 1 -1 1 1 1 1 0 1 -1 1 1 1 1 0 -1 1 1 -1 -1 0 -1 -1 1
1 0 -1 1 1 1 -1 1 1 1 -1 1 0 -1 1 -1 1 1 1 1 -1 0],

[0 -1 1 0 0 1 1 1 1 -1 -1 1 1 1 -1 -1 -1 1 -1 1 1 -1 1 -1 1 1 -1 1 -1 1 -1 1 1 0 1 -1 -1 -1 -1 1 0 1 1 -1 1 1 0 1 -1 1 1 1 0 1 -1 -1 -1 1 1 1 1 1
0 -1 1 -1 -1 -1 1 -1 0 1 0 1 1 1 1 -1 1 1 1 -1 1 1 1 1 -1 1 -1 1 1 1 1 1 1 0 -1 -1 1 1 1 1 -1 1 -1 1 1 1 -1 1 1 -1 1 -1 -1 1 -1 1 1 1 1 1 -1 1 1 1 1 -1 1 -1 1
-1 -1 -1 1 1 -1 1 -1 1 0 -1 1 1 1 -1 1 1 1 1 1 -1 1 1],

[1 1 1 1 -1 0 0 -1 1 -1 0 1 -1 1 1 1 -1 1 -1 1 -1 1 -1 1 -1 1 -1 1 -1 1 -1 1 1 1 0 1 1 -1 1 -1 1 1 1 -1 1 -1 1 -1 1 1 -1 1 1 1 1 -1 1 1 -1 1 1 -1 0 -1 1 1 -1 1
-1 -1 1 1 1 1 1 1 -1 1 1 1 1 1 -1 1 -1 1 -1 1 -1 1 -1 1 1 1 1 -1 0 1 1 0 -1 1 1 1 1 0 1 1 1 -1 1 -1 1 -1 1 1 1 -1 1 1 -1 1 1 -1 1 -1 1 1 1 1 1 1 1 1 -1 1 0 1 1
-1 1 1 -1 1 -0 -1 1 -1 1 1 1 -1 1 1 0 1 0 1 1 1 -1 1 1],

[0 1 -1 1 1 1 1 1 -1 1 1 1 1 -1 1 -1 -1 1 1 1 1 1 0 -1 1 1 1 1 -1 1 1 1 -1 1 1 -1 1 -1 1 1 1 1 -1 1 1 -1 1 -1 1 1 0 -1 1 1 1 -1 1 -1 1 -1 1 -1 1 1 -1 1 1 -1 1 -1 -1 1 1 1 1
1 1 1 -1 1 1 1 1 -1 0 1 -1 0 -1 1 1 1 -1 1 -1 0 -1 1 1 -1 1 -1 1 1 1 1 1 1 1 -1 1 -1 1 -1 1 -1 1 -1 1 -1 1 1 1 -1 1 1 1 -1 1 1 0 1 1 -1 1 1 1 1 0 -1 1 -1 1 -1 1 1 -1 1 1
1 0 -1 0 -1 1 -1 1 -1 -1 1 1 -1 1 1 -1 1 1 0 0 1 1 1],

[1 1 -1 -1 -1 0 -1 1 -1 1 1 -1 1 -1 1 -1 1 -1 1 -1 1 -1 1 1 -1 1 -1 1 1 1 -1 1 1 1 -1 1 -1 1 -1 1 1 1 1 1 0 -1 1 1 1 0 1 -1 1 1 -1 1 -1 1 0 1 -1 1 -1 1 -1 1 1 1 1 -1 1 -1
1 -1 1 0 1 -1 1 1 1 1 1 -1 1 1 0 0 1 0 1 -1 1 1 -1 1 -1 1 1 1 1 1 -1 1 -1 1 1 1 0 1 1 1 0 -1 1 -1 1 -1 1 -1 1 -1 1 -1 1 -1 1 1 1 1 1 -1 1 1 -1 1 1 -1 1 1 -1 1 1
1 -1 1 1 1 -1 1 1 1 -1 1 1 1 0 -1 -1 1 1 1 1 1 0 1 1], and

[0 -1 1 -1 1 -1 1 1 0 1 1 1 -1 1 -1 1 1 0 1 1 1 1 -1 1 -1 1 -1 1 1 -1 1 -1 1 -1 1 -1 1 1 1 -1 1 -1 1 -1 1 1 1 -1 1 -1 1 1 0 -1 1 1 -1 0 -1 1 -1 1 0 -1 1 -1 1 1 1 0 1 1
1 1 1 1 1 -1 -1 -1 1 -1 0 1 -1 1 1 -1 1 1 1 -1 1 1 0 0 0 1 0 1 1 1 -1 1 -1 1 1 1 1 1 1 -1 1 1 0 -1 1 -1 1 0 1 -1 1 1 1 -1 1 -1 1 1 1 -1 1 1 1 1 1 1 1 -1 1 -1 1 1
-1 1 1 1 1 -1 1 -1 1 1 -1 1 -1 1 1 1 -1 1 -1 1 -1 1 1 1];

a sequence in the first sequence set is obtained by performing any cyclic shift on at least two of the following sequences:

[0 1 1 -1 -1 -1 1 1 1 -1 1 -1 0 1 -1 1 -1 1 -1 1 -1 1 0 1 0 -1 1 -1 1 -1 1 1 -1 1 -1 1 -1 1 -1 1 1 -1 1 0 1 1 1 1 -1 1 1 1 -1 1 -1 1 1 1 -1 1 -1 1 1 1 0 1 -1
-1 -1 1 0 -1 1 -1 1 1 1 1 0 0 1 1 -1 1 0 -1 1 -1 1 1 1 -1 1 -1 1 1 1 1 1 -1 1 -1 1 1 1 1 0 -1 1 0 1 1 1 1 -1 1 -1 -1 1 -1 -1 1 1 1 1 -1 1 -1 1 1 1 1
1 1 1 1 1 -1 1 1 1 1 1 1 -1 -1 -1 -1 1 1 -1 1 1 -1 1 1],

[1 -1 -1 1 1 1 1 1 1 -1 -1 1 -1 1 1 1 -1 1 -1 1 1 1 -1 1 -1 1 -1 1 -1 1 1 1 0 1 -1 1 -1 -1 1 1 1 -1 1 -1 1 1 0 1 -1 1 1 -1 1 1 -1 1 -1 1 1 0 1 0 -1 1 1 -1 1 1 1 -1 1 -1 1
1 -1 1 1 -1 1 1 1 1 0 -1 1 1 -1 1 1 -1 1 1 1 1 1 -1 1 -1 1 1 1 0 1 -1 1 1 1 1 0 1 -1 1 1 1 1 0 0 -1 1 -1 0 1 -1 1 -1 1 1 -1 1 1 1 1 1 1 1 1 -1 -1 -1 -1 -1
-1 -1 1 0 -1 -1 1 0 1 1 -1 1 -1 1 1 -1 1 -1 1 1 1 1 1],

[0 1 1 -1 1 1 -1 1 1 1 1 1 -1 1 -1 1 1 1 -1 1 -1 1 0 1 -1 0 -1 1 1 1 -1 1 1 1 0 1 -1 1 1 0 0 1 1 1 1 1 -1 1 1 -1 1 -1 1 1 1 -1 1 1 1 1 1 -1 1 -1 1 1 1 1 1 1 -1 1 -1 1 -1 1
-1 1 -1 1 1 1 1 -1 0 1 1 -1 1 1 -1 1 -1 1 -1 1 -1 1 -1 1 1 -1 1 0 -1 1 -1 1 1 -1 1 1 1 1 0 -1 1 1 1 -1 1 -1 1 -1 1 -1 1 1 1 1 -1 1 1 1 1 -1 1 1 1 1 0 -1 1 -1 1 1 1
-1 1 1 1 -1 1 1 -1 1 - 1 -1 -1 -1 -1 1 0 -1 1 1 1 1 -1 1 0 1],

[1 -1 1 1 -1 1 1 1 1 -1 1 1 1 1 1 -1 1 1 -1 1 -1 1 1 -1 1 -1 1 1 -1 1 0 1 -1 1 1 -1 1 -1 1 -1 1 -1 1 1 1 1 1 0 -1 1 1 1 -1 1 1 -1 1 1 0 1 1 1 -1 1 -1 1 -1 1 1 -1 1 1 1 -1 1 -1 1
-1 1 1 -1 1 -1 1 1 1 -1 1 0 1 -1 1 -1 1 -1 1 1 1 -1 1 -1 1 -1 1 0 1 -1 1 1 1 1 0 1 0 -1 1 -1 1 1 1 -1 1 1 1 1 1 -1 1 1 1 1 1 1 1 0 1 -1 0 -1 1 1 -1 1 1 -1 1 1
0 1 1 1 0 0 1 1 -1 1 -1 1 -1 1 -1 1 -1 1 1 1 -1 1 1],

[1 1 -1 1 1 -1 1 1 -1 0 1 1 -1 1 -1 -1 1 1 1 1 1 1 1 1 1 0 -1 1 1 1 -1 1 1 -1 1 -1 1 -1 1 -1 1 1 0 1 -1 1 1 -1 1 1 1 1 1 1 0 1 -1 1 1 1 1 1 0 1 -1 1 1 -1 1 1 -1 1 1 1 -1 1 -1 1 1
0 -1 1 1 0 1 -1 1 -1 1 -1 1 -1 1 1 1 1 1 1 1 -1 1 0 1 1 -1 1 0 0 1 -1 1 1 1 -1 1 0 1 0 -1 1 1 -1 1 -1 1 -1 1 -1 1 -1 1 -1 1 1 -1 1 1 -1 1 -1 1 -1 1 -1 1 1 1
-1 1 1 1 -1 1 1 1 -1 1 -1 1 1 1 0 1 -1 1 1 1 1 1 -1 1 -1 1],

[0 1 0 -1 1 1 1 1 1 1 -1 1 1 1 -1 1 1 1 1 1 -1 1 -1 1 1 1 -1 1 -1 1 1 -1 1 -1 1 1 -1 1 -1 1 1 1 -1 1 1 1 1 1 1 1 0 -1 1 -1 1 -1 1 1 1 1 1 1 -1 1 -1 1 -1 1 1 1 -1 0 1 1 1 -1 1 -1 1
-1 1 1 -1 1 -1 -1 -1 1 -1 1 0 1 1 1 1 1 -1 1 -1 1 1 1 0 1 1 1 -1 1 -1 1 1 1 1 -1 0 -1 1 1 -1 1 -1 1 -1 1 -1 1 -1 1 1 1 -1 1 1 -1 1 0 1 -1 0 -1 1 1 1 1 -1 1 -1 1 1
-1 1 1 -1 1 1 1 1 -1 1 1 0 -1 1 1 1 0 0 1 -1 1 1 1 1],

[0 1 1 1 0 -1 1 -1 1 1 1 1 1 -1 1 1 -1 1 1 1 1 -1 1 -1 1 -1 1 -1 0 1 -1 1 -1 1 0 -1 1 1 -1 1 -1 1 1 1 -1 1 1 -1 1 -1 0 1 1 0 -1 1 1 -1 1 1 -1 1 -1 1 1 1 -1 1 1 1 -1 1 -1 0 1 1
1 -1 1 1 1 1 -1 1 -1 1 1 -1 1 1 0 1 1 -1 1 -1 1 -1 1 1 0 0 1 1 -1 1 1 1 1 -1 1 1 0 1 -1 1 -1 1 -1 1 1 -1 1 -1 1 1 1 1 1 1 -1 1 -1 1 -1 1 -1 1 1 -1 1 1 1 1 1 1 1 1 1 -1 1 1 1 -1 1 1 1
-1 -1 -1 -1 1 1 -1 1 1 -1 -1 1 1 1 1 -1 1 1 1 -1 1 0 1],

[1 1 1 -1 -1 -1 1 1 1 -1 1 1 0 -1 -1 -1 1 0 -1 1 -1 1 1 1 1 1 1 1 1 0 1 1 0 -1 1 1 -1 1 -1 1 1 1 -1 1 1 -1 1 1 0 -1 1 1 1 -1 1 -1 1 1 0 -1 1 1 1 -1 1 -1 1 -1 1 0
-1 1 -1 1 -1 1 -1 0 0 -1 1 -1 1 1 1 1 1 1 0 -1 1 1 1 1 1 0 -1 1 1 1 1 1 -1 1 1 -1 1 1 1 1 1 -1 1 -1 1 1 1 -1 1 1 1 1 1 -1 1 1 1 1 1 1 1 1 1 -1 1 1 1 1 1 1 1 -1 1 1 1 1 1 -1 1 1 -1 1 1 0
1 0 1 1 1 0 -1 1 -1 1 1 1 -1 1 1],

[0 -1 1 -1 -1 1 -1 1 -1 -1 1 1 1 1 0 -1 1 1 1 -1 1 -1 1 1 1 1 -1 1 1 -1 1 -1 1 -1 1 0 1 1 -1 1 1 1 1 -1 1 1 1 -1 1 1 -1 1 1 -1 1 -1 1 1 -1 1 1 1 -1 1 1 -1 1
1 1 -1 1 1 1 1 1 1 -1 0 1 0 1 0 1 1 1 -1 1 1 0 0 1 1 -1 1 0 1 -1 1 1 1 1 -1 1 -1 1 -1 1 -1 1 1 -1 1 -1 0 -1 1 0 1 -1 1 1 1 1 1 -1 1 -1 1 -1 1 -1 1 -1 1 -1 0 1
1 1 1 -1 1 -1 1 1 1 1 0 1 1 -1 1 -1 1 1 -1 1 1 1 1 1 1],

[1 -1 1 1 1 -1 1 1 1 -1 1 1 1 -1 1 -1 1 -1 1 -1 1 1 -1 1 -1 1 -1 1 1 1 1 1 -1 1 -1 1 -1 1 -1 1 -1 0 1 0 1 0 -1 1 1 -1 1 1 0 0 -1 1 1 1 0 -1 1 1 1 1 1 1 1 -1 1 -1 1
-1 1 1 -1 -1 1 1 0 1 -1 0 1 -1 1 1 -1 1 -1 1 1 1 1 -1 1 1 1 1 1 -1 1 -1 -1 1 0 1 1 1 1 1 -1 1 0 1 1 1 1 1 1 1 -1 1 -1 0 1 1
1 0 -1 1 -1 1 1 - 1 1 1 1 -1 1 -1 1 1 1 1 -1 1 1 0 1],

[0 1 -1 1 -1 1 -1 1 1 1 -1 1 1 -1 1 1 1 1 -1 1 -1 1 -1 1 -1 1 -1 1 1 0 0 1 -1 1 -1 1 1 -1 1 -1 1 1 1 1 1 -1 1 -1 1 1 1 1 1 1 1 1 1 -1 1 -1 1 1 1 -1 1 0 1
-1 1 -1 1 1 1 -1 1 1 0 1 0 1 1 1 0 -1 1 0 1 -1 1 1 -1 1 1 1 1 1 0 1 1 -1 1 1 1 -1 1 -1 1 1 -1 1 -1 1 1 -1 0 -1 1 1 0 -1 1 -1 1 -1 -1 1 1 1 1 1 1 1 1 1 1 1 -1 1 -1 1
1 -1 1 1 1 0 -1 -1 1 1 1 1 1 -1 1 -1 1 1 -1 1 -1 -1 -1 1 1],

[1 -1 1 1 1 1 -1 -1 1 1 -1 1 0 -1 1 -1 1 1 1 1 1 1 -1 1 0 1 0 1 1 -1 1 0 1 -1 0 1 -1 1 1 -1 1 1 1 1 1 0 1 -1 1 -1 1 -1 1 1 -1 -1 1 0 -1 1 -1 1 0
1 -1 -1 1 1 -1 1 1 -1 1 1 -1 1 1 1 1 1 1 1 1 -1 1 1 1 -1 1 1 0 -1 1 -1 -1 -1 1 1 1 1 -1 1 -1 1 1 -1 1 -1 0 1 1 1 1 1 1 1 1 -1 1 1 1 1 1 -1 1 -1 1 1 1 1 1 1 0 0 -1 1
1 1 1 -1 1 1 -1 1 1 1 -1 1 1 -1 1 -1 1 1 -1 1 -1 1 1],

[1 -1 1 1 0 1 1 -1 1 1 -1 1 1 1 -1 1 -1 1 1 1 -1 1 1 -1 1 -1 1 -1 1 1 1 -1 1 1 -1 1 0 1 1 -1 1 1 -1 1 0 1 -1 1 -1 1 1 0 -1 1 1 -1 0 -1 1 1 -1 1 1 1 1 0 -1 1 1 -1 0 -1 1 1 1 1 1 1 1 1 -1 1 1 1 1 1 0

11-1-11-1-11-111-10-1-1-111-1001011-11-1111-1-1-1110-11-11111-1-11-101111-1-1-1-1 -111-1111111111-1-1-111-111],

[0-11111-11-111111-11-11111-1-1-11111111-10-1-111-1-1-11-1-11-11-1111-101-1-1-1-10 1-1-11011-101-1-111-11-1111-1-1-111-10-1-11-111-111-1-1-10-1-111110010-1111-111-1 -11-1-1-10-1-11-11-11-1111],

[0-1111-1-11111-11-1-1-11-11-1-1-1-111-1-101-1-11-1111-1-11-111-1111-101111-1-11-11 11-11111-110111001-11-11-1-1-11-10-1011-11-1-1-10111-11101-111-111-1-1-1-1-1-111 1111-1-11-1-10-1-111-10-11],

[1-11-10-1-11-11101-1111-1111-1-11-11-111-1-1-1-11110111-1-10110-1111-1-1-1-11111 -1-111-111-1-11-111-10-11-11-1111-11-1-1-111-1-111011-1-1-1-1-1-1-1-11-1-111-110-1 1-100-111111-11110101-11],

[001111-101-111-111-1-11-111-11-111-11-1-1-1-1110-1011-1-1-11111-11-10-1-1-1-1-1 1-11-1-11-11-1101-111-1-111-111-1-1-1111-111-1-101-1111111111-1-111-1-1-10-111101 -1-1-11-11-10-1-11111-1011],

[111-1111-11-1-1-1-1-1-111-1010-11-1-1-1111-1-11-101-1-111-111-11111-1101-1-11-1-1 -111-1-1-11-1-1-1-11111-101-11-111-1-11-111-11-1-1-1-10111-10-11-1111-11011-11-11 -1011001111 10-1-1-1111-111],

[010-11-1-1-11-101111-1-1-11011-1101-1-1110-1-1-1-1101-1-11-1-11-11-11-11-1-1-11 1-1-11111001-101-11111-111-1-10-1-11-1-1-1-1-11-1111-11111-1-1-11-111-11-1111-1-1 01111-111-1-1111-111-11111],

[1-1111-1011-1-10-1-111-101111-1101111-11111-11-111-1-11-111-1-1-11001-10-11-111 1-1-1-1110-1-11-1-1-11111111-1-1-11-11111-1-11-1-1-11-111-101-111-11-1-1-1-1-11-1-1 -1-11-1110010-1111-11-10-11],

[01-111-1-1-1-1-101-1-1-11-11111-10-1111-11-11-111111-1-1-1-1-1-1-111-11001-1-111-1 -111-111-101101011-1011-11110-11-1111111-11-11-1-111-11-10-1-1-111-1-10111-1-11 -11-1-1-1-1111-1-11-111-111],

[1-11001-1-1-111111111-10110101110-11-1-1-110-1-1-111-1111-111-1-1-1-11-11-10-111 1-11-101-11-1-1-11-11-1-1-11-111-11-1-111101-1-1-111111011-1-111-1-11-1-1011-1-1 1-11-1-1-11111-111-11-1-11],

[11111-111-1-1-1-1-111110-11-1-11111-11-1011-1-1-1111-11-1110100-111-1-1-10-111-1 1-1-11-1-1110111-1111-1111-1-1-1-11-10-11-10-1-1-110-1-11-110-11-111-1-1-11-1-111-1 1-11101-1111-111-1-1-1111], and

[0-11101-1-110-1-1-1-110-1111-11-11-1-11-1-1-111-1-10-11111111-1-1-11111-11-111111 -11-11111-10111-11-11-11-1-10-1-1-11-1-111-1111-101001111-1-10-1-1-111-111-11-1-1 0-111-1-1-1111-11-111-1-11];

a sequence in the first sequence set is obtained by performing any cyclic shift on at least two of the following sequences:

[111-111-11-111011-10111-1-11-111-1-111-110-1-10-1-111-1-1111-10111-111-1111-1-1 -11-11111-1-1-1-111-1110-11111-1-1-1-1-1-1-1-11-11-11-10-1111-11-1-11-110-111100 -1-111-11010-1-1-11-11-1111],

[001-11111010-11-1-1111-1111-1-1-11-1-11-1-1-101-1-1011-11-1-1-11-1-11-11-1-10-110 111-1-1-1111-10111-111-11-1-111-111-11-1-1-11-11-11-1-110111111111-1-1-1-111-1-11 -1101-1-1-111111-110-1-111],

[1-111-1-11111-10111-1-11-11110-1-111-1-10-1-1111111-10-1-1-1-11-1-1-1011-101-111 -111-1-1-1-1-11-11-1-1-111-1-11101-111-1111111-11-11-1-1-1111-11-1-1-1-11-110-11-11 -1111-11-10100111-101-111],

[0-1-1-11-1-1-11-1-10-1-1-111-101111111-1-10-1-1-1-11-11101-1-10-11111-11-11-11-11 -1111-111-111-101-1-1-11111-1-111-11-111-11-1-1-11111-1-11101-1-11-111111-101001 11-101-1-1111-11-111-1-1-11],

[1-111-111-111-11-11-11-11111-1111-1-111-1-1-1-1-1-10111011-1-11111-1-11-1101001 -11111-110-11-1-1111-1-1-1-110-1-11-11011-1-101-111-1-1-111-111-1-11-1-1-1-1-11-11 -11-10-1-1-1111101111-1-101],

[0-11-1-1-11111111011-1-1-10-1-11-1011-1-111-1-1-1-111-11-1-1-1-11-1-1-1111101-11-1 11101-11-11-1011-1-1-1-111-1-1-11-1-1111-11-1-1-1111-111-11-1-111-110-11-1011-111 111-1-111101001-111-11-11],

[011111-11-111-1-1111111-11-1-1-1-1111-1111-1-111111-1-11-101-111-1-10-1-1-11-101

-11-1111-1-101-11-10-1-1-1111-1-1-1111-111-1-111-11-110010111-1-11-1-10-1-1-1-11-1
-101-111-11-11111-1-101-11],

[1110-1-11-1-1011-1-11-1-1-1-10-1-11-10-111111-11-1111-1-11-111-1-1-11-10010-1111
-1-11-10-1-1-1111101-11-1111-11-1-11-1011-10-1111-11-1-11-1-11-11111111-1-11111-11
111-11-1-111-1-1-111-1-10-1-11],

[00111-11-10-1-1-1-11011-1-111-1-111-111110-11-11-1-1-11-11-1-11-1010-11-1-11-1-11
0-1-111-1-1-11101-11-11-1-1-1-111111-1111111111-1-1111-1-11-1-1-111110-1-10-111-11
-11111-11-1-111-11-10-111],

[10-1-10-1-1-1-1-1-11111111-11-1-110-11-1001111-110111-11011-1-11-11111-11-11-1
0111-11-11-1-111-11-10101-1-11-11-1101-1-111-1-1-11011-1-11-1-11-1-111-1-111-1-1-1
11111-1-1111111-1-11-1-1-11],

[1011111-1-1-1-11-1-11-111-1-111111-1-101-10-11-111-111-1-101011-10-1111-1-1-11-1
-11111-111-1-1-10-111-1110-1-1-110-111-11-11-110-1-1-111-1-100-1111-11-11-1-1-1-11
-11-11-1-11111-111-1111111],

[0-11-1-1-1-10-1-1-1-1011-1-11-1-1110-11111-11001-1-11-111111-1-111-1-1111111-11-1
1-1-1111-1-1101-11-111-1-1-11-111-111111-11-11-110-1-10-1-11-111111-10-10-1110-1
-1-1111-111-1-11111-11-1-11],

[10011101-11-11-10-11011111-11111-111-1-1010111-110-1-1-1111-1-1-111-1-1-1-110-1
11-1-11-1-1-111-11-1-1-111101-1-11-111-101111-1-11-1-11-110-1-1-11-1-11-11-11111-11
11-11-111-111-1-1-1-1-1-11],

[0-1111-11-1-11-1-111111-1-1-11111-111-11-11-1111001-11011-111-10-110-1-111-1-1111
1-11-111010-1111-10-1-1-1-1-11-111-111-1-11-10111-1111-1111-1-1-1-111-1-10111-11-1
-1-10-11-1-1-1-1-1-11-111],

[1111-111-11-10-1-1-1-11-1-11-101-1-11111-1-11-1-1111-111101-1-1-1-1-10111-1-10-1-1
010-1-11111-111-111-1-1-110-11-10-11-111-1-101-1-1111-11-1-11-11-1111-1-1-11111-11
111-111111-11-11-1001-11],

[0-1-1-1-11-11111111-111-111-1-1-111-11-11111-111-1-1-1-111001-1-111-1-1-11-11-1-10
-1-1-1-11-1-1-11011-111-11-1111-11-1-1111-101-1-111101-11-1-101-10-1011-1-11-1111
-11111-1101-110-1-1-11111],

[0-1-1111-11-110-11-1-1-10-1-111-110-11-1-111111-1-1111-1111-1-1-1-11-1111111-1-11
1-11-11111101-110-1-11111-11-111-110-1-11-1-1-1-10-1-11-1-111101001-11-111-1-111
-1111-1-1-1111-1-1-10-11-11],

[1-11-11111-11111-1-11111111-11-1-11-1-11-1111-10-1110-11-1-11-1111-11-1101111-1
-1-10-11-1-1111-10100-11-1-1-111-11-1-1111-11-111111-10-11-1-10-1-1-1-11-1-1110-1
-11-1-101111-1-10-1-111-1-11],

[1-1-1-11111-11-1-111-1-1-110111110111111-11-11111-1-11-1-11-1-101-11-11-1-1-110-1
11-111-11-1-10-11-1-1-1111111-11-1-1-11010-1-1-1011-1111-1001-10-111-11-1-11-11
-1-1-111-1111-1-11011-1-11],

[0-1011-1-10-11-1111100110-1-111-11-1-1111111-1-11-1111-101-1-1-11-11-1-11-111
-1-1111-1-1-110111-1101-11-111-1-111-11-1-1-1-111-1101-11-11-1-11-101-1-1-1-1-1-1
-1110111-1-1111-111-111111],

[001-11-1-1-11-111-1-111-11111111-1111-1-1-11111-111-110-11-1-1-1-11111-1110-111-1
111-11-1-10111-1-10-1-1-10-11111-10-1011-1-11-11111-1-11-11-1111-1-111-10-110-1-1
1-10-1-1-1-11-1-11-11-1111],

[1-1-11-1-11-1-11-1-1111-111-11111-11-10-111-11-11-11-1-1-110111111-1-11-1101-11-1
10-1110-1-11-1-11010111-1-111111-11111-1-11-11-1-1110-1-101-1-1-10-1-1-111-1-11-1
11-1-1-10011-1-1-1-1111111],

[1111-11111-11111-1-1-1111-11-11-1-11-1111-1-110-1-111-11-10-11-101-1-1-111-111-11
111-1-1010-1-10-1-11110-1-1-1-1-110111-1111-1-11-1-11111-1-110-11-1-11-1-1-1-10-11
-111-111111-1100-11-11-11], and

[01-1-1-11-1-1-1-10-1-11-11-1-1-111-1-110011-1-1-1-111-11111-11-111-1-1-111-111-111
11111-11-1-1-1-101111-1-1-101-1101-11111-1111-11-1-1110-10-110-1-11-110111-1-11
0-1111-1-11-1111-11-111-111];

a sequence in the first sequence set is obtained by performing any cyclic shift on at least two of the following sequences:

[011111111110111111111110111111111111111111111111111111111100111111

1 1 1 1 1 1 1 1 0 1 1 1 1 0 1 1 0 1 1 1 1 1 1 1 1 1 1 1 1 1 1 1 1 1 1 1 1 1 1 1 1 0 1 0 1 1 1 1 1 0 1 1 1 0 1 1 1 1 1],
[1 0 1 1 1 1 1 1 1 1 1 1 1 1 1 1 1 1 1 1 1 1 1 1 1 1 1 1 1 1 1 1 1 1 1 1 1 1 1 1 1 0 1 1 1 1 1 1 1 0 0 1 1 1 1 1 0 1 1 1 1 1 1 1 1 1 1 1 0 1 1 1 1 1 1 1 1 1 1 0 1 1 0 1 1 1 1 1 1 1 1 1 1 0 1 1 1 0 1 1 1 1 1 1 1 1 1 1 1 1 1 1 1 1 0 1 1 1 0],
[0 1 1 1 1 1 1 1 1 1 1 1 1 1 0 1 1 1 1 1 1 1 1 1 1 0 1 0 1 1 1 1 1 1 1 1 1 1 1 1 1 1 1 1 1 1 1 1 1 0 1 1 1 1 0 0 1 1 0 1 1 1 1 1 1 0 1 1 1 1 1 1 1 0 1 1 1 0 1 1 1 1 1 1 1 1 1 1 1 1 1 1 1 0 1 1 1 1 1 1 1 1 1 1 1 1 1 1 1 1 1 1 1 1 1 1],
[1 1 1 1 1 1 1 1 0 0 1 1 1 1 1 1 1 1 1 1 1 1 1 1 1 1 1 1 0 1 1 1 1 1 1 1 1 1 1 1 1 0 1 1 1 1 1 1 1 1 1 1 1 1 1 1 1 1 0 1 1 1 1 0 1 1 1 1 1 1 1 1 1 1 0 1 1 1 1 1 1 1 0 1 1 0 1 1 1 0 1 0 1 1 1 1 1 1 1 1 0 1 1 1 1 1 1 1 1 1 1 1 1 1 1 1 1 1 1 1 1 1],
[0 1 1 1 1 1 1 1 1 1 0 1 1 0 1 1 1 1 1 1 1 1 1 1 1 0 1 1 0 1 1 1 1 1 1 1 1 1 1 1 1 1 1 1 1 1 1 0 1 0 1 1 1 1 1 0 0 1 1 1 1 0 1 1 1 1 1 1 1 1 1 0 1 1 1 1 1 1 1 1 1 1 1 1 1 1 1 1 0 1 1 1 1 1 1 1 1 1 1 1 1 1 1 1 1 1 1 1 1 1 1 1 1 1 1 1],
[1 1 1 1 1 1 1 1 1 0 1 1 1 1 1 1 1 1 0 1 1 1 1 1 1 1 0 1 1 1 1 1 1 1 1 1 1 1 1 1 1 1 1 1 1 0 1 1 1 1 1 1 0 1 1 1 1 1 1 1 1 1 1 1 1 0 1 1 1 1 1 0 1 1 1 0 1 0 1 1 0 1 1 1 1 1 1 1 1 1 1 1 0 0 1 1 1 1 1 1 1 1 1 1 1 1 1],
[1 1 1 1 1 1 1 1 1 1 1 1 1 1 1 1 1 1 1 0 0 1 1 1 1 1 1 0 1 1 1 1 1 1 1 0 1 1 1 0 1 1 1 1 0 1 1 1 1 1 1 1 1 1 1 1 1 1 1 1 1 0 1 1 0 1 1 0 1 0 1 1 1 1 1 1 1 1 1 0 1 1 0 1 1 1 1 1 1 1 1 1 1 1 1 1 1 1 1 1 1 1 1 0 1 1 1 1 1 1 1 1 1 1 1],
[1 0 1 1 1 1 1 1 1 1 1 0 1 1 1 1 1 1 1 1 1 1 1 1 1 1 1 1 1 1 1 1 1 1 1 1 0 1 1 1 1 1 1 1 1 1 1 1 1 1 1 1 1 1 1 1 1 0 1 1 1 0 1 1 1 1 1 1 1 0 1 1 1 1 1 1 0 1 1 1 1 1 1 1 1 0 1 1 1 1 1 1 1 1 0 1 1 1 1 1 1 1 1 1 1 0 1 1 1 0 0],
[0 1 1 1 1 1 1 1 1 1 1 1 1 1 1 1 1 1 1 1 0 1 1 1 1 1 1 1 1 1 1 1 1 1 1 1 1 1 1 0 1 1 0 0 1 1 1 1 1 1 0 1 1 1 0 1 0 1 1 1 1 1 1 1 1 1 1 1 1 0 1 1 1 1 1 1 1 1 0 1 1 1 1 1 1 1 1 0 1 1 1 1 1 1 1 0 1 1 1 1 1 1 1 1 1 1 1 1 1 1 0 1 1 1 1 1],
[1 0 1 1 1 1 1 1 1 1 1 1 1 0 1 1 1 1 1 1 1 1 1 1 1 1 1 1 1 1 1 1 1 1 1 1 1 1 1 1 1 0 1 1 1 1 1 1 1 1 1 1 1 1 1 1 1 1 1 1 1 0 1 1 1 1 1 1 1 1 1 1 0 1 1 0 0 1 1 1 1 1 1 1 1 1 1 1 1 1 1 1 1 1 1 1 1 0 1 1 1 1 1 0 1 1 1 1 0 1 1 1 1 0 1 1 1 0 1 1 1 0 1 1 1 1 1 1 0 1 1 1 1 1 1 0],
[1 1 1 1 1 0 0 1 1 1 0 1 1 1 1 1 1 1 1 1 1 1 1 1 1 1 1 0 1 1 1 1 1 1 1 1 1 1 1 1 1 1 1 1 1 0 1 1 1 1 1 1 1 1 1 1 1 1 1 1 1 1 1 1 1 1 1 1 1 1 1 0 1 1 1 1 0 1 1 0 1 1 1 1 0 1 1 1 1 1 1 1 1 1 1 1 1 1 1 1 1 1 1 1 1 1 1 1 0 1 1 1 1 1 0 1 1 1 1 1 1 0 1 0 1 1 1 1 1], and
[1 1 1 1 1 0 1 1 1 1 1 1 1 1 1 1 1 1 1 1 1 1 1 1 1 1 1 1 0 1 1 1 0 1 1 1 1 0 1 1 1 1 1 1 1 1 1 1 0 1 1 1 1 1 1 1 0 0 1 0 1 1 1 1 1 1 1 1 1 1 1 0 1 1 1 0 1 1 1 1 1 1 1 1 1 1 1 1 1 1 1 1 1 1 1 1 1 1 1 1 1 1 1 1 0 1 1 1 1 1 1 0 1 1];

a sequence in the first sequence set is obtained by performing any cyclic shift on at least two of the following sequences:

[0 1 1 1 1 1 1 1 1 0 1 1 1 1 1 1 1 0 1 0 1 1 1 1 1 1 1 1 1 1 1 1 0 1 1 1 1 1 1 1 1 1 1 1 1 1 0 1 1 1 1 0 1 1 1 1 1 0 0 1 1 1 0 1 1 1 1 1 1 1 1 1 1 1 1 1 1 1 1 0 1 1 0 1 1 1 1 1 1 1 1 1 1 1 1 1 1 1 1 1 1 1 1 1 1 1 1 1 1 1 1],
[0 1 1 1 1 1 1 1 1 1 1 1 1 1 0 1 1 0 1 1 1 1 0 1 1 1 0 0 1 1 1 1 1 1 1 1 1 1 1 1 1 1 1 1 1 1 1 1 1 1 1 1 1 1 0 1 1 1 1 1 1 1 1 1 1 1 0 1 1 1 1 1 1 0 1 1 1 1 1 1 1 1 1 1 1 1 1 1 0 1 1 1 1 1 1 1 1 1 1 1 1 1 1 1 0 1 1 1 1 1 0 1],
[1 1 1 1 1 1 0 1 1 1 1 1 1 1 1 1 1 0 1 1 1 1 1 1 1 1 0 1 1 1 1 1 1 1 0 1 1 1 1 1 1 1 0 1 1 1 1 1 1 1 1 1 1 1 0 1 1 0 1 1 1 1 1 1 1 1 1 1 1 1 0 1 1 1 0 0 1 1 1 1 0 1 0 1 1 1 1 1 1 1 1 1 1 1 1 1 1 1 1 1 1 1 1 1 1 1 1 1 1 1 0 1 1 1 1 1 1 1 1],
[0 1 1 1 0 1 1 1 1 1 1 1 1 1 1 1 1 1 0 1 1 1 0 1 1 1 1 1 1 1 0 1 1 0 1 1 1 1 1 1 1 1 0 1 1 1 1 1 1 1 1 1 1 0 1 1 1 1 1 0 0 1 1 1 1 1 1 1 0 1 1 1 1 1 1 1 1 1 1 1 1 1 1 1 1 1 1 1 1 1 1 1 1 1 1 1 1 1 1 1 1 1 1 1 1 0 1],
[0 1 1 1 1 1 1 1 1 1 1 1 0 1 1 1 1 1 1 1 1 1 1 1 1 0 1 1 1 1 1 1 1 1 1 1 1 1 1 1 1 1 1 1 1 1 1 1 1 1 1 1 1 0 1 0 1 1 1 1 1 0 0 1 1 1 0 1 1 1 1 1 1 1 1 1 1 1 1 0 1 1 0 1 1 1 1 1 1 1 1 1 1 1 1 1 0 1 1 1 1 1 1 1 1 0 1 1 1 1 1 1 1 1],
[0 1 1 1 1 1 1 1 1 1 1 1 1 1 1 1 1 1 1 0 0 1 1 1 1 1 1 1 1 1 1 1 1 1 1 1 1 1 1 1 1 1 1 1 1 1 1 1 1 0 1 1 1 1 1 1 1 0 1 0 1 1 1 0 1 1 0 1 1 1 1 1 1 1 0 1 1 1 1 1 1 1 1 1 0 1 1 1 0 1 1 1 1 1 1 1 1 1 1 1 1 1 0 1 1 1 1 1 1 1 1 1 1],
[1 1 1 0 1 1 1 1 1 1 1 1 1 1 1 1 1 1 1 0 1 1 1 1 0 1 1 1 0 1 1 0 1 1 1 1 1 1 1 1 1 1 1 1 1 1 1 1 1 0 1 1 1 1 1 1 1 1 1 1 1 0 1 1 1 1 1 0 0 1 0 1 1 1 1 1 1 1 1 1 1 1 0 1 1 1 1 1 1 1 1 1 1 0 1 1 1 1 1 1 1 1 1 1 1 1 1 1 1 1 1 1 1],
[0 1 1 1 1 1 1 1 1 1 1 1 1 1 1 1 1 1 1 1 1 0 1 1 1 1 1 1 1 1 1 1 1 1 1 1 1 1 1 0 1 1 1 1 1 1 1 1 1 1 1 1 1 1 1 0 1 1 1 0 0 1 1 1 1 1 1 1 1 0 1 0 1 1 1 1 1 1 0 1 1 1 1 1 0 1 1 1 1 1 1 1 1 1 1 1 1 1 1 1 1 1 1 0 1 1 1 1 0 1 1],
[0 0 1 1 1 1 0 1 1 1 1 1 1 1 1 1 1 1 1 1 1 1 1 1 1 1 1 1 1 0 1 0 1 1 1 1 1 1 1 1 1 1 0 1 1 1 1 1 1 1 1 1 1 1 1 0 1 1 1 1 1 1 1 1 1 1 1 1 1 1 0 1 1 1 1 1 1 1 1 1 1 1 1 1 1 0 1 1 1 0 1 1 1 1 1 1 1 0 1 1 1 1 1 1 1 0 1 1],
[0 1 0 1 1 1 1 1 1 0 1 1 1 1 1 1 1 0 1 1 1 0 1 1 1 1 0 1 1 1 1 1 0 1 1 1 1 1 1 1 1 1 1 1 1 1 1 1 1 1 1 1 1 1 1 0 0 1 1 0 1 1 1 1 1 1 1 1 1 1 0 1 1 1 1 1 1 1 1 1 1 1 1 1 1 1 1 1 1 1 1 1 1 1 1 0 1 1 1 1 1 1 1 1 1 1 1 1 1 1 1 1 1],
[0 1 1 1 1 1 1 1 1 0 1 1 1 1 1 1 1 1 0 1 1 1 1 1 1 1 1 1 1 1 1 1 1 1 1 1 1 1 0 0 1 1 1 1 1 1 1 1 1 1 1 1 1 0 1 1 0 1 0 1 1 1 0 1 1 1 1 1 0 1 1 1 1 1 1 1 1 1 1 1 1 1 1 0 1 1 1 1 1 1 0 1 1 1 1 1 1 1 1 1 1 1 1 1 1 1 1 1 1], and
[1 1 1 1 1 1 1 1 1 1 1 1 1 1 0 1 1 1 1 1 1 1 1 1 0 1 1 1 1 1 1 1 1 1 1 0 1 0 0 1 1 1 1 1 0 1 1 1 1 1 1 1 1 1 1 0 1 1 1 1 1 1 1 1 1 1 0 1 1 0 1 1 1 0 1 1 1 0 1 1 1 1 0 1 1 1 1 1 1 1 1 1 1 1 1 1 1 1 1 0 1 1 1 1 1 1 1 1 1 1 1 1]; or

a sequence in the first sequence set is obtained by performing any cyclic shift on at least two of the following sequences:

[1 1 1 1 1 1 1 1 1 1 0 1 1 0 1 1 1 1 1 1 1 1 1 1 1 1 0 1 1 0 1 1 1 1 1 1 1 1 0 1 1 1 1 1 1 1 1 1 1 1 1 1 1 1 1 1 1 1 1 0 1 1 1 1 1 1 1 1 1 1 1 1 1 1 1 0 1 1 1 1 1 1 1 1 1 1 1 0 1 1 1 0 0 1 1 1 1 1 0 1 0 1 1 1 1 1 1 1 1 1],
[1 1 1 1 1 1 1 1 1 1 0 1 1 1 1 1 1 1 1 0 1 1 1 1 0 1 1 1 1 1 1 1 0 1 1 1 1 1 1 1 0 1 1 0 1 1 1 1 1 1 1 1 1 1 1 1 1 1 1

1 1 1 1 1 0 1 1 1 1 1 1 1 1 1 1 1 1 1 1 1 1 1 1 1 1 1 1 1 1 1 1 1 1 1 1 0 1 1 1 1 1 1 1 1 1 1 1 0 1 0 0 1 1 1 1 0 1 1 1 1],
[1 1 1 1 1 1 1 1 1 1 1 1 1 1 1 1 1 1 1 1 1 1 1 1 1 1 1 1 1 0 1 1 0 1 1 1 1 1 1 1 1 1 1 1 1 0 1 0 0 1 1 1 1 1 1 1 0 1 1 1 1 1 1 1 1 1 1 1 0 1 1 1 1 0 1 1 1 1 0 1 1 1 1 1 1 1 1 1 1 1 1 1 1 1 1 1 1 1 1 1 1 1 1 1 0 1 1 1 1 1 1 1 0 1 1 1 1 1 1 0 1],
[0 1 1 1 1 1 1 1 1 1 1 1 1 1 1 1 1 1 1 1 1 1 1 1 1 1 1 1 1 1 1 1 1 1 1 1 0 1 1 1 1 1 0 1 1 1 1 0 1 1 1 1 1 1 1 1 0 1 1 1 1 0
1 1 1 1 1 1 1 1 1 1 1 1 1 1 1 1 1 1 1 0 0 1 0 1 1 1 1 1 1 1 0 1 1 1 1 1 1 0 1 1 1 1 1 1 1 1 1 1 1 0 1 1 1],
[0 0 1 1 1 1 1 0 1 1 1 1 0 1 1 1 1 1 1 1 1 1 1 1 1 1 0 1 1 1 1 1 1 1 1 1 1 1 1 0 1 0 1 1 1 1 1 1 1 0 1 1 1 1 1 1 1 1 0 1 1 1 1 1
1 1 1 1 1 1 1 1 1 1 1 1 1 1 1 1 1 1 1 1 1 1 1 1 1 1 1 1 1 0 1 1 0 1 1 1 1 1 1 1 1 1 1 1 1 1 1 1 1 0 1 1 1],
[1 0 1 1 1 1 1 1 1 1 1 1 1 1 1 1 1 1 1 1 1 1 0 1 1 0 1 1 1 1 1 1 1 1 0 1 0 1 1 0 1 1 1 1 1 1 1 1 1 1 1 1 1 1 1 1 1 1 1 0 1 1 1
1 1 1 0 1 1 1 1 0 1 1 1 1 1 1 1 1 0 1 1 1 1 1 1 1 0 0 1 1 1 1 1 1 1 1 1 1 1 1 1 1 1 1 1 1 1 1 1 1 1 1 1 1 1],
[1 0 0 1 1 1 0 1 1 1 1 1 1 0 1 1 0 1 1 1 1 1 1 1 1 1 1 1 1 1 0 1 0 1 1 1 1 0 1 1 1 1 1 1 1 1 1 1 1 1 1 1 0 1 1 1 1 1 1 1 1 1 1 1
1 1 1 1 1 0 1 1 1 1 1 1 1 0 1 1 1 1 1 1 1 1 1 1 1 0 1 1 1 1 1 1 1 1 1 1 1 1 1 1 1 1 1 1 1 1 1 1 1 1 1],
[1 1 1 1 1 1 1 1 1 0 1 1 1 1 1 1 1 0 1 1 1 1 1 1 1 1 1 1 1 1 1 1 1 1 0 1 1 1 1 0 1 1 1 1 0 1 1 0 1 0 1 1 1 1 1 1 1 1 1 1
1 1 1 0 1 1 1 0 1 1 1 1 1 1 0 1 0 1 1 1 1 1 1 1 1 1 1 1 1 1 1 1 1 1 1 1 1 1 1 1 1 1 1 1 1 1 1 1 1 1 0 0 1 1 1],
[0 1 1 1 1 1 1 1 1 0 1 1 1 1 0 1 1 1 1 1 0 1 1 1 1 1 1 1 1 1 1 1 1 1 1 1 1 1 1 1 1 1 1 1 1 1 1 1 1 1 1 1 1 1 1 1 1 1 0 1 1 1 0 1
1 1 1 1 1 1 1 1 1 1 0 1 1 1 1 1 1 0 1 1 1 1 1 1 1 0 1 0 0 1 1 1 1 1 1 1 1 1 1 1 1 1 1 1 1 1 1 0 1 1 1 1],
[1 1 1 1 1 1 1 1 1 1 1 1 1 1 1 1 1 0 1 1 1 1 0 1 1 1 1 1 1 1 1 1 1 1 1 1 1 1 1 1 1 1 1 0 1 1 1 1 1 1 1 1 0 1 1 1 1 1 1 1 1 0 1 1 1 1
1 1 1 1 1 1 1 1 1 0 1 0 1 1 1 1 0 1 1 1 1 1 1 0 0 1 1 0 1 1 1 1 1 1 1 1 1 1 1 1 1 1 1 1 1 1 1 10 1 1 1 1 1],
[0 0 1 1 1 1 1 1 1 1 1 1 1 1 1 1 1 1 1 1 1 1 1 1 1 1 1 1 1 1 1 1 1 1 1 1 1 1 1 0 1 1 1 1 1 1 1 1 1 1 1 1 1 0 1 1 1 1 1 1 1 1 1 0 1 1 1 1 1
0 1 1 1 0 1 1 1 1 1 0 1 0 1 1 1 1 1 1 1 1 1 1 1 1 1 1 1 1 1 1 1 1 0 1 1 0 1 1 1 0 1 1 1 1 1 1 1 1 1 1 1 1 1 1],and
[1 1 1 1 1 1 1 1 1 1 1 1 1 1 1 1 1 1 1 1 1 1 1 1 1 1 1 1 1 1 1 1 0 1 1 1 1 1 1 0 1 1 0 1 1 1 1 1 1 1 1 1 1 1 1 1 0 1 0 1 1 0 1 1 1
1 1 0 1 1 1 1 1 0 1 1 1 1 1 1 1 1 1 1 1 1 1 1 1 1 1 0 1 1 1 1 1 1 1 1 1 0 1 1 1 1 1 1 1 1 1 1 1 0 0 1 1 1 1 1 1].

**22.** The method according to any one of claims 1 to 21, wherein the first sequence set corresponds to at least one channel, and transmission of the first UWB signal is performed on the at least one channel.

**23.** The method according to any one of claims 1 to 22, wherein both a length of a sequence x and a length of a sequence y are N, and a cross-correlation $\varphi_{xy}$ between the sequence x and the sequence y satisfies the following formula:

$$\varphi_{xy} = 20log_{10}\left(\frac{\max\limits_{\tau=0,1,2,\dots,N-1}|\phi_{xy}(\tau)|}{|\phi_{xx}(0)|}\right),$$

wherein

$$\phi_{xy}(\tau) = \sum_{n=1}^{N} x_n y_{n+\tau}, \qquad \tau = 0,1,2,\dots,N-1$$

$$\phi_{xx}(0) = \sum_{n=1}^{N} x_n x_n$$

$x_n$ is an $n^{th}$ element in the sequence x, $y_n$ is an $n^{th}$ element in the sequence y, the sequence x is the second sequence, and the sequence y is the third sequence; the sequence x is the first binary sequence corresponding to the second sequence, and the sequence y is the second binary sequence corresponding to the third sequence; or the sequence x is the second sequence, and the sequence y is the second binary sequence corresponding to the third sequence.

**24.** The method according to claim 23, wherein the first threshold is less than or equal to -10 dB, the second threshold is less than or equal to -10 dB, and/or the third threshold is less than or equal to -10 dB.

**25.** A communication apparatus, comprising a unit configured to perform the method according to any one of claims 1 to 24.

**26.** A communication apparatus, comprising a processor and a memory, wherein

the memory is configured to store computer-executable instructions; and

the processor is configured to execute the computer-executable instructions, to enable the method according to any one of claims 1 to 24 to be performed by the communication apparatus.

27. A computer-readable storage medium, wherein the computer-readable storage medium is configured to store a computer program, and when the computer program is executed, the method according to any one of claims 1 to 24 is performed.

PAN coordinator

○ Reduced-function device

● Full-function device

FIG. 1a

PAN coordinator

◯ Reduced-function device

● Full-function device

FIG. 1b

| SHR | PHR | Physical layer data (PHY payload) |
|-----|-----|-----------------------------------|

| SYNC | SFD |
|------|-----|

| Si | Si | ... | Si |
|----|----|----|----|

| $a_0 Si$ | $a_1 Si$ | ... | $a_{NSFD-1} Si$ |
|----------|----------|-----|-----------------|

FIG. 2a

Preamble code Ci

| $C_i(0)$ | $C_i(1)$ | ... | $C_i(K-1)$ |

| $C_i(0)$ | 0 | ... | 0 | | ... | $C_i(K-1)$ | 0 | ... | 0 |

$L$ chips (chips)

Preamble symbol Si

FIG. 2b

First device

Second device

Generate a first UWB signal based on a first sequence in a first sequence set        301

First UWB signal        302

Process the first UWB signal based on the first sequence        303

FIG. 3

First
device

Second
device

First indication information — 401

Second indication information — 402

Generate a first UWB signal based on
the second indication information and
a first sequence in a first sequence set — 403

Third indication information — 404

First UWB signal — 405

— 406

Process the first UWB signal based on the
first sequence

FIG. 4

Processing unit — 501

Transceiver unit — 502

Communication
apparatus

FIG. 5

60

610

Transceiver

620

Processor

640

630

Memory

FIG. 6

Chip

701

Logic circuit

702

Interface

FIG. 7

## INTERNATIONAL SEARCH REPORT

| International application No. |
| --- |
| **PCT/CN2023/139492** |

| A. | CLASSIFICATION OF SUBJECT MATTER |
| --- | --- |
| | H04L5/00(2006.01)i |

According to International Patent Classification (IPC) or to both national classification and IPC

| B. | FIELDS SEARCHED |
| --- | --- |

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNABS; CNTXT; CNKI; VEN; ENTXT; ENTXTC; 3GPP: 序列, 集合, 超宽带, UWB, 121, 133, 73, 91, 元素, 指示, 相干, 非相干, 时延, 间隔, 导频, 符号, sequence, set, collection, element, indication, coherence, non-coherent, delay, interval, pilot, symbol

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 110363899 A (HUAWEI TECHNOLOGIES CO., LTD.) 22 October 2019 (2019-10-22) entire document | 1-27 |
| A | CN 113093101 A (GUANGDONG OPPO MOBILE COMMUNICATIONS CO., LTD.) 09 July 2021 (2021-07-09) entire document | 1-27 |
| A | WO 2022197811 A1 (META PLATFORMS TECHNOLOGIES, LLC.) 22 September 2022 (2022-09-22) entire document | 1-27 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 March 2024** | **06 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/139492**

| Patent document cited in search report | | | Publication date (day/month/year) | Patent family member(s) | | | Publication date (day/month/year) |
|---|---|---|---|---|---|---|---|
| CN | 110363899 | A | 22 October 2019 | WO | 2021023095 | A1 | 11 February 2021 |
| CN | 113093101 | A | 09 July 2021 | | None | | |
| WO | 2022197811 | A1 | 22 September 2022 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310200944

• CN 202310365197